(19) Europäisches Patentamt
European Patent Office
Office européen des brevets

(11) EP 3 073 744 A1

(12) **EUROPEAN PATENT APPLICATION**
published in accordance with Art. 153(4) EPC

(43) Date of publication:
**28.09.2016 Bulletin 2016/39**

(21) Application number: **15785588.3**

(22) Date of filing: **28.04.2015**

(51) Int Cl.:
***H04N 21/235*** *(2011.01)* ***H04N 21/234*** *(2011.01)*
***H04N 21/236*** *(2011.01)*

(86) International application number:
**PCT/KR2015/004217**

(87) International publication number:
**WO 2015/167200 (05.11.2015 Gazette 2015/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **30.04.2014 US 201461986114 P**

(71) Applicant: **LG Electronics Inc.**
**Yeongdeungpo-gu**
**Seoul 07336 (KR)**

(72) Inventors:
- **LEE,Jangwon**
  **Seoul 137-893 (KR)**
- **OH, Sejin**
  **Seoul 137-893 (KR)**
- **KO, Woosuk**
  **Seoul 137-893 (KR)**
- **MOON, Kyoungsoo**
  **Seoul 137-893 (KR)**
- **HONG, Sungryong**
  **Seoul 137-893 (KR)**

(74) Representative: **Cabinet Plasseraud**
**66, rue de la Chaussée d'Antin**
**75440 Paris Cedex 09 (FR)**

# (54) BROADCAST SIGNAL TRANSMITTING DEVICE, BROADCAST SIGNAL RECEIVING DEVICE, BROADCAST SIGNAL TRANSMITTING METHOD, AND BROADCAST SIGNAL RECEIVING METHOD

(57) The present invention provides a broadcast signal transmitting device, a broadcast signal receiving device, a broadcast signal transmitting method and a broadcast signal receiving method. The broadcast signal transmitting device according to another embodiment of the present invention may comprise: a delivery object generator for generating at least one delivery object which is included in at least one content component of a service and is recovered individually; a signaling encoder for generating signaling information which provides discovery and acquisition of the service and the at least one content component, wherein the signaling information comprises a transmission session for transmitting the at least one content component of the service, and first information on at least one delivery object transmitted through the transmission session; and a transmitter for transmitting the at least one delivery object and the signaling information through a unidirectional channel. According to another embodiment of the present invention, there is an effect of being capable of reducing the total time taken from acquisition of multimedia content to display thereof to a user.

FIG. 64

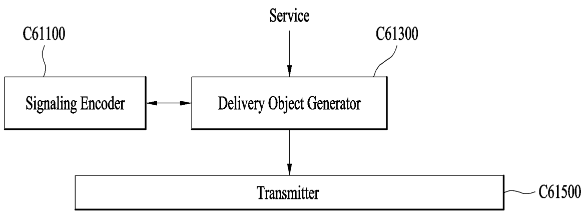


EP 3 073 744 A1

## Description

**[**Technical Field**]**

The present invention relates to an apparatus for transmitting broadcast signals, an apparatus for receiving broadcast signals and methods for transmitting and receiving broadcast signals.

**[**Background Art**]**

As analog broadcast signal transmission comes to an end, various technologies for transmitting/receiving digital broadcast signals are being developed. A digital broadcast signal may include a larger amount of video/audio data than an analog broadcast signal and further include various types of additional data in addition to the video/audio data.

**[**Disclosure**]**

**[**Technical Problem**]**

That is, a digital broadcast system can provide HD (high definition) images, multi-channel audio and various additional services. However, data transmission efficiency for transmission of large amounts of data, robustness of transmission/reception networks and network flexibility in consideration of mobile reception equipment need to be improved for digital broadcast.

**[**Technical Solution**]**

The object of the present invention can be achieved by providing a broadcast signal transmitting apparatus including a delivery object generator configured to generate at least one individually recovered delivery object included in at least one content component of a service, and a signaling encoder configured to generate signaling information for providing discovery and acquisition of the at least one content component of the service, the signaling information including first information on a transport session for transmission of the at least one content component of the service and at least one delivery object transmitted through the transport session, and a transmitter configured to transmit the at least one delivery object and the signaling information through a unidirectional channel.

The delivery object may include one of a file, a part of the file, a group of the file, a hyper text transfer protocol (HTTP) entity, and a group of the HTTP entity.

The signaling information may further include second information including description of DASH Media Presentation corresponding to the service.

The signaling information may further include offset information indicating a position of a first byte of a payload of a transport protocol packet for transmission of the delivery object.

The signaling information may further include real-time information indicating whether the at least one delivery object transmits a streaming service.

The signaling information may further include mapping information for mapping the transport session to a transport session identifier (TSI) and mapping the delivery object to a transport object identifier (TOI).

The signaling information may further include timestamp information indicating time information on the delivery object.

In another aspect of the present invention, provided herein is a broadcast signal receiving apparatus including a signaling decoder configured to extract signaling information for providing discovery and acquisition of at least one content component of a service, the signaling information including first information on a transport session for transmission of the at least one content component of the service and at least one delivery object transmitted through the transport session, and the delivery object being included in the at least one content component of the service and being recovered individually, a delivery object processor configured to recover the at least one delivery object, and a media decoder configured to decode the at least one delivery object.

The first information may further include offset information indicating a position of a first byte of a payload of a transport protocol packet for transmission of the delivery object, real-time information indicating whether the at least one delivery object transmits a streaming service, mapping information for mapping the transport session to a transport session identifier (TSI) and mapping the delivery object to a transport object identifier (TOI), and timestamp information indicating time information on the delivery object.

The signaling information may further include second information including description of DASH media presentation corresponding to the service.

The delivery object processor may further include a transport protocol client configured to parse the transport protocol packet to recover at least one delivery object, and a buffer/control unit configured to buffer the delivery object and to transmit the delivery object to the media decoder.

The delivery object processor may further include a transport protocol client configured to parse the transport protocol packet to recover at least one delivery object, an HTTP entity generator configured to generate at least one HTTP entity based on the delivery object and the signaling information, the HTTP entity including an HTTP entity header and an HTTP entity body including the at least one delivery object, an internal HTTP server configured to store the at least one HTTP entity, and a DASH client configured to request the internal HTTP server to transmit the at least one delivery object based on the second information and to transmit the delivery object to the media decoder.

The HTTP entity header may include at least one of a content-length field indicating a size of an HTTP entity body, a content-location field including a resource address of the HTTP entity, a content-range field indicating a position of a partial HTTP entity-payload in a full HTTP entity-payload, and an expires field indicating date/time information for receiving an effective request.

The delivery object processor may include a packet client configured to parse at least one packet for transmission of the service to recover an HTTP entity, a transport protocol converter configured to covert the HTTP entity into at least one transport protocol packet based on second information including description of DASH Media Presentation corresponding to the service, a transport protocol client configured to parse the transport protocol packet to recover at least one delivery object, and a buffer/control unit configured to buffer the delivery object and to transmit the delivery object to the media decoder.

**[**Advantageous Effects**]**

The present invention can process data according to service characteristics to control QoS for each service or service component, thereby providing various broadcast services.

The present invention can achieve transmission flexibility by transmitting various broadcast services through the same RF signal bandwidth.

The present invention can improve data transmission efficiency and increase robustness of transmission/reception of broadcast signals using a MIMO system.

According to the present invention, it is possible to provide broadcast signal transmission and reception methods and apparatus capable of receiving digital broadcast signals without error even with mobile reception equipment or in an indoor environment.

The apparatus for transmitting broadcast signals according to the embodiments can reduce a standby time needed for transmitting multimedia content.

The apparatus for receiving broadcast signals according to the embodiments can reduce a standby time needed for reproducing multimedia content.

The embodiments of the present invention can reduce a total time consumed for obtaining multimedia content and displaying the multimedia content for a user.

The embodiments of the present invention can reduce an initial delay time needed for the user who approaches a broadcast channel.

**[**Description of Drawings**]**

The accompanying drawings, which are included to provide a further understanding of the invention and are incorporated in and constitute a part of this application, illustrate embodiment(s) of the invention and together with the description serve to explain the principle of the invention. In the drawings:

FIG. 1 illustrates a structure of an apparatus for transmitting broadcast signals for future broadcast services according to an embodiment of the present invention.

FIG. 2 illustrates an input formatting block according to one embodiment of the present invention.

FIG. 3 illustrates an input formatting block according to another embodiment of the present invention.

FIG. 4 illustrates a BICM block according to an embodiment of the present invention.

FIG. 5 illustrates a BICM block according to another embodiment of the present invention.

FIG. 6 illustrates a frame building block according to one embodiment of the present invention.

FIG. 7 illustrates an OFMD generation block according to an embodiment of the present invention.

FIG. 8 illustrates a structure of an apparatus for receiving broadcast signals for future broadcast services according to an embodiment of the present invention.

FIG. 9 illustrates a frame structure according to an embodiment of the present invention.

FIG. 10 illustrates a signaling hierarchy structure of the frame according to an embodiment of the present invention.

FIG. 11 illustrates preamble signaling data according to an embodiment of the present invention.

FIG. 12 illustrates PLS1 data according to an embodiment of the present invention.
FIG. 13 illustrates PLS2 data according to an embodiment of the present invention.
FIG. 14 illustrates PLS2 data according to another embodiment of the present invention.
FIG. 15 illustrates a logical structure of a frame according to an embodiment of the present invention.
FIG. 16 illustrates PLS mapping according to an embodiment of the present invention.
FIG. 17 illustrates EAC mapping according to an embodiment of the present invention.
FIG. 18 illustrates FIC mapping according to an embodiment of the present invention.
FIG. 19 illustrates an FEC structure according to an embodiment of the present invention.
FIG. 20 illustrates a time interleaving according to an embodiment of the present invention.
FIG. 21 illustrates the basic operation of a twisted row-column block interleaver according to an embodiment of the present invention.
FIG. 22 illustrates an operation of a twisted row-column block interleaver according to another embodiment of the present invention.
FIG. 23 illustrates a diagonal-wise reading pattern of a twisted row-column block interleaver according to an embodiment of the present invention.
FIG. 24 illustrates interleaved XFECBLOCKs from each interleaving array according to an embodiment of the present invention.
FIG. 25 illustrates a data processing time when a File Delivery over Unidirectional Transport (FLUTE) protocol is used.
FIG. 26 illustrates a Real-Time Object Delivery over Unidirectional Transport (ROUTE) protocol stack according to an embodiment of the present invention.
FIG. 27 illustrates a data structure of file-based multimedia content according to an embodiment of the present invention.
FIG. 28 illustrates a media segment structure of MPEG-DASH to which the data structure is applied.
FIG. 29 illustrates a data processing time using a ROUTE protocol according to an embodiment of the present invention.
FIG. 30 illustrates a Layered Coding Transport (LCT) packet structure for file transmission according to an embodiment of the present invention.
FIG. 31 illustrates a structure of an LCT packet according to an embodiment of the present invention.
FIG. 32 illustrates real-time broadcast support information signaling based on FDT according to an embodiment of the present invention.
FIG. 33 is a block diagram illustrating a broadcast signal transmission apparatus according to an embodiment of the present invention.
FIG. 34 is a block diagram illustrating a broadcast signal transmission apparatus according to an embodiment of the present invention.
FIG. 35 is a flowchart illustrating a process for generating and transmitting in real time the file-based multimedia content according to an embodiment of the present invention.
FIG. 36 is a flowchart illustrating a process for allowing the broadcast signal transmission apparatus to generate packets using a packetizer according to an embodiment of the present invention.
FIG. 37 is a flowchart illustrating a process for generating/transmitting in real time the file-based multimedia content according to an embodiment of the present invention.
FIG. 38 is a block diagram illustrating a file-based multimedia content receiver according to an embodiment of the present invention.
FIG. 39 is a block diagram illustrating a file-based multimedia content receiver according to an embodiment of the present invention.
FIG. 40 is a flowchart illustrating a process for receiving/consuming a file-based multimedia content according to an embodiment of the present invention.
FIG. 41 is a flowchart illustrating a process for receiving/consuming in real time a file-based multimedia content according to an embodiment of the present invention.
FIG. 42 is a diagram illustrating a structure of a packet including object type information according to another embodiment of the present invention.
FIG. 43 is a diagram illustrating a structure of a packet including object type information according to another embodiment of the present invention.
FIG. 44 is a diagram illustrating a structure of a broadcast signal receiving apparatus using object type information according to another embodiment of the present invention.
FIG. 45 is a diagram illustrating a structure of a broadcast signal receiving apparatus using object type information according to another embodiment of the present invention.
FIG. 46 is a diagram illustrating a structure of a packet including type information according to another embodiment of the present invention.

FIG. 47 is a diagram illustrating a structure of a packet including boundary information according to another embodiment of the present invention.

FIG. 48 is a diagram illustrating a structure of a packet including mapping information according to another embodiment of the present invention.

FIG. 49 is a diagram illustrating a structure of an LCT packet including grouping information according to another embodiment of the present invention.

FIG. 50 is a diagram illustrating grouping of a session and an object according to another embodiment of the present invention.

FIG. 51 is a diagram illustrating a structure of a broadcast signal transmitting apparatus using packet information according to another embodiment of the present invention.

FIG. 52 is a diagram illustrating a structure of a broadcast signal receiving apparatus according to another embodiment of the present invention.

FIG. 53 is a diagram illustrating a structure of a broadcast signal receiving apparatus using packet information according to another embodiment of the present invention.

FIG. 54 is a diagram illustrating a structure of a broadcast signal receiving apparatus using packet information according to another embodiment of the present invention.

FIG. 55 is a diagram illustrating a structure of a broadcast signal receiving apparatus using packet information according to another embodiment of the present invention.

FIG. 56 is a diagram showing the structure of a packet including priority information according to another embodiment of the present invention.

FIG. 57 is a diagram showing the structure of a packet including priority information according to another embodiment of the present invention.

FIG. 58 is a diagram showing the structure of a packet including offset information according to another embodiment of the present invention.

FIG. 59 is a diagram showing the structure of a packet including random access point (RAP) information according to another embodiment of the present invention.

FIG. 60 is a diagram showing the structure of a packet including random access point (RAP) information according to another embodiment of the present invention.

FIG. 61 is a diagram showing the structure of a packet including real time information according to another embodiment of the present invention.

FIG. 62 is a diagram showing the structure of a broadcast signal transmission apparatus according to another embodiment of the present invention.

FIG. 63 is a diagram showing the structure of a broadcast signal reception apparatus according to another embodiment of the present invention.

FIG. 64 is a diagram illustrating a structure of a broadcast signal transmitting apparatus according to another embodiment of the present invention.

FIG. 65 is a diagram illustrating a configuration of a broadcast signal receiving apparatus according to another embodiment of the present invention.

FIG. 66 is a diagram illustrating a structure of a broadcast signal receiving apparatus according to another embodiment of the present invention.

FIG. 67 is a diagram illustrating a structure of a broadcast signal receiving apparatus according to another embodiment of the present invention.

FIG. 68 is a diagram illustrating a method of formatting an HTTP Entity header according to another embodiment of the present invention.

FIG. 69 is a diagram illustrating a structure of a broadcast signal receiving apparatus according to another embodiment of the present invention.

FIG. 70 is a diagram illustrating a method of formatting an HTTP Entity header according to another embodiment of the present invention.

FIG. 71 is a flowchart of a broadcast signal transmitting method according to another embodiment of the present invention.

FIG. 72 is a flowchart of a broadcast signal receiving method according to another embodiment of the present invention.

**[**Best Mode**]**

Reference will now be made in detail to the preferred embodiments of the present invention, examples of which are illustrated in the accompanying drawings. The detailed description, which will be given below with reference to the accompanying drawings, is intended to explain exemplary embodiments of the present invention, rather than to show the only embodiments that can be implemented according to the present invention. The following detailed description includes specific details in order to provide a thorough understanding of the present invention. However, it will be apparent to those skilled in the art that the present invention may be practiced without such specific details.

Although most terms used in the present invention have been selected from general ones widely used in the art, some terms have been arbitrarily selected by the applicant and their meanings are explained in detail in the following description as needed. Thus, the present invention should be understood based upon the intended meanings of the terms rather than their simple names or meanings.

The present invention provides apparatuses and methods for transmitting and receiving broadcast signals for future broadcast services. Future broadcast services according to an embodiment of the present invention include a terrestrial broadcast service, a mobile broadcast service, a UHDTV service, etc. The present invention may process broadcast signals for the future broadcast services through non-MIMO (Multiple Input Multiple Output) or MIMO according to one embodiment. A non-MIMO scheme according to an embodiment of the present invention may include a MISO (Multiple Input Single Output) scheme, a SISO (Single Input Single Output) scheme, etc.

While MISO or MIMO uses two antennas in the following for convenience of description, the present invention is applicable to systems using two or more antennas. The present invention may defines three physical layer (PL) profiles (base, handheld and advanced profiles), each optimized to minimize receiver complexity while attaining the performance required for a particular use case. The physical layer (PHY) profiles are subsets of all configurations that a corresponding receiver should implement.

The three PHY profiles share most of the functional blocks but differ slightly in specific blocks and/or parameters. Additional PHY profiles can be defined in the future. For the system evolution, future profiles can also be multiplexed with the existing profiles in a single RF channel through a future extension frame (FEF). The details of each PHY profile are described below.

1. Base profile

The base profile represents a main use case for fixed receiving devices that are usually connected to a roof-top antenna. The base profile also includes portable devices that could be transported to a place but belong to a relatively stationary reception category. Use of the base profile could be extended to handheld devices or even vehicular by some improved implementations, but those use cases are not expected for the base profile receiver operation.

Target SNR range of reception is from approximately 10 to 20dB, which includes the 15dB SNR reception capability of the existing broadcast system (e.g. ATSC A/53). The receiver complexity and power consumption is not as critical as in the battery-operated handheld devices, which will use the handheld profile. Key system parameters for the base profile are listed in below table 1.

**[**Table 1**]**

| | |
|---|---|
| LDPC codeword length | 16K, 64K bits |
| Constellation size | 4~10 bpcu (bits per channel use) |
| Time de-interleaving memory size | ≤ $2^{19}$ data cells |
| Pilot patterns FFT size | Pilot pattern for fixed reception 16K, 32K points |

2. Handheld profile

The handheld profile is designed for use in handheld and vehicular devices that operate with battery power. The devices can be moving with pedestrian or vehicle speed. The power consumption as well as the receiver complexity is very important for the implementation of the devices of the handheld profile. The target SNR range of the handheld profile is approximately 0 to 10dB, but can be configured to reach below 0dB when intended for deeper indoor reception.

In addition to low SNR capability, resilience to the Doppler Effect caused by receiver mobility is the most important performance attribute of the handheld profile. Key system parameters for the handheld profile are listed in the below table 2.

**[**Table 2**]**

| | |
|---|---|
| LDPC codeword length | 16K bits |
| Constellation size | 2~8 bpcu |
| Time de-interleaving memory size | ≤ $2^{18}$ data cells |

(continued)

| | |
|---|---|
| Pilot patterns | Pilot patterns for mobile and indoor reception |
| FFT size | 8K, 16K points |

3. Advanced profile

The advanced profile provides highest channel capacity at the cost of more implementation complexity. This profile requires using MIMO transmission and reception, and UHDTV service is a target use case for which this profile is specifically designed. The increased capacity can also be used to allow an increased number of services in a given bandwidth, e.g., multiple SDTV or HDTV services.

The target SNR range of the advanced profile is approximately 20 to 30dB. MIMO transmission may initially use existing elliptically-polarized transmission equipment, with extension to full-power cross-polarized transmission in the future. Key system parameters for the advanced profile are listed in below table 3.

**[**Table 3**]**

| | |
|---|---|
| LDPC codeword length | 16K, 64K bits |
| Constellation size | 8~12 bpcu |
| Time de-interleaving memory size | $\leq 2^{19}$ data cells |
| Pilot patterns | Pilot pattern for fixed reception |
| FFT size | 16K, 32K points |

In this case, the base profile can be used as a profile for both the terrestrial broadcast service and the mobile broadcast service. That is, the base profile can be used to define a concept of a profile which includes the mobile profile. Also, the advanced profile can be divided advanced profile for a base profile with MIMO and advanced profile for a handheld profile with MIMO. Moreover, the three profiles can be changed according to intention of the designer.

The following terms and definitions may apply to the present invention. The following terms and definitions can be changed according to design.

auxiliary stream: sequence of cells carrying data of as yet undefined modulation and coding, which may be used for future extensions or as required by broadcasters or network operators
base data pipe: data pipe that carries service signaling data
baseband frame (or BBFRAME): set of Kbch bits which form the input to one FEC encoding process (BCH and LDPC encoding)
cell: modulation value that is carried by one carrier of the OFDM transmission
coded block: LDPC-encoded block of PLS1 data or one of the LDPC-encoded blocks of PLS2 data
data pipe: logical channel in the physical layer that carries service data or related metadata, which may carry one or multiple service(s) or service component(s).
data pipe unit: a basic unit for allocating data cells to a DP in a frame.
data symbol: OFDM symbol in a frame which is not a preamble symbol (the frame signaling symbol and frame edge symbol is included in the data symbol)
DP_ID: this 8-bit field identifies uniquely a DP within the system identified by the SYSTEM_ID
dummy cell: cell carrying a pseudo-random value used to fill the remaining capacity not used for PLS signaling, DPs or auxiliary streams
emergency alert channel: part of a frame that carries EAS information data
frame: physical layer time slot that starts with a preamble and ends with a frame edge symbol
frame repetition unit: a set of frames belonging to same or different physical layer profile including a FEF, which is repeated eight times in a super-frame
fast information channel: a logical channel in a frame that carries the mapping information between a service and the corresponding base DP
FECBLOCK: set of LDPC-encoded bits of a DP data
FFT size: nominal FFT size used for a particular mode, equal to the active symbol period Ts expressed in cycles of the elementary period T
frame signaling symbol: OFDM symbol with higher pilot density used at the start of a frame in certain combinations of FFT size, guard interval and scattered pilot pattern, which carries a part of the PLS data
frame edge symbol: OFDM symbol with higher pilot density used at the end of a frame in certain combinations of FFT size, guard interval and scattered pilot pattern
frame-group: the set of all the frames having the same PHY profile type in a super-frame.
future extension frame: physical layer time slot within the super-frame that could be used for future extension, which starts with a preamble
Futurecast UTB system: proposed physical layer broadcasting system, of which the input is one or more MPEG2-TS or IP or general stream(s) and of which the output is an RF signal
input stream: A stream of data for an ensemble of services delivered to the end users by the system.
normal data symbol: data symbol excluding the frame signaling symbol and the frame edge symbol
PHY profile: subset of all configurations that a corresponding receiver should implement
PLS: physical layer signaling data consisting of PLS1 and PLS2
PLS1: a first set of PLS data carried in the FSS symbols having a fixed size, coding and modulation, which carries basic information about the system as well as the parameters needed to decode the PLS2
NOTE: PLS1 data remains constant for the duration of a frame-group.
PLS2: a second set of PLS data transmitted in the FSS symbol, which carries more detailed PLS data about the system and the DPs
PLS2 dynamic data: PLS2 data that may dynamically change frame-by-frame
PLS2 static data: PLS2 data that remains static for the duration of a frame-group
preamble signaling data: signaling data carried by the preamble symbol and used to identify the basic mode of the system
preamble symbol: fixed-length pilot symbol that carries basic PLS data and is located in the beginning of a frame
NOTE: The preamble symbol is mainly used for fast initial band scan to detect the system signal, its timing, frequency offset, and FFT-size.
reserved for future use: not defined by the present document but may be defined in future
super-frame: set of eight frame repetition units
time interleaving block (TI block): set of cells within which time interleaving is carried out, corresponding to one use of the time interleaver memory
TI group: unit over which dynamic capacity allocation for a particular DP is carried out, made up of an integer, dynamically varying number of XFECBLOCKs.
NOTE: The TI group may be mapped directly to one frame or may be mapped to multiple frames. It may contain one or more TI blocks.
Type 1 DP: DP of a frame where all DPs are mapped into the frame in TDM fashion
Type 2 DP: DP of a frame where all DPs are mapped into the frame in FDM fashion
XFECBLOCK: set of Ncells cells carrying all the bits of one LDPC FECBLOCK

FIG. 1 illustrates a structure of an apparatus for transmitting broadcast signals for future broadcast services according to an embodiment of the present invention.

The apparatus for transmitting broadcast signals for future broadcast services according to an embodiment of the present invention can include an input formatting block 1000, a BICM (Bit interleaved coding & modulation) block 1010, a frame structure block 1020, an OFDM (Orthogonal Frequency Division Multiplexing) generation block 1030 and a signaling generation block 1040. A description will be given of the operation of each module of the apparatus for transmitting broadcast signals.

IP stream/packets and MPEG2-TS are the main input formats, other stream types are handled as General Streams. In addition to these data inputs, Management Information is input to control the scheduling and allocation of the corresponding bandwidth for each input stream. One or multiple TS stream(s), IP stream(s) and/or General Stream(s) inputs are simultaneously allowed.

The input formatting block 1000 can demultiplex each input stream into one or multiple data pipe(s), to each of which an independent coding and modulation is applied. The data pipe (DP) is the basic unit for robustness control, thereby affecting quality-of-service (QoS). One or multiple service(s) or service component(s) can be carried by a single DP. Details of operations of the input formatting block 1000 will be described later.

The data pipe is a logical channel in the physical layer that carries service data or related metadata, which may carry one or multiple service(s) or service component(s).

Also, the data pipe unit: a basic unit for allocating data cells to a DP in a frame.

In the BICM block 1010, parity data is added for error correction and the encoded bit streams are mapped to complex-value constellation symbols. The symbols are interleaved across a specific interleaving depth that is used for the corresponding DP. For the advanced profile, MIMO encoding is performed in the BICM block 1010 and the additional data path is added at the output for MIMO transmission. Details of operations of the BICM block 1010 will be described later.

The Frame Building block 1020 can map the data cells of the input DPs into the OFDM symbols within a frame. After mapping, the frequency interleaving is used for frequency-domain diversity, especially to combat frequency-selective fading channels. Details of operations of the Frame Building block 1020 will be described later.

After inserting a preamble at the beginning of each frame, the OFDM Generation block 1030 can apply conventional OFDM modulation having a cyclic prefix as guard interval. For antenna space diversity, a distributed MISO scheme is applied across the transmitters. In addition, a Peak-to-Average Power Reduction (PAPR) scheme is performed in the time domain. For flexible network planning, this proposal provides a set of various FFT sizes, guard interval lengths and corresponding pilot patterns. Details of operations of the OFDM Generation block 1030 will be described later.

The Signaling Generation block 1040 can create physical layer signaling information used for the operation of each functional block. This signaling information is also transmitted so that the services of interest are properly recovered at the receiver side. Details of operations of the Signaling Generation block 1040 will be described later.

FIGS. 2, 3 and 4 illustrate the input formatting block 1000 according to embodiments of the present invention. A description will be given of each figure.

FIG. 2 illustrates an input formatting block according to one embodiment of the present invention. FIG. 2 shows an input formatting module when the input signal is a single input stream.

The input formatting block illustrated in FIG. 2 corresponds to an embodiment of the input formatting block 1000 described with reference to FIG. 1.

The input to the physical layer may be composed of one or multiple data streams. Each data stream is carried by one DP. The mode adaptation modules slice the incoming data stream into data fields of the baseband frame (BBF). The system supports three types of input data streams: MPEG2-TS, Internet protocol (IP) and Generic stream (GS). MPEG2-TS is characterized by fixed length (188 byte) packets with the first byte being a sync-byte (0x47). An IP stream is composed of variable length IP datagram packets, as signalled within IP packet headers. The system supports both IPv4 and IPv6 for the IP stream. GS may be composed of variable length packets or constant length packets, signalled within encapsulation packet headers.

(a) shows a mode adaptation block 2000 and a stream adaptation 2010 for signal DP and (b) shows a PLS generation block 2020 and a PLS scrambler 2030 for generating and processing PLS data. A description will be given of the operation of each block.

The Input Stream Splitter splits the input TS, IP, GS streams into multiple service or service component (audio, video, etc.) streams. The mode adaptation module 2010 is comprised of a CRC Encoder, BB (baseband) Frame Slicer, and BB Frame Header Insertion block.

The CRC Encoder provides three kinds of CRC encoding for error detection at the user packet (UP) level, i.e., CRC-8, CRC-16, and CRC-32. The computed CRC bytes are appended after the UP. CRC-8 is used for TS stream and CRC-32 for IP stream. If the GS stream doesn't provide the CRC encoding, the proposed CRC encoding should be applied.

BB Frame Slicer maps the input into an internal logical-bit format. The first received bit is defined to be the MSB. The BB Frame Slicer allocates a number of input bits equal to the available data field capacity. To allocate a number of input bits equal to the BBF payload, the UP packet stream is sliced to fit the data field of BBF.

BB Frame Header Insertion block can insert fixed length BBF header of 2 bytes is inserted in front of the BB Frame. The BBF header is composed of STUFFI (1 bit), SYNCD (13 bits), and RFU (2 bits). In addition to the fixed 2-Byte BBF header, BBF can have an extension field (1 or 3 bytes) at the end of the 2-byte BBF header.

The stream adaptation 2010 is comprised of stuffing insertion block and BB scrambler. The stuffing insertion block can insert stuffing field into a payload of a BB frame. If the input data to the stream adaptation is sufficient to fill a BB-Frame, STUFFI is set to '0' and the BBF has no stuffing field. Otherwise STUFFI is set to '1' and the stuffing field is inserted immediately after the BBF header. The stuffing field comprises two bytes of the stuffing field header and a variable size of stuffing data.

The BB scrambler scrambles complete BBF for energy dispersal. The scrambling sequence is synchronous with the BBF. The scrambling sequence is generated by the feed-back shift register.

The PLS generation block 2020 can generate physical layer signaling (PLS) data. The PLS provides the receiver with a means to access physical layer DPs. The PLS data consists of PLS 1 data and PLS2 data.

The PLS1 data is a first set of PLS data carried in the FSS symbols in the frame having a fixed size, coding and modulation, which carries basic information about the system as well as the parameters needed to decode the PLS2 data. The PLS1 data provides basic transmission parameters including parameters required to enable the reception and decoding of the PLS2 data. Also, the PLS1 data remains constant for the duration of a frame-group.

The PLS2 data is a second set of PLS data transmitted in the FSS symbol, which carries more detailed PLS data about the system and the DPs. The PLS2 contains parameters that provide sufficient information for the receiver to decode the desired DP. The PLS2 signaling further consists of two types of parameters, PLS2 Static data (PLS2-STAT data) and PLS2 dynamic data (PLS2-DYN data). The PLS2 Static data is PLS2 data that remains static for the duration of a frame-group and the PLS2 dynamic data is PLS2 data that may dynamically change frame-by-frame.

Details of the PLS data will be described later.

The PLS scrambler 2030 can scramble the generated PLS data for energy dispersal.

The above-described blocks may be omitted or replaced by blocks having similar or identical functions.

FIG. 3 illustrates an input formatting block according to another embodiment of the present invention.

The input formatting block illustrated in FIG. 3 corresponds to an embodiment of the input formatting block 1000 described with reference to FIG. 1.

FIG. 3 shows a mode adaptation block of the input formatting block when the input signal corresponds to multiple input streams.

The mode adaptation block of the input formatting block for processing the multiple input streams can independently process the multiple input streams.

Referring to FIG. 3, the mode adaptation block for respectively processing the multiple input streams can include an input stream splitter 3000, an input stream synchronizer 3010, a compensating delay block 3020, a null packet deletion block 3030, a head compression block 3040, a CRC encoder 3050, a BB frame slicer 3060 and a BB header insertion block 3070. Description will be given of each block of the mode adaptation block.

Operations of the CRC encoder 3050, BB frame slicer 3060 and BB header insertion block 3070 correspond to those of the CRC encoder, BB frame slicer and BB header insertion block described with reference to FIG. 2 and thus description thereof is omitted.

The input stream splitter 3000 can split the input TS, IP, GS streams into multiple service or service component (audio, video, etc.) streams.

The input stream synchronizer 3010 may be referred as ISSY. The ISSY can provide suitable means to guarantee Constant Bit Rate (CBR) and constant end-to-end transmission delay for any input data format. The ISSY is always used for the case of multiple DPs carrying TS, and optionally used for multiple DPs carrying GS streams.

The compensating delay block 3020 can delay the split TS packet stream following the insertion of ISSY information to allow a TS packet recombining mechanism without requiring additional memory in the receiver.

The null packet deletion block 3030, is used only for the TS input stream case. Some TS input streams or split TS streams may have a large number of null-packets present in order to accommodate VBR (variable bit-rate) services in a CBR TS stream. In this case, in order to avoid unnecessary transmission overhead, null-packets can be identified and not transmitted. In the receiver, removed null-packets can be re-inserted in the exact place where they were originally by reference to a deleted null-packet (DNP) counter that is inserted in the transmission, thus guaranteeing constant bit-rate and avoiding the need for time-stamp (PCR) updating.

The head compression block 3040 can provide packet header compression to increase transmission efficiency for TS or IP input streams. Because the receiver can have a priori information on certain parts of the header, this known information can be deleted in the transmitter.

For Transport Stream, the receiver has a-priori information about the sync-byte configuration (0x47) and the packet length (188 Byte). If the input TS stream carries content that has only one PID, i.e., for only one service component (video, audio, etc.) or service sub-component (SVC base layer, SVC enhancement layer, MVC base view or MVC dependent views), TS packet header compression can be applied (optionally) to the Transport Stream. IP packet header compression is used optionally if the input steam is an IP stream. The above-described blocks may be omitted or replaced by blocks having similar or identical functions.

FIG. 4 illustrates a BICM block according to an embodiment of the present invention.

The BICM block illustrated in FIG. 4 corresponds to an embodiment of the BICM block 1010 described with reference to FIG. 1.

As described above, the apparatus for transmitting broadcast signals for future broadcast services according to an embodiment of the present invention can provide a terrestrial broadcast service, mobile broadcast service, UHDTV service, etc.

Since QoS (quality of service) depends on characteristics of a service provided by the apparatus for transmitting broadcast signals for future broadcast services according to an embodiment of the present invention, data corresponding to respective services needs to be processed through different schemes. Accordingly, the a BICM block according to an embodiment of the present invention can independently process DPs input thereto by independently applying SISO, MISO and MIMO schemes to the data pipes respectively corresponding to data paths. Consequently, the apparatus for transmitting broadcast signals for future broadcast services according to an embodiment of the present invention can control QoS for each service or service component transmitted through each DP.

(a) shows the BICM block shared by the base profile and the handheld profile and (b) shows the BICM block of the advanced profile.

The BICM block shared by the base profile and the handheld profile and the BICM block of the advanced profile can include plural processing blocks for processing each DP.

A description will be given of each processing block of the BICM block for the base profile and the handheld profile and the BICM block for the advanced profile.

A processing block 5000 of the BICM block for the base profile and the handheld profile can include a Data FEC encoder 5010, a bit interleaver 5020, a constellation mapper 5030, an SSD (Signal Space Diversity) encoding block 5040 and a time interleaver 5050.

The Data FEC encoder 5010 can perform the FEC encoding on the input BBF to generate FECBLOCK procedure using outer coding (BCH), and inner coding (LDPC). The outer coding (BCH) is optional coding method. Details of operations of the Data FEC encoder 5010 will be described later.

The bit interleaver 5020 can interleave outputs of the Data FEC encoder 5010 to achieve optimized performance with combination of the LDPC codes and modulation scheme while providing an efficiently implementable structure. Details of operations of the bit interleaver 5020 will be described later.

The constellation mapper 5030 can modulate each cell word from the bit interleaver 5020 in the base and the handheld profiles, or cell word from the Cell-word demultiplexer 5010-1 in the advanced profile using either QPSK, QAM-16, non-uniform QAM (NUQ-64, NUQ-256, NUQ-1024) or non-uniform constellation (NUC-16, NUC-64, NUC-256, NUC-1024) to give a power-normalized constellation point, el. This constellation mapping is applied only for DPs. Observe that QAM-16 and NUQs are square shaped, while NUCs have arbitrary shape. When each constellation is rotated by any multiple of 90 degrees, the rotated constellation exactly overlaps with its original one. This "rotation-sense" symmetric property makes the capacities and the average powers of the real and imaginary components equal to each other. Both NUQs and NUCs are defined specifically for each code rate and the particular one used is signaled by the parameter DP_MOD filed in PLS2 data.

The SSD encoding block 5040 can precode cells in two (2D), three (3D), and four (4D) dimensions to increase the reception robustness under difficult fading conditions.

The time interleaver 5050 can operates at the DP level. The parameters of time interleaving (TI) may be set differently for each DP. Details of operations of the time interleaver 5050 will be described later.

A processing block 5000-1 of the BICM block for the advanced profile can include the Data FEC encoder, bit interleaver, constellation mapper, and time interleaver. However, the processing block 5000-1 is distinguished from the processing block 5000 further includes a cell-word demultiplexer 5010-1 and a MIMO encoding block 5020-1.

Also, the operations of the Data FEC encoder, bit interleaver, constellation mapper, and time interleaver in the processing block 5000-1 correspond to those of the Data FEC encoder 5010, bit interleaver 5020, constellation mapper 5030, and time interleaver 5050 described and thus description thereof is omitted.

The cell-word demultiplexer 5010-1 is used for the DP of the advanced profile to divide the single cell-word stream into dual cell-word streams for MIMO processing. Details of operations of the cell-word demultiplexer 5010-1 will be described later.

The MIMO encoding block 5020-1 can processing the output of the cell-word demultiplexer 5010-1 using MIMO encoding scheme. The MIMO encoding scheme was optimized for broadcasting signal transmission. The MIMO technology is a promising way to get a capacity increase but it depends on channel characteristics. Especially for broadcasting, the strong LOS component of the channel or a difference in the received signal power between two antennas caused by different signal propagation characteristics makes it difficult to get capacity gain from MIMO. The proposed MIMO encoding scheme overcomes this problem using a rotation-based pre-coding and phase randomization of one of the MIMO output signals.

MIMO encoding is intended for a 2x2 MIMO system requiring at least two antennas at both the transmitter and the receiver. Two MIMO encoding modes are defined in this proposal; full-rate spatial multiplexing (FR-SM) and full-rate full-diversity spatial multiplexing (FRFD-SM). The FR-SM encoding provides capacity increase with relatively small complexity increase at the receiver side while the FRFD-SM encoding provides capacity increase and additional diversity gain with a great complexity increase at the receiver side. The proposed MIMO encoding scheme has no restriction on the antenna polarity configuration.

MIMO processing is required for the advanced profile frame, which means all DPs in the advanced profile frame are processed by the MIMO encoder. MIMO processing is applied at DP level. Pairs of the Constellation Mapper outputs NUQ (e1,i and e2,i) are fed to the input of the MIMO Encoder. Paired MIMO Encoder output (g1,i and g2,i) is transmitted by the same carrier k and OFDM symbol 1 of their respective TX antennas.

The above-described blocks may be omitted or replaced by blocks having similar or identical functions.

FIG. 5 illustrates a BICM block according to another embodiment of the present invention.

The BICM block illustrated in FIG. 5 corresponds to an embodiment of the BICM block 1010 described with reference to FIG. 1.

FIG. 5 illustrates a BICM block for protection of physical layer signaling (PLS), emergency alert channel (EAC) and fast information channel (FIC). EAC is a part of a frame that carries EAS information data and FIC is a logical channel in a frame that carries the mapping information between a service and the corresponding base DP. Details of the EAC and FIC will be described later.

Referring to FIG. 5, the BICM block for protection of PLS, EAC and FIC can include a PLS FEC encoder 6000, a bit interleaver 6010, and a constellation mapper 6020.

Also, the PLS FEC encoder 6000 can include a scrambler, BCH encoding/zero insertion block, LDPC encoding block and LDPC parity puncturing block. Description will be given of each block of the BICM block.

The PLS FEC encoder 6000 can encode the scrambled PLS 1/2 data, EAC and FIC section.

The scrambler can scramble PLS1 data and PLS2 data before BCH encoding and shortened and punctured LDPC encoding.

The BCH encoding/zero insertion block can perform outer encoding on the scrambled PLS 1/2 data using the shortened BCH code for PLS protection and insert zero bits after the BCH encoding. For PLS1 data only, the output bits of the zero insertion may be permutted before LDPC encoding.

The LDPC encoding block can encode the output of the BCH encoding/zero insertion block using LDPC code. To generate a complete coded block, Cldpc, parity bits, Pldpc are encoded systematically from each zero-inserted PLS information block, Ildpc and appended after it.

【Math Figure 1】

$$\mathbf{C}_{ldpc}=[\mathbf{I}_{ldpc}\ \ \mathbf{P}_{ldpc}]=[i_0,i_1,\ldots,i_{K_{ldpc}-1},\ p_0,p_1,\ldots,p_{N_{ldpc}-K_{ldpc}-1}]$$

The LDPC code parameters for PLS1 and PLS2 are as following table 4.

[Table 4]

| Signaling Type | $K_{sig}$ | $K_{bch}$ | $N_{bch_parity}$ | $K_{ldpc}$ (=$N_{bch}$) | $N_{ldpc}$ | $N_{ldpc_parity}$ | code rate | $Q_{ldpc}$ |
|---|---|---|---|---|---|---|---|---|
| PLS1 | 342 | 1020 | 60 | 1080 | 4320 | 3240 | 1/4 | 36 |
| PLS2 | < 1021 | | | | | | | |
| | > 1020 | 2100 | | 2160 | 7200 | 5040 | 3/10 | 56 |

The LDPC parity puncturing block can perform puncturing on the PLS1 data and PLS 2 data.

When shortening is applied to the PLS1 data protection, some LDPC parity bits are punctured after LDPC encoding. Also, for the PLS2 data protection, the LDPC parity bits of PLS2 are punctured after LDPC encoding. These punctured bits are not transmitted.

The bit interleaver 6010 can interleave the each shortened and punctured PLS1 data and PLS2 data.

The constellation mapper 6020 can map the bit interleaved PLS1 data and PLS2 data onto constellations.

The above-described blocks may be omitted or replaced by blocks having similar or identical functions.

FIG. 6 illustrates a frame building block according to one embodiment of the present invention.

The frame building block illustrated in FIG. 6 corresponds to an embodiment of the frame building block 1020 described with reference to FIG. 1.

Referring to FIG. 6, the frame building block can include a delay compensation block 7000, a cell mapper 7010 and a frequency interleaver 7020. Description will be given of each block of the frame building block.

The delay compensation block 7000 can adjust the timing between the data pipes and the corresponding PLS data to ensure that they are co-timed at the transmitter end. The PLS data is delayed by the same amount as data pipes are by addressing the delays of data pipes caused by the Input Formatting block and BICM block. The delay of the BICM block is mainly due to the time interleaver. In-band signaling data carries information of the next TI group so that they are carried one frame ahead of the DPs to be signalled. The Delay Compensating block delays in-band signaling data accordingly.

The cell mapper 7010 can map PLS, EAC, FIC, DPs, auxiliary streams and dummy cells into the active carriers of the OFDM symbols in the frame. The basic function of the cell mapper 7010 is to map data cells produced by the TIs for each of the DPs, PLS cells, and EAC/FIC cells, if any, into arrays of active OFDM cells corresponding to each of the OFDM symbols within a frame. Service signaling data (such as PSI(program specific information)/SI) can be separately gathered and sent by a data pipe. The Cell Mapper operates according to the dynamic information produced by the scheduler and the configuration of the frame structure. Details of the frame will be described later.

The frequency interleaver 7020 can randomly interleave data cells received from the cell mapper 7010 to provide frequency diversity. Also, the frequency interleaver 7020 can operate on very OFDM symbol pair comprised of two sequential OFDM symbols using a different interleaving-seed order to get maximum interleaving gain in a single frame.

The above-described blocks may be omitted or replaced by blocks having similar or identical functions.

FIG. 7 illustrates an OFMD generation block according to an embodiment of the present invention.

The OFMD generation block illustrated in FIG. 7 corresponds to an embodiment of the OFMD generation block 1030 described with reference to FIG. 1.

The OFDM generation block modulates the OFDM carriers by the cells produced by the Frame Building block, inserts the pilots, and produces the time domain signal for transmission. Also, this block subsequently inserts guard intervals, and applies PAPR (Peak-to-Average Power Radio) reduction processing to produce the final RF signal.

Referring to FIG. 8, the frame building block can include a pilot and reserved tone insertion block 8000, a 2D-eSFN encoding block 8010, an IFFT (Inverse Fast Fourier Transform) block 8020, a PAPR reduction block 8030, a guard interval insertion block 8040, a preamble insertion block 8050, other system insertion block 8060 and a DAC block 8070.

The other system insertion block 8060 can multiplex signals of a plurality of broadcast transmission/reception systems in the time domain such that data of two or more different broadcast transmission/reception systems providing broadcast services can be simultaneously transmitted in the same RF signal bandwidth. In this case, the two or more different broadcast transmission/reception systems refer to systems providing different broadcast services. The different broadcast services may refer to a terrestrial broadcast service, mobile broadcast service, etc.

FIG. 8 illustrates a structure of an apparatus for receiving broadcast signals for future broadcast services according to an embodiment of the present invention.

The apparatus for receiving broadcast signals for future broadcast services according to an embodiment of the present invention can correspond to the apparatus for transmitting broadcast signals for future broadcast services, described with reference to FIG. 1.

The apparatus for receiving broadcast signals for future broadcast services according to an embodiment of the present invention can include a synchronization & demodulation module 9000, a frame parsing module 9010, a demapping & decoding module 9020, an output processor 9030 and a signaling decoding module 9040. A description will be given of operation of each module of the apparatus for receiving broadcast signals.

The synchronization & demodulation module 9000 can receive input signals through m Rx antennas, perform signal detection and synchronization with respect to a system corresponding to the apparatus for receiving broadcast signals and carry out demodulation corresponding to a reverse procedure of the procedure performed by the apparatus for transmitting broadcast signals.

The frame parsing module 9100 can parse input signal frames and extract data through which a service selected by a user is transmitted. If the apparatus for transmitting broadcast signals performs interleaving, the frame parsing module 9100 can carry out deinterleaving corresponding to a reverse procedure of interleaving. In this case, the positions of a signal and data that need to be extracted can be obtained by decoding data output from the signaling decoding module 9400 to restore scheduling information generated by the apparatus for transmitting broadcast signals.

The demapping & decoding module 9200 can convert the input signals into bit domain data and then deinterleave the same as necessary. The demapping & decoding module 9200 can perform demapping for mapping applied for transmission efficiency and correct an error generated on a transmission channel through decoding. In this case, the demapping & decoding module 9200 can obtain transmission parameters necessary for demapping and decoding by decoding the data output from the signaling decoding module 9400.

The output processor 9300 can perform reverse procedures of various compression/signal processing procedures which are applied by the apparatus for transmitting broadcast signals to improve transmission efficiency. In this case, the output processor 9300 can acquire necessary control information from data output from the signaling decoding module 9400. The output of the output processor 8300 corresponds to a signal input to the apparatus for transmitting broadcast signals and may be MPEG-TSs, IP streams (v4 or v6) and generic streams.

The signaling decoding module 9400 can obtain PLS information from the signal demodulated by the synchronization & demodulation module 9000. As described above, the frame parsing module 9100, demapping & decoding module 9200 and output processor 9300 can execute functions thereof using the data output from the signaling decoding module 9400.

FIG. 9 illustrates a frame structure according to an embodiment of the present invention.

FIG. 9 shows an example configuration of the frame types and FRUs in a super-frame. (a) shows a super frame according to an embodiment of the present invention, (b) shows FRU (Frame Repetition Unit) according to an embodiment of the present invention, (c) shows frames of variable PHY profiles in the FRU and (d) shows a structure of a frame.

A super-frame may be composed of eight FRUs. The FRU is a basic multiplexing unit for TDM of the frames, and is repeated eight times in a super-frame.

Each frame in the FRU belongs to one of the PHY profiles, (base, handheld, advanced) or FEF. The maximum allowed number of the frames in the FRU is four and a given PHY profile can appear any number of times from zero times to four times in the FRU (e.g., base, base, handheld, advanced). PHY profile definitions can be extended using reserved values of the PHY_PROFILE in the preamble, if required.

The FEF part is inserted at the end of the FRU, if included. When the FEF is included in the FRU, the minimum number of FEFs is 8 in a super-frame. It is not recommended that FEF parts be adjacent to each other.

One frame is further divided into a number of OFDM symbols and a preamble. As shown in (d), the frame comprises a preamble, one or more frame signaling symbols (FSS), normal data symbols and a frame edge symbol (FES).

The preamble is a special symbol that enables fast Futurecast UTB system signal detection and provides a set of basic transmission parameters for efficient transmission and reception of the signal. The detailed description of the preamble will be will be described later.

The main purpose of the FSS(s) is to carry the PLS data. For fast synchronization and channel estimation, and hence fast decoding of PLS data, the FSS has more dense pilot pattern than the normal data symbol. The FES has exactly the same pilots as the FSS, which enables frequency-only interpolation within the FES and temporal interpolation, without extrapolation, for symbols immediately preceding the FES.

FIG. 10 illustrates a signaling hierarchy structure of the frame according to an embodiment of the present invention.

FIG. 10 illustrates the signaling hierarchy structure, which is split into three main parts: the preamble signaling data 11000, the PLS1 data 11010 and the PLS2 data 11020. The purpose of the preamble, which is carried by the preamble symbol in every frame, is to indicate the transmission type and basic transmission parameters of that frame. The PLS1 enables the receiver to access and decode the PLS2 data, which contains the parameters to access the DP of interest. The PLS2 is carried in every frame and split into two main parts: PLS2-STAT data and PLS2-DYN data. The static and dynamic portion of PLS2 data is followed by padding, if necessary.

FIG. 11 illustrates preamble signaling data according to an embodiment of the present invention.

Preamble signaling data carries 21 bits of information that are needed to enable the receiver to access PLS data and trace DPs within the frame structure. Details of the preamble signaling data are as follows:

PHY_PROFILE: This 3-bit field indicates the PHY profile type of the current frame. The mapping of different PHY profile types is given in below table 5.

**[**Table 5**]**

| value | PHY profile |
|---|---|
| 000 | Base profile |
| 001 | Handheld profile |
| 010 | Advanced profiled |
| 011~110 | Reserved |
| 111 | FEF |

FFT_SIZE: This 2 bit field indicates the FFT size of the current frame within a frame-group, as described in below table 6.

**[**Table 6**]**

| Value | FFT size |
|---|---|
| 00 | 8K FFT |
| 01 | 16K FFT |
| 10 | 32K FFT |
| 11 | Reserved |

GI_FRACTION: This 3 bit field indicates the guard interval fraction value in the current super-frame, as described in below table 7.

**[**Table 7**]**

| Value | GI_FRACTION |
|---|---|
| 000 | 1/5 |
| 001 | 1/10 |
| 010 | 1/20 |

(continued)

| Value | GI_FRACTION |
|---|---|
| 011 | 1/40 |
| 100 | 1/80 |
| 101 | 1/160 |
| 110~111 | Reserved |

EAC FLAG: This 1 bit field indicates whether the EAC is provided in the current frame. If this field is set to '1', emergency alert service (EAS) is provided in the current frame. If this field set to '0', EAS is not carried in the current frame. This field can be switched dynamically within a super-frame.

PILOT_MODE: This 1-bit field indicates whether the pilot mode is mobile mode or fixed mode for the current frame in the current frame-group. If this field is set to '0', mobile pilot mode is used. If the field is set to '1', the fixed pilot mode is used.

PAPR_FLAG: This 1-bit field indicates whether PAPR reduction is used for the current frame in the current frame-group. If this field is set to value '1', tone reservation is used for PAPR reduction. If this field is set to '0', PAPR reduction is not used.

FRU_CONFIGURE: This 3-bit field indicates the PHY profile type configurations of the frame repetition units (FRU) that are present in the current super-frame. All profile types conveyed in the current super-frame are identified in this field in all preambles in the current super-frame. The 3-bit field has a different definition for each profile, as show in below table 8.

**[**Table 8**]**

| | Current PHY_PROFILE = '000' (base) | Current PHY_PROFILE = '001' (handheld) | Current PHY_PROFILE = '010' (advanced) | Current PHY_PROFILE = '111' (FEF) |
|---|---|---|---|---|
| FRU_CONFIGURE = 000 | Only base profile present | Only handheld profile present | Only advanced profile present | Only FEF present |
| FRU_CONFIGURE = 1XX | Handheld profile present | Base profile present | Base profile present | Base profile present |
| FRU_CONFIGURE = X1X | Advanced profile present | Advanced profile present | Handheld profile present | Handheld profile present |
| FRU_CONFIGURE = XX1 | FEF present | FEF present | FEF present | Advanced profile present |

RESERVED: This 7-bit field is reserved for future use.

FIG. 12 illustrates PLS1 data according to an embodiment of the present invention.

PLS1 data provides basic transmission parameters including parameters required to enable the reception and decoding of the PLS2. As above mentioned, the PLS1 data remain unchanged for the entire duration of one frame-group. The detailed definition of the signaling fields of the PLS1 data are as follows:

PREAMBLE_DATA: This 20-bit field is a copy of the preamble signaling data excluding the EAC_FLAG.

NUM_FRAME_FRU: This 2-bit field indicates the number of the frames per FRU.

PAYLOAD_TYPE: This 3-bit field indicates the format of the payload data carried in the frame-group. PAYLOAD_TYPE is signalled as shown in table 9.

**[**Table 9**]**

| value | Payload type |
|---|---|
| 1XX | TS stream is transmitted |
| X1X | IP stream is transmitted |
| XX1 | GS stream is transmitted |

NUM_FSS: This 2-bit field indicates the number of FSS symbols in the current frame.

SYSTEM_VERSION: This 8-bit field indicates the version of the transmitted signal format. The SYSTEM_VERSION is divided into two 4-bit fields, which are a major version and a minor version.

Major version: The MSB four bits of SYSTEM_VERSION field indicate major version information. A change in the major version field indicates a non-backward-compatible change. The default value is ’0000’. For the version described in this standard, the value is set to ’0000’.

Minor version: The LSB four bits of SYSTEM_VERSION field indicate minor version information. A change in the minor version field is backward-compatible.

CELL_ID: This is a 16-bit field which uniquely identifies a geographic cell in an ATSC network. An ATSC cell coverage area may consist of one or more frequencies, depending on the number of frequencies used per Futurecast UTB system. If the value of the CELL_ID is not known or unspecified, this field is set to ’0’.

NETWORK_ID: This is a 16-bit field which uniquely identifies the current ATSC network.

SYSTEM_ID: This 16-bit field uniquely identifies the Futurecast UTB system within the ATSC network. The Futurecast UTB system is the terrestrial broadcast system whose input is one or more input streams (TS, IP, GS) and whose output is an RF signal. The Futurecast UTB system carries one or more PHY profiles and FEF, if any. The same Futurecast UTB system may carry different input streams and use different RF frequencies in different geographical areas, allowing local service insertion. The frame structure and scheduling is controlled in one place and is identical for all transmissions within a Futurecast UTB system. One or more Futurecast UTB systems may have the same SYSTEM_ID meaning that they all have the same physical layer structure and configuration.

The following loop consists of FRU_PHY_PROFILE, FRU_FRAME_LENGTH, FRU_GI_FRACTION, and RESERVED which are used to indicate the FRU configuration and the length of each frame type. The loop size is fixed so that four PHY profiles (including a FEF) are signalled within the FRU. If NUM_FRAME_FRU is less than 4, the unused fields are filled with zeros.

FRU_PHY_PROFILE: This 3-bit field indicates the PHY profile type of the (i+1)th (i is the loop index) frame of the associated FRU. This field uses the same signaling format as shown in the table 8.

FRU_FRAME_LENGTH: This 2-bit field indicates the length of the (i+1)th frame of the associated FRU. Using FRU_FRAME_LENGTH together with FRU_GI_FRACTION, the exact value of the frame duration can be obtained.

FRU_GI_FRACTION: This 3-bit field indicates the guard interval fraction value of the (i+1)th frame of the associated FRU. FRU_GI_FRACTION is signalled according to the table 7.

RESERVED: This 4-bit field is reserved for future use.

The following fields provide parameters for decoding the PLS2 data.

PLS2_FEC_TYPE: This 2-bit field indicates the FEC type used by the PLS2 protection. The FEC type is signaled according to table 10. The details of the LDPC codes will be described later.

**[**Table 10**]**

| Content | PLS2 FEC type |
|---|---|
| 00 | 4K-1/4 and 7K-3/10 LDPC codes |
| 01 ~ 11 | Reserved |

PLS2_MOD: This 3-bit field indicates the modulation type used by the PLS2. The modulation type is signaled according to table 11.

**[**Table 11**]**

| Value | PLS2_MODE |
|---|---|
| 000 | BPSK |
| 001<br>010 | QPSK<br>QAM-16 |
| 011<br>100~111 | NUQ-64<br>Reserved |

PLS2_SIZE_CELL: This 15-bit field indicates Ctotal_partial_block, the size (specified as the number of QAM cells) of the collection of full coded blocks for PLS2 that is carried in the current frame-group. This value is constant during the entire duration of the current frame-group.

PLS2_STAT_SIZE_BIT: This 14-bit field indicates the size, in bits, of the PLS2-STAT for the current frame-group. This value is constant during the entire duration of the current frame-group.

PLS2_DYN_SIZE_BIT: This 14-bit field indicates the size, in bits, of the PLS2-DYN for the current frame-group. This value is constant during the entire duration of the current frame-group.
PLS2_REP_FLAG: This 1-bit flag indicates whether the PLS2 repetition mode is used in the current frame-group. When this field is set to value '1', the PLS2 repetition mode is activated. When this field is set to value '0', the PLS2 repetition mode is deactivated.
PLS2_REP_SIZE_CELL: This 15-bit field indicates Ctotal_partial_block, the size (specified as the number of QAM cells) of the collection of partial coded blocks for PLS2 carried in every frame of the current frame-group, when PLS2 repetition is used. If repetition is not used, the value of this field is equal to 0. This value is constant during the entire duration of the current frame-group.
PLS2_NEXT_FEC_TYPE: This 2-bit field indicates the FEC type used for PLS2 that is carried in every frame of the next frame-group. The FEC type is signaled according to the table 10.
PLS2_NEXT_MOD: This 3-bit field indicates the modulation type used for PLS2 that is carried in every frame of the next frame-group. The modulation type is signalled according to the table 11.
PLS2_NEXT_REP_FLAG: This 1-bit flag indicates whether the PLS2 repetition mode is used in the next frame-group. When this field is set to value '1', the PLS2 repetition mode is activated. When this field is set to value '0', the PLS2 repetition mode is deactivated.
PLS2_NEXT_REP_SIZE_CELL: This 15-bit field indicates Ctotal_full_block, The size (specified as the number of QAM cells) of the collection of full coded blocks for PLS2 that is carried in every frame of the next frame-group, when PLS2 repetition is used. If repetition is not used in the next frame-group, the value of this field is equal to 0. This value is constant during the entire duration of the current frame-group.
PLS2_NEXT_REP_STAT_SIZE_BIT: This 14-bit field indicates the size, in bits, of the PLS2-STAT for the next frame-group. This value is constant in the current frame-group.
PLS2_NEXT_REP_DYN_SIZE_BIT: This 14-bit field indicates the size, in bits, of the PLS2-DYN for the next frame-group. This value is constant in the current frame-group.
PLS2_AP_MODE: This 2-bit field indicates whether additional parity is provided for PLS2 in the current frame-group. This value is constant during the entire duration of the current frame-group. The below table 12 gives the values of this field. When this field is set to '00', additional parity is not used for the PLS2 in the current frame-group.

**[**Table 12**]**

| Value | PLS2-AP mode |
|---|---|
| 00 | AP is not provided |
| 01 | AP1 mode |
| 10~11 | Reserved |

PLS2_AP_SIZE_CELL: This 15-bit field indicates the size (specified as the number of QAM cells) of the additional parity bits of the PLS2. This value is constant during the entire duration of the current frame-group.
PLS2_NEXT_AP_MODE: This 2-bit field indicates whether additional parity is provided for PLS2 signaling in every frame of next frame-group. This value is constant during the entire duration of the current frame-group. The table 12 defines the values of this field
PLS2_NEXT_AP_SIZE_CELL: This 15-bit field indicates the size (specified as the number of QAM cells) of the additional parity bits of the PLS2 in every frame of the next frame-group. This value is constant during the entire duration of the current frame-group.
RESERVED: This 32-bit field is reserved for future use.
CRC_32: A 32-bit error detection code, which is applied to the entire PLS1 signaling.

FIG. 13 illustrates PLS2 data according to an embodiment of the present invention.

FIG. 13 illustrates PLS2-STAT data of the PLS2 data. The PLS2-STAT data are the same within a frame-group, while the PLS2-DYN data provide information that is specific for the current frame.

The details of fields of the PLS2-STAT data are as follows:
FIC_FLAG: This 1-bit field indicates whether the FIC is used in the current frame-group. If this field is set to '1', the FIC is provided in the current frame. If this field set to '0', the FIC is not carried in the current frame. This value is constant during the entire duration of the current frame-group.
AUX_FLAG: This 1-bit field indicates whether the auxiliary stream(s) is used in the current frame-group. If this field is set to '1', the auxiliary stream is provided in the current frame. If this field set to '0', the auxiliary stream is not carried in the current frame. This value is constant during the entire duration of current frame-group.
NUM_DP: This 6-bit field indicates the number of DPs carried within the current frame. The value of this field ranges from 1 to 64, and the number of DPs is NUM_DP+1.
DP_ID: This 6-bit field identifies uniquely a DP within a PHY profile.

DP_TYPE: This 3-bit field indicates the type of the DP. This is signalled according to the below table 13.

**[**Table 13**]**

| Value | DP Type |
|---|---|
| 000 | DP Type 1 |
| 001 | DP Type 2 |
| 010~111 | reserved |

DP_GROUP_ID: This 8-bit field identifies the DP group with which the current DP is associated. This can be used by a receiver to access the DPs of the service components associated with a particular service, which will have the same DP_GROUP_ID.

BASE_DP_ID: This 6-bit field indicates the DP carrying service signaling data (such as PSI/SI) used in the Management layer. The DP indicated by BASE_DP_ID may be either a normal DP carrying the service signaling data along with the service data or a dedicated DP carrying only the service signaling data

DP_FEC_TYPE: This 2-bit field indicates the FEC type used by the associated DP. The FEC type is signalled according to the below table 14.

**[**Table 14**]**

| Value | FEC_TYPE |
|---|---|
| 00 | 16K LDPC |
| 01 | 64K LDPC |
| 10~11 | Reserved |

DP_COD: This 4-bit field indicates the code rate used by the associated DP. The code rate is signalled according to the below table 15.

**[**Table 15**]**

| Value | Code rate |
|---|---|
| 0000 | 5/15 |
| 0001 | 6/15 |
| 0010 | 7/15 |
| 0011 | 8/15 |
| 0100 | 9/15 |
| 0101 | 10/15 |
| 0110 | 11/15 |
| 0111 | 12/15 |
| 1000 | 13/15 |
| 1001 ~ 1111 | Reserved |

DP_MOD: This 4-bit field indicates the modulation used by the associated DP. The modulation is signalled according to the below table 16.

**[**Table 16**]**

| Value | Modulation |
|---|---|
| 0000 | QPSK |
| 0001 | QAM-16 |
| 0010 | NUQ-64 |

(continued)

| Value | Modulation |
|---|---|
| 0011 | NUQ-256 |
| 0100 | NUQ-1024 |
| 0101 | NUC-16 |
| 0110 | NUC-64 |
| 0111 | NUC-256 |
| 1000 | NUC-1024 |
| 1001~1111 | reserved |

DP_SSD_FLAG: This 1-bit field indicates whether the SSD mode is used in the associated DP. If this field is set to value '1', SSD is used. If this field is set to value '0', SSD is not used.

The following field appears only if PHY_PROFILE is equal to '010', which indicates the advanced profile:

DP_MIMO: This 3-bit field indicates which type of MIMO encoding process is applied to the associated DP. The type of MIMO encoding process is signalled according to the table 17.

**[**Table 17b**]**

| Value | MIMO encoding |
|---|---|
| 000 | FR-SM |
| 001 | FRFD-SM |
| 010~111 | reserved |

DP_TI_TYPE: This 1-bit field indicates the type of time-interleaving. A value of '0' indicates that one TI group corresponds to one frame and contains one or more TI-blocks. A value of '1' indicates that one TI group is carried in more than one frame and contains only one TI-block.

DP_TI_LENGTH: The use of this 2-bit field (the allowed values are only 1, 2, 4, 8) is determined by the values set within the DP_TI_TYPE field as follows:

If the DP_TI_TYPE is set to the value '1', this field indicates PI, the number of the frames to which each TI group is mapped, and there is one TI-block per TI group (NTI=1). The allowed PI values with 2-bit field are defined in the below table 18.

If the DP_TI_TYPE is set to the value '0', this field indicates the number of TI-blocks NTI per TI group, and there is one TI group per frame (PI=1). The allowed PI values with 2-bit field are defined in the below table 18.

**[**Table 18**]**

| 2-bit field | $P_I$ | $N_{TI}$ |
|---|---|---|
| 00 | 1 | 1 |
| 01 | 2 | 2 |
| 10 | 4 | 3 |
| 11 | 8 | 4 |

DP_FRAME_INTERVAL: This 2-bit field indicates the frame interval (IJUMP) within the frame-group for the associated DP and the allowed values are 1, 2, 4, 8 (the corresponding 2-bit field is '00', '01', '10', or '11', respectively). For DPs that do not appear every frame of the frame-group, the value of this field is equal to the interval between successive frames. For example, if a DP appears on the frames 1, 5, 9, 13, etc., this field is set to '4'. For DPs that appear in every frame, this field is set to '1'.

DP_TI_BYPASS: This 1-bit field determines the availability of time interleaver. If time interleaving is not used for a DP, it is set to '1'. Whereas if time interleaving is used it is set to '0'.

DP_FIRST_FRAME_IDX: This 5-bit field indicates the index of the first frame of the super-frame in which the current DP occurs. The value of DP_FIRST_FRAME_IDX ranges from 0 to 31

DP_NUM_BLOCK_MAX: This 10-bit field indicates the maximum value of DP_NUM_BLOCKS for this DP. The value of this field has the same range as DP_NUM_BLOCKS.

DP_PAYLOAD_TYPE: This 2-bit field indicates the type of the payload data carried by the given DP. DP_PAYLOAD_TYPE is signalled according to the below table 19.

**[**Table 19**]**

| Value | Payload Type |
|---|---|
| 00 | TS |
| 01 | IP |
| 10 | GS |
| 11 | reserved |

DP_INBAND_MODE: This 2-bit field indicates whether the current DP carries in-band signaling information. The in-band signaling type is signalled according to the below table 20.

**[**Table 20**]**

| Value | In-band mode |
|---|---|
| 00 | In-band signaling is not carried. |
| 01 | INBAND-PLS is carried only |
| 10 | INBAND-ISSY is carried only |
| 11 | INBANG-PLS and INBAND-ISSY are carried |

DP_PROTOCOL_TYPE: This 2-bit field indicates the protocol type of the payload carried by the given DP. It is signalled according to the below table 21 when input payload types are selected.

**[**Table 21**]**

| Value | If DP_PAYLOAD_TYPE Is TS | If DP_PAYLOAD_TYPE Is IP | If DP_PAYLOAD_TYPE Is GS |
|---|---|---|---|
| 00 | MPEG2-TS | IPv4 | (Note) |
| 01 | Reserved | IPv6 | Reserved |
| 10 | Reserved | Reserved | Reserved |
| 11 | Reserved | Reserved | Reserved |

DP_CRC_MODE: This 2-bit field indicates whether CRC encoding is used in the Input Formatting block. The CRC mode is signalled according to the below table 22.

**[**Table 22**]**

| Value | CRC mode |
|---|---|
| 00 | Not used |
| 01 | CRC-8 |
| 10 | CRC-16 |
| 11 | CRC-32 |

DNP_MODE: This 2-bit field indicates the null-packet deletion mode used by the associated DP when DP_PAYLOAD_TYPE is set to TS ('00'). DNP_MODE is signaled according to the below table 23. If DP_PAYLOAD_TYPE is not TS ('00'), DNP_MODE is set to the value '00'.

**[**Table 23**]**

| Value | Null-packet deletion mode |
|---|---|
| 00 | Not used |
| 01 | DNP-NORMAL |
| 10 | DNP-OFFSET |
| 11 | reserved |

ISSY_MODE: This 2-bit field indicates the ISSY mode used by the associated DP when DP_PAYLOAD_TYPE is set to TS ('00'). The ISSY_MODE is signalled according to the below table 24 If DP_PAYLOAD_TYPE is not TS ('00'), ISSY_MODE is set to the value '00'.

**[**Table 24**]**

| Value | ISSY mode |
|---|---|
| 00 | Not used |
| 01 | ISSY-UP |
| 10 | ISSY-BBF |
| 11 | reserved |

HC_MODE_TS: This 2-bit field indicates the TS header compression mode used by the associated DP when DP_PAYLOAD_TYPE is set to TS ('00'). The HC_MODE_TS is signalled according to the below table 25.

**[**Table 25**]**

| Value | Header compression mode |
|---|---|
| 00 | HC_MODE_TS 1 |
| 01 | HC_MODE_TS 2 |
| 10 | HC_MODE_TS 3 |
| 11 | HC_MODE_TS 4 |

HC_MODE_IP: This 2-bit field indicates the IP header compression mode when DP_PAYLOAD_TYPE is set to IP ('01'). The HC_MODE_IP is signalled according to the below table 26.

**[**Table 26**]**

| Value | Header compression mode |
|---|---|
| 00 | No compression |
| 01 | HC_MODE_IP 1 |
| 10~11 | reserved |

PID : This 13-bit field indicates the PID number for TS header compression when DP_PAYLOAD_TYPE is set to TS ('00') and HC_MODE_TS is set to '01' or '10'.
RESERVED: This 8-bit field is reserved for future use.
The following field appears only if FIC_FLAG is equal to '1':
FIC_VERSION: This 8-bit field indicates the version number of the FIC.
FIC_LENGTH_BYTE: This 13-bit field indicates the length, in bytes, of the FIC.
RESERVED: This 8-bit field is reserved for future use.
The following field appears only if AUX_FLAG is equal to '1':
NUM_AUX: This 4-bit field indicates the number of auxiliary streams. Zero means no auxiliary streams are used.

AUX_CONFIG_RFU: This 8-bit field is reserved for future use.
AUX_STREAM_TYPE: This 4-bit is reserved for future use for indicating the type of the current auxiliary stream.
AUX_PRIVATE_CONFIG: This 28-bit field is reserved for future use for signaling auxiliary streams.

FIG. 14 illustrates PLS2 data according to another embodiment of the present invention.

FIG. 14 illustrates PLS2-DYN data of the PLS2 data. The values of the PLS2-DYN data may change during the duration of one frame-group, while the size of fields remains constant.

The details of fields of the PLS2-DYN data are as follows:

FRAME_INDEX: This 5-bit field indicates the frame index of the current frame within the super-frame. The index of the first frame of the super-frame is set to '0'.

PLS_CHANGE_COUNTER: This 4-bit field indicates the number of super-frames ahead where the configuration will change. The next super-frame with changes in the configuration is indicated by the value signaled within this field. If this field is set to the value '0000', it means that no scheduled change is foreseen: e.g., value '1' indicates that there is a change in the next super-frame.

FIC_CHANGE_COUNTER: This 4-bit field indicates the number of super-frames ahead where the configuration (i.e., the contents of the FIC) will change. The next super-frame with changes in the configuration is indicated by the value signalled within this field. If this field is set to the value '0000', it means that no scheduled change is foreseen: e.g. value '0001' indicates that there is a change in the next super-frame..

RESERVED: This 16-bit field is reserved for future use.

The following fields appear in the loop over NUM_DP, which describe the parameters associated with the DP carried in the current frame.

DP_ID: This 6-bit field indicates uniquely the DP within a PHY profile.

DP_START: This 15-bit (or 13-bit) field indicates the start position of the first of the DPs using the DPU addressing scheme. The DP_START field has differing length according to the PHY profile and FFT size as shown in the below table 27.

**[**Table 27**]**

| PHY profile | DP_START field size | |
|---|---|---|
| | 64K | 16K |
| Base | 13 bit | 15 bit |
| Handheld | - | 13 bit |
| Advanced | 13 bit | 15 bit |

DP_NUM_BLOCK: This 10-bit field indicates the number of FEC blocks in the current TI group for the current DP. The value of DP_NUM_BLOCK ranges from 0 to 1023

RESERVED: This 8-bit field is reserved for future use.

The following fields indicate the FIC parameters associated with the EAC.

EAC FLAG: This 1-bit field indicates the existence of the EAC in the current frame. This bit is the same value as the EAC_FLAG in the preamble.

EAS_WAKE_UP_VERSION_NUM: This 8-bit field indicates the version number of a wake-up indication.

If the EAC_FLAG field is equal to '1', the following 12 bits are allocated for EAC_LENGTH_BYTE field. If the EAC_FLAG field is equal to '0', the following 12 bits are allocated for EAC_COUNTER.

EAC_LENGTH_BYTE: This 12-bit field indicates the length, in byte, of the EAC..

EAC_COUNTER: This 12-bit field indicates the number of the frames before the frame where the EAC arrives.

The following field appears only if the AUX_FLAG field is equal to '1':

AUX_PRIVATE_DYN: This 48-bit field is reserved for future use for signaling auxiliary streams. The meaning of this field depends on the value of AUX_STREAM_TYPE in the configurable PLS2-STAT.
CRC_32: A 32-bit error detection code, which is applied to the entire PLS2.

FIG. 15 illustrates a logical structure of a frame according to an embodiment of the present invention.

As above mentioned, the PLS, EAC, FIC, DPs, auxiliary streams and dummy cells are mapped into the active carriers of the OFDM symbols in the frame. The PLS1 and PLS2 are first mapped into one or more FSS(s). After that, EAC cells, if any, are mapped immediately following the PLS field, followed next by FIC cells, if any. The DPs are mapped next after the PLS or EAC, FIC, if any. Type 1 DPs follows first, and Type 2 DPs next. The details of a type of the DP will be described later. In some case, DPs may carry some special data for EAS or service signaling data. The auxiliary stream or streams, if any, follow the DPs, which in turn are followed by dummy cells. Mapping them all together in the above mentioned order, i.e. PLS, EAC, FIC, DPs, auxiliary streams and dummy data cells exactly fill the cell capacity in the frame.

FIG. 16 illustrates PLS mapping according to an embodiment of the present invention.

PLS cells are mapped to the active carriers of FSS(s). Depending on the number of cells occupied by PLS, one or more symbols are designated as FSS(s), and the number of FSS(s) NFSS is signaled by NUM_FSS in PLS1. The FSS is a special symbol for carrying PLS cells. Since robustness and latency are critical issues in the PLS, the FSS(s) has higher density of pilots allowing fast synchronization and frequency-only interpolation within the FSS.

PLS cells are mapped to active carriers of the NFSS FSS(s) in a top-down manner as shown in an example in FIG. 16. The PLS1 cells are mapped first from the first cell of the first FSS in an increasing order of the cell index. The PLS2 cells follow immediately after the last cell of the PLS 1 and mapping continues downward until the last cell index of the first FSS. If the total number of required PLS cells exceeds the number of active carriers of one FSS, mapping proceeds to the next FSS and continues in exactly the same manner as the first FSS.

After PLS mapping is completed, DPs are carried next. If EAC, FIC or both are present in the current frame, they are placed between PLS and "normal" DPs.

FIG. 17 illustrates EAC mapping according to an embodiment of the present invention.

EAC is a dedicated channel for carrying EAS messages and links to the DPs for EAS. EAS support is provided but EAC itself may or may not be present in every frame. EAC, if any, is mapped immediately after the PLS2 cells. EAC is not preceded by any of the FIC, DPs, auxiliary streams or dummy cells other than the PLS cells. The procedure of mapping the EAC cells is exactly the same as that of the PLS.

The EAC cells are mapped from the next cell of the PLS2 in increasing order of the cell index as shown in the example in FIG. 17. Depending on the EAS message size, EAC cells may occupy a few symbols, as shown in FIG. 17.

EAC cells follow immediately after the last cell of the PLS2, and mapping continues downward until the last cell index of the last FSS. If the total number of required EAC cells exceeds the number of remaining active carriers of the last FSS mapping proceeds to the next symbol and continues in exactly the same manner as FSS(s). The next symbol for mapping in this case is the normal data symbol, which has more active carriers than a FSS.

After EAC mapping is completed, the FIC is carried next, if any exists. If FIC is not transmitted (as signaled in the PLS2 field), DPs follow immediately after the last cell of the EAC.

FIG. 18 illustrates FIC mapping according to an embodiment of the present invention.

(a) shows an example mapping of FIC cell without EAC and (b) shows an example mapping of FIC cell with EAC.

FIC is a dedicated channel for carrying cross-layer information to enable fast service acquisition and channel scanning. This information primarily includes channel binding information between DPs and the services of each broadcaster. For fast scan, a receiver can decode FIC and obtain information such as broadcaster ID, number of services, and BASE_DP_ID. For fast service acquisition, in addition to FIC, base DP can be decoded using BASE_DP_ID. Other than the content it carries, a base DP is encoded and mapped to a frame in exactly the same way as a normal DP. Therefore, no additional description is required for a base DP. The FIC data is generated and consumed in the Management Layer. The content of FIC data is as described in the Management Layer specification.

The FIC data is optional and the use of FIC is signalled by the FIC_FLAG parameter in the static part of the PLS2. If FIC is used, FIC_FLAG is set to '1' and the signaling field for FIC is defined in the static part of PLS2. Signalled in this field are FIC_VERSION, and FIC_LENGTH_BYTE. FIC uses the same modulation, coding and time interleaving parameters as PLS2. FIC shares the same signaling parameters such as PLS2_MOD and PLS2_FEC. FIC data, if any, is mapped immediately after PLS2 or EAC if any. FIC is not preceded by any normal DPs, auxiliary streams or dummy cells. The method of mapping FIC cells is exactly the same as that of EAC which is again the same as PLS.

Without EAC after PLS, FIC cells are mapped from the next cell of the PLS2 in an increasing order of the cell index as shown in an example in (a). Depending on the FIC data size, FIC cells may be mapped over a few symbols, as shown in (b).

FIC cells follow immediately after the last cell of the PLS2, and mapping continues downward until the last cell index of the last FSS. If the total number of required FIC cells exceeds the number of remaining active carriers of the last FSS, mapping proceeds to the next symbol and continues in exactly the same manner as FSS(s). The next symbol for mapping in this case is the normal data symbol which has more active carriers than a FSS.

If EAS messages are transmitted in the current frame, EAC precedes FIC, and FIC cells are mapped from the next cell of the EAC in an increasing order of the cell index as shown in (b).

After FIC mapping is completed, one or more DPs are mapped, followed by auxiliary streams, if any, and dummy cells.

FIG. 19 illustrates an FEC structure according to an embodiment of the present invention.

FIG. 19 illustrates an FEC structure according to an embodiment of the present invention before bit interleaving. As above mentioned, Data FEC encoder may perform the FEC encoding on the input BBF to generate FECBLOCK procedure using outer coding (BCH), and inner coding (LDPC). The illustrated FEC structure corresponds to the FECBLOCK. Also, the FECBLOCK and the FEC structure have same value corresponding to a length of LDPC codeword.

The BCH encoding is applied to each BBF (Kbch bits), and then LDPC encoding is applied to BCH-encoded BBF (Kldpc bits = Nbch bits) as illustrated in FIG. 19.

The value of Nldpc is either 64800 bits (long FECBLOCK) or 16200 bits (short FECBLOCK).

The below table 28 and table 29 show FEC encoding parameters for a long FECBLOCK and a short FECBLOCK, respectively.

**[Table 28]**

| LDPC Rate | $N_{ldpc}$ | $K_{ldpc}$ | $K_{bch}$ | BCH error correction capability | $N_{bch}$-$k_{bch}$ |
|---|---|---|---|---|---|
| 5/15 | 64800 | 21600 | 21408 | 12 | 192 |
| 6/15 | | 25920 | 25728 | | |
| 7/15 | | 30240 | 30048 | | |
| 8/15 | | 34560 | 34368 | | |
| 9/15 | | 38880 | 38688 | | |
| 10/15 | | 43200 | 43008 | | |
| 11/15 | | 47520 | 47328 | | |
| 12/15 | | 51840 | 51648 | | |
| 13/15 | | 56160 | 55968 | | |

**[Table 29]**

| LDPC Rate | $N_{ldpc}$ | $K_{ldpc}$ | $K_{bch}$ | BCH error correction capability | $N_{bch}$-$K_{bch}$ |
|---|---|---|---|---|---|
| 5/15 | 16200 | 5400 | 5232 | 12 | 168 |
| 6/15 | | 6480 | 6312 | | |
| 7/15 | | 7560 | 7392 | | |
| 8/15 | | 8640 | 8472 | | |
| 9/15 | | 9720 | 9552 | | |
| 10/15 | | 10800 | 10632 | | |
| 11/15 | | 11880 | 11712 | | |
| 12/15 | | 12960 | 12792 | | |
| 13/15 | | 14040 | 13872 | | |

The details of operations of the BCH encoding and LDPC encoding are as follows:

A 12-error correcting BCH code is used for outer encoding of the BBF. The BCH generator polynomial for short FECBLOCK and long FECBLOCK are obtained by multiplying together all polynomials.

LDPC code is used to encode the output of the outer BCH encoding. To generate a completed Bldpc (FECBLOCK), Pldpc (parity bits) is encoded systematically from each Ildpc (BCH-encoded BBF), and appended to Ildpc. The completed Bldpc (FECBLOCK) are expressed as follow Math figure.

【Math Figure 2】

$$B_{ldpc} = [\,\mathbf{I}_{ldpc}\ \ \mathbf{P}_{ldpc}\,] = [\,i_0, i_1, \ldots, i_{K_{ldpc}-1},\ p_0, p_1, \ldots, p_{N_{ldpc}-K_{ldpc}-1}\,]$$

The parameters for long FECBLOCK and short FECBLOCK are given in the above table 28 and 29, respectively.

The detailed procedure to calculate Nldpc - Kldpc parity bits for long FECBLOCK, is as follows:

1) Initialize the parity bits,

【Math Figure 3】

$$p_0 = p_1 = p_2 = \ldots = p_{N_{ldpc}-K_{ldpc}-1} = 0$$

2) Accumulate the first information bit - i0, at parity bit addresses specified in the first row of an addresses of parity check matrix. The details of addresses of parity check matrix will be described later. For example, for rate 13/15:

【Math Figure 4】

$$p_{983} = p_{983} \oplus i_0 \qquad p_{2815} = p_{2815} \oplus i_0$$
$$p_{4837} = p_{4837} \oplus i_0 \qquad p_{4989} = p_{4989} \oplus i_0$$
$$p_{6138} = p_{6138} \oplus i_0 \qquad p_{6458} = p_{6458} \oplus i_0$$
$$p_{6921} = p_{6921} \oplus i_0 \qquad p_{6974} = p_{6974} \oplus i_0$$
$$p_{7572} = p_{7572} \oplus i_0 \qquad p_{8260} = p_{8260} \oplus i_0$$
$$p_{8496} = p_{8496} \oplus i_0$$

3) For the next 359 information bits, is, s=1, 2, ..., 359 accumulate is at parity bit addresses using following Math figure.

【Math Figure 5】

$$\{x + (s \mod 360) \times Q_{ldpc}\} \mod (N_{ldpc} - K_{ldpc})$$

where x denotes the address of the parity bit accumulator corresponding to the first bit i0, and Qldpc is a code rate dependent constant specified in the addresses of parity check matrix. Continuing with the example, Qldpc = 24 for rate 13/15, so for information bit i1, the following operations are performed:

【Math Figure 6】

$$p_{1007} = p_{1007} \oplus i_1 \qquad p_{2839} = p_{2839} \oplus i_1$$

$$p_{4861} = p_{4861} \oplus i_1 \qquad p_{5013} = p_{5013} \oplus i_1$$

$$p_{6162} = p_{6162} \oplus i_1 \qquad p_{6482} = p_{6482} \oplus i_1$$

$$p_{6945} = p_{6945} \oplus i_1 \qquad p_{6998} = p_{6998} \oplus i_1$$

$$p_{7596} = p_{7596} \oplus i_1 \qquad p_{8284} = p_{8284} \oplus i_1$$

$$p_{8520} = p_{8520} \oplus i_1$$

4) For the 361st information bit i360, the addresses of the parity bit accumulators are given in the second row of the addresses of parity check matrix. In a similar manner the addresses of the parity bit accumulators for the following 359 information bits is, s= 361, 362, ..., 719 are obtained using the Math figure 5, where x denotes the address of the parity bit accumulator corresponding to the information bit i360, i.e., the entries in the second row of the addresses of parity check matrix.

5) In a similar manner, for every group of 360 new information bits, a new row from addresses of parity check matrixes used to find the addresses of the parity bit accumulators.

After all of the information bits are exhausted, the final parity bits are obtained as follows:

6) Sequentially perform the following operations starting with i=1

【Math Figure 7】

$$p_i = p_i \oplus p_{i-1}, \qquad i = 1,2,..., N_{ldpc} - K_{ldpc} - 1$$

where final content of pi, i=0,1,...Nldpc - Kldpc - 1 is equal to the parity bit pi.

**[**Table 30**]**

| Code Rate | $Q_{ldpc}$ |
|---|---|
| 5/15 | 120 |
| 6/15 | 108 |
| 7/15 | 96 |
| 8/15 | 84 |
| 9/15 | 72 |
| 10/15 | 60 |
| 11/15 | 48 |
| 12/15 | 36 |
| 13/15 | 24 |

This LDPC encoding procedure for a short FECBLOCK is in accordance with t LDPC encoding procedure for the long FECBLOCK, except replacing the table 30 with table 31, and replacing the addresses of parity check matrix for the long FECBLOCK with the addresses of parity check matrix for the short FECBLOCK.

**[**Table 31**]**

| Code Rate | $Q_{ldpc}$ |
|---|---|
| 5/15 | 30 |
| 6/15 | 27 |
| 7/15 | 24 |
| 8/15<br>9/15 | 21<br>18 |
| 10/15 | 15 |
| 11/15 | 12 |
| 12/15 | 9 |
| 13/15 | 6 |

FIG. 20 illustrates a time interleaving according to an embodiment of the present invention.

(a) to (c) show examples of TI mode.

The time interleaver operates at the DP level. The parameters of time interleaving (TI) may be set differently for each DP.

The following parameters, which appear in part of the PLS2-STAT data, configure the TI:

DP_TI_TYPE (allowed values: 0 or 1): Represents the TI mode; '0' indicates the mode with multiple TI blocks (more than one TI block) per TI group. In this case, one TI group is directly mapped to one frame (no inter-frame interleaving). '1' indicates the mode with only one TI block per TI group. In this case, the TI block may be spread over more than one frame (inter-frame interleaving).

DP_TI_LENGTH: If DP_TI_TYPE = '0', this parameter is the number of TI blocks NTI per TI group. For DP_TI_TYPE = '1', this parameter is the number of frames PI spread from one TI group.

DP_NUM_BLOCK_MAX (allowed values: 0 to 1023): Represents the maximum number of XFECBLOCKs per TI group.

DP_FRAME_INTERVAL (allowed values: 1, 2, 4, 8): Represents the number of the frames IJUMP between two successive frames carrying the same DP of a given PHY profile.

DP_TI_BYPASS (allowed values: 0 or 1): If time interleaving is not used for a DP, this parameter is set to '1'. It is set to '0' if time interleaving is used.

Additionally, the parameter DP_NUM_BLOCK from the PLS2-DYN data is used to represent the number of XFECBLOCKs carried by one TI group of the DP.

When time interleaving is not used for a DP, the following TI group, time interleaving operation, and TI mode are not considered. However, the Delay Compensation block for the dynamic configuration information from the scheduler will still be required. In each DP, the XFECBLOCKs received from the SSD/MIMO encoding are grouped into TI groups. That is, each TI group is a set of an integer number of XFECBLOCKs and will contain a dynamically variable number of XFECBLOCKs. The number of XFECBLOCKs in the TI group of index n is denoted by NxBLOCK_Group(n) and is signaled as DP_NUM_BLOCK in the PLS2-DYN data. Note that NxBLOCK_Group(n) may vary from the minimum value of 0 to the maximum value NxBLOCK_Group_MAX (corresponding to DP_NUM_BLOCK_MAX) of which the largest value is 1023.

Each TI group is either mapped directly onto one frame or spread over PI frames. Each TI group is also divided into more than one TI blocks(NTI), where each TI block corresponds to one usage of time interleaver memory. The TI blocks within the TI group may contain slightly different numbers of XFECBLOCKs. If the TI group is divided into multiple TI blocks, it is directly mapped to only one frame. There are three options for time interleaving (except the extra option of skipping the time interleaving) as shown in the below table 32.

[Table 32]

| Modes | Descriptions |
|---|---|
| **Option-1** | Each TI group contains one TI block and is mapped directly to one frame as shown in (a). This option is signaled in the PLS2-STAT by DP_TI_TYPE='0' and DP_TI_LENGTH ='1'($N_{TI}$=1). |
| **Option-2** | Each TI group contains one TI block and is mapped to more than one frame. (b) shows an example, where one TI group is mapped to two frames, i.e., DP_TI_LENGTH ='2' ($P_I$=2) and DP_FRAME_INTERVAL ($I_{JUMP}$ = 2). This provides greater time diversity for low data-rate services. This option is signaled in the PLS2-STAT by DP_TI_TYPE ='1'. |
| **Option-3** | Each TI group is divided into multiply TI blocks and is mapped directly to one frame as shown in (c). Each TI block may use full TI memory, so as to provide the maximum bit-rate for a DP. This option is signaled in the PLS2-STAT signaling by DP_TI_TYPE='0' and DP_TI_LENGTH = $N_{TI}$, while $P_I$=1. |

Typically, the time interleaver will also act as a buffer for DP data prior to the process of frame building. This is achieved by means of two memory banks for each DP. The first TI-block is written to the first bank. The second TI-block is written to the second bank while the first bank is being read from and so on.

The TI is a twisted row-column block interleaver. For the sth TI block of the nth TI group, the number of rows $N_r$ of a TI memory is equal to the number of cells $N_{cells}$, i.e., $N_r = N_{cells}$ while the number of columns $N_c$ is equal to the number $N_{xBLOCK_TI}(n, S)$.

FIG. 21 illustrates the basic operation of a twisted row-column block interleaver according to an embodiment of the present invention.

FIG. 21 (a) shows a writing operation in the time interleaver and (b) shows a reading operation in the time interleaver The first XFECBLOCK is written column-wise into the first column of the TI memory, and the second XFECBLOCK is written into the next column, and so on as shown in (a). Then, in the interleaving array, cells are read out diagonal-wise. During diagonal-wise reading from the first row (rightwards along the row beginning with the left-most column) to the last row, $N_r$ cells are read out as shown in (b). In detail, assuming $z_{n,s,t}(i = 0,...,N_rN_c)$ as the TI memory cell position to be read sequentially, the reading process in such an interleaving array is performed by calculating the row index $R_{n,s,t}$, the column index $C_{n,s,t}$, and the associated twisting parameter $T_{n,s,t}$, as follows expression.

【Math Figure 8】

$$
\begin{aligned}
&GENERATE(R_{n,s,i}, C_{n,s,i}) = \\
&\{ \\
&R_{n,s,i} = \mathrm{mod}(i, N_r), \\
&T_{n,s,i} = \mathrm{mod}(S_{shift} \times R_{n,s,i}, N_c), \\
&C_{n,s,i} = \mathrm{mod}\left(T_{n,s,i} + \left\lfloor \frac{i}{N_r} \right\rfloor, N_c\right) \\
&\}
\end{aligned}
$$

where $S_{shift}$ is a common shift value for the diagonal-wise reading process regardless of $N_{xBLOCK\ TI}(n,s)$, and it is determined by $N_{xBLOCK\ TI\ MAX}$ given in the PLS2-STAT as follows expression.

【Math Figure 9】

$$
for \begin{cases} N'_{xBLOCK_TI_MAX} = N_{xBLOCK_TI_MAX} + 1, & if\ N_{xBLOCK_TI_MAX} \bmod 2 = 0 \\ N'_{xBLOCK_TI_MAX} = N_{xBLOCK_TI_MAX}, & if\ N_{xBLOCK_TI_MAX} \bmod 2 = 1 \end{cases},
$$

$$
S_{shift} = \frac{N'_{xBLOCK_TI_MAX} - 1}{2}
$$

As a result, the cell positions to be read are calculated by a coordinate as

$$z_{n,s,i} = N_r C_{n,s,i} + R_{n,s,i}$$

FIG. 22 illustrates an operation of a twisted row-column block interleaver according to another embodiment of the present invention.

More specifically, FIG. 22 illustrates the interleaving array in the TI memory for each TI group, including virtual XFECBLOCKs when $N_{xBLOCK_TI}$ (0,0)=3, $N_{xBLOCK\ TI}(1,0) = 6$, $N_{xBLOCK\ TI}$ (2.0) = 5 .

The variable number $N_{xBLOCK\ TI}(n,s) = N_r$ will be less than or equal to $N_{xBLOCK_TI_MAX}$. Thus, in order to achieve a single-memory deinterleaving at the receiver side, regardless of $N_{xBLOCK\ TI}(n,s)$, the interleaving array for use in a twisted row-column block interleaver is set to the size of $N_r \times N_c = N_{cells} \times N_{xBLOCK_TI_MAX}$ by inserting the virtual XFECBLOCKs into the TI memory and the reading process is accomplished as follow expression.

【Math Figure 10】

$$\begin{array}{l} p = 0; \\ for\ i = 0; i < N_{cells} N'_{xBLOCK_TI_MAX}; i = i+1 \\ \{GENERATE(R_{n,s,i}, C_{n,s,i}); \\ V_i = N_r C_{n,s,j} + R_{n,s,j} \\ \quad if\ V_i < N_{cells} N_{xBLOCK\ TI}(n,s) \\ \quad \{ \\ \quad\quad Z_{n,s,p} = V_i;\ p = p+1; \\ \quad \} \\ \} \end{array}$$

The number of TI groups is set to 3. The option of time interleaver is signaled in the PLS2-STAT data by DP_TI_TYPE='0', DP_FRAME_INTERVAL='1', and DP_TI_LENGTH='1', i.e.,NTI=1, IJUMP=1, and PI=1. The number of XFECBLOCKs, each of which has Ncells = 30 cells, per TI group is signaled in the PLS2-DYN data by NxBLOCK_TI(0,0)=3, NxBLOCK_TI(1,0)=6, and NxBLOCK_TI(2,0)=5, respectively. The maximum number of XFECBLOCK is signaled in the PLS2-STAT data by NxBLOCK_Group_MAX, which leads to $\lfloor N_{xBLOCK\ Group\ ALLX} / N_{TI} \rfloor = N_{xBLOCK\ TI\ MAX} = 6$.

FIG. 23 illustrates a diagonal-wise reading pattern of a twisted row-column block interleaver according to an embodiment of the present invention.

More specifically FIG. 23 shows a diagonal-wise reading pattern from each interleaving array with parameters *of* $N_{xBLOCK_TI_MAX} = 7$ and Sshift=(7-1)/2=3. Note that in the reading process shown as pseudocode above, *if* $V_i \geq N_{cells} N_{xBLOCK_TI}(n,s)$, the value of Vi is skipped and the next calculated value of Vi is used.

FIG. 24 illustrates interlaved XFECBLOCKs from each interleaving array according to an embodiment of the present invention.

FIG. 24 illustrates the interleaved XFECBLOCKs from each interleaving array with parameters of $N_{xBLOCK_TI_MAX} = 7$ and Sshift=3.

A method for segmenting a file configured to transmit file-based multimedia content in a real-time broadcast environment, and consuming the file segments according to the embodiments of the present invention will hereinafter be described in detail.

In more detail, the embodiment provides a data structure for transmitting the file-based multimedia content in the real-time broadcast environment. In addition, the embodiment provides a method for identifying not only segmentation generation information of a file needed for transmitting file-based multimedia content but also consumption information in a real-time broadcast environment. In addition, the embodiment provides a method for segmenting/generating a file needed for transmitting the file-based multimedia content in a real-time broadcast environment. The embodiment provides a method for segmenting and consuming the file needed for consuming the file-based multimedia content.

FIG. 25 illustrates a data processing time when a File Delivery over Unidirectional Transport (FLUTE) protocol is used.

Recently, hybrid broadcast services in which a broadcast network and the Internet network are combined have been widely used. The hybrid broadcast service may transmit A/V content to the legacy broadcast network, and may transmit additional data related to A/V content over the Internet. In addition, a service for transmitting some parts of the A/V content may be transmitted over the Internet has recently been provided.

Since the A/V content is transmitted over a heterogeneous network, a method for closely combining A/V content data pieces transmitted over a heterogeneous network and a simple cooperation method are needed. For this purpose, a communication transmission method capable of being simultaneously applied to the broadcast network and the Internet is needed.

A representative one of the A/V content transmission methods capable of being commonly applied to the broadcast network and the Internet is to use the file-based multimedia content. The file-based multimedia content has superior extensibility, is not dependent upon a transmission (Tx) protocol, and has been widely used using a download scheme based on the legacy Internet.

A File Delivery over Unidirectional Transport protocol (FLUTE) is a protocol that is appropriate not only for the interaction between the broadcast network and the Internet but also for transmission of the file-based multimedia content of a large-capacity file.

FLUTE is an application for unidirectional file transmission based on ALC, and is a protocol in which information regarding files needed for file transmission or information needed for transmission are defined. According to FLUTE, information needed for file transmission and information regarding various attributes of a file to be transmitted have been transmitted through transmission of FDT (File Delivery Table) instance, and the corresponding file is then transmitted.

ALC (Asynchronous Layered Coding) is a protocol in which it is possible to control reliability and congestion during a file transmission time in which a single transmitter transmits the file to several receivers. ALC is a combination of an FEC Building Block for error control, a WEBRC Building Block for congestion control, a Layered Coding Transport (LCT) Building Block for session and channel management, and may construct a building block according to the service and necessity.

ALC is used as a content transmission protocol such that it can very efficiently transmit data to many receivers. In addition, ALC has unidirectional characteristics, is transmitted in a limited manner as necessary, does not require specific channel and resources for feedback, and can be used not only in the wireless environmental broadcasting but also in the satellite environmental broadcasting. Since ALC has no feedback, the FEC code scheme can be entirely or partially applied for reliability, resulting in implementation of reliable services. In addition, an object to be sent is FEC-encoded according to the FEC scheme, constructs Tx blocks and additional symbols formed by the FEC scheme, and is then transmitted. ALC session may be composed of one or more channels, and several receivers select a channel of the session according to the network state and receive a desired object over the selected channel. The receivers can be devoted to receive its own content, and are little affected by a state of other receivers or pass loss. Therefore, ALC has high stability or can provide a stable content download service using multi-layered transmission.

LCT may support transmission (Tx) levels for a reliable content transmission (e.g., FLUTE) protocol and a stream transmission protocol. LCT may provide content and characteristics of the basic information to be transmitted to the receiver. For example, LCT may include a Treansport Session Identifier (TSI) field, a Transport Object ID (TOI) field, and a Congestion Control Information (CCI) field.

TSI field may include information for identifying the ALC/LCT session. For example, a channel contained in the session may be identified using a transmitter IP address and a UDP port. TOI field may include information for identifying each file object. CCI field may include information regarding a used or unused state and information regarding a Congestion Control Block. In addition, LCT may provide additional information and FEC-associated information through an extended header.

As described above, the object (e.g., file) is packetized according to the FLUTE protocol, and is then packetized according to the ALC/LCT scheme. The packetized ALC/LCT data is re-packetized according to the UDP scheme, and the packetized ALC/LCT/UDP data is packeetized according to the IP scheme, resulting in formation of ALC/LCT/UDP/IP data.

The file-based multimedia content may be transmitted not only to the Internet but also to the broadcast network through the content transmission protocol such as LCT. In this case, multimedia content composed of at least one object or file may be transmitted and consumed in units of an object or a file through the LCT. A detailed description thereof will hereinafter be described in detail.

FIG. 25(a) shows a data structure based on the FLUTE protocol. For example, the multimedia content may include at least one object. One object may include at least one fragment (Fragment 1 or Fragment 2).

A data processing time needed for the FLUTE protocol is shown in FIG. 25(b). In FIG. 25(b), the lowest drawing shows the encoding start and end times at which the broadcast signal transmission apparatus starts or stops encoding of one object, and the highest drawing shows the reproduction start and end times at which the broadcast signal reception apparatus starts or stops reproduction of one object.

The broadcast signal transmission apparatus may start transmission of the object upon after completion of generation of the object including at least one fragment. Therefore, there occurs a transmission standby time (Dt1) between a start time at which the broadcast signal transmission apparatus starts to generate the object and another time at which the broadcast signal transmission apparatus starts to transmit the object.

In addition, the broadcast signal reception apparatus stops reception of the object including at least one object, and then starts reproduction of the object. Therefore, there occurs a reproduction standby time (Dr1) between a start time at which the broadcast signal reception apparatus starts reception of the object and another time at which the broadcast signal reception apparatus starts to reproduce the object.

Therefore, a predetermined time corresponding to the sum of a transmission standby time and a reproduction standby time is needed before one object is transmitted from the broadcast signal transmission apparatus and is then reproduced by the broadcast signal reception apparatus. This means that the broadcast signal reception apparatus requires a relatively long initial access time to access the corresponding object.

As described above, since the FLUTE protocol is used, the broadcast signal transmission apparatus transmits data on an object basis, the broadcast signal reception apparatus must receive data of one object and must consume the corresponding object. Therefore, object transmission based on the FLUTE protocol is inappropriate for the real-time broadcast environment.

FIG. 26 illustrates a Real-Time Object Delivery over Unidirectional Transport (ROUTE) protocol stack according to an embodiment of the present invention.

The next-generation broadcast system supporting the IP-based hybrid broadcasting may include video data, audio data, subtitle data, signaling data, Electronic Service Guide (ESG) data, and/or NRT content data.

Video data, audio data, subtitle data, etc. may be encapsulated in the form of ISO Base Media File (hereinafter referred to as ISO BMFF). For example, data encapsulated in the form of ISO BMFF may have a of MPEG(Moving Picture Expert Group) - DASH(Dynamic Adaptive Streaming over HTTP) segment or a format of Media Processing Unit (MPU). Then, data encapsulated in the form of BMFF may be equally transmitted over the broadcast network or the Internet or may be differently transmitted according to attributes of respective transmission networks.

In the case of the broadcast network, Signaling data, ESG data, NRT Content data, and/or data encapsulated in the form of ISO BMFF may be encapsulated in the form of an application layer transport protocol packet supporting real-time object transmission. For example, data encapsulated in the form of ISO BMFF may be encapsulated in the form of ROUTE(Real-Time Object Delivery over Unidirectional Transport) and MMT transport packet.

Real-Time Object Delivery over Unidirectional Transport (ROUTE) is a protocol for the delivery of files over IP multicast networks. ROUTE protocol utilizes Asynchronous Layered Coding (ALC), the base protocol designed for massively scalable multicast distribution, Layered Coding Transport (LCT), and other well-known Internet standards.

ROUTE is an enhancement of and functional replacement for FLUTE with additional features. ROUTE protocol is the reliable delivery of delivery objects and associated metadata using LCT packets. The ROUTE protocol may be used for real-time delivery.

ROUTE functions to deliver signaling messages, Electronic Service Guide (ESG) messages, and NRT content. It is particularly well suited to the delivery of streaming media for example MPEG-DASH Media Segment files. ROUTE offers lower end-to-end latency through the delivery chain as compared to FLUTE.

The ROUTE protocol is a generic transport application, providing for the delivery of any kind of object. It supports rich presentation including scene descriptions, media objects, and DRM-related information. ROUTE is particularly well suited to the delivery of real-time media content and offers many features.

For example, ROUTE offers individual delivery and access to different media components, e.g. language tracks, subtitles, alternative video views. And, ROUTE offers support of layered coding by enabling the delivery on different transport sessions or even ROUTE sessions. And, ROUTE offers support for flexible FEC protection, including multistage. And, ROUTE offers easy combination with MPEG-DASH enabling synergy between broadcast and broadband delivery modes of DASH. And, ROUTE offers fast access to media when joining a ROUTE and/or transport session. And, ROUTE offers highly extensible by focusing on the delivery concept. And, ROUTE offers compatibility with existing IETF protocols and use of IETF-endorsed extension mechanisms.

The ROUTE protocol is split in two major components. First component is a source protocol for delivery of objects or flows/collection of objects. Second component is a repair protocol for flexibly protecting delivery objects or bundles of delivery objects that are delivered through the source protocol.

The source protocol is independent of the repair protocol, i.e. the source protocol may be deployed without the ROUTE repair protocol. Repair may be added only for certain deployment scenarios, for example only for mobile reception, only in certain geographical areas, only for certain service, etc.

The source protocol is aligned with FLUTE as defined in RFC 6726 as well as the extensions defined in 3GPP TS 26.346, but also makes use of some principles of FCAST as defined in RFC 6968, for example, that the object metadata and the object content may be sent together in a compound object.

In addition to basic FLUTE protocol, certain optimizations and restrictions are added that enable optimized support for real-time delivery of media data; hence, the name of the protocol. Among others, the source ROUTE protocol provides a real-time delivery of object-based media data. And, the source ROUTE protocol provides a flexible packetization, including enabling media-aware packetization as well as transport aware packetization of delivery objects. And, the source ROUTE protocol provides an independence of files and delivery objects, i.e. a delivery object may be a part of a file or may be a group of files.

Delivery objects are the key component of this protocol as the receiver recovers delivery objects and passes those to the application. A delivery object is self-contained for the application, typically associated with certain properties, metadata and timing-related information that are of relevance for the application. In some cases the properties are provided in-band along with the object, in other cases the data needs to be delivered out-of-band in a static or dynamic fashion.

Delivery object may comprise complete or partial files described and accompanied by "FDT Instance ". And, Delivery object may comprise HTTP Entities (HTTP Entity Header and HTTP Entity Body) and/or packages of delivery objects.

Delivery object may be a full file or a byte ranges of a file along with FDT Instance. Delivery object may be delivered in real time or in non-real time(timed or non-timed delivery). If timed, certain real-time and buffer restrictions apply and specific extension headers may be used. Dynamic and static metadata may be used to describe delivery object properties. Delivery object may be delivered in specific data structures, especially ISO BMFF structures. In this case a media-aware packetization or a general packetization may be applied.

The delivery format specifies which of the formats are used in order to provide information to the applications.

ROUTE repair protocol is FEC based and enabled as an additional layer between the transport layer (e.g., UDP) and the object delivery layer protocol. The FEC reuses concepts of FEC Framework defined in RFC 6363, but in contrast to the FEC Framework in RFC 6363 the ROUTE repair protocol does not protect packets, but instead it protects delivery objects as delivered in the source protocol. Each FEC source block may consist of parts of a delivery object, as a single delivery object (similar to FLUTE) or by multiple delivery objects that are bundled prior to FEC protection. ROUTE FEC makes use of FEC schemes in a similar sense to that defined in RFC 5052, and uses the terminology of that document. The FEC scheme defines the FEC encoding and decoding, and it defines the protocol fields and procedures used to identify packet payload data in the context of the FEC scheme.

In ROUTE all packets are LCT packets as defined in RFC 5651. Source and repair packets may be distinguished by at least one of a ROUTE session, a LCT transport session, and/or a PSI bit. Different ROUTE sessions are carried on different IP/UDP port combinations. Different LCT transport sessions use different TSI values in the LCT header. And, if source and repair packets are carried in the same LCT transport session, they may be distinguished by the PSI bit in the LCT. This mode of operation is mostly suitable for FLUTE compatible deployments.

ROUTE defines the source protocol including packet formats, sending behavior and receiving behavior. And, ROUTE defines the repair protocol. And, ROUTE defines a metadata for transport session establishment and a metadata for object flow delivery. And ROUTE defines recommendations for MPEG DASH configuration and mapping to ROUTE to enable rich and high-quality linear TV broadcast services.

The scope of the ROUTE protocol is the reliable delivery of delivery objects and associated metadata using LCT packets. The objects are made available to the application through a Delivery Object Cache. The implementation of this cache is application dependent.

The ROUTE protocol focuses on the format of the LCT packets to deliver the delivery objects and the reliable delivery of the delivery object using a repair protocol based on FEC. And, the ROUTE protocol focuses on the definition and delivery of object metadata along with the delivery objects to enable the interface between the delivery object cache and the application. And, the ROUTE protocol focuses on the ROUTE and LCT session description to establish the reception of objects along with their metadata. And, the ROUTE protocol focuses on the normative aspects (formats, semantics) of auxiliary information to be delivered along with the packets to optimize the performance for specific applications, e.g., real-time delivery.

In addition, the ROUTE protocol provides recommended mappings of specific DASH Media Presentation formats to ROUTE delivery as well as suitable DASH formats to be used for the delivery. The key issue is that by using ROUTE, the DASH media formats may be used as is. This architectural design enables converged unicast/broadcast services.

In sender operation of the ROUTE protocol, a ROUTE session is established that delivers LCT packets. These packets may carry source objects or FEC repair data. A source protocol consists of one or more LCT sessions, each carrying associated objects along with their metadata. The metadata may be statically delivered in the LCT Session Instance Description (LSID) or may be dynamically delivered, either as a compound object in the Entity Mode or as LCT extension headers in packet headers. The packets are carried in ALC using a specific FEC scheme that permits flexible fragmentation of the object at arbitrary byte boundaries. In addition, delivery objects may be FEC protected, either individually or in bundles. In either case, the bundled object is encoded and only the repair packets are delivered. In combination with the source packets, this permits the recovery delivery object bundles. Note that one or multiple repair flows may be generated, each with different characteristics, for example to supported different latency requirements, different protection requirements, etc.

A DMD(Dynamic MetaData) is metadata to generate FDT equivalent descriptions dynamically at the client. It is carried in the entity-header in the Entity Mode and is carried in the LCT header in other modes of delivery.

The ROUTE protocol supports different protection and delivery schemes of the source data. It also supports all existing use cases for NRT delivery, as it can be deployed in a backward-compatible mode.

The ROUTE session is associated to an IP address/port combination. Typically, by joining such a session, all packets of the session can be received and the application protocol may apply further processing.

Each ROUTE session constitutes of one or multiple LCT transport sessions. LCT transport sessions are a subset of a ROUTE session. For media delivery, an LCT transport session typically would carry a media component, for example a DASH Representation. From the perspective of broadcast DASH, the ROUTE session can be considered as the multiplex of LCT transport sessions that carry constituent media components of one or more DASH Media Presentations. Within each LCT transport session, one or multiple objects are carried, typically objects that are related, e.g. DASH Segments associated to one Representation. Along with each object, metadata properties are delivered such that the objects can be used in applications. Applications include, but are not limited to, DASH Media Presentations, HTML-5 Presentations, or any other object-consuming application.

The ROUTE sessions may be bounded or unbounded from the temporal perspective. The ROUTE session contains one or multiple LCT transport sessions. Each transport session is uniquely identified by a unique Transport Session Identifier (TSI) value in the LCT header.

Before a receiver can join a ROUTE session, the receiver needs to obtain a ROUTE Session Description. The ROUTE Session Description contains at least one of the sender IP address, the address and port number used for the session, the indication that the session is a ROUTE session and that all packets are LCT packets, and/or other information that is essential to join and consume the session on an IP/UDP level.

The Session Description could also include, but is not limited to, the data rates used for the ROUTE session and any information on the duration of the ROUTE session.

The Session Description could be in a form such as the Session Description Protocol (SDP) as defined in RFC 4566 or XML metadata as defined in RFC 3023. It might be carried in any session announcement protocol using a proprietary session control protocol, located on a web page with scheduling information, or conveyed via email or other out-of-band methods.

Transport sessions are not described in the ROUTE session description, but in the LCT Session Instance Description (LSID). Transport sessions (i.e., LCT transport sessions or simply LCT sessions) may contain either or both of Source Flows and Repair Flows. The Source Flows carry source data. And, the Repair Flows carry repair data.

The LCT transport sessions contained in a ROUTE session are described by the LCT Session Instance description (LSID). Specifically, it defines what is carried in each constituent LCT transport session of the ROUTE session. Each transport session is uniquely identified by a Transport Session Identifier (TSI) in the LCT header.

The LSID describes all transport sessions that are carried on this ROUTE session. The LSID may be delivered in the same ROUTE session containing the LCT transport sessions or it may be delivered by means outside the ROUTE session, e.g. through unicast or through a different ROUTE session. In the former case, the LSID shall be delivered on a dedicated LCT transport session with TSI = 0, and furthermore, it shall be a delivery object identified by TOI = 0. For any object delivered on TSI=0, the Entity Mode should be used. If those objects are not delivered in the Entity Mode, then the LSID must be recovered prior to obtaining the extended FDT for the received object.

The Internet Media Type of the LSID is application/xml+route+lsid.

The LSID may reference other data fragments. Any object that is referenced in the LSID may also be delivered on TSI = 0, but with a different value of TOI than the LSID itself, or it may be delivered on a separate LCT session with dedicated TSI $\neq$ 0.

The LSID element may contain version attribute, validity attribute, and/or expiration attribute. The LSID element may be updated accordingly using version attribute as well as validity attribute and expiration attribute. For example certain transport sessions may be terminated after some time and new session may start.

The version attribute indicates a version of this LSID element. The version is increased by one when the descriptor is updated. The received LSID element with highest version number is the currently valid version.

The validity attribute indicates date and/or time from which the LSID element is valid. The validity attribute may or may not be present. If not present, the receiver should assume the LSID element version is valid immediately.

The expiration attribute indicates date and time when the LSID element expires. The expiration attribute may or may not be present. If not present the receiver should assume the LSID element is valid for all time, or until it receives a newer LSID element with an associated expiration value.

The LSID element may contain at least one TransportSession element. TransportSession element provides information about LCT transport sessions. Each TransportSession element may contain tsi attribute, SourceFlow element, and/or RepairFlow element.

tsi attribute specifies the transport session identifier. The session identifiers must not be 0. SourceFlow element provides information of a source flow carried on the transport session. RepairFlow element provides information of a repair flow carried on the transport session.

Thereafter, data encapsulated in the form of the application layer transport protocol packet may be packetized according to the IP/UDP scheme. The data packetized by the IP/UDP scheme may be referred to as the IP/UDP datagram, and the IP/UDP datagram may be loaded on the broadcast signal and then transmitted.

In the case of the Internet, data encapsulated in the form of ISO BMFF may be transferred to the receiver according to the streaming scheme. For example, the streaming scheme may include MPEG-DASH.

The signaling data may be transmitted using the following methods.

In the case of the broadcast network, signaling data may be transmitted through a specific data pipe (hereinafter referred to as DP) of a transport frame (or frame) applied to a physical layer of the next-generation broadcast transmission system and broadcast network according to attributes of the signaling data. For example, the signaling format may be encapsulated in the form of a bitstream or IP/UDP datagram.

In the case of the Internet, the signaling data may be transmitted as a response to a request of the receiver.

ESG data and NRT content data may be transmitted using the following methods.

In the case of the broadcast network, ESG data and NRT content data may be encapsulated in the form of an application layer transport protocol packet. Thereafter, data encapsulated in the form of the application layer transport protocol packet may be transmitted in the same manner as described above.

In the case of the Internet, ESG data and NRT content data may be transmitted as a response to the request of the receiver.

The physical layers (Broadcast PHY and broadband PHY) of the broadcast signal transmission apparatus according to the embodiment may be shown in FIG. 1. In addition, the physical layers of the broadcast signal reception apparatus may be shown in FIG. 9.

The signaling data and the IP/UDP datagram may be transmitted through a specific data pipe (hereinafter referred to as DP) of a transport frame (or frame). For example, the input formatting block 1000 may receive the signaling data and the IP/UDP datagram, each of the signaling data and the IP/UDP datagram may be demultiplexed into at least one DP. The output processor 9300 may perform the operations opposite to those of the input formatting block 1000.

The following description relates to an exemplary case in which data encapsulated in the form of ISO BMFF is encapsulated in the form of ROUTE transport packet, and a detailed description of the exemplary case will hereinafter be described in detail.

<Data structure for real-time file generation and consumption >

FIG. 27 illustrates a data structure of file-based multimedia content according to an embodiment of the present invention.

The data structure of the file-based multimedia content according to the embodiment is shown in FIG. 27. The term "file-based multimedia content" may indicate multimedia content composed of at least one file.

The multimedia content such as a broadcast program may be composed of one presentation. The presentation may include at least one object. For example, the object may be a file. In addition, the object may include at least one fragment.

In accordance with the embodiment, the fragment may be a data unit capable of being independently decoded and reproduced without depending on the preceding data. For example, the fragment including video data may begin from an IDR picture, and header data for parsing media data does not depend on the preceding fragment. The fragment according to the embodiment may be divided and transmitted in units of at least one transfer block (TB).

In accordance with the embodiment, the transfer block (TB) may be a minimum data unit capable of being independently and transmitted without depending on the preceding data. In addition, the TB may be a significant data unit configured in the form of a variable-sized GOP or chunk. For example, the TB may include at least one chunk composed of the same media data as in GOP of video data. The term "chunk" may indicate a segment of the content. In addition, the TB may include at least one source block.

GOP is a basic unit for performing coding used in video coding and is a data unit with a variable size indicating a set of frames including at least one I-frame. According to an embodiment of the present invention, media data is transmitted in an object internal structure unit as an independently meaningful data unit, and thus GOP may include Open GOP and Closed GOP.

In Open GOP, B-frame in one GOP may refer to I-frame or P-frame of an adjacent GOP. Thus, Open GOP can seriously enhance coding efficiency. In Closed GOP, B-frame or P-frame may refer to only a frame in the corresponding GOP and may not refer to frames in GOPs except for the corresponding GOP.

The TB may include at least one data, and respective data pieces may have the same or different media types. For example, the media type may include an audio type and a video type. That is, the TB may also include one or more data pieces having different media types in the same manner as in the audio and video data.

The fragment according to the embodiment may include a fragment header and a fragment payload.

The fragment header may include timing information and indexing information to parse the above-mentioned chunks. The fragment header may be comprised of at least one TB. For example, the fragment header may be contained in one TB. In addition, at least one chunk data constructing the fragment payload may be contained in at least one TB. As described above, the fragment header and the fragment payload may be contained in at least one TB.

The TB may be divided into one or more symbols. At least one symbol may be packetized. For example, the broadcast signal transmission apparatus according to the embodiment may packetize at least one symbol into the LCT packet.

The broadcast signal transmission apparatus according to the embodiment may transmit the packetized data to the broadcast signal reception apparatus.

FIG. 28 illustrates a media segment structure of MPEG-DASH to which the data structure is applied.

Referring to FIG. 28, the data structure according to the embodiment is applied to a media segment of MPEG-DASH.

The broadcast signal transmission apparatus according to the embodiment include multimedia contents having a plurality of qualities in the server, provides the multimedia contents appropriate for the user broadcast environment and the environment of the broadcast signal reception apparatus, such that it can provide the seamless real-time streaming service. For example, the broadcast signal transmission apparatus may provide the real-time streaming service using MPEG-DASH.

The broadcast signal transmission apparatus can dynamically transmit XML-type MPD (Media Presentation Description) and a segment of binary-format transmit (Tx) multimedia content to the broadcast signal reception apparatus using the ROUTE protocol according to the broadcast environment and the environment of the broadcast signal reception apparatus.

MPD is comprised of a hierarchical structure, and may include a structural function of each layer and roles of each layer.

The segment may include a media segment. The media segment may be a data unit having a media-related object format being separated per quality or per time to be transmitted to the broadcast signal reception apparatus so as to support the streaming service. The media segment may include information regarding a media stream, at least one access unit, and information regarding a method for accessing Media Presentation contained in the corresponding segment such as a presentation time or index. In addition, the media segment may be divided into at least one subsegment by the segment index.

MPEG-DASH content may include at least one media segment. The media segment may include at least one fragment. For example, the fragment may be the above-mentioned subsegment. As described above, the fragment may include a fragment header and a fragment payload.

The fragment header may include a segment index box (sidx) and a movie fragment box (moof). The segment index box may provide an initial presentation time of media data present in the corresponding fragment, a data offset, and SAP (Stream Access Points) information. The movie fragment box may include metadata regarding a media data box (mdat). For example, the movie fragment box may include timing, indexing, and decoding information of a media data sample contained in the fragment.

The fragment payload may include the media data box (mdat). The media data box (mdat) may include actual media data regarding the corresponding media constituent elements (video and audio data, etc.).

The encoded media data configured on a chunk basis may be contained in the media data box (mdat) corresponding to the fragment payload. As described above, samples corresponding to the same track may be contained in one chunk.

The broadcast signal transmission apparatus may generate at least one TB through fragment segmentation. In addition, the broadcast signal transmission apparatus may include the fragment header and the payload data in different TBs so as to discriminate between the fragment header and the payload data.

In addition, the broadcast signal transmission apparatus may transmit a transfer block (TB) divided on a chunk basis so as to segment/transmit data contained in the fragment payload. That is, the broadcast signal transmission apparatus according to the embodiment may generate a TB in a manner that a border of the chunk is identical to a border of the TB.

Thereafter, the broadcast signal transmission apparatus segments at least one TB such that it can generate at least one symbol. All symbols contained in the object may be identical to each other. In addition, the last symbol of TB may include a plurality of padding bytes such that all symbols contained in the object have the same length.

The broadcast signal transmission apparatus may packetize at least one symbol. For example, the broadcast signal transmission apparatus may generate the LCT packet on the basis of at least one symbol.

Thereafter, the broadcast signal transmission apparatus may transmit the generated LCT packet.

In accordance with the embodiment, the broadcast signal transmission apparatus first generates the fragment payload, and generates the fragment header so as to generate the fragment. In this case, the broadcast signal transmission apparatus may generate a TB corresponding to media data contained in the fragment payload. For example, at least TB corresponding to media data contained in the media data box (mdat) may be sequentially generated on a chunk basis. Thereafter, the broadcast signal transmission apparatus may generate the TB corresponding to the fragment header.

The broadcast signal transmission apparatus may transmit the generated TB according to the generation order so as to broadcast the media content in real time. In contrast, the broadcast signal reception apparatus according to the embodiment first parses the fragment header, and then parses the fragment payload.

The broadcast signal transmission apparatus may transmit data according to the parsing order when media data is pre-encoded or TB is pre-generated.

FIG. 29 illustrates a data processing time using a ROUTE protocol according to an embodiment of the present invention.

FIG. 29(a) shows the data structure according to the embodiment. The multimedia data may include at least one object. Each object may include at least one fragment. For example, one object may include two fragments (Fragment1 and Fragment 2).

The broadcast signal transmission apparatus may segment the fragment into one or more TBs. The TB may be a source block, and the following description will hereinafter be given on the basis of the source block.

For example, the broadcast signal transmission apparatus may segment the fragment 1 into three source blocks (Source Block 0, Source Block 1, and Source Block 2), and may segment the fragment 2 into three source blocks (Source Block 3, Source Block 4, Source Block 5).

The broadcast signal transmission apparatus may independently transmit each segmented source block. The broadcast signal transmission apparatus may start transmission of each source block generated when or just after each source block is generated.

For example, the broadcast signal transmission apparatus can transmit the source block 0 (S0) after the source block 0 (S0) has been generated for a predetermined time (te0 ~ te1). The transmission start time (td0) of the source block 0 (S0) may be identical to the generation completion time (td0) or may be located just after the generation completion time (td0). Likewise, the broadcast signal transmission apparatus may generate the source blocks 1 to 5 (Source Block 1(S1) to Source Block 5(S5)), and may transmit the generated source blocks 1 to 5.

Therefore, the broadcast signal transmission apparatus according to the embodiment may generate a transmission standby time (Dt2) between a start time of generating one source block and another start time of transmitting the source block. The transmission standby time (Dt2) generated by the broadcast signal transmission apparatus is relatively shorter than the transmission standby time (Dt1) generated by the conventional broadcast signal transmission apparatus. Therefore, the broadcast signal transmission apparatus according to the embodiment can greatly reduce a transmission standby time as compared to the conventional broadcast signal transmission apparatus.

The broadcast signal reception apparatus according to the embodiment receives each segmented source block, and combines the received source blocks, such that it can generate at least one fragment. For example, the broadcast signal reception apparatus may receive the source block 0 (S0), the source block 1 (S1), and the source block 2 (S2), and combine the received three source blocks (S0, S1, S2) so as to generate the fragment 1. In addition, the broadcast signal reception apparatus receives the source block 3 (S3), the source block 4 (S4), and the source block 5 (S5), and combines the received three source blocks (S3, S4, S5) so as to generate the fragment 2.

The broadcast signal reception apparatus may separately generate each fragment. The broadcast signal reception apparatus may reproduce each fragment when or just after each fragment is generated. Alternatively, the broadcast signal reception apparatus may reproduce each fragment when or just after the source block corresponding to each fragment is transmitted.

For example, the broadcast signal reception apparatus may generate the fragment 1 after receiving the source blocks 0 to 2 (S0 ~ S2) during a predetermined time (td0 ~ td3). For example, after the broadcast signal reception apparatus receives the source blocks 0 to 2 (S0 ~ S2) during a predetermined time (td0 ~ td3), it can generate the fragment 1. Thereafter, the broadcast signal reception apparatus may reproduce the generated fragment 1. The reproduction start time (tp0) of the fragment 1 may be identical to the generation time of the fragment 1 or may be located after the generation time of the fragment 1. In addition, a reproduction start time (tp0) of the fragment 1 may be identical to a reception completion time of the source block 2 (S2) or may be located just after the reception completion time of the source block 2 (S2).

In the same manner, after the broadcast signal reception apparatus according to the embodiment receives the source blocks 3 to 5 (S3 ~ S5) during a predetermined time (td3 ~ td6), it may generate the fragment 2. Thereafter, the broadcast signal reception apparatus may reproduce the fragment 2.

However, the scope or spirit of the present invention is not limited thereto, and the broadcast signal reception apparatus according to the embodiment may receive the source block and may reproduce data in units of a received source block as necessary.

Therefore, the broadcast signal reception apparatus according to the embodiment may generate a reproduction standby time (Dr2) between a reception start time of one fragment and a reproduction start time of the fragment. The reproduction standby time (Dr2) generated by the broadcast signal reception apparatus is relatively shorter than the reproduction standby time (Dr2) generated by the broadcast signal reception apparatus. Therefore, the broadcast signal reception apparatus according to the embodiment can reduce a reproduction standby time as compared to the conventional broadcast signal reception apparatus.

As described above, a predetermined time corresponding to the sum of a transmission standby time and a reproduction standby time may be considerably reduced. Here, the predetermined time may be needed when one TB is transmitted from the broadcast signal transmission apparatus and is then reproduced by the broadcast signal reception apparatus. This means that an initial access time during which the broadcast signal reception apparatus initially approaches the corresponding object is considerably reduced.

In case of using the ROUTE protocol, the broadcast signal transmission apparatus may transmit data in units of a TB, and the broadcast signal reception apparatus may reproduce the received data in units of a TB or a fragment. As a result, a total time from an acquisition time of multimedia content to a content display time for a user can be reduced, and an initial access time required when the user approaches the broadcast channel can also be reduced.

Therefore, TB transmission based on the ROUTE protocol is appropriate for the real-time broadcast environment.

<Method for identifying file segmentation generation and consumption information >

FIG. 30 illustrates a Layered Coding Transport (LCT) packet structure for file transmission according to an embodiment of the present invention.

An application layer transport session may be composed of an IP address and a port number. If the application layer transport session is the ROUTE protocol, the ROUTE session may be composed of one or more LCT (Layered Coding Transport) sessions. For example, if one media component is transmitted through one LCT transport session, at least one media component may be multiplexed and transmitted through one application layer transport session. In addition, at least one transport object may be transmitted through one LCT transport session.

Referring to FIG. 30, if the application layer transmission protocol is based on the LCT, each field of the LCT packet may indicate the following information.

The LCT packet may include an LCT version number field (V), a congestion control flag field (C), a reserved field (R), a transport session identifier flag field (S), a transport object identifier flag field (O), a half-word flag field (H), a sender current time present flag field (T), an expected residual time present flag field (R), a close session flag field (A), a close object flag field (B), an LCT header length field (HDR_LEN), a codepoint field (CP), a congestion control information field (CCI), a transport session identifier field (TSI), a transport object identifier field (TOI), a header extensions field, an FEC payload ID field, and/or an encoding symbol(s) field.

LCT version number field(V) indicates the protocol version number. For example, this field indicates the LCT version number. The version number field of the LCT header MUST be interpreted as the ROUTE version number field. This version of ROUTE implicitly makes use of version '1' of the LCT building block. For example, the version number is '0001b'.

Congestion control flag field(C) indicates the length of Congestion Control Information field. C=0 indicates the Congestion Control Information (CCI) field is 32-bits in length. C=1 indicates the CCI field is 64-bits in length. C=2 indicates the CCI field is 96-bits in length. C=3 indicates the CCI field is 128-bits in length.

Reserved field(R) reserved for future use. For example, Reserved field(R) may be Protocol-Specific Indication field (PSI). Protocol-Specific Indication field (PSI) may be used as an indicator for a specific purpose in the LCT higher protocol. PSI field indicates whether the current packet is a source packet or an FEC repair packet. As the ROUTE source protocol only delivers source packets, this field shall be set to '10b'.

Transport Session Identifier flag field(S) indicates the length of Transport Session Identifier field.

Transport Object Identifier flag field(O) indicates the length of Transport Object Identifier field. For example, the object may indicate one file, and the TOI may indicate ID information of each object, and a file having TOI=0 may be referred to as FDT.

Half-word flag field (H) may indicate whether half-word (16 bits) will be added to the length of TSI or TOI field.

Sender Current Time present flag field(T) indicates whether the Sender Current Time (SCT) field is present or not. T = 0 indicates that the Sender Current Time (SCT) field is not present. T = 1 indicates that the SCT field is present. The SCT is inserted by senders to indicate to receivers how long the session has been in progress.

Expected Residual Time present flag field(R) indicates whether the Expected Residual Time (ERT) field is present or not. R = 0 indicates that the Expected Residual Time (ERT) field is not present. R = 1 indicates that the ERT field is present. The ERT is inserted by senders to indicate to receivers how much longer the session / object transmission will continue.

Close Session flag field (A) may indicate whether session completion or an impending state of the session completion.

Close Object flag field (B) may indicate completion or impending completion of a transmitting object.

LCT header length field(HDR LEN):indicates total length of the LCT header in units of 32-bit words.

Codepoint field(CP) indicates the type of the payload that is carried by this packet. Depending on the type of the payload, additional payload header may be added to prefix the payload data.

Congestion Control Information field (CCI) may be used to transmit congestion control information (e.g., layer numbers, logical channel numbers, sequence numbers, etc.). The Congestion Control Information field in the LCT header contains the required Congestion Control Information.

Transport Session Identifier field (TSI) is a unique ID of a session. The TSI uniquely identifies a session among all sessions from a particular sender. This field identifies the Transport Session in ROUTE. The context of the Transport Session is provided by the LSID(LCT Session Instance description).

LSID defines what is carried in each constituent LCT transport session of the ROUTE session. Each transport session is uniquely identified by a Transport Session Identifier (TSI) in the LCT header. LSID may be transmitted through the same ROUTE session including LCT transport sessions, and may also be transmitted through Web. LSID may be transmitted through the same ROUTE session including LCT transmission sessions and may also be transmitted through a communication network, a broadcast network, the Internet, a cable network, and/or a satellite network. The scope or spirit of a transmission unit of LSID is not limited thereto. For example, LSID may be transmitted through a specific LCT transport session having TSI=0. LSID may include signaling information regarding all transport sessions applied to the ROUTE session. LSID may include LSID version information and LSID validity information. In addition, LSID may include a transport session through which the LCT transport session information is transmitted. The transport session information may include TSI information for identifying the transport session, source flow information that is transmitted to the corresponding TSI and provides information regarding a source flow needed for source data transmission, repair flow information that is transmitted to the corresponding TSI and provides information regarding a repair flow needed for transmission of repair data, and transport session property information including additional characteristic information of the corresponding transport session.

Transport Object Identifier field (TOI) is a unique ID of the object. The TOI indicates which object within the session this packet pertains to. This field indicates to which object within this session the payload of the current packet belongs to. The mapping of the TOI field to the object is provided by the Extended FDT.

Extended FDT specifies the details of the file delivery data. This is the extended FDT instance. The extended FDT together with the LCT packet header may be used to generate the FDT-equivalent descriptions for the delivery object. The Extended FDT may either be embedded or may be provided as a reference. If provided as a reference the Extended FDT may be updated independently of the LSID. If referenced, it shall be delivered as in-band object on TOI=0 of the included source flow.

Header Extensions field may be used as an LCT header extension part for transmission of additional information. The Header Extensions are used in LCT to accommodate optional header fields that are not always used or have variable size.

For example, EXT_TIME extension is used to carry several types of timing information. It includes general purpose timing information, namely the Sender Current Time (SCT), Expected Residual Time (ERT), and Sender Last Change (SLC) time extensions described in the present document. It can also be used for timing information with narrower applicability (e.g., defined for a single protocol instantiation); in this case, it will be described in a separate document.

FEC Payload ID field may include ID information of Transmission Block or Encoding Symbol. FEC Payload ID may indicate an ID to be used when the above file is FEC-encoded. For example, if the FLUTE protocol file is FEC-encoded, FEC Payload ID may be allocated for a broadcast station or broadcast server configured to identify the FEC-encoded FLUTE protocol file.

Encoding Symbol(s) field may include Transmission Block or Encoding symbol data.

The packet payload contains bytes generated from an object. If more than one object is carried in the session, then the Transmission Object ID (TOI) within the LCT header MUST be used to identify from which object the packet payload data is generated.

The LCT packet according to the embodiment may include Real Time Support Extension field (EXT_RTS) corresponding to an extension format of a Header Extensions field. EXT_RTS may include segmentation generation and consumption information of the file, and will hereinafter be referred to as fragment information. The LCT packet according to the embodiment includes EXT_RTS corresponding to an extension format of the Header Extensions field, and may support real-time file transmission and consumption information using a method compatible with the legacy LCT.

The fragment information (EXT_RTS) according to the embodiment may include Header Extension Type field (HET), Fragment Start Indicator field (SI), Fragment Header flag field (FH), and Fragment Header Complete Indicator field (FC).

Header Extension Type field (HET) may indicate the corresponding Header Extension type. The HET field may be an integer of 8 bits. Basically, if HET for use in LCT is in the range of 0 to 127, a variable-length header extension in units of a 32-bit word is present, and the length of HET is written in the Header Extension Length field (HEL) subsequent to HET. If HET is in the range of 128 to 255, Header Extension may have a fixed length of 32 bits.

The fragment information (EXT_RTS) according to the embodiment has a fixed length of 32 bits, such that the corresponding Header Extension type may be identified using one unique value from among the values of 128 to 255, and may identify the corresponding Header Extension type.

SI field may indicate that the corresponding 1CT packet includes a start part of the fragment. If a user in the broadcast environment approaches a random access of a file through which the corresponding file-based multimedia content is transmitted, packets having" SI field = 0" from among the initial reception packets are discarded, the packets starting from a packet having "SI field =1" starts parsing, so that the packet processing efficiency and the initial delay time can be reduced.

FH field may indicate that the corresponding LCT packet includes the fragment header part. As described above, the fragment header is characterized in that a generation order and a consumption order of the fragment header are different from those of the fragment payload. The broadcast signal reception apparatus according to the embodiment may rearrange transmission blocks sequentially received on the basis of the FH field according to the consumption order, so that it can regenerate the fragment.

FC field may indicate that the corresponding packet includes the last data of the fragment. For example, if the fragment header is transmitted after the fragment payload is first transmitted, the FC field may indicate inclusion of the last data of the fragment header. If the fragment header is first transmitted and the fragment payload is then transmitted, the FC field may indicate inclusion of the last data of the fragment payload. The following description will hereinafter disclose an exemplary case in which the fragment payload is first transmitted and the fragment is then transmitted.

If the broadcast signal reception apparatus receives the packet having "FC field = 1", the broadcast signal reception apparatus may recognize reception completion of the fragment header, and may perform fragment recovery by combining the fragment header and the fragment payload.

Padding Bytes field (PB) may indicate the number of padding bytes contained in the corresponding LCT packet. In the legacy LCT, all LCT packets corresponding to one object must be identical to each other. However, when a transmission block (TB) is divided according to the data construction method, the last symbol of each TB may have a different length. Therefore, the broadcast signal transmission apparatus according to the embodiment fills a residual part of the packet with padding bytes, such that it can support the real-time file transmission using a fixed-length packet according to the method compatible with the legacy LCT.

Reserved field reserved for future use.

FIG. 31 illustrates a structure of an LCT packet according to an embodiment of the present invention.

Some parts of FIG. 31 are substantially identical to those of FIG. 30, and as such a detailed description thereof will herein be omitted, such that FIG. 31 will hereinafter be described centering on a difference between FIG. 30 and FIG. 31.

Referring to FIG. 31, fragment information (EXT_RTS) according to an embodiment may include a Fragment Header Length field (FHL) instead of the FC field shown in FIG. 30.

FHL field indicates the number of constituent symbols of the fragment, so that it can provide specific information as to whether reception of the fragment is completed. The FHL field may indicate a total number of symbols corresponding to respective fragments including the fragment header and the fragment payload. In addition, the FHL field may indicate a total number of symbols to be transmitted later from among the fragment header and the fragment payload.

For example, if the fragment payload is first transmitted and the fragment header is then transmitted, the FHL field may indicate a total number of symbols corresponding to the fragment header. In this case, the FHL field may indicate the length of the fragment header.

If the fragment header is first transmitted and the fragment payload is then transmitted, the FHL field may indicate a total number of symbols corresponding to the fragment payload. In this case, the FHL field may indicate the length of the fragment payload.

The following description will hereinafter disclose an exemplary case in which the fragment payload is first transmitted and the fragment header is then transmitted.

The broadcast signal reception apparatus according to an embodiment may receive the LCT packet including the fragment header corresponding to the number of symbols displayed on the FHL field. The broadcast signal reception apparatus checks the number of reception times of the LCT packet including the fragment header, so that it can identify reception completion of the fragment header. Alternatively, the broadcast signal reception apparatus checks the number of TBs corresponding to the fragment header, so that it can identify reception completion of the fragment header.

<Method for identifying segmentation generation and segmentation consumption information of file>

FIG. 32 illustrates real-time broadcast support information signaling based on FDT according to an embodiment of the present invention.

Referring to FIG. 32, the present invention relates to a method for identifying segmentation generation and segmentation consumption information of file-based multimedia content in a real-time broadcast environment. The segmentation generation and segmentation consumption information of the file-based multimedia content may include the above-mentioned data structure and LCT packet information.

The broadcast signal transmission apparatus may further transmit additional signalling information so as to identify segmentation generation information and segmentation consumption information of the file. For example, the signalling information may include metadata ad out-of-band signaling information.

A method for transmitting signaling information regarding the real-time broadcast support information according to the embodiment is shown in FIG. 32.

The broadcast signal transmission apparatus according to the embodiment may transmit signaling information either through a File Delivery Table (FDT) level or through a file-level Real-Time-Support attribute. If Real-Time-Support is set to 1, objects written in the corresponding FDT level or File level may include the above-mentioned data structure and packet information, such that file segmentation generation and consumption in the real-time broadcast environment can be indicated.

FIG. 33 is a block diagram illustrating a broadcast signal transmission apparatus according to an embodiment of the present invention.

Referring to FIG. 33, the broadcast signal transmission apparatus for transmitting broadcast signals including multimedia content using the broadcast network may include a signaling encoder C21005, a Transmission Block Generator C21030, and/or a Transmitter C21050.

The signaling encoder C21005 may generate signaling information. The signaling information may indicate whether multimedia content will be transmitted in real time. The signaling information may indicate that the above-mentioned multimedia content is transmitted from among at least one of the file level and the FDT level in real time. When the signaling information indicates that multimedia content is transmitted at a power level in real time, all data belonging to the corresponding file can be transmitted in real time. When the signaling information indicates that multimedia content is transmitted at an FDT level in real time, all files or data belonging to the corresponding FDT can be transmitted in real time.

If the signaling information indicates real-time transmission of the multimedia content, the Transmission Block Generator C21030 may divide the file contained in the multimedia content into one or more TBs corresponding to data that is independently encoded and transmitted.

The transmitter C21050 may transmit the transmission block (TB).

A detailed description thereof will hereinafter be described with reference to FIG. 34.

FIG. 34 is a block diagram illustrating a broadcast signal transmission apparatus according to an embodiment of the present invention.

Referring to FIG. 34, the broadcast signal transmission apparatus for transmitting broadcast signals including multimedia content using the broadcast network according to the embodiment may include a signaling encoder (not shown), a Media Encoder C21010, a Fragment Generator C21020, a Transmission Block Generator C21030, a Packetizer C21040, and/or a Transmitter C21050.

The signaling encoder (not shown) may generate signaling information. The signaling information may indicate whether multimedia content will be transmitted in real time.

Media Encoder C21010 may encode multimedia content so that it can generate media data using the encoded multimedia content. Hereinafter, the term "media data" will be referred to as data.

Fragment Generator C21020 may segment each file constructing the multimedia content, so that it can generate at least one fragment indicating a data unit that is independently encoded and reproduced.

Fragment Generator C21020 may generate the fragment payload constructing each fragment and then generate the fragment header.

Fragment Generator C21020 may buffer media data corresponding to the fragment payload. Thereafter, the Fragment Generator C21020 may generate a chunk corresponding to the fragment payload on the basis of the buffered media data. For example, the chunk may be a variable-sized data unit composed of the same media data as in GOP of video data.

If generation of the chunk corresponding to the fragment payload is not completed, the Fragment Generator C21020 continuously buffers the media data, and completes generation of the chunk corresponding to the fragment payload.

Fragment Generator C21020 may determine whether data corresponding to the fragment payload is generated as a chunk whenever the chunk is generated.

If the chunk corresponding to the fragment payload is completed generated, Fragment Generator C21020 may generate the fragment header corresponding to the fragment payload.

Transmission Block Generator C21030 may generate at least one TB indicating a data unit that is encoded and transmitted through fragment segmentation.

The transmission block (TB) according to the embodiment may indicate a minimum data unit that is independently encoded and transmitted without depending on the preceding data. For example, the TB may include one or more chunks composed of the same media data as in GOP of video data.

Transmission Block Generator C21030 may first transmit the TB corresponding to the fragment payload, and may generate the TB corresponding to the fragment header.

Transmission Block Generator C21030 may generate as a single TB. However, the scope or spirit of the present invention is not limited thereto, and the Transmission Block Generator C21030 may generate the fragment header as one or more TBs.

For example, if Fragment Generator C21020 generates the fragment payload constructing each fragment and then generates the fragment header, the Transmission Block Generator C21030 generates the transmission block (TB) corresponding to the fragment payload and then generates the TB corresponding to the fragment header.

However, the scope or spirit of the present invention is not limited thereto. If the fragment header and the fragment payload for the multimedia content are generated, the TB corresponding to the fragment header may be first generated and the TB corresponding to the fragment payload may be generated.

Transmission Block Generator C21030 may generate a transmission block (TB) corresponding to the fragment payload and a TB corresponding to the fragment header as different TBs.

Packetizer C21040 may divide the TB into one or more equal-sized symbols, so that the one or more symbols may be packetized into at least one packet. However, the scope or spirit of the present invention is not limited thereto, and the symbols may also be generated by other devices. In accordance with the embodiment, the symbols may have the same length. However, the last symbol of each TB may be less in length than other symbols.

Thereafter, Packetizer C21040 may packetize at least one symbol into one or more packets. For example, the packet may be an LCT packet. The packet may include a packet header and a packet payload.

The packet header may include fragment information having specific information regarding file segmentation generation and segmentation consumption. The file segmentation generation may indicate that data is divided into at least one chunk or at least one TB capable of independently encoding/transmitting the file constructing the multimedia content. The file segmentation consumption may indicate that at least one fragment capable of performing independent decoding/reproducing by combination of at least one TB is recovered and is reproduced on a fragment basis. In addition, segmentation consumption of the file may include data that is reproduced on a TB basis.

For example, the fragment information may include at least one of an SI field indicating that a packet includes initial data of the fragment, an FH field indicating that a packet includes header data, fragment completion information indicating that generation of a TB corresponding to each fragment is completed, and a PB field indicating the number of padding bytes contained in a packet.

The fragment information may further include a Header Extension Type (HET) field indicating the type of a Header Extension of the corresponding packet.

The fragment completion information may include at least one of the FC field indicating that a packet includes the last data of the fragment header and the FHL field indicating a total number of symbols corresponding to the fragment header.

The fragment information may be generated by Packetizer C21040, and may be generated by a separate device. The following description will hereinafter described on the basis of an exemplary case in which the packetizer C21040 generates the fragment information.

Packetizer C21040 may identify whether the generated symbol includes firt data of the fragment.

For example, the packetizer C21040 may identify whether the generated symbol has first data of the fragment payload. If the generated symbol has first data of the fragment payload, the SI field may be set to 1. If the generated symbol does not have first data of the fragment payload, the SI field may be set to zero '0'.

Packetizer C21040 may identify whether the generated symbol has data of the fragment payload or data of the fragment header.

For example, if the generated symbol has data of the fragment payload, the FH field may be set to 1. If the generated symbol does not have data of the fragment payload, the FH field may be set to zero '0'.

Packetizer C21040 may identify whether generation of a TB corresponding to each fragment is completed. If fragment completion information indicating generation completion of a TB corresponding to each fragment may include the FC field indicating inclusion of the last data of the fragment header.

For example, if the generated symbol has data of the fragment header and is the last symbol of the corresponding TB, the FC field may be set to 1. If the generated symbol does not have data of the fragment header is not identical to the last symbol of the corresponding TB, the FC field may be set to zero '0'.

Packetizer C21040 may identify whether the generated symbol is the last symbol of the corresponding TB and has a length different from that of another symbol. For example, another symbol may be a symbol having a predetermined length, and the symbol having a different length from other symbols may be shorter in length than other symbols.

For example, if the generated symbol is the last symbol of the corresponding TB and has a different length from other symbols, the packetizer C21040 may insert the padding bytes into a packet corresponding to the last symbol of each TB. The packetizer C21040 may calculate the number of padding bytes.

In addition, the PB field may indicate the number of padding bytes. The padding byte is added to each symbol having a shorter length than other symbols in such a manner that all symbols may have the same length. Alternatively, the padding bytes may be the remaining parts other than symbols of the packet.

If the generated symbol is not identical to the last symbol of the corresponding TB or has a different length from other symbols, the PB field may be set to zero '0'.

The packet payload may include at least one symbol. The following description will hereinafter disclose an exemplary case in which one packet includes one symbol.

The packet having the last symbol of each TB may include at least one padding byte.

Transmitter C21050 may transmit one or more packet in the order of TB generation.

For example, the transmitter C21050 may first transmit the TB corresponding to the fragment payload, and then transmit the TB corresponding to the fragment header.

However, the scope or spirit of the present invention is not limited thereto. If the fragment header and the fragment payload are pre-generated for multimedia content, the transmitter C21050 according to the embodiment may first transmit the TB corresponding to the fragment header, and then transmit the TB corresponding to the fragment payload.

FIG. 35 is a flowchart illustrating a process for generating and transmitting in real time the file-based multimedia content according to an embodiment of the present invention.

FIG. 35 is a flowchart illustrating a method for transmitting broadcast signals using the above-mentioned broadcast signal transmission apparatus shown in FIG. 34.

Referring to FIG. 35, the broadcast signal transmission apparatus according to the embodiment may encode multimedia content using the Media Encoder C21010 in step CS11100. The broadcast signal transmission apparatus may encode multimedia content and then generate media data.

Thereafter, the broadcast signal transmission apparatus may perform buffering of media data corresponding to the fragment payload in step CS11200. The broadcast signal transmission apparatus may generate a chunk corresponding to the fragment payload on the basis of the buffered media data.

If generation of the chunk corresponding to the fragment payload is not completed, the broadcast signal transmission apparatus continuously perform buffering of media data, and then completes generation of the chunk corresponding to the fragment payload in step CS11300.

Thereafter, the broadcast signal transmission apparatus may divide each file constructing the multimedia content using the fragment generator C21020, such that it may generate at least one fragment indicating a data unit that is independently decoded and reproduced in step CS11400.

The broadcast signal transmission apparatus may generate the fragment payload constructing each fragment, and then generate the fragment header.

The broadcast signal transmission apparatus may determine whether all data corresponding to the fragment payload is generated as a chunk whenever the chunk is generated.

If generation of the chunk corresponding to the fragment payload is completed, the broadcast signal transmission apparatus may generate the fragment header corresponding to the fragment payload.

The broadcast signal transmission apparatus divides the fragment using the transmission block generator C21030, so that it can generate at least one TB indicating a data unit that is independently encoded and transmitted in step CS11500.

For example, when the fragment header is generated after the fragment payload constructing each fragment has been generated, the broadcast signal transmission apparatus may generate the TB corresponding to the fragment payload and then generate the TB corresponding to the fragment header.

The broadcast signal transmission apparatus may generate a TB corresponding to the fragment payload and a TB corresponding to the fragment header as different TBs.

Thereafter, the broadcast signal transmission apparatus may divide the TB into one or more equal-sized symbols using the packetizer C21040, and may packetize at least one symbol into at least one packet in steps CS11600 and CS11700.

A method for generating a packet using the broadcast signal transmission apparatus has already been disclosed in FIG. 35, and as such a detailed description thereof will herein be omitted for convenience of description.

Thereafter, the broadcast signal transmission apparatus may control the transmitter C21050 to transmit one or more packets in the order of TB generation.

FIG. 36 is a flowchart illustrating a process for allowing the broadcast signal transmission apparatus to generate packets using a packetizer according to an embodiment of the present invention.

Referring to FIG. 36, the broadcast signal transmission apparatus may identify whether the generated symbol has first data of the fragment in step CS11710.

For example, if the generated symbol has first data of the fragment payload, the SI field may be set to 1 in step CS 11712. If the generated symbol does not include first data of the fragment payload, the SI field may be set to zero '0' in step S11714.

Thereafter, the broadcast signal transmission apparatus may identify whether the generated symbol has data of the fragment payload or data of the fragment header in step CS11720.

For example, if the generated symbol has data of the fragment payload, the FH field may be set to 1 in step CS11722. If the generated symbol does not have data of the fragment payload, the FH field may be set to zero '0' in step CS11724.

The broadcast signal transmission apparatus may identify whether generation of the TB corresponding to each fragment is completed in step CS11730.

For example, if the generated symbol has data of the fragment header and is the last symbol of the corresponding TB, the FC field may be set to 1 in step CS 11732. If the generated symbol does not have data of the fragment header or is not identical to the last symbol of the corresponding TB, the FC field may be set to zero '0' in step CS11734.

Thereafter, the broadcast signal transmission apparatus may identify whether the generated symbol is the last symbol of the corresponding TB and has a different length from other symbols in step CS11740.

For example, if the generated symbol is the last symbol of the corresponding TB and has a different length from other symbols, the broadcast signal transmission apparatus may insert the padding bytes into a packet corresponding to the last symbol of each TB. The broadcast signal transmission apparatus may calculate the number of padding bytes in step CS11742. The PB field may indicate the number of padding bytes.

If the generated symbol is not identical to the last symbol of the corresponding TB or has a different length from other symbols, the PB field may be set to zero '0' in step CS11744.

The packet payload may include at least one symbol.

FIG. 37 is a flowchart illustrating a process for generating/transmitting in real time the file-based multimedia content according to an embodiment of the present invention.

Referring to FIG. 37, contents shown in FIGS. 35 and 36 from among all contents of FIG. 37 are substantially identical to each other, and as such a detailed description thereof will herein be omitted for convenience of description.

In accordance with an embodiment, the broadcast signal transmission apparatus may use the FHL field instead of the FC field. For example, the above-mentioned fragment information may include fragment completion information indicating generation completion of a TB corresponding to each fragment. The fragment completion information may include the FHL field indicating a total number of symbols corresponding to the fragment header.

The broadcast signal transmission apparatus according to the embodiment may calculate the number of symbols corresponding to the TB including data of the fragment header, and may record the calculated result in the FHL field in step CS12724.

The FHL field may indicate the length of a fragment header as a total number of symbols corresponding to the fragment header. The FHL field may be contained in the fragment information instead of the above-mentioned FC field in such a manner that the broadcast signal reception apparatus can identify reception completion of the fragment header.

The broadcast signal reception apparatus according to the embodiment checks the number of transmission times of a packet including as many fragment headers as the number of data pieces recorded in the FHL field, so that it can identify whether or not the fragment header is received.

FIG. 38 is a block diagram illustrating a file-based multimedia content receiver according to an embodiment of the present invention.

Referring to FIG. 38, the broadcast signal reception apparatus for transmitting a broadcast signal including multimedia content using the broadcast network may include a receiver (not shown), a signaling decoder C22005, a Transmission Block Regenerator C22030, and/or a Media Decoder C22060.

The signaling decoder C22005 may decode signaling information. The signaling information may indicate whether the multimedia content will be transmitted in real time.

If the signaling information indicates real-time transmission of the multimedia content, Transmission Block Regenerator C22030 combines broadcast signals, so that it can recover at least one TB indicating a data unit that is independently encoded and transmitted.

Media Decoder C22060 may decode the TB.

A detailed description thereof will hereinafter be described with reference to FIG. 39.

FIG. 39 is a block diagram illustrating a file-based multimedia content receiver according to an embodiment of the present invention.

Referring to FIG. 39, the broadcast signal reception apparatus according to the embodiment may include a receiver (not shown), a signaling decoder (not shown), a Packet Filter C22010, a Packet Depacketizer C22020, a Transmission Block Regenerator C22030, a Fragment Regenerator C22040, a Fragment Parser C22050, a Media Decoder C22060, and/or a Media Renderer C22070.

The receiver (not shown) may receive a broadcast signal. The broadcast signal may include at least one packet. Each packet may include a packet header including fragment information and a packet payload including at least one symbol.

The signaling decoder C22005 may decode signaling information. The signaling information may indicate whether the multimedia content will be transmitted in real time.

Packet Filter C22010 may identify a fragment start time starting from at least one packet received at an arbitrary time, and may start packet processing from the fragment start time.

Packet Filter C22010 may identify the fragment start time on the basis of the SI field of fragment information contained in the packet. If Packet Filter C22010 indicates that the corresponding packet includes a start part of the fragment, the previous packets of the corresponding packet are discarded and some packets starting from the corresponding packet may be transmitted to the packet depacketizer C22020.

For example, the packet filter C22010 discards the previous packets, each of which is set to 1, and some packet starting from the corresponding packet that is set to 1 may be filtered.

The packet depacketizer C22020 may depacketize at least one packet, and may extract fragment information contained in the fragment header and at least one symbol contained in the packet payload.

Transmission Block Regenerator C22030 may combine packets so that it can recover at least one TB indicating a data unit that is independently encoded and transmitted. The recovered TB may include data corresponding to the fragment header, and may include data corresponding to the fragment payload.

Fragment Regenerator C22040 combines at least one TB, completes recovery of the fragment header and the fragment payload, and combines the fragment header and the fragment payload, so that the fragment regenerator C22040 may recover the fragment indicating a data unit that is independently decoded and reproduced.

Fragment Regenerator C22040 combines the TB on the basis of fragment information, so that the fragment regenerator C22040 may recover the fragment payload and the fragment header. Fragment Regenerator C22040 may first recover the fragment payload in the order of reception packets, and may recover the fragment header.

If the FH field indicates that the packet has data of the fragment header, the fragment regenerator C22040 may combine at least one TB corresponding to the fragment header so that it recovers the fragment header according to the combined result.

If the FH field indicates that the packet does not include data of the fragment header, the Fragment Regenerator C22040 may recover the fragment payload by combining at least one TB.

For example, if the FH field is set to zero ’0’, the Fragment Regenerator C22040 may determine fragment payload so that it can recover the fragment payload. If the FH field is set to 1, the fragment regenerator C22040 determines the fragment header so that it can recover the fragment header.

Thereafter, if Fragment Regenerator C22040 completes recovery of the fragment payload and the fragment header corresponding to each fragment, the recovered fragment payload and the recovered fragment header are combined so that the fragment is recovered.

There are two methods for allowing the fragment regenerator C22040 to determine whether recovery of the fragment payload and the fragment header corresponding to each fragment has been completed.

The first method is to use the FC field contained in the fragment information.

The fragment completion information may include the FC field indicating that the packet has the last data of the fragment header. If the FC field indicates that the packet has the last data of the fragment header, the Fragment Regenerator C22040 determines that the fragment header constructing each fragment and the fragment payload have been received, and can recover the fragment header and the fragment payload.

For example, if the fragment payload constructing each fragment is first received and the fragment header is then received, the FC field may indicate that the corresponding packet includes the last data of the fragment header.

Therefore, if the FC field indicates that the corresponding packet has the last data of the fragment header, the Fragment Regenerator C22040 may recognize reception completion of the fragment header and may recover the fragment header. Thereafter, the Fragment Regenerator C22040 may combine the fragment header and the fragment payload so as to recover the fragment.

If the FC field indicates that the corresponding packet has the last data of the fragment header, the broadcast signal reception apparatus may repeat a process for recovering the transmission block (TB).

For example, if the FC field is not set to 1, the broadcast signal reception apparatus may repeat the recovery process of the TB. If the FC field is set to 1, the Fragment Regenerator C22040 may recover the fragment by combination of the fragment header and the fragment payload.

The second method can determine whether recovery of the fragment payload constructing each fragment and the fragment header has been completed on the basis of the FHL field contained in the fragment information.

The Fragment Regenerator C22040 may count the number of packets including data of the fragment header.

The fragment completion information may further include the FHL field indicating a total number of symbols corresponding to the fragment header. If the value recorded in the FHL field is identical to the number of packets having data of the fragment header, the Fragment Regenerator C22040 may recover the fragment header and the fragment payload.

A detailed description of a method for allowing the fragment regenerator C22040 to use the FHL field is shown in FIG. 41.

Fragment Parser C22050 may parse the recovered fragment. Since the fragment header is located at the front of the recovered fragment and the fragment payload is located at the rear of the recovered fragment, the Fragment Parser C22050 may first parse the fragment header and then parse the fragment payload.

Fragment Parser C22050 may parse the recovered fragment so that it can generate at least one media access unit. For example, the media access unit may include at least one media data. The media access unit may have a unit of media data having a predetermined size.

Media Decoder C22060 may decode the fragment. Media Decoder C22060 may decode at least one media access unit so as to generate media data.

Media Renderer C22070 may render the decoded media data so as to perform presentation.

FIG. 40 is a flowchart illustrating a process for receiving/consuming a file-based multimedia content according to an embodiment of the present invention.

Contents shown in FIG. 39 can be equally applied to the broadcast sigal reception method according to the embodiment.

Referring to FIG. 40, a broadcast signal reception method for receiving multimedia content including at least one file includes: receiving the multimedia content divided into at least one packet; recovering at least one TB indicating a data unit that is independently encoded and transmitted by packet combination; and completing recovery of the fragment header and the fragment payload by combination of one or more TBs, recovering a fragment indicating a data unit that is independently encoded and reproduced by combination of the fragment header and the fragment payload, and/or performing fragment decoding.

The broadcast signal reception apparatus according to the embodiment may receive a broadcast signal using the receiver (not shown) in step CS21010. The broadcast signal may include at least one packet.

Thereafter, the broadcast signal reception apparatus according to the embodiment may control the packet filter C22010 to identify a fragment start time from at least one packet received at an arbitrary time in step CS21020.

Thereafter, the broadcast signal reception apparatus according to the embodiment may depacketize at least one packet using the packet depacketizer C22020, so that it can extract at least one symbol contained in the fragment information and packet payload contained in the packet header in step CS21030.

Thereafter, the broadcast signal reception apparatus combines packets using the transmission block regenerator C22030, so that it can recover at least one TB indicating a data unit that is independently encoded and transmitted in step CS21040. The reproduced TB may include data corresponding to the fragment header, and may include data corresponding to the fragment payload.

The broadcast signal reception apparatus according to the embodiment may control the fragment regenerator C22040 to identify whether the TB reproduced on the basis of fragment information is a TB corresponding to the fragment header and a TB corresponding to the fragment payload in step CS21050.

Thereafter, the broadcast signal reception apparatus may combine the recovered TB so that it can recover the fragment payload and the fragment header.

If the FH field indicates that the packet does not include data of the fragment header, the broadcast signal reception apparatus combines at least one TB corresponding to the fragment payload so that it can recover the fragment payload in step CS21060.

If the FH field indicates that the packet has data of the fragment header, the broadcast signal reception apparatus may recover the fragment header by combination of at least one TB corresponding to the fragment header in step CS21070.

The broadcast signal reception apparatus may determine whether the fragment payload constructing each fragment and the fragment header on the basis of the FC field contained in fragment information have been completely recovered in step CS21080.

If the FC field indicates that the corresponding packet does not have the last data of the fragment header, the broadcast signal reception apparatus may repeat the TB recovery process.

If the FC field indicates that the corresponding packet has the last data of the fragment, the broadcast signal reception apparatus may determine reception completion of each fragment.

For example, if the fragment header is received after the fragment payload constructing each fragment is first received, the FC field may indicate that the corresponding packet has the last data of the fragment header.

Therefore, if the FC field indicates that the packet has the last data of the fragment header, the broadcast signal reception apparatus determines that the fragment header constructing each fragment and the fragment payload have been completely received, so that it can recover the fragment header and the fragment payload.

If the FC field indicates that the corresponding packet does not have the last data of the fragment header, the broadcast signal reception apparatus may repeat the TB recovery process.

Thereafter, the broadcast signal reception apparatus may combine at least one TB using the Fragment Regenerator C22040 to complete recovery of the fragment header and the fragment payload, and may combine the fragment header and the fragment payload to recover the fragment indicating a data unit that is independently decoded and reproduced in step CS21090.

The broadcast signal reception apparatus according to the embodiment may parse the recovered fragment using the fragment parser C22050 in step CS21090. The broadcast signal reception apparatus parses the recovered fragment so that it can generate at least one media access unit. However, the scope or spirit of the present invention is not limited thereto, and the broadcast signal reception apparatus parses the TB so that it can generate at least one media access unit.

Thereafter, the broadcast signal reception apparatus according to the embodiment may decode at least one media access unit using the media decoder C22060, so that it can generate media data in step CS21100.

The broadcast signal reception apparatus according to the embodiment may perform rendering of the decoded media data using the media renderer C22070 so as to perform presentation in step CS21110.

FIG. 41 is a flowchart illustrating a process for receiving/consuming in real time a file-based multimedia content according to an embodiment of the present invention.

Referring to FIG. 41, some parts of FIG. 41 are substantially identical to those of FIG. 40, and as such a detailed description thereof will herein be omitted.

The broadcast signal reception apparatus according to the embodiment may determine whether the fragment header and the fragment payload constructing each fragment have been completely received on the basis of the FHL field.

The broadcast signal reception apparatus according to the embodiment may allow the fragment regenerator C22040 to identify whether the TB recovered on the basis of fragment information is a TB corresponding to the fragment header or a TB corresponding to the fragment payload in step CS22050.

Thereafter, the broadcast signal reception apparatus combines the recovered TBs so that it can recover each of the fragment payload and the fragment header.

If the FH field indicates that the corresponding packet has data corresponding to the fragment payload, the broadcast signal reception apparatus may combine at least one TB so that it can recover the fragment payload in step CS22060.

If the FH field indicates that the corresponding packet has data corresponding to the fragment header, the Fragment Regenerator C22040 may recover the fragment header by combination of at least one TB in step CS22070.

Thereafter, if the broadcast signal reception apparatus completes recovery of the fragment payload constructing each fragment and the fragment header, the fragment signal reception apparatus may recover the fragment by combination of the recovered fragment payload and the fragment header.

The broadcast signal reception apparatus may determine whether the fragment payload constructing each fragment and the fragment header have been completely reproduced on the basis of the FHL field contained in fragment information.

The broadcast signal reception apparatus may count the number (N) of packets constructing each fragment in step CS22080. For example, the broadcast signal reception apparatus may count the number of packets each having data of the fragment header. One packet may include at least one symbol, and the following description will hereinafter describe an exemplary case in which one packet includes one symbol.

The FHL field may indicate the number of symbols constructing the fragment. If as many packets as the number of symbols recorded in the FHL field are not received, the broadcast signal reception apparatus may repeat the TB recovery process. For example, if reception of the fragment payload constructing each fragment and the fragment header is not completed, the broadcast signal reception apparatus may repeat the TB recovery process.

Fragment completion information may further include the FHL field indicating a total number of symbols corresponding to the fragment header.

If the value recorded in the FHL field is identical to the number of packets, the broadcast signal reception apparatus determines that the fragment payload constructing each fragment and the fragment header have been completely received, and then recovers the fragment header and the fragment payload in step CS22090.

For example, the FHL field may indicate a total number of symbols corresponding to each fragment including both the fragment header and the fragment payload. In this case, if as many packets as the number of symbols recorded in the FHL field are received, the broadcast signal reception apparatus can determine that the fragment payload constructing each fragment and the fragment header have been completely received.

For example, the FHL field may indicate a total number of symbols to be transmitted later from among the fragment header and the fragment payload.

If the fragment payload constructing each fragment is first received and the fragment header is then received, the FHL field may indicate a total number of symbols corresponding to the fragment header. In this case, the number of symbols recorded in the FHL field is identical to the number of packets corresponding to the received fragment header, the broadcast signal reception apparatus may determine that the fragment payload constructing each fragment and the fragment header have been completely received.

In addition, if the fragment header constructing each fragment is first received and the fragment payload is then received, the FHL field may indicate a total number of symbols corresponding to the fragment payload. In this case, if the number of symbols recorded in the FHL field is identical to the number of packets corresponding to the received fragment payload, the broadcast signal reception apparatus may determine that the fragment payload constructing each fragment and the fragment header have been completely received.

Thereafter, if the fragment payload constructing each fragment and the fragment header have been completely received, the broadcast signal reception apparatus combines the fragment header and the fragment payload so as to recover the fragment in step CS22100.

Thus far, an embodiment of the present invention in which multimedia content is transmitted and received through a broadcast network in a transport block unit in real time using a transport block as a data unit with a variable size has been described.

Hereinafter, another embodiment of the present invention in which multimedia content is transmitted and received through a broadcast network in an object internal structure unit with a variable size in real time using boundary information and type information of the object internal structure will be described.

However, the same terms of another embodiment of the present invention as in an embodiment of the present invention may include the above description, and thus a detailed description thereof will be omitted herein. In addition, the descriptions related to FIGs. 1 to 46 can also be applied to FIGs. 42 to 55.

<Identifying Method of Transport Object Type -1>

FIG. 42 is a diagram illustrating a structure of a packet including object type information according to another embodiment of the present invention.

According to another embodiment of the present invention, a packet may be an LCT packet and the LCT packet may include an LCT version number field (V), a congestion control flag field (C), a protocol-specific indication field (PSI), a transport session identifier flag field (S), a transport object identifier flag field (O), a half-word flag field (H), a sender current time present flag field (T), an expected residual time present flag field (R), a close session flag field (A), a close object flag field (B), an LCT header length field (HDR_LEN), a codepoint field (CP), a congestion control information field (CCI), a transport session identifier field (TSI), a transport object identifier field (TOI), a header extensions field, an FEC Payload ID field, and/or an encoding symbol(s) field.

According to another embodiment of the present invention, a packet may include packet information including metadata. The packet information may include object type information indicating a type of an object that is transmitted by the current packet during transmission of MPEG-DASH content. The object type information may indicate a type of an object that is transmitted in a current packet or packets to which the same TOI is applied.

For example, the object type information may identify an object type using two reserved bits positioned at a $12^{th}$ bit from a start point of an LCT packet.

When MPEG-DASH content is transmitted in an LCT packet, the object type may include a regular file, initialization segment, media segment, and/or self-initializing segment.

For example, when a value of the object type information is "00", the object type may indicate "regular file", when a value of the object type information is "01", the object type may indicate "initialization segment", when a value of the object type information is "10", the object type may indicate "media segment", and a value of the object type information is "11", the object type may indicate "self-initializing segment".

An object type indicated by object type information may be varied according to transmitted file content and a scheme for defining a value of object type information may be transmitted in the form of signaling information separately from a session for current transmission or out-of-band.

The regular file refers to a data unit of the object form such as a regular file constituting multimedia content.

The initialization segment refers to a data unit of the object form including initialization information for access to representation. Initialization Segment may include a file type box (ftyp) and a movie box (moov). The file type box (ftyp) may include a file type, a file version, and compatibility information. The movie box (moov) may include metadata for describing media content.

The media segment refers to a data unit of the object form associated with media divided according to quality and time, which is to be transmitted to a broadcast signal receiving apparatus in order to support a streaming service. The media segment may include a segment type box (styp), a segment index box (sidx), a movie fragment box (moof), and a media data box (mdat). The segment type box (styp) may include segment type information. The segment index box (sidx) may provide stream access points (SAP) information, data offset, initial presentation time of media data present in the corresponding media segment, etc. The movie fragment box (moof) may include metadata about media data box (mdat). The media data box (mdat) may include actual media data about a component media component (video, audio, etc.).

The self-initializing segment refers to a data unit of the object form including both information of initialization segment and information of media segment.

**<Identifying** Method **of Transport Object Type -2>**

FIG. 43 is a diagram illustrating a structure of a packet including object type information according to another embodiment of the present invention.

In addition to the aforementioned method, the object type information can identify a type of an object that is transmitted in a current packet using LCT header extension. The object type information using LCT header extension can be applied to a packet, etc. for a transport protocol such as a realtime protocol (RTP), etc.

The object type information may include a header extension type (HET) field, a type field, and/or a reserved field.

The HET field may be an 8-bit integer and may indicate a type of the corresponding header extension. For example, the HET field may be one characteristic value among values of 128 to 255 and may identify a type of the corresponding header extension. In this case, the header extension may have a fixed length of 32 bits.

The type field may indicate a type of an object that is transmitted in a current LCT packet or packets to which the same TOI is applied. Hereinafter, the type field may be represented by object type information. When MPEG-DASH content is transmitted in the LCT packet, the object type may include the regular file, initialization segment, media segment, and self-initializing segment according to a value of the object type information.

For example, when a value of the object type information is "0x00", the object type may indicate "regular file", when a value of the object type information is "0x01", the object type may indicate "initialization segment", when a value of the object type information is "0x10", the object type may indicate "media segment", and when a value of the object type information is "0x11", the object type may indicate "self-initializing segment".

The reserved field is reserved for future use.

Hereinafter, a detailed description for FIG. 43 is the same as in the above detailed description, and thus will be omitted herein.

FIG. 44 is a diagram illustrating a structure of a broadcast signal receiving apparatus using object type information according to another embodiment of the present invention.

The broadcast signal receiving apparatus may different procedures based on the object type information according to an object type. That is, upon specifying and transmitting object type information in an LCT packet, the broadcast signal receiving apparatus may identify an object received based on the object type information and perform an appropriate operation according to an object type.

A broadcast signal receiving apparatus according to another embodiment of the present invention may include a signaling decoder C32005, a parser C32050, and/or a decoder C32060. However, components of the broadcast signal receiving apparatus are not limited thereto and the aforementioned components may be further included.

The signaling decoder C32005 may decode signaling information. The signaling information indicates whether a broadcast signal including multimedia content is transmitted using a broadcast network in real time.

The parser C32050 may parse at least one object based on the object type information and generate initialization information for access to Representation and at least one access unit. To this end, the parser C32050 may include an initialization segment parser C32051, a media segment parser C32052, and/or a self-initializing segment parser C32053. The initialization segment parser C32051, the media segment parser C32052, and the self-initializing segment parser C32053 will be described in detail in the next diagrams.

The decoder C32060 may initialize the corresponding decoder C32060 based on the initialization information. In addition, the decoder C32060 may decode at least one object. In this case, the decoder C32060 may receive information about an object in the form of at least one access unit and decode at least one access unit to generate media data.

FIG. 45 is a diagram illustrating a structure of a broadcast signal receiving apparatus using object type information according to another embodiment of the present invention.

The broadcast signal receiving apparatus may include a packet filter C32010, a segment buffer C32030, the parser C32050, a decoding buffer C32059, and/or the decoder C32060.

The packet filter C32010 may identify the object type information from at least one received packet and classify the object type information so as to perform a procedure corresponding to each object type based on the object type information.

For example, when the object type information is "1", the packet filter C32010 may transmit data of an LCT packet to the initialization segment parser C32051 through a segment buffer C32031, when the object type information is "2", the packet filter C32010 may transmit data of an LCT packet to the media segment parser C32052 through a segment buffer C32032, when the object type information is "3", the packet filter C32010 may transmit data of an LCT packet to the self-initializing segment parser C32053 through a segment buffer C32033.

The segment buffer C32030 may receive data of an LCT packet from a packet filter and store the data for a predetermined period of time. The segment buffer C32030 may be present as one component or a plurality of segment buffers C32031, C32032, and C32033.

The parser C32050 may parse at least one object based on the object type information and generate initialization information for access to representation and at least one access unit. To this end, the parser C32050 may include the initialization segment parser C32051, the media segment parser C32052, and/or the self-initializing segment parser C32053.

The initialization segment parser C32051 may parse initialization segment stored in the segment buffer C32031 and generate initialization information for access to representation. In addition, the initialization segment parser C32051 may receive initialization segment from the self-initializing segment parser C32053 and generate initialization information for access to representation.

The media segment parser C32052 may parse media segment stored in the segment buffer C32032 and generate information about media stream, at least one access unit, and information about a method for access to media presentation in the corresponding segment, such as presentation time or Index. In addition, the media segment parser C32052 may receive media segment from the self-initializing segment parser c32053 and generate information of media stream, at least one access unit, and information about a method for access to media presentation in the corresponding segment, such as presentation time or index.

The self-initializing segment parser C32053 may parse self-initializing segment stored in the segment buffer c32033 and generate initialization segment and media segment.

The decoding buffer C32059 may receive at least one access unit from the parser C32050 or the media segment parser C32052 and store the access unit for a predetermined period of time.

The decoder C32060 may initialize the corresponding decoder C32060 based on the initialization information. In addition, the decoder C32060 may decode at least one object. In this case, the decoder C32060 may receive information about an object in the form of at least one access unit and may decode at least one access unit to generate media data.

As described above, upon transmitting MPEG-DASH content, a broadcast signal transmitting apparatus according to another embodiment of the present invention may transmit object type information indicating a type of an object that is transmitted in a current packet. In addition, the broadcast signal transmitting apparatus may identify a type of an object in a packet received based on the object type information and perform an appropriate process on each object.

**<Type of Object Internal Structure>**

FIG. 46 is a diagram illustrating a structure of a packet including type information according to another embodiment of the present invention.

Upon transmitting data in an object internal structure unit as an independently meaningful unit, a broadcast signal transmitting apparatus may transmit data with a variable size. Thus, upon receiving and identifying an object internal structure even prior to receiving one entire object, a broadcast signal receiving apparatus may perform reproduction in an object internal structure unit. As a result, multimedia content may be transmitted and reproduced through a broadcast network in real time. According to another embodiment of the present invention, in order to identify an object internal structure, Type information and Boundary Information may be used.

Hereinafter, type information for identification of an object internal structure will be described in detail.

During transmission of MPEG-DASH content, packet information may include type information using LCT header extension. The type information may indicate a type of an object internal structure that is transmitted in a current packet. The type information may be referred to as internal structure type information for differentiation from object type information. The type information can be applied to a packet, etc. for a transport protocol such as realtime protocol (RTP), etc.

The type information may include a header extension type field (HET), an internal unit type field, and/or a reserved field.

The HET field is the same as in the above description and thus a detailed description thereof is omitted herein.

The internal structure type field may indicate a type of an object internal structure transmitted in an LCT packet.

An object may correspond to a segment of MPEG-DASH and an object internal structure may correspond to a lower component included in the object. For example, a type of the object internal structure may include fragment, chunk or GOP, an access unit, and a NAL unit. The type of the object internal structure may not be limited thereto and may further include meaningful units.

The fragment refers to a data unit that can be independently decoded and reproduced without dependence upon preceding data. Alternatively, the fragment may refer to a data unit including one pair of movie fragment box (moof) and media data container box (mdat). For example, the fragment may correspond to subsegment of MPEG-DASH or correspond to a fragment of MMT. The fragment may include at least one chunk or at least one GOP.

The chunk is a set of adjacent samples with the same media type and is a data unit with a variable size.

GOP is a basic unit for performing coding used in video coding and is a data unit with a variable size indicating a set of frames including at least one I-frame. According to another embodiment of the present invention, media data is transmitted in an object internal structure unit as an independently meaningful data unit, and thus GOP may include Open GOP and Closed GOP.

In Open GOP, B-frame in one GOP may refer to I-frame or P-frame of an adjacent GOP. Thus, Open GOP can seriously enhance coding efficiency. In Closed GOP, B-frame or P-frame may refer to only a frame in the corresponding GOP and may not refer to frames in GOPs except for the corresponding GOP.

The access unit may refer a basic data unit of encoded video or audio and include one image frame or audio frame.

The NAL unit is an encapsulated and compressed video stream including summary information, etc. about a slice compressed in consideration of communication with a network device. For example, the NAL unit is a data unit obtained by packetizing data such as a NAL unit slice, a parameter set, SEI, etc. in a byte unit.

The reserved field may be reserved for future use.

Hereinafter, for convenience of description, the internal structure type field may be represented by type information.

**<Boundary of Object Internal Structure>**

FIG. 47 is a diagram illustrating a structure of a packet including boundary information according to another embodiment of the present invention.

Hereinafter, boundary information for identification of an object internal structure will be described in detail.

During transmission of MPEG-DASH content, packet information may include boundary information using LCT header extension. The boundary information may indicate a boundary of an object internal structure that is transmitted in a current packet. The boundary information can be applied to a packet, etc. for a transport protocol such as a realtime protocol (RTP), etc.

The boundary information may include a header extension type field (HET), a start flag field (SF), a reserved field, and/or an offset field.

The HET field is the same as in the above description and thus is not described in detail.

The start flag field (SF) may indicate that an LCT packet includes a start point of an object internal structure.

The reserved field may be reserved for future use.

The offset field may include position information indicating a start point of the object internal structure in an LCT packet. The position information may include a byte distance to the start point of the object internal structure from a payload start point of the LCT packet.

As described above, a broadcast signal transmitting apparatus may not transmit data in object units based on type information and boundary information and may transmit data in an object internal structure unit with a variable length.

A broadcast signal receiving apparatus may not receive and reproduce data in object units and may receive and reproduce data in an object internal structure unit with a variable length. Thus, the broadcast signal receiving apparatus may identify the object internal structure based on type information and boundary information and perform reproduction for each received object internal structure.

For example, the broadcast signal receiving apparatus may identify a type of a current object internal structure based on packets corresponding to start and end points of the object internal structure represented by the boundary information or type information included in at least one packet transmitted between the start and end points.

As a result, the broadcast signal receiving apparatus may rapidly identify the object internal structure and perform reproduction in real time even prior to receiving one entire object.

**<Mapping of Transport Object and Signaling Information>**

FIG. 48 is a diagram illustrating a structure of a packet including mapping information according to another embodiment of the present invention.

According to another embodiment of the present invention, an object internal structure can be identified using mapping information in addition to the aforementioned type information and boundary information.

During transmission of DASH content, the packet information may include the mapping information using LCT header extension. The mapping information maps at least one of a session transmitted in a current packet, an object and an object internal structure to at least one of a transport session identifier (TSI) and a transport object identifier (TOI). The mapping information may be used in a packet, etc. for a transport protocol such as a realtime protocol (RTP), etc.

According to an embodiment of the present invention, mapping information may include a header extension type field (HET), a header extension length field (HEL), and a uniform resource locator field (URL).

The HET field is the same as in the above description and is not described in detail.

The HEL field indicates an overall length of LCT header extension with a variable length. Basically, when HET has a value between 0 and 127, header extension with a variable length of a 32-bit word unit in LCT, and the HEL field subsequent to the HET field indicates an overall length of LCT header extension in a 32-bit word unit.

The URL field may be a variable field and may include a session for current transmission, an object, and a unique address on the Internet of an object internal structure.
Hereinafter, for convenience of description, the URL field may be represented via mapping information.
The mapping information may indicate URL of signaling information. In addition, the mapping information may include an identifier allocated by the signaling information as well as a session, an object, or a unique address of an object internal structure. The identifier may include a period ID, an adaptation set ID, a representation ID, and a component ID. Accordingly, in the case of MPEG-DASH content, the mapping information may include a segment URL, a representation ID, a component ID, an adaptation set ID, a period ID, etc.
For more perfect mapping, signaling information according to another embodiment of the present invention may further include mapping information for mapping URL of an object or identifier to TOI or TSI. That is, the signaling information may further include a portion of the URL of the object or identifier, to which currently transmitted TOI and TSI are mapped. In this ca se, the mapping information may be information for mapping the URL of the object or identifier to TOI or TSI according to one of 1:1, 1:multi, and multi:1.

**<Grouping Method of Transport Session and Transport Object>**

FIG. 49 is a diagram illustrating a structure of an LCT packet including grouping information according to another embodiment of the present invention.
According to another embodiment of the present invention, in addition to the aforementioned method, an object internal structure can be identified using the grouping information.
An LCT packet according to another embodiment of the present invention may include a session group identifier field (SGI) and a divided transport session identifier field (DTSI). SGI and DTSI are the form obtained by splitting a legacy transport session identifier field (TSI).
An LCT packet according to another embodiment of the present invention may include an object group identifier field (OGI) and a divided transport object identifier field (DTOI). OGI and DTOI are the form obtained by splitting a legacy transport object identifier field (TOI).
The S field indicates a length of a legacy TSI field, the O field indicates a length of a legacy TOI, and the H field indicates whether half-word (16 bits) is added to a length of a legacy TOI field and legacy TSI field.
Accordingly, the sum of lengths of the SGI field and DTSI field may be the same as a legacy TSI field and may be determined based on values of the S field and H field. In addition, the sum of lengths of the OGI field and DTOI field may be the same as a legacy TOI field and may be determined based on values of the O field and H field.
According to another embodiment of the present invention, the legacy TSI and TOI may be subdivided into SGI, DTSI, OGI, and DTOI, and SGI, DTSI, OGI, and DTOI may identify different data units.
SGI, DTSI, OGI, and DTO will be described in detail with reference to the next diagram.
FIG. 50 is a diagram illustrating grouping of a session and an object according to another embodiment of the present invention.
Media presentation description (MPD) is an element for providing MPEG-DASH content as a streaming service.
Media presentation description (MPD) is an element for providing MPEG-DASH content as a streaming service. For example, the aforementioned presentation may be the concept of one service and may correspond to a package of MMT and MPD of MPEG-DASH. MPD C40000 may include at least one period. For example, the MPD C40000 may include a first period C41000 and a second period C42000.
The Period is an element obtained by dividing MPEG-DASH content according to reproduction time. An available bit rate, a language, a caption, a subtitle, etc. may not be changed in the period. Each period may include start time information and periods may be arranged in ascending order of a start time in MPD. For example, the first period C41000 is an element in a period of 0 to 30 min, and the second period C42000 is an element in a period of 30 to 60 min. A period may include at least one adaptationset (not shown) as a lower element.
The adaptationset is a set of at least one media content component of an interchangeable encoded version. The adaptationset may include at least one Representation as a lower element. For example, The adaptationset may include first representation C41100, second representation C41200, and third representation C41300.
Representation may be an element of a transmissible encoded version of at least one media content component and may include at least one media stream. A media content component may include a video component, an audio component, and a caption component. Representation may include information about quality of the media content component. Thus, a broadcast signal receiving apparatus may change representation in one adaptationset in order to adapt to a network environment.
For example, first representation C41100 may be a video component with a frequency bandwidth of 500 kbit/s, second representation C41200 may be a video component with a frequency bandwidth of 250 kbit/s, and third representation C41300 may be a video component with a frequency bandwidth of 750 kbit/s. Representation may include at least one segment as a lower element. For example, the first representation C41100 may include a first segment C41110, a second segment C41120, and a third segment C41130.

Segment is an element with a greatest data unit, which can be retrieved according to one HTTP request. URL may be provided to each segment. For example, the aforementioned object may be the concept corresponding to a file, initialization segment, media segment, or self-initializing segment, may correspond to a segment of MPEG-DASH, and may correspond to MPU of MMT. Each Segment may include at least one fragment as a lower element. For example, the second segment C41120 may include a first fragment C41122, a second fragment C41124, and a third fragment C41126.

Fragment refers to a data unit that can be independently decoded and reproduced without depending upon preceding data. For example, Fragment may correspond to subsegment of MPEG-DASH and fragment of MMT. Fragment may include at least one chunk or at least one GOP. For example, the first fragment C41122 may include a fragment header and a fragment payload. The fragment header may include a segment index box (sidx) and a movie fragment box (moof). The fragment payload may include a media data container box (mdat). The media data container box (mdat) may include first to fifth Chunks.

The chunk is a set of adjacent samples having the same media type and is a data unit with a variable size.

According to the aforementioned embodiment of the present invention, TSI may identify a transport session, and each representation may be mapped to each TSI. In addition, TOI may identify a transport object in a transport session and each segment may be mapped to each TOI.

However, according to another embodiment of the present invention, TSI may be divided into GSI and DTSI, TOI is divided into OGI and DTOI, and GSI, DTSI, GOI, and DTOI may be mapped to respective new data units, which is not limited to the following embodiment of the present invention.

For example, SGI may identify a group of the same transport session and each period may be mapped to each SGI. A value of SGI of a first period C41000 may be mapped to "1" and a value of SGI of a second period C42000 may be mapped to "2". The value of SGI may not be limited to the aforementioned embodiment and may have the same value as period ID for identification of period.

DTSI may identify a transport session and each representation may be mapped to each DTSI. A value of DTSI of the first representation C41100 may be mapped to "1", a value of DTSI of the second representation C41200 may be mapped to "2", and a value of the DTSI of the third representation C41300 may be mapped to "3". The value of DTSI may not be limited to the aforementioned embodiment and may have the same value as a representation ID for identification of representation.

OGI may identify a group of the same object in a transport session and each Segment may be mapped to each OGI. A value of OGI of the first segment C41110 may be mapped to "1", a value of OGI of the second segment C41120 may be mapped to "2", and a value of OGI of the third segment C41130 may be mapped to "3".

DTOI may identify a delivery object. One delivery object may be one ISO BMFF file or a part of one ISO BMFF file. The part of one ISO BMFF file may include a GOP, a chunk, an access unit and/or an NAL unit.

For example, a fragment header, and each chunk or each GOP of a fragment payload may be mapped to each DTOI. A value of DTOI of a header of the first fragment C41122 may be mapped to "0" and values of DTOI of first to fifth chunks in a payload of the first fragment C41122 may be mapped to "10" to "14".

In the case of DTOI, usage may be defined according to a given value. For example, a DTOI value may be set in an ascending order or a descending order according to an arrangement order of objects. In this case, a broadcast signal receiving apparatus may re-arrange objects based on a DTOI value and generate a fragment or a segment. In addition, a specific DTOI value may indicate a fragment header. In this case, the broadcast signal transmitting apparatus or the broadcast signal receiving apparatus may determine whether a fragment header is completely transmitted based on the corresponding DTOI value.

If a delivery object means one segment, a group of delivery objects may correspond to a content component such as DASH representation. In this case, DTIO may be mapped to a segment and OGI may be mapped to representation. For example, OGI may be mapped to a representation ID, a content component ID, etc. in one-to-one correspondence and may be used as information for multiplexing/demultiplexing content components transmitted within one session.

FIG. 51 is a diagram illustrating a structure of a broadcast signal transmitting apparatus using packet information according to another embodiment of the present invention.

The broadcast signal transmitting apparatus may include a signaling encoder C31005, an internal structure generator C31030, a packet information generator C31035, and/or a transmitter C31050.

The signaling encoder C31005 may generate signaling information indicating whether a broadcast signal including multimedia content is transmitted in real time using a broadcast network. The signaling information may indicate that multimedia content is transmitted in real time in at least one of a file level or an FDT level. When the signaling information indicates that multimedia content is transmitted in real time in a file level, all data belonging to the corresponding file can be transmitted in real time. In addition, when the signaling information indicates that multimedia content is transmitted in real time in an FDT level, all files or data belonging to the corresponding FDT can be transmitted in real time.

The internal structure generator C31030 may generate at least one object internal structure as an independently encoded or decoded data unit. The object internal structure is obtained by dividing a file included in multimedia content into at least one data unit.

When the signaling information indicates that multimedia content is transmitted in real time, the packet information generator C31035 may generate packet information including metadata for identification of an object internal structure. Here, the packet information may include metadata about a packet for transmission of multimedia content and include metadata for identification of the object internal structure. The packet information may include boundary information indicating a boundary of the object internal structure and type information indicating a type of the object internal structure.

The boundary information may include a start flag (SF) field indicating whether a corresponding packet includes a start point of an object internal structure and an offset field indicating a position of a start point of the object internal structure in the corresponding packet.

The type of the object internal structure may include one of a fragment indicating a data unit including a pair of movie fragment box (moof) and media data container box (mdat), Chunk indicating a set of adjacent samples having the same media type, GOP indicating a set of frames including at least one I-frame, an access unit indicating a basic data unit of encoded video or audio, and a NAL unit indicating a data unit packetized in a byte unit.

In addition, the packet information may include mapping information for mapping at least one of a session, an object, and an object internal structure to at least one of a transport session identifier (TSI) and a transport object identifier (TOI).

The packet information may include grouping information for grouping a transport session and a transport object transmitted in a packet. The grouping information may include a divided transport session identifier (DTSI) field for identification of a transport session, a session group identifier (SGI) field for identification of a group having the same transport session, a divided transport object identifier (DTOI) field for identification of a transport object, and an object group identifier (OGI) field for identification of a group having the same transport object. Here, the SGI field may include information for identification of a period element of MPEG-DASH, the DTSI field may include information for identification of a representation element of MPEG-DASH, the OGI field may include information for identification of a segment element of MPEG-DASH, and the DTOI field may include information for identification of a chunk element of MPEG-DASH.

As described above, the packet information may identity at least one of a session, an object, and an object internal structure based on type information and boundary information, mapping information, and grouping information.

The broadcast signal transmitting apparatus may further include a packetizer (not shown). The packetizer may divide the object internal structure into at least one symbol with the same size and packetize the at least one symbol as at least one packet. However, the present invention is not limited thereto, and the symbol may be generated by another apparatus. The lengths of symbols according to another embodiment of the present invention may be the same. Then the packetizer may packetize at least one symbol as at least one packet. For example, the packet may include a packet header and a packet payload.

The packet header may include packet information for identification of an object internal structure.

The transmitter C31050 may transmit a broadcast signal including an object internal structure and packet information.

FIG. 52 is a diagram illustrating a structure of a broadcast signal receiving apparatus according to another embodiment of the present invention.

Hereinafter, common parts of the broadcast signal transmitting apparatus are not described, and the broadcast signal receiving apparatus will be described in terms of differences from the broadcast signal transmitting apparatus.

The broadcast signal receiving apparatus may identify an object internal structure based on packet information and performing decoding in a unit of received object internal structure. Thus, the broadcast signal receiving apparatus may not receive one entire object and may produce an object internal structure despite receiving the object internal structure.

A broadcast signal receiving apparatus according to another embodiment of the present invention may include a signaling decoder C32005, an extractor C32050, and/or a decoder C32060. However, the broadcast signal receiving apparatus may further include the aforementioned components.

The signaling decoder C32005 may decode signaling information. The signaling information indicates whether a broadcast signal including multimedia content is transmitted in real time using a broadcast network.

The extractor C32050 may identify an object internal structure from a broadcast signal and extract the object internal structure. The extractor C32050 may extract an object internal structure and transmit the object internal structure to the decoder C32060 based on packet information even prior to receiving one entire object. However, an operation of the extractor C32050 may be changed according to a type of the object internal structure. The aforementioned parser C32050 may perform the same operation as the extractor C32050 and the extractor C32050 may be represented by the parser C32050.

The extractor C32050 may identify a type of a current object internal structure according to type information and boundary information. For example, the extractor C32050 may identify a type of a current object internal structure based on a packet corresponding to start and end points of the object internal structure represented in the boundary information and type information included in at least one packet transmitted between the start and end points.

The extractor C32050 may extract at least one of an access unit, GOP or chunk, and fragment, which are object internal structures stored in an object buffer or a segment buffer. To this end, the extractor C32050 may further include an AU extractor C32056 for extracting the access unit, a chunk extractor C32057 for extracting chunk or GOP, and a fragment extractor C32058 for extracting fragment. Lower components of the extractor C32050 will be described in detail with reference to the next diagram.

The decoder C32060 may receive the object internal structure and decode the corresponding object internal structure based on type information. In this case, the decoder C32060 may receive information about the object internal structure in the form of at least one access unit and decode at least one access unit to generate Media Data.

FIG. 53 is a diagram illustrating a structure of a broadcast signal receiving apparatus using packet information according to another embodiment of the present invention.

Hereinafter, an operation and configuration of a broadcast signal receiving apparatus when a type of an object internal structure is an access unit will be described.

The broadcast signal receiving apparatus may further include a packet depacketizer C22020, a segment buffer C32030, an AU extractor C32056, a decoding buffer C32059, and/or a decoder C32060.

The packet depacketizer C22020 may depacketize at least one packet and extract packet information contained in a packet header. For example, the packet depacketizer C22020 may extract type information and boundary information included in the packet header and extract at least one symbol included in a packet payload. At least one symbol may be a symbol included in the object internal structure or a symbol included in an object.

The packet depacketizer C22020 may transmit the at least one extracted object or the at least one extracted object internal structure to the decoder C32060.

The segment buffer C32030 may receive packet of an LCT packet from the packet depacketizer C22020 and store the data for a predetermined period of time. The segment buffer C32030 may be repeated by an object buffer C32030. The segment buffer C32030 may further include the AU extractor C32056, a chunk extractor (not shown), and/or a fragment extractor (not shown). In addition, the segment buffer C320300 may further include a fragment buffer (not shown) and/or a chunk buffer (not shown).

When type information indicates that the type of the object internal structure is an access unit, the segment buffer C32030 may include the AU extractor C32056. However, the present invention is not limited thereto, and the AU extractor C32056 may be present independently from the segment buffer C32030.

The AU extractor C32056 may extract the access unit stored in the segment buffer C32030 based on boundary information. For example, one access unit may be from a start point of the access unit indicated by the boundary information to a start point of the next access unit.

Then the AU extractor C32056 may transmit the extracted access unit to the decoder C32060 through the decoding buffer C32059.

As described above, even if the broadcast signal receiving apparatus does not receive one entire object, upon completely receiving an internal structure of the corresponding object based on the type information and boundary information, the AU extractor C32056 may immediately extract the object internal structure and may transmit the object internal structure to the decoder C32060.

The decoding buffer C32059 may receive data from the segment buffer C32030 and store the data for a predetermined period of time. The access unit may be transmitted to the decoder C32060 or another component for a processing time given to the access unit in the decoding buffer C32059. In this case, timing information about the processing time such as a presentation time stamp (PTS), etc. may be given to the access unit in the form of LCT header extension.

The decoder C32060 may receive the object internal structure and decode the corresponding object internal structure based on the type information. In this case, the decoder C32060 may receive the corresponding object internal structure in the form of an access unit as well as in the form of object internal structure.

When type information indicates that the type of the object internal structure is an access unit, the decoder C32060 may decode the corresponding access unit as an internal structure of the corresponding object even prior to receiving an entire corresponding object.

FIG. 54 is a diagram illustrating a structure of a broadcast signal receiving apparatus using packet information according to another embodiment of the present invention.

The same components as the aforementioned components among the components illustrated in the diagram are the same as in the above description, and thus a detailed description thereof will be omitted herein.

Hereinafter, an operation and configuration of a broadcast signal receiving apparatus when a type of an object internal structure is chunk or GOP will be described. The broadcast signal receiving apparatus may further include a packet depacketizer C22020, a segment buffer C32030, a chunk buffer C32035, a decoding buffer C32059, and/or a decoder C32060.

The packet depacketizer C22020 may transmit at least one extracted object or at least one object internal structure to the decoder C32060 through the segment buffer C32030.

The segment buffer C32030 may include the chunk extractor C32057. In addition, the segment buffer C32030 may further include the chunk buffer C32035.

When type information indicates that the type of the object internal structure is chunk or GOP, the chunk extractor C32057 may extract chunk or GOP stored in the segment buffer C32030 based on boundary information. For example, one chunk or GOP may be from a start point of the chunk or GOP indicated by the boundary information to a start point of the next chunk or GOP. The chunk extractor C32057 may be present in the segment buffer C32030 or independently.

The chunk buffer C32035 may receive at least one chunk or GOP and store the chunk or GOP for a predetermined period of time. The chunk buffer C32035 may be present in the segment buffer C32030 or independently. The chunk buffer C32035 may further include the AU extractor C32056.

The AU extractor C32056 may extract at least one access unit from the chunk or GOP stored in the chunk buffer C32035. Then the AU extractor C32056 may transmit the at least one extracted access unit to the decoder C32060 through the decoding buffer C32059.

When type information indicates that the type of the object internal structure is chunk or GOP, the decoder C32060 may decode the corresponding chunk or GOP as an internal structure of the corresponding object even prior to receiving an entire corresponding object.

FIG. 55 is a diagram illustrating a structure of a broadcast signal receiving apparatus using packet information according to another embodiment of the present invention.

The same components as the aforementioned components among the components illustrated in the diagram are the same as in the above description, and thus a detailed description thereof will be omitted herein.

Hereinafter, an operation and configuration of a broadcast signal receiving apparatus when a type of an object internal structure is fragment will be described. The broadcast signal receiving apparatus may further include a packet depacketizer C22020, a segment buffer C32030, a fragment buffer C32036, an audio decoding buffer C32059-1, a video decoding buffer C32059-2, an audio decoder C32060-1, and/or a video decoder C32060-2.

The packet depacketizer C22020 may transmit at least one extracted object or at least one extracted object internal structure to the audio decoder C32060-1 and/or the video decoder C32060-2.

A segment buffer C320300 may include the fragment extractor C32058. In addition, the segment buffer C32030 may further include a fragment buffer C32036.

When the type information indicates that the type of the object internal structure is fragment, the fragment extractor C32058 may extract fragment stored in the segment buffer C320300. For example, one fragment may be from a start point of the fragment to a start point of the next fragment. The fragment extractor C32058 may be present in the segment buffer C32030 or independently.

The fragment buffer C32036 may receive fragment or store the fragment for a predetermined period of time. The fragment buffer C32036 may be present in the segment buffer C32030 or independently. The fragment buffer C32036 may further include the AU extractor C32056. In the fragment buffer C32036 may further include a chunk buffer (not shown).

The AU extractor C32056 may extract at least one access unit from fragment stored in the fragment buffer C32036. The AU extractor C32056 may be present in the fragment buffer C32036 or independently. In addition, the broadcast signal receiving apparatus may further include a chunk buffer (not shown), and the AU extractor C32056 may extract at least one access unit from chunk or GOP included in the chunk buffer. Then the AU extractor C32056 may transmit at least one extracted access unit to the audio decoder C32060-1 and/or the video decoder C32060-2.

The decoding buffer may include an audio decoding buffer C32059-1 and/or a video decoding buffer C32059-2. The audio decoding buffer C32059-1 may receive data associated with audio and store the data for a predetermined period of time. The video decoding buffer C32059-2 may receive data associated with video and store the data for a predetermined period of time.

When the type information indicates that the type of the object internal structure is fragment, the decoder may decode the corresponding fragment as an internal structure of the corresponding object even prior to receiving an entire corresponding object. The decoder may further include the audio decoder C32060-1 for decoding data associated with audio and/or the video decoder C 32060-2 for decoding data associated with video.

As described above, the broadcast signal transmitting apparatus may not transmit data in an object unit and may transmit data in an object internal structure unit with a variable length. In this case, the broadcast signal transmitting apparatus may transmit the transmitted type information and boundary information of the object internal structure.

The broadcast signal receiving apparatus may not reproduce data in an object unit and may reproduce data in an object internal structure unit with a variable length. Accordingly, the broadcast signal receiving apparatus may identify an object internal structure based on the type information and boundary information and perform reproduction for each received object internal structure.

<Priority identification of transport packet payload data>

FIG. 56 is a diagram showing the structure of a packet including priority information according to another embodiment of the present invention.

The packet according to another embodiment of the present invention may be a ROUTE packet and the ROUTE packet may represent an ALC/LCT packet. Hereinafter, for convenience, the ROUTE packet and/or the ALC/LCT packet may be referred to as an LCT packet. The LCT packet format used by ROUTE follows the ALC packet format, i.e. the UDP header followed by the LCT header and the FEC Payload ID followed by the packet payload.

The LCT packet may include a packet header and a packet payload. The packet header may include metadata for the packet payload. The packet payload may include data of MPEG-DASH content.

For example, the packet header may include an LCT version number field (V), a Congestion control flag field (C), a Protocol-Specific Indication field (PSI), a Transport Session Identifier flag field (S), a Transport Object Identifier flag field (O), a Half-word flag field (H), a Close Session flag field (A), a Close Object flag field (B), an LCT header length field (HDR_LEN), a Codepoint field (CP), a Congestion Control Information field (CCI), a Transport Session Identifier field (TSI), a Transport Object Identifier field(TOI), a Header Extensions field, and/or an FEC Payload ID field.

In addition, the packet payload may include an Encoding Symbol(s) field.

For a detailed description of fields having the same names as the above-described fields among the fields configuring the LCT packet according to another embodiment of the present invention, refer to the above description.

The packet header may further include priority information (Priority) indicating priority of the packet payload. The priority information may use two bits located at twelfth and thirteenth bits from a start point of each packet to indicate the priority of the packet payload. In this case, since two bits are used, it is possible to decrease the size of the packet header and to increase efficiency.

The priority information (Priority) may indicate the priority of the packet payload transmitted using a current LCT packet among the LCT packets included in one file. That is, the priority information may indicate relative priority of the packet payload transmitted using a current LCT packet among packets having the same TSI or TOI.

For example, the priority information may have a value of 0 to 3. As the value of the priority information decreases, the priority of the packet payload increases in processing of total file-based media data. As the value of the priority information increases, the priority of the packet payload decreases.

TSI may identify an LCT transport session and TOI may identify a delivery object.

Each ROUTE session consists of one or multiple LCT transport sessions. LCT transport sessions are a subset of a ROUTE session. For media delivery, an LCT transport session would typically carry a media component, for example an MPEG-DASH Representation. From the perspective of broadcast MPEG-DASH, the ROUTE session can be considered as the multiplex of LCT transport sessions that carry constituent media components of one or more DASH Media Presentations. Within each LCT transport session, one or multiple Delivery Objects are carried, typically Delivery Objects that are related, e.g. MPEG-DASH Segments associated to one Representation. Along with each Delivery Object, metadata properties are delivered such that the Delivery Objects can be used in applications.

One delivery object may be one ISO BMFF file or a part of one ISO BMFF file. The part of one ISO BMFF file may include a fragment, a GOP, a chunk, an access unit and/or an NAL unit.

As one embodiment, one TSI may match one track (MPEG-DASH representation) and one TOI may match one ISO MBFF file. In addition, one ISO BMFF file may include "ftyp", "moov", "moof" and/or "mdat".

"ftyp" is a container including information about file type and compatibility. "moov" is a container including all metadata for reproducing media data. If media content is divided into at least one media datum within one file or if media content is divided into at least one file, "moof" is a container including metadata for each divided media data. "mdat" includes media data such as audio data and video data. "mdat" may include at least one "I-frame", "P-frame" and/or "B-frame".

An "I-frame" refers to a frame generated using a spatial compression technique only independent of the frames, instead of a temporal compression technique using previous and next frames of a corresponding frame in MPEG. Since the "I-frame" is directly coded and generated from an image, the "I-frame" is composed of inter blocks only and may serve as a random access point. In addition, the "I-frame" may be a criterion of a "P-frame" and/or "B-frame" generated by predicting temporal motion. Accordingly, since the "I-frame reduces an extra spatial element of a frame thereof to perform compression, the "I-frame" provides a low compression rate. That is, according to the result of compression, the number of bits may be greater than the number of bits of other frames.

The "P-frame" means a screen generated by predicting motion with respect to a later scene in MPEG. The "P-frame" is a screen obtained by referring to a latest "I-frame" and/or "B-frame" and predicting a next screen via inter-screen forward prediction only. Accordingly, the "P-frame" provides a relatively high compression rate.

The "B-frame" refers to a predicted screen generated by predicting bidirectional motion in detail from previous and/or next "P-frames" and/or "I-frames" in a temporally predicted screen. The "B-frame" is coded and/or decoded based on a previous "I-frame" and/or "P-frame", a current frame and/or a next "I-frame" and/or "P-frame". Accordingly, coding and/or decoding time delay occurs. However, the "B-frame" provides the highest compression rate and does not form the basis of coding and/or decoding of the "P-frame" and/or "I-frame" so as not to propagate errors.

As described above, the priorities of "ftyp", "moov", "moof" and/or "mdat" in one ISO BMFF file may be different. Accordingly, packets including "ftyp", "moov", "moof" and/or "mdat" have the same TSI and/or TOI but may have different priorities.

For example, the priority information of the packet including "ftyp" and "moov" has a value of "0", the priority information of the packet including "moof" has a value of "1", the priority information of the packet including the "I-frame" has a value of "1", the priority information of the packet including the "P-frame" has a value of "2" and/or the priority information of the packet including the "B-frame" has a value of "3".

The broadcast signal transmission apparatus may assign priorities for packet data processing in order of a packet including "ftyp" and "moov", a packet including "moof", a packet including an "I-Picture", a packet including a "P-Picture" and/or a packet including a "B-Picture", if MPEG-DASH segments including video data, such as advanced video coding (AVC)/high efficiency video coding (HEVC), are transmitted.

In addition, intermediate nodes such as a relay and/or a router over a network may preferentially transmit a packet having high priority and selectively transmit a packet having low priority, according to network bandwidth and service purpose. Accordingly, the priority information is easily applicable to various service states.

In addition, the broadcast signal transmission apparatus may preferentially extract a packet having high priority (that is, a packet having a low priority information value) and selectively extract a packet having low priority (that is, a packet having high priority information value), based on the priority information of "ftyp", "moov", "moof", "I-Picture", "P-Picture" and/or "B-Picture", when video data such as AVC/HEVC is received, thereby configuring one sequence. As a modified embodiment, the broadcast signal reception apparatus may selectively extract a sequence having a high frame rate and a sequence having a low frame rate.

FIG. 57 is a diagram showing the structure of a packet including priority information according to another embodiment of the present invention.

The packet according to another embodiment of the present invention may be an LCT packet and the LCT packet may include a packet header and a packet payload. The packet header may include metadata for the packet payload. The packet payload may include data of MPEG-DASH content.

For example, the packet header may include an LCT version number field (V), a Congestion control flag field (C), a Protocol-Specific Indication field (PSI), a Transport Session Identifier flag field (S), a Transport Object Identifier flag field(O), a Half-word flag field (H), a Close Session flag field (A), a Close Object flag field(B), an LCT header length field (HDR LEN), a Codepoint field (CP), a Congestion Control Information field (CCI), a Transport Session Identifier field (TSI), a Transport Object Identifier field (TOI), a Header Extensions field, and/or an FEC Payload ID field.

In addition, the packet payload may include an Encoding Symbol(s) field.

For a detailed description of fields having the same names as the above-described fields among the fields configuring the LCT packet according to another embodiment of the present invention, refer to the above description.

The packet header may further include priority information (EXT_TYPE) indicating the priority of the packet payload. The priority information (EXT_TYPE) may use an LCT header extension to indicate relative priority of the packet payload transmitted using a current packet. If the LCT header extension is used, a broadcast signal reception apparatus which does not support the LCT header extension may skip the priority information (EXT_TYPE), thereby increasing extensibility. The priority information (EXT_TYPE) using the LCT header extension is applicable to a packet for a transmission protocol such as real-time protocol (RTP).

The priority information (EXT_TYPE) may include a header extension type (HET) field, a priority field and/or a reserved field. According to embodiments, the priority information (EXT_TYPE) may include the priority field only.

The HET field may be an integer having 8 bits and may indicate the type of the header extension. For example, the HET field may identify the type of the header extension using one unique value among values of 128 to 255. In this case, the header extension may have a fixed length of 32 bits.

The priority field may indicate the priority of the packet payload transmitted using a current LCT packet among the LCT packets included in one file. In addition, the priority field may indicate the relative priority of the packet payload transmitted using the current LCT packet among the packets having the same TSI or TOI.

For example, the priority information may have a value of 0 to 255. As the value of the priority information decreases, the priority of the packet payload increases in processing of file-based media data.

For example, the priority information of the packet including "ftyp" and "moov" has a value of "0", the priority information of the packet including "moof" has a value of "1", the priority information of the packet including the "I-frame" has a value of "2", the priority information of the packet including the "P-frame" has a value of "3" and/or the priority information of the packet including the "B-fame" has a value of "4".

The reserved field may be a field reserved for future use.

Hereinafter, the same description as the above description will be omitted.

FIG. 58 is a diagram showing the structure of a packet including offset information according to another embodiment of the present invention.

The packet according to another embodiment of the present invention may be an LCT packet and the LCT packet may include a packet header and a packet payload. The packet header may include metadata for the packet payload. The packet payload may include data of MPEG-DASH content.

For example, the packet header may include an LCT version number field (V), a Congestion control flag field (C), a Protocol-Specific Indication field (PSI), a Transport Session Identifier flag field (S), a Transport Object Identifier flag field (O), a Half-word flag field (H), a Reserved field (Res), a Close Session flag field (A), a Close Object flag field (B), an LCT header length field (HDR LEN), a Codepoint field (CP), a Congestion Control Information field (CCI), a Transport Session Identifier field (TSI), a Transport Object Identifier field(TOI), a Header Extensions field, and/or an FEC Payload ID field.

In addition, the packet payload may include an Encoding Symbol(s) field.

For a detailed description of fields having the same names as the above-described fields among the fields configuring the LCT packet according to another embodiment of the present invention, refer to the above description.

The packet header may further include offset information. The offset information may indicate an offset within a file of the packet payload transmitted using a current packet. The offset information may indicate the offset in bytes from a start point of the file. The offset information may be in the form of LCT header extension and may be included in an FEC payload ID field.

As one embodiment, the case in which the LCT packet includes the offset information (EXT_OFS) in the form of LCT header extension will be described.

If the LCT header extension is used, the receiver which does not support LCT extension skips the offset information (EXT_OFS), thereby increasing extensibility. The offset information (EXT_OFS) using LCT header extension is applicable to a packet for a transport protocol such as real-time protocol (RTP).

The offset information (EXT_OFS) may include a header extension type (HET) field, a header extension length (HEL) field and a start offset (Start Offset) field only.

The HET field is equal to the above description and a detailed description thereof will be omitted.

The HEL field indicates the total length of LCT header extension having a variable length. Fundamentally, in LCT, if the HET has a value of 0 to 127, variable-length header extension of a 32-bit word unit exists and the HEL field following the HET field indicates the total length of LCT header extension in 32-bit word units.

The start offset field may have a variable length and indicate an offset within a file of the packet payload transmitted using the current packet. The start offset field may indicate the offset in bytes from the start point of the file.

The LCT packet may include the offset information (Start Offset) not only in the format of LCT header extension but also in an FEC payload ID field. Hereinafter, the case in which the LCT packet includes the offset information in the FEC payload ID field will be described.

The FEC Payload ID field contains information that indicates to the FEC decoder the relationships between the encoding symbols carried by a particular packet and the FEC encoding transformation. For example, if the packet carries source symbols, then the FEC Payload ID field indicates which source symbols of the object are carried by the packet. If the packet carries repair symbols, then the FEC Payload ID field indicates how those repair symbols were constructed from the object.

The FEC Payload ID field may also contain information about larger groups of encoding symbols of which those contained in the packet are part. For example, the FEC Payload ID field may contain information about the source block the symbols are related to.

The FEC Payload ID contains Source Block Number (SBN) and/or Encoding Symbol ID (ESI). SBN is a non-negative integer identifier for the source block that the encoding symbols within the packet relate to. ESI is a non-negative integer identifier for the encoding symbols within the packet.

The FEC payload ID field according to another embodiment of the present invention may further include offset information (Start Offset).

An FEC Payload ID field is used that specifies the start address in octets of the delivery object. This information may be sent in several ways.

First, a simple new FEC scheme with FEC Payload ID set to size 0. In this case the packet shall contain the entire object as a direct address (start offset) using 32 bits.

Second, existing FEC schemes that are widely deployed using the Compact No-Code as defined in RFC 5445 in a compatible manner to RFC 6330 where the SBN and ESI defines the start offset together with the symbol size T.

Third, the LSID provides the appropriate signaling to signal any of the above modes using the @sourceFec-PayloadID attribute and the FECParameters element.

Hereinafter, the offset information will be described in detail.

In a conventional FLUTE protocol, the offset information did not need to be transmitted. In the conventional FLUTE protocol, since an object (e.g., a file) is transmitted in non real time, one object was divided into at least one data having a fixed size and was transmitted.

For example, in the conventional FLUTE protocol, one object was divided into at least one source block having a fixed size, each source block was divided into at least one symbol having a fixed size, and a header was added to each symbol, thereby generating an LCT packet (or a FLUTE packet). In the conventional FLUTE protocol, one LCT packet may comprise only one fixed size symbol.

Since each source block and/or symbol has a fixed size, the receiver may recognize the position of each source block and/or symbol within the object based on identification information of the source block and/or symbol. Accordingly, the receiver may receive all source blocks and/or symbols configuring one object and then reconfigure the object based on the identification information of the received source blocks and/or symbols.

While the object is transmitted in non real time in the conventional FLUTE protocol, the object is divided into delivery objects each having a variable size and is transmitted in real time in delivery object units in a ROUTE protocol according to another embodiment of the present invention. For example, the ROUTE protocol may transmit the object on the basis of an object internal structure unit having a variable size.

One delivery object may be one ISO BMFF file or a part of one ISO BMFF file. The part of one ISO BMFF file may include a fragment, a GOP, a chunk, an access unit and/or an NAL unit. The part of one ISO BMFF field may mean the above-described object internal structure. The object internal object is an independently meaningful data unit and the type of the object internal structure is not limited thereto and may further include meaningful units.

In the LCT packet according to another embodiment of the present invention, each LCT packet(or ALC/LCT packet, ROUTE packet) may comprise at least one encoding symbol. In the ROUTE protocol according to another embodiment of the present invention, one LCT packet may comprise plural encoding symbols. And, each encoding symbol may be variable size.

In the LCT packet according to another embodiment of the present invention, each TSI may match each track. For example, each TSI may match one of a video track, an udio track and/or representation of MPEG-DASH. In addition, each TOI may be mapped to each delivery object. For example, if TOI is mapped to a segment of MPEG-DASH, the delivery object may be an ISO BMFF file. In addition, each TOI may be mapped to one of a fragment, a chunk, a GOP, an access unit and/or an NAL unit.

When the receiver receives LCT packets in real time on the basis of a delivery object unit having a variable size, the receiver may not recognize where the received LCT packets are located within the object. For example, when the receiver receives LCT packets in an arbitrary order, the receiver may not align the LCT packets in sequence and may not accurately restore and/or parse the delivery object.

Accordingly, the offset information according to another embodiment of the present invention may indicate the offset of the currently transmitted packet payload within the file (e.g., the object). The receiver may recognize that the currently transmitted packets have first data of the file based on the offset information. In addition, the receiver may recognize the order of the currently transmitted packets within the delivery object based on the offset information. In addition, the receiver may recognize the offset within the file of the packet payload currently transmitted by the packets and the offset within the file of the delivery object currently transmitted by the packets, based on the offset information.

For example, TSI may match video track (MPEG-DASH representation and TOI may match an ISO BMFF file (e.g., an object). In this case, the delivery object may represent an ISO BMFF file. One video track (MPEG-DASH representation, TSI=1) may include a first object (TSI=1, TOI=1) and a second object (TSI=1, TOI=2). The first object (TSI=1, TOI=1) may sequentially include a first packet (TSI=1, TOI=1, Start Offset=0), a second packet (TSI=1, TOI=1, Start Offset=200), a third packet (TSI=1, TOI=1, Start Offset=400), a fourth packet (TSI=1, TOI=1, Start Offset=800) and a fifth packet (TSI=1, TOI=1, Start Offset=1000).

In this case, if the value of the offset information (Start Offset) is "0", the packet payload of the packet may have first data of the file. Since the value of the offset information (Start Offset) of the first packet is "0", the receiver may recognize that the packet payload of the first packet has first data of the first object.

In addition, the value of the offset information (Start Offset) may indicate the order of packets within the object. Since the offset information sequentially increases from the first packet to the fifth packet within the first object, the receiver may recognize that the first packet to the fifth packet are sequentially arranged within the first object.

Accordingly, the receiver may sequentially align the received LCT packets within each object and accurately restore each delivery object and/or object based on the offset information. In addition, the receiver may accurately parse and/or decode each delivery object and/or object based on the offset information.

When the receiver receives the LCT packets in real time on the basis of a delivery object unit having a variable size, the receiver may not recognize where the received LCT packets are located within the object (e.g., the file). For example, if the LCT packets are transmitted in arbitrary sequence, the receiver may not accurately confirm the offset within the object of the received LCT packets and thus may not accurately restore the delivery object and/or object via collection of the LCT packets.

For example, TSI may match video track (MPEG-DASH representation) and TOI may match a chunk. In this case, one video track (MPEG-DASH representation, TSI=1) may include a first object (TSI=1) and a second object (TSI=1). In addition, the first object may include a first chunk (TSI=1, TOI=1), a second chunk (TSI=1, TOI=2) and/or a third chunk (TSI=1, TOI=3) and the second object may include a fourth chunk (TSI=1, TOI=4) and/or a fifth chunk (TSI=1, TOI=5).

The receiver may receive a first packet (TSI=1, TOI=1, Start Offset=0) including a first chunk, a second packet (TSI=1, TOI=2, Start Offset=200) including a second chunk, a third packet (TSI=1, TOI=3, Start Offset=1000) including a third chunk, a fourth packet (TSI=1, TOI=4, Start Offset=0) including a fourth chunk and a fifth packet (TSI=1, TOI=5, Start Offset=1000) including a fifth chunk. Although one packet includes one chunk in this description, one chunk may include at least one packet.

If TOI does not match an object (e.g., a file) but matches an object internal structure which is a data unit smaller than an object, the receiver may identify the object unless there is information for identifying the object.

Accordingly, the receiver may not accurately determine whether the received first packet, second packet and/or third packet belong to the first object or the second object using TSI and TOI only. In addition, the receiver may not determine whether the received fourth packet and/or fifth packet belong to the first object or the second object using TSI and TOI only.

That is, the receiver may identify that the first packet to the fifth packet are sequentially arranged based on TSI and TOI but may not identify whether the third packet belongs to the first object or the second object using TSI and TOI only. In addition, the receiver may identify that the fifth packet is a next packet of the third packet based on TSI and TOI but may not identify whether the fourth packet belongs to the first object or the second object using TSI and TOI only.

In this case, the receiver may not accurately restore the first object even when receiving the first packet, the second packet and/or the third packet. In addition, the receiver may not accurately restore the second object even when receiving the fourth packet and/or the fifth packet. As a result, the receiver may not reproduce content in real time.

Accordingly, the LCT packets according to another embodiment of the present invention provide offset information (Start Offset). The offset information may indicate the offset of the currently transmitted packet payload within the object. The receiver may identify the object internal structure and/or packets included in the same object based on the offset information.

If the value of the offset information is "0", the packet is a first packet of the object. That is, since the offset information of the first packet and the fourth packet is "0", the first packet and the fourth packet respectively belong to different objects and respectively indicate first packets of the respective objects. The receiver may identify that the first packet, the second packet and/or the third packet belong to the first object and the fourth packet and the fifth packet belong to the second object, based on the offset information as well as TSI and/or TOI.

Accordingly, the receiver identify where the received LCT packets are located within each object based on at least one of TSI, TOI and/or offset information and align the received LCT packets in sequence. For example, the receiver may align the packets such that the offset information and TOI sequentially increase.

Then, the receiver may identify a packet having offset information of "0" to a previous packet of a next packet having offset information of "0" using one object. The receiver may identify the delivery object and/or the object internal structure within one object based on TOI.

In addition, the receiver may accurately restore each delivery object and/or object.

In addition, the receiver may accurately parse and/or decode each delivery object and/or object based on at least one of TSI, TOI and/or offset information.

As described above, when the transmitter transmits data in object internal structure units as an independently meaningful unit, it is possible to transmit data with a variable size in real time. Accordingly, when the receiver receives and identifies the object internal structure even before completely receiving one object, the receiver may reproduce the object in object internal structure units. As a result, file (or object) based multimedia content may be transmitted and reproduced via a broadcast network in real time.

FIG. 59 is a diagram showing the structure of a packet including random access point (RAP) information according to another embodiment of the present invention.

The packet according to another embodiment of the present invention may be an LCT packet and the LCT packet may include a packet header and a packet payload. The packet header may include metadata for the packet payload. The packet payload may include data of MPEG-DASH content.

For example, the packet header may include an LCT version number field (V), a Congestion control flag field (C), a Protocol-Specific Indication field (PSI), a Transport Session Identifier flag field (S), a Transport Object Identifier flag field (O), a Half-word flag field(H), a Reserved field (Res), a Close Session flag field (A), a Close Object flag field (B), an LCT header length field (HDR LEN), a Codepoint field(CP), a Congestion Control Information field (CCI), a Transport Session Identifier field (TSI), a Transport Object Identifier field (TOI), a Header Extensions field, and an FEC Payload ID field.

In addition, the packet payload may include an encoding symbol(s) field.

For a detailed description of fields having the same names as the above-described fields among the fields configuring the LCT packet according to another embodiment of the present invention, refer to the above description.

The packet header may further include random access point (RAP) information (P). The RAP information (P) may indicate whether data corresponding to the random access point (RAP) is included in the packet payload currently transmitted by the packet. The RAP information (P) may use one bit located at a twelfth or thirteenth bit from a start point of each packet to indicate whether the data corresponding to the random access point (RAP) is included in the packet payload currently transmitted by the packet. In this case, since one bit is used, it is possible to decrease the size of the packet header and to increase efficiency.

The random access point (RAP) may be encoded without referring to other frames and means a basic frame able to be randomly accessed. For example, an "I-frame" means a frame which is generated using a spatial compression technique only independently of other frames without a temporal compression technique using a previous frame and a subsequent frame of a corresponding frame in MPEG. Accordingly, since the "I-frame" is directly coded and generated from an image, the "I-frame" is composed of inter blocks only and may serve as a random access point.

The receiver may identify packets able to be randomly accessed from a packet sequence, which is being transmitted, based on the RAP information (P). For example, if the payload of the received packet includes data about the "I-frame", the RAP information (P) may indicate that the packet includes data corresponding to the random access point (RAP). In addition, if the payload of the received packet includes data about "B-frame" and/or "P-frame", the RAP information (P) may indicate that the packet does not include data corresponding to the random access point (RAP).

When the receiver sequentially receives GOP data starting from a specific time, if a first packet corresponds to an RAP such as "I-frame", the receiver may start decoding at that packet. However, if the first packet corresponds to a non-RAP such as "B-frame" and/or "P-frame", the receiver may not start decoding at that packet. In this case, the receiver may skip a packet corresponding to a non-RAP and start decoding at a next packet corresponding to an RAP such as "I-frame".

Accordingly, in channel tuning in a broadcast environment or in approaching an arbitrary point within a sequence according to a user request, since the receiver skips the packet which does not correspond to the RAP based on the RAP information (P) and starts decoding at the packet corresponding to the RAP, it is possible to increase packet reception and decoding efficiency.

FIG. 60 is a diagram showing the structure of a packet including random access point (RAP) information according to another embodiment of the present invention.

The packet according to another embodiment of the present invention may be an LCT packet and the LCT packet may include a packet header and a packet payload. The packet header may include metadata for the packet payload. The packet payload may include data of MPEG-DASH content.

For example, the packet header may include an LCT version number field (V), a Congestion control flag field (C), a Protocol-Specific Indication field (PSI), a Transport Session Identifier flag field (S), a Transport Object Identifier flag field (O), a Half-word flag field (H), a Reserved field (Res), a Close Session flag field (A), a Close Object flag field (B), an LCT header length field (HDR LEN), a Codepoint field (CP), a Congestion Control Information field (CCI), a Transport Session Identifier field (TSI), a Transport Object Identifier field(TOI), a Header Extensions field, and an FEC Payload ID field.

In addition, the packet payload may include an encoding symbol(s) field.

The packet header may further include random access point (RAP) information (P).

For a detailed description of fields having the same names as the above-described fields among the fields configuring the LCT packet according to another embodiment of the present invention, refer to the above description.

The RAP information (P) may use one bit located at a sixth or seventh bit from a start point of each packet to indicate whether data corresponding to the random access point (RAP) is included in the packet payload currently transmitted by the packet. In this case, since one bit is used, it is possible to decrease the size of the packet header and to increase efficiency.

Since the packet according to another embodiment of the present invention includes the RAP information (P) using the bit located at the sixth or seventh bit of the packet header, the bit located at the twelfth or thirteenth bit of the packet header may be used for other purposes.

For example, the packet may include the RAP information (P) using the bit located at the sixth or seventh bit of the packet header and include the above-described object type information and/or priority information using the bit located at the twelfth and/or thirteenth bit of the packet header.

FIG. 61 is a diagram showing the structure of a packet including real time information according to another embodiment of the present invention.

The packet according to another embodiment of the present invention may be an LCT packet and the LCT packet may include a packet header and a packet payload. The packet header may include metadata for the packet payload. The packet payload may include data of MPEG-DASH content.

For example, the packet header may include an LCT version number field (V), a Congestion control flag field (C), a Protocol-Specific Indication field (PSI), a Transport Session Identifier flag field (S), a Transport Object Identifier flag field (O), a Half-word flag field (H), a Reserved field (Res), a Close Session flag field (A), a Close Object flag field (B), an LCT header length field (HDR LEN), a Codepoint field (CP), a Congestion Control Information field (CCI), a Transport Session Identifier field (TSI), a Transport Object Identifier field (TOI), a Header Extensions field, and/or an FEC Payload ID field.

In addition, the packet payload may include an encoding symbol(s) field.

For a detailed description of fields having the same names as the above-described fields among the fields configuring the LCT packet according to another embodiment of the present invention, refer to the above description.

The transmitter may indicate whether the object and/or object internal structure transmitted by the LCT packet is transmitted in real time or in non real time via real time information (T) defined at a file delivery table (FDT) level and/or a delivery object level. The delivery object level may include an object level and/or an object internal structure level.

If the real time information (T) is defined at the FDT level, the real time information (T) may indicate whether all data described in the FDT is transmitted in real time or non real time. For example, an LSID may include real time information (T). In addition, if the real time information (T) is defined at the FDT level, the real time information (T) may indicate whether all objects described in the FDT are transmitted in real time or in non real time. Here, all objects described in the FDT may indicate all objects belonging to a corresponding LCT transport session.

In addition, if the real time information (T) is defined at the delivery object level, the real time information (T) may indicate whether all data belonging to the delivery object is transmitted in real time or in non real time. For example, if the delivery object matches an object and the real time information (T) is defined at the delivery object level, the real time information T may indicate whether all data belonging to the object is transmitted in real time or in non real time. In addition, if the delivery object matches an object internal structure and the real time information (T) is defined at the delivery object level, the real time information (T) may indicate whether all data belonging to the object internal structure is transmitted in real time or in non real time.

As one embodiment, if the real time information (T) is defined at the delivery object level, the packet header may further include real time information (T). The real time information (T) may indicate whether the delivery object transmitted by the LCT packet is transmitted in real time or in non real time.

For example, the delivery object may be a data unit matching TOI. In addition, the value of the real time information (T) of "0" may indicate that the delivery object transmitted by the LCT packet is transmitted in non real time and the value of the real time information (T) of "1" may indicate that the delivery object transmitted by the LCT packet is transmitted in real time.

The real time information (T) may use a first bit of a TOI field to indicate that the delivery object transmitted by the LCT packet is transmitted in real time or in non real time.

As described above, if the TOI field is divided into an OGI field and a DTOI field, the real time information (T) may use a first bit of the OGI field to indicate whether the delivery object transmitted by the LCT packet is transmitted in real time or in non real time.

Since the real time information (T) is included in the first bit of the TOI field and/or the OGI field, the transmitter may transmit real-time data and non-real-time data within one LCT transport session (e.g., video track, audio track and representation of MPEG-DASH). For example, the transmitter may transmit audio data and/or video data within one LCT transport session in real time and transmit an image and/or an application in non real time. In addition, the transmitter may transmit some delivery objects within one LCT transport session in real time and transmit the remaining delivery objects in non real time.

In addition, since the real time information (T) is included in a first bit of an existing TOI field, the LCT packet according to another embodiment of the present invention can guarantee backward compatibility with an existing ALC/LCT and/or FLUTE protocol.

FIG. 62 is a diagram showing the structure of a broadcast signal transmission apparatus according to another embodiment of the present invention.

The broadcast signal transmission apparatus according to another embodiment of the present invention may include a delivery object generator C51300, a signaling encoder C51100 and/or a transmitter C31500.

The delivery object generator may divide a file into at least one delivery object corresponding to a part of the file.

The signaling encoder may encode signaling information including metadata for the delivery object.

The signaling information may include real time information indicating whether at least one delivery object is transmitted in real time via a unidirectional channel using at least one layered coding transport (LCT) packet.

The transmitter may transmit at least one delivery object and signaling information.

The broadcast signal transmission apparatus according to another embodiment of the present invention may include all the functions of the above-described broadcast signal transmission apparatus. In addition, for a detailed description of the signaling information, refer to the above description or the following description of a subsequent figure.

FIG. 63 is a diagram showing the structure of a broadcast signal reception apparatus according to another embodiment of the present invention.

The broadcast signal reception apparatus may receive a broadcast signal. The broadcast signal may include signaling data, ESG data, NRT content data and/or RT content data.

The broadcast signal reception apparatus may join in a ROUTE session based on a ROUTE session description. The ROUTE session description may include an IP address of the broadcast signal transmission apparatus and an address and port number of a ROUTE session, the session is an ROUTE session, and all packets may include information indicating an LCT packet. In addition, the ROUTE session description may further include information necessary to join in and consume the session using an IP/UDP.

Then, the broadcast signal reception apparatus may receive an LCT session instance description (LSID) including information about at least one LCT transport session included in the ROUTE session.

Then, the broadcast signal reception apparatus may receive multimedia content included in at least one LCT transport session. The multimedia content may be composed of at least one file. The broadcast signal reception apparatus may receive file based multimedia content in real time via a unidirectional channel using a layered coding transport (LCT) packet.

The broadcast signal reception apparatus according to another embodiment of the present invention may include a signaling decoder C52100, a delivery object processor C52300 and/or a decoder C52500.

The signaling decoder C52100 may decode signaling information including metadata for at least one delivery object corresponding to a part of a file.

The signaling information may include real time information indicating whether at least one delivery object is transmitted in real time via a unidirectional channel using a layered coding transport (LCT) packet. The signaling information may be included not only in an LSID but also in an extended header of the LCT packet.

The real time information is defined in a file delivery table (FDT) and may indicate whether all delivery objects described in the FDT are transmitted in real time. In addition, the real time information is defined by a first bit of a transport object identifier (TOI) field for identifying the delivery object and may indicate whether all data belonging to the delivery object is transmitted in real time.

The delivery object processor C52300 may collect at least one LCT packet and restore at least one delivery object. The delivery object processor C52300 may include functions of the above-described transmission block regenerator C22030, fragment regenerator C22040 and fragment parser C22050 and/or extractor C32050.

The decoder C52500 may decode at least one delivery object. The decoder C52500 may receive information about the delivery object in the form of at least one access unit, decode the at least one access unit and generate media data. The decoder C52500 may decode the delivery object, upon receiving the delivery object corresponding to the part of the file, although one file is not completely received.

The signaling information may further include offset information indicating the offset of data transmitted by the LCT packet within the file. The delivery object processor C52300 may identify the delivery object based on the offset information. The offset information may be indicated in bytes from the start point of the file. The offset information may be in the form of an LCT header extension and may be included in an FEC payload ID field.

When the broadcast signal reception apparatus receives the LCT packet in real time on the basis of a delivery object unit having a variable size, the receiver may not recognize where the received LCT packets are located in the object. For example, when the receiver receives LCT packets in an arbitrary order, the receiver may not align the LCT packets in sequence and may not accurately restore and/or parse the delivery object.

Accordingly, the offset information according to another embodiment of the present invention may indicate the offset of the currently transmitted packet payload within the file (e.g., the object). The broadcast signal reception apparatus may recognize that the currently transmitted packets have first data of the file based on the offset information. In addition, the broadcast signal reception apparatus may recognize the order of the currently transmitted LCT packets within the file and/or the delivery object based on the offset information.

The broadcast signal reception apparatus may recognize the offset within the file of the packet payload currently transmitted by the LCT packets and the offset within the file of the delivery object currently transmitted by the LCT packets, based on the offset information.

If TOI does not match an object (e.g., a file) but matches an object internal structure which is a data unit smaller than an object, the broadcast signal reception apparatus may identify the object unless there is no information for identifying the object.

Accordingly, the broadcast signal reception apparatus may identify the object internal structure and/or the LCT packets included in the same object based on the offset information.

The signaling information may further include RAP information indicating whether the LCT packet includes data corresponding to a random access point (RAP). The random access point may be encoded without referring to other frames and means a basic frame able to be randomly accessed.

The delivery object processor C52300 may collect at least one packet from packets for transmitting data corresponding to the random access point based on the RAP information.

For example, when the broadcast signal reception apparatus sequentially receives GOP data starting from a specific time, if a first packet corresponds to an RAP such as "I-frame", the broadcast signal transmission apparatus may start decoding at that LCT packet. However, if the first packet corresponds to a non-RAP such as "B-frame" and/or "P-frame", the broadcast signal reception apparatus may not start decoding at that packet. In this case, the receiver may skip an LCT packet corresponding to a non-RAP and start decoding at an LCT packet corresponding to an RAP such as "I-frame".

The signaling information may further include priority information indicating the priority of the data transmitted by the LCT packets.

The delivery object process C52300 may selectively collect the LCT packets based on the priority information.

The broadcast signal reception apparatus may preferentially extract LCT packets having high priority and selectively extract LCT packets having low priority, based on the priority information of 'ftyp', 'moov', 'moof', 'I-Picture', 'P-Picture', and/or 'B-Picture', when receiving video data such as AVC/HEVC, thereby configuring one sequence.

FIG. 64 is a diagram illustrating a structure of a broadcast signal transmitting apparatus according to another embodiment of the present invention.

The broadcast signal transmitting apparatus according to another embodiment of the present invention may include a delivery object generator C61300, a signaling encoder C61100, and/ and a transmitter C61500.

The delivery object generator C61300 may be included in at least one content component of a service and may generate at least one individually recovered delivery object.

For example, the delivery object generator may divide at least one content component included in a service to generate at least one delivery object.

The service may be media content including at least one contiguous media content periods. In addition, the service may be one of one broadcast program, information added to the broadcast program, and/or independent information. The service may include at least one content component.

The content component may be one continuous component of the media content with an assigned media component type that can be encoded individually into a media stream. In addition, the media component type may include at least one of video, audio, and/or text.

The delivery object may be one of a file, a part of the file, a group of the file, a hyper text transfer protocol (HTTP) entity, and a group of the HTTP entity. A part of the file may be a file of a byte range. The HTTP entity may include an HTTP entity header and/or an HTTP entity body.

The signaling encoder C61100 may generate signaling information for providing discovery and acquisition of the service and the at least one content component.

The signaling information may include first information on a transport session for transmission of the at least one content component of the service and at least one delivery object transmitted through the transport session.

In addition, the signaling information may include second information including description of DASH media presentation corresponding to the service.

The transmitter C61500 may transmit the at least one delivery object and the signaling information through a unidirectional channel.

The broadcast signal transmitting apparatus according to another embodiment of the present invention may include all of the aforementioned functions of the broadcast signal transmitting apparatus. In addition, a detailed description of the signaling information may include the entire above description.

The signaling information may include the description of the header of the LCT packet and the header extension of the LCT packet.

For example, the signaling information (or first information) may include offset information indicating a position of a first byte of a payload of a transmission protocol packet for transmission of the delivery object, real-time information indicating whether the at least one delivery object transmits a streamlining service, mapping information for mapping the transport session to a transport session identifier (TSI) and mapping the delivery object to a transport object identifier (TOI), and timestamp information indicating time information on the delivery object.

The offset information may indicate offset (a temporal position or a spatial position) of a currently transmitted packet payload in an object (or a delivery object).

The timestamp information may include timing information associated with data contained in the payload of the transport protocol packet. In addition, the timestamp information may include timing information associated with the delivery object. For example, the timestamp information may include information on a time point when a first type of data included in the payload is decoded and/or presentation time information of data.

Hereinafter, signaling information will be described in more detail.

Services may be transmitted using three functional layers. For example, layers may include a physical layer, a delivery layer, and/or a service management layer.

The physical layer may provide a mechanism for transmitting at least one of signaling, service announcement, and/or an IP packet to a broadcast physical layer and/or a broadband physical layer.

The delivery layer may provide functionality of transmitting an object and/or object flow. This may be embodied through the aforementioned real-time object delivery over unidirectional transport (ROUTE) protocol and/or an HTTP protocol. The ROUTE protocol may be operated through UDP/IP multicast on a broadcast physical layer. The HTTP protocol may be operated through UDP/IP unicast on a broadband physical layer.

The service management layer may provide a mechanism for transmitting any type of service (e.g., a linear TV service or an HTML5 application service) through a delivery layer and/or a physical layer.

The signaling information (e.g., service signaling) may provide service discovery and description information. The signaling information may include bootstrapping signaling information (fast information table (FIT)) and/or service layer signaling (SLS) information. The signaling information may include information required to discover and acquire at least user service.

The FIT may allow a receiver to build a basic service list and to bootstrap discovery of service layer signaling for each service. In some embodiments, the FIT may be represented by a service list table (SLT). The FIT (or SLT) may be transmitted via link layer signaling. In addition, the FIT (or SLT) may be transmitted in each physical layer for rapid acquisition. In some embodiments, the FIT (or SLT) may be transmitted through at least one of a physical layer frame, a PLP for transmitting signaling, and/or a PLP allocated to each broadcaster. Hereinafter, a description will be given in terms of FIT.

The SLS may allow the receiver to discovery and access at least one service and/or at least one content component. When the SLS is transmitted through broadcast, the SLS may be transmitted in at least one LCT transport session included in an ROUTE session by ROUTE/UDP/IP. In this case, the SLS may be transmitted at a suitable carousel rate for supporting rapid channel join and switching. When the SLS is transmitted through broadband, the SLS may be transmitted by HTTP(S)/TCP/IP.

A transport session according to another embodiment of the present invention may include at least one of a real-time object delivery over unidirectional transport (ROUTE) session, a layered coding transport (LCT) transport session (or LCT session), and/or an MPEG media transport protocol (MMTP) session.

A transport protocol packet according to another embodiment of the present invention may include at least one of an ROUTE packet (or an ALC/LCT extension packet, an ALC/LCT+ packet, an ALC/LCT packet, and an LCT packet), and/or an MMTP packet.

Representation of MPEG-DASH may be a concept corresponding to an LCT transport session (or an LCT session) in an ROUTE protocol and may be mapped to an TSI. In addition, Representation of MPEG-DASH may be a concept corresponding to an MMTP packet flow in an MMT protocol and may be mapped to an Asset identifier (or an Asset ID, asset_id).

Segment of MPEG-DASH may be a concept corresponding to a file (or a delivery object) in a ROUTE protocol. In addition, Segment of MPEG-DASH may be a concept corresponding to an MPU in an MMT protocol and may be mapped to information (or an MPU identifier) contained in an mmpu box.

A relationship between an MMTP session and/or a ROUTE/LCT session for transmission of at least one content component of a service will be described below.

A) For broadcast delivery of a linear service without app-based enhancement, a content component of a service may be transmitted through 1) at least one ROUTE/LCT session and/or 2) at least one MMTP session.

B) For broadcast delivery of a linear service along with app-based enhancement, 1) a content component of a service may be transmitted through only at least one ROUTE/LCT session. Alternatively, 2) a content component of a service may be transmitted through at least one ROUTE/LCT session and/or at least one MMPT session.

C) For broadcast delivery of an App-based service, a content component of a service may be transmitted through at least one ROUTE/LCT session.

Each ROUTE session may include at least one LCT session. Each LCT session may include some or all of content components included in a service.

With regard to transmission of streaming services, the LCT session may transmit a separate component of a user service such as audio, video, and/or closed caption stream. Streaming media may be formatted with at least one DASH Segment by MPEG-DASH.

Each MMTP session may include at least one MMTP packet flow. Each MMTP packet flow may transmit an MPEG media transport (MMT) signaling message. In addition, each MMTP packet flow may include some or all of content components included in a service.

The MMTP packet flow may transmit an MMT signaling message and/or at least one content component formatted by at least one MPU according to MMT.

For transmission of an NRT user service and/or system metadata, the LCT session may transmit at least one file-based content item. The at least one file-based content item may include a time-based or non-time-based media component of an NRT service. In addition, the at least one file-based content item may include service signaling and/or an electronic service guide (ESG) fragment.

A broadcast stream may be abstraction of an RF channel. The RF channel may be defined in terms of a carrier frequency in a specific bandwidth. The RF channel may be defined by a pair of a geographic area and a frequency. The geographic area and frequency information may be defined and/or maintained by administrative authority along with a broadcast stream ID (BSID). A physical layer pipe (PLP) may correspond to a portion of an RF channel.

Each PLP may include at least one modulation and a coding parameter. The PLP may be identified by a PLP identifier that has a unique value in a broadcast stream to which the corresponding PLP belongs.

Each service may be identified by two types of service identifiers. One may be used in the FIT and may have a compressed form that has a unique value only in a broadcast area. The other one may be a globally unique form used in an SLS and/or an ESG.

The ROUTE session may be identified by a source IP address, a destination IP address, and/or a destination port number. The LCT session may be identified by a transport session identifier (TSI) within a range of a parent ROUTE session.

A service-based transport session instance description (S-TSID) may include information on common features of at least one LCT session and/or any unique features of at least one separate LCT session. The S-TSID may be a ROUTE signaling structure and a may be a portion of service level signaling.

Each LCT session may be transmitted through one PLP. Different LCT sessions in one ROUTE session may be included in different PLPs or the same PLP.

At least one features described in the S-TSID may include TSI and PLPID of each LCT session, at least one descriptor of at least one delivery object or file, and/or at least one application layer FEC parameter.

The MMT session may be identified by a source IP address, a destination IP address, and/or a destination port number. The MMTP packet flow may be identified by a unique packet_id within a range of a parent MMTP session.

The S-TSID may include information on common features of each MMTP packet flow and/or any unique features of at least on separate MMTP packet flow.

At least one feature of each MMTP session may be transmitted by an MMT signaling message transmitted in an MMTP session.

Each MMTP packet flow may be transmitted through one PLP. Different MMTP packet flows in one MMTP session may be included in different PLPs or the same PLP.

At least one feature described in the MMT signaling message may include PLPID of packet_id and/or each MMTP packet flow.

Hereinafter, link layer signaling (LLS) and service layer signaling (SLS) will be described.

The LLS may indicate signaling information that is directly transmitted as a payload of at least one link Layer packet or content of designated channels. For example, the LLS may include FIT.

Upon first receiving a broadcast signal, a receiver may first analyze the FIT. The FIT may provide rapid channel scan, channel name, and/or channel number, for building a list of all services to be received by the receiver. In addition, the FIT may provide bootstrap information for discovering an SLS for each service. The bootstrap information may include a destination IP address, a destination port, and/or TSI for an LCT session for transmission of the SLS.

The SLS of each service may describe at least one feature such as a list of at least one component included in the service, a place for acquisition of at least one component, and/or capabilities of the receiver required for meaningful presentation of the service.

In a ROUTE/DASH system, the SLS may include a user service bundle description (USBD), service-based transport session instance description (S-TSID), and/or DASH media presentation description (MPD).

Hereinafter, an example of an LLS for bootstrapping acquisition of an SLS and an example of an SLS for acquisition of at least one serviced component transmitted through at least one ROUTE/LCT transport session will be described.

First, a receiver may acquire an FIT (or SLT). For example, the FIT (or SLT) may be transmitted through a physical layer frame within a designated frequency band identified by a designated broadcast stream ID (BSID). In some embodiments, the FIT (or SLT) may be transmitted at least one of a PLP for transmission of a physical layer frame and/or a PLP allocated for each broadcaster.

Each of the services may include at least one SLS bootstrapping information. For example, each of the services may be identified by a Service_id. In addition, the SLS bootstrapping information may include a PLPID, a source IP address, a destination IP address, a destination port number, and/or a TSI.

Then, the receiver may acquire at least one SLS fragment. The SLS fragment may be transmitted through a IP/LTDP/LCT session and a PLP. For example, the SLS fragment may include a USBD/USD fragment, an S-TSID fragment, and/or an MPD fragment. The USBD/USD fragment, the S-TSID fragment, and/or the MPD fragment may be information related to one service.

The USBD/USD fragment may describe at least one service level. In addition, the USBD/USD fragment may include URI reference information on at least one S-TSID fragment and/or URI reference information on at least one MPD fragment.

The S-TSID fragment may include component acquisition information related to one service. In addition, the S-TSID fragment may provide mapping between DASH Representation discovered in the MPD and the TSI corresponding to a component of a service. In addition, the S-TSID fragment may include component acquisition information in the form of TSI and related DASH Representation identifier, and/or a PLPID for transmission at least one DASH segment related to the DASH Representation.

The receiver may collect at least one audio/video component from a service based on the PLPID and/or the TSI. In addition, the receiver may begin buffering of at least one DASH media segment.

Then, the receiver may perform a suitable decoding process.

Hereinafter, link layer signaling (LLS) will be described in detail.

The LLS may be operated at an IP level or less. At a receiver side, the LLS may be pre-acquired compared with IP level signaling (e.g., service layer signaling). Accordingly, the link layer signaling may be acquired prior to session establishment. In some embodiments, the LLS may be transmitted above IP/UDP as well as at an IP level or less.

One of objectives of the LLS may be to effective transmission of required information for rapid channel scan and/or service acquisition. The LLS may include binding information between the SLS and at least one PLP. In addition, the LLS may include signaling information related to emergency alert.

The LLS may include an FIT. The FIT may include information on each service in a broadcast stream and, thus provide rapid channel scan and/or service acquisition.

For example, the FIT may include information on presentation of a service list for supporting service selection through a channel number and/or up/down zapping.

In addition, the FIT may include information on a position of service layer signaling of a service transmitted through broadcast and/or broadband.

Hereinafter, service layer signaling (SLS) will be described in detail.

The SLS may include information on discovery and/or access of at least one service and/or at least one content component. The SLS may include a set of an XML-encoded metadata fragment transmitted through a designated LCT session. The LCT session may be acquired based on bootstrap information included in the FIT. The SLS may be defined per service level. In addition, the SLS may include service feature and/or access information. For example, the SLS may include information on a list of at least one content component, a method of acquiring at least one content component, and/or receiver capabilities required for meaningful presentation of a service.

In an ROUTE/DASH system, for transmission of a linear service, the SLS may include user service bundle description (USBD), service-level transport session instance description (S-TSID), and/or DASH media presentation description (MPD). The at least one SLS fragment may be transmitted through a designated LCT transport session with a TSI value.

The SLS may be applied to a linear-based service and/or an application-based service.

Hereinafter, the USBD will be described in detail.

The USBD may include information referring to at least one different SLS required to access service identification information, device capabilities information, a service, and/or at least one component, and/or metadata required to determine a reception mode of at least one service component by a receiver. For example, a reception mode may include broadcast and/or broadband.

The USBD may be a top level or entry point SLS fragment. The USBD may include USBD defined in a 3GPP MBMS.

The USBD may include at least one userServiceDescription element. The userServiceDescription element may be a single instance of a service.

The userServiceDescription elemen may include a serviceId attribute, serviceId attribute, fullMPDUri attribute, sTSIDUri attribute, name element, serviceLanguage attribute, capabilityCode attribute, and/or deliveryMethod attribute.

The serviceId attribute may be a globally unique identifier of a service.

The serviceId attribute may be reference information corresponding to a service entry in LLS(FIT). A value of the serviceId attribute may be the same as serviceId allocated to an entry.

The fullMPDUri attribute may refer to reference information on an MPD fragment including at least one description of at least one content component included in a service transmitted through broadcast and/or broadband.

The sTSIDUri attribute may refer to reference information on S-TSID for providing at least one access related parameter of a transport session for transmission of at least one content.

The name element indicates a service name. The name element may include lang attribute. The lang attribute may refer to language of a service name.

The serviceLanguage attribute may indicate at least one available language of a service.

The capabilityCode attribute may include at least capability information required to generate meaningful presentation of content of a service.

The deliveryMethod attribute may be a container including transport related information related to at least one content of a service through access of a broadcast and/or broadband mode. The deliveryMethod attribute may include broadcastAppService attribute and/or unicastAppService attribute.

The broadcastAppService attribute may refer to DASH Representation that is transmitted in a multiplexed or non-multiplexed form through broadcast. The DASH Representation may include at least one corresponding media component belonging to the service across all periods of affiliated Media Presentation.

The broadcastAppService attribute may include at least one basePattern attribute.

The basePattern attribute may refer to a character pattern used by a receiver for match against any portion of the Segment URL used by the DASH client to request at least one Media Segment of parent Representation. The match may refer to transmission of the corresponding requested Media Segment via broadcast transmission.

The unicastAppService attribute may refer to DASH Representation transmitted in a multiplexed or non-multiplexed form through broadband. The DASH Representation may include at least one corresponding media component belonging to a service across all periods of related Media Presentation.

The unicastAppService attribute may include at least one basePattern attribute.

The basePattern attribute may refer to a character pattern used by a receiver for match against any portion of the Segment URL used by the DASH client to request at least one Media Segment of parent Representation. The match may refer to transmission of the corresponding requested Media Segment via broadcast transmission.

Hereinafter, the S-TSID will be described in detail.

The S-TSID may be an SLS metadata fragment including at least one ROUTE session and at least one LCT session included in a ROUTE, and overall transport session description information on at least one MMTP session. In some embodiments, the S-TSID may not include a ROUTE session or an MMTP session. At least one media content component included in a service may be transmitted through the ROUTE session and/or the MMTP session.

In addition, the S-TSID may include a delivery object transmitted in at least one LCT session included in the service and/or file metadata and/or description of the object flow. In addition, the S-TSID may include payload formats and/or additional information on at least one content component transmitted in at least one LCT session.

Each instance of the S-TSID fragment may be referred to by the sTSIDUri attribute of the userServiceDescription element in the USBD fragment.

Hereinafter, attribute and/or element included in the S-TSID will be described.

The S-TSID may include serviceId attribute, at least one RS element, and/or at least one MS element.

The serviceId attribute may be information that refers to a service element in the LLS (e.g., FIT). The serviceId attribute may be information having a value of corresponding service_id in the FIT. When at least one MMTP session does not use USD and/or ROUTE session and is used for broadcast transmission of the linear service, the serviceId attribute may be present.

The RS element may refer to an ROUTE session.

The MS element may refer to an MMTP session.

The RS element may include bsid attribute, sIpAddr attribute, dIpAddr attribute, dport attribute, PLPID attribute, and/or at least one LS element.

The bsid attribute may be an identifier of a broadcast stream. At least one content component of the broadcastAppService attribute may be transmitted in a broadcast stream. When bsid attribute is not present, the bsid attribute may be a default broadcast stream. At least one PLP of the default broadcast stream may transmit at least one SLS fragment of a service.

The sIpAddr attribute may indicate a source IP address. For example, a default value of the sIpAddr attribute may indicate a source IP address of a current ROUTE session.

The dIpAddr attribute may indicate a destination IP address. For example, a default value of the dIpAddr attribute may indicate a destination IP address of a current ROUTE session.

The dport attribute may indicate a destination port. For example, a default value of the dport attribute may indicate a destination port of a current ROUTE session.

The PLPID attribute may indicate a Physical Layer Pipe ID of a ROUTE session. For example, the PLPID attribute may indicate a current physical layer pipe.

The LS element may indicate an LCT session.

The LS element may include tsi attribute, PLPID attribute, bw attribute, startTime attribute, endTime attribute, SrcFlow element, and/or RprFlow element.

The tsi attribute may indicate a TSI value.

The PLPID attribute may indicate a value of a PLP ID.

The bw attribute may indicate a maximum bandwidth.

The startTime attribute may indicate start time.

The endTime attribute may indicate end time.

The SrcFlow element may indicate source flow. For example, the source flow may transmit source data. In addition, the source flow may transmit at least one delivery object.

The RprFlow element may indicate a repair flow. For example, repair flow may transmit repair data. The repair flow may transmit data for flexibly protecting at least one delivery object transmitted through the source flow.

The MS element may include versionNumber element, bsid element, sIpAddr element, dIpAddr element, dport element, packetId element, PLPID element, bw element, startTime element, and/or endTime element.

The versionNumber element may indicate a version number of an MMTP protocol used in an MMTP session.

The bsid element may be an identifier of a broadcast stream. At least one content component may be transmitted in a broadcast stream. When bsid attribute is not present, the bsid element may be a default broadcast stream. At least one PLP of the default broadcast stream may transmit at least one SLS fragment of a service.

The sIpAddr element may indicate a source IP address.

The dIpAddr element may indicate a destination IP address.

The dport element may indicate a destination port.

The packetId element may indicate MMTP packet_id for transmission of at least one MMT signaling message of an MMTP session.

The PLPID element may indicate a Physical Layer Pipe ID of the MMTP session.

The bw element may indicate a maximum bandwidth.

The startTime element may indicate start time of the MMTP session.

The endTime element may indicate end time of the MMTP session.

Hereinafter, the MPD will be described in detail.

A streaming content signaling component of the SLS may correspond to the MPD fragment. The MPD may be related to a linear service for transmission of DASH Segment such as streamlining content. The MPD may also be used to support app-based services. At least one related content component may be DASH-formatted. In addition, the MPD may be used to control playout of at least one content component. The MPD may include at least one resource identifier of at least one separate media component of a linear/streaming service. For example, the resource identifier may include Segment URL. In addition, the MPD may include context of at least one identified resource in the Media Presentation.

The Media Presentation Description (MPD) may be a SLS metadata fragment including formalized description of DASH Media Presentation. For example, the DASH Media Presentation may correspond to a linear service of given duration defined by a broadcaster. For example, the linear service may be a set of at least one contiguous linear TV program that is maintained for six-hour interval. Content of MPD may provide a resource identifier of a segment and content of identified resources in the Media Presentation.

At least one Representation transmitted in the MPD may be transmitted through broadcast. In the case of a hybrid service, the MPD may describe at least one additional Representation transmitted through a broadband. In addition, during handoff to broadcast from broadcast due to broadcast signal degradation, the MPD may include at least one additional Representation in order to support service continuity. For example, broadcast signal degradation may occur while a vehicle is driven below a mountain or through a tunnel.

Hereinafter, app-based enhancement signaling included in the SLS will be described in detail.

The app-based enhancement signaling may be related to transmission of at least one app-based enhancement component. For example, the app-based enhancement component may include an application logic file, an NRT media file, an on-demand content component, and/or a notification stream. Needless to say, an application may search for NRT data via broadcast connection.

Hereinafter, an MMT Signaling Message included in SLS of MMTP will be described in detail.

When at least one MMTP session is used to transmit a streaming service, at least one MMT signaling message may be transmitted by MMTP. Each MMTP session may transmit at least one MMT signaling message and at least one component. In addition, at least one packet for transmission of an MMT signaling message may be signaled by an MS element in the S-TSID fragment.

First information of signaling information according to another embodiment of the present invention may include S-TSID and second information may include MPD.

FIG. 65 is a diagram illustrating a configuration of a broadcast signal receiving apparatus according to another embodiment of the present invention.

Referring to FIG. 65, the broadcast signal receiving apparatus according to another embodiment of the present invention may include a signaling decoder C62100, a delivery object processor C62300, and/or a media decoder C62500.

The signaling decoder C62100 may extract signaling information for providing discovery and acquisition of at least one content component.

The signaling information may include first information on a transport session for transmission of the at least one content component of the service and at least one delivery object transmitted through the transport session.

The first information may further include offset information indicating a position of a first byte of a payload of a transport protocol packet for transmission of the delivery object, real-time information indicating whether the at least one delivery object transmits a streaming service, mapping information for mapping the transport session to a transport session identifier (TSI) and mapping the delivery object to a transport object identifier (TOI), and timestamp information indicating time information on the delivery object.

In addition, the signaling information may further include second information including description of DASH Media Presentation corresponding to the service.

The signaling information may include content of a header of an LCT packet and header Extension of the LCT packet.

A detailed description of the signaling information may include all of the above description.

The delivery object processor C62300 may recover the at least one delivery object.

The delivery object may include at least one content component of the service and may be recovered individually.

The media decoder C62500 may decode the at least one delivery object.

FIG. 66 is a diagram illustrating a structure of a broadcast signal receiving apparatus according to another embodiment of the present invention.

A receiver may identify specific IP/UDP datagram included in a broadcast signal and extract the specific IP/UDP datagram. The receiver may extract a specific IP packet and use IP/Port information during this procedure. The receiver may extract IP/UDP datagram including a specific packet and transmit the packet included in the corresponding datagram to each apparatus. The receiver may extract a transport protocol packet from the IP/UDP datagram.

The transport protocol packet may include an ALC/LCT extension packet, a timeline packet, and/or a signaling packet.

The ALC/LCT extension packet may transmit broadcast data.

For example, the broadcast data may include at least one delivery object included in broadcast data. The ALC/LCT extension packet may include the aforementioned ROUTE packet and include an ALC/LCT packet having the aforementioned header extension information.

The timeline packet may transmit data for synchronization of a broadcast system, a broadcast receiver, and/or a broadcast service/content.

The signaling packet may transmit signaling information. The signaling information may include information for discovery of a service and/or description information on the service. For example, the signaling information may include content of a header of the aforementioned ALC/LCT packet and header extension of the ALC/LCT packet. In addition, the signaling information may include content of both service layer signaling (SLS) information of the aforementioned ROUTE protocol and/or an MMT signaling message of an MMTP protocol.

In some embodiments, the signaling information may be included in the header of the transport protocol packet and/or the ALC/LCT extension packet.

Referring to the drawing, the receiver may include a transport protocol client C62330, a buffer/control unit C62370, an ISO BMFF parser C62400, and/or a media decoder C62500. The delivery object processor C62300 may include the transport protocol client C62330 and/or the buffer/control unit C62370.

The transport protocol client C62330 may parse a transport protocol packet to generate at least one delivery object and/or service layer signaling information.

For example, the transport protocol packet may be a transport protocol packet of an application layer and may include a ROUTE packet and/or an MMTP packet. The ROUTE packet may include the aforementioned asynchronous layered coding/ layered coding transport (ALC/LCT) packet and/or an ALC/LCT extension packet. The MMTP packet may represent a formatted unit of media data transmitted using an MMT protocol.

For example, the delivery object may be at least one data unit included in a content component of a service. In addition, the delivery object may be one of one complete file, a part of the file, an HTTP Entity, a group of the file, and/or a group of the HTTP Entity. The part of the file may be a file of a byte range. The HTTP Entity may include an HTTP Entity Header and/or an HTTP Entity body. In addition, the delivery object may include a segment of MPEG-DASH or a portion of the Segment. In addition, the delivery object may include MPU of MMTP, a portion of the MPU, and/or Fragment. The delivery object may be one ISO BMFF file or a portion of one ISO BMFF file. The portion of one ISO BMFF file may include a fragment, GOP, chunk, an access unit, and/or a NAL unit.

For example, the service layer signaling information may include information for discovery and/or access of at least one service and/or at least one content component. In addition, the service layer signaling information may describe at least one feature of a service such as a list of at least one component included in a service, a place for acquisition of at least one component, and/or capabilities of a receiver, required for meaningful presentation of a service. In addition, the service layer signaling information may include user service bundle description (USBD), service-level transport session instance description (S-TSID), and/or DASH media presentation description (MPD).

The transport protocol client C62330 may extract a file for transmission of general data from a transport protocol packet or extract ISO base media file format (ISO BMFF) object data. The transport protocol client C62330 may additionally acquire information related to timing during extraction of the ISO BMFF object data. The transport protocol client C62330 may use delivery mode and/or transport session identifier (TSI) information during extraction of the general file and/or the ISO BMFF object data.

In addition, the transport protocol client C62330 may process the transport protocol packet. The transport protocol client C62330 may interpret the transport protocol packet (e.g., an LCT packet, an ALC/LCT packet, an ALC/LCT extension packet, and a ROUTE packet) to generate header information and the aforementioned header extension information.

For example, the extension information may include fragment information EXT_RTS, object type information, type information, boundary information, mapping information, a session group identifier field SGI, a divided transport session identifier field DTSI, an object group identifier field OGI, a divided transport object identifier field DTOI, a priority information, offset information EXT_OFS, RAP information P, real-time information T, timestamp, and/or length information of a delivery object.

In addition, the transport protocol client C62330 may interpret payload data of the transport protocol packet to generate a delivery object. For example, the payload may be an encoding symbol.

The service layer signaling information according to an embodiment of the present invention may include header information and header extension information. In addition, the service layer signaling information may be transmitted in payload data of the transport protocol packet in the form of a delivery object.

The buffer/control unit C62370 may buffer the delivery object and control an overall process of a receiver. The buffer/control unit C62370 may also be referred to as a receiver/buffer control unit C62370.

In addition, the buffer/control unit C62370 may control a series of operations for processing broadcast data using information on a channel map including each broadcast channel. The buffer/control unit C62370 may receive user input using a user interface (UI) or an event on a system and process the received user input or event. The buffer/control unit C62370 may control a physical layer controller (not shown) using a transport parameter to process a broadcast signal in a physical layer. When the receiver processes data related to MPEG-DASH, the buffer/control unit C62370 may extract MPD or extract positional information (e.g., URL - uniform resource locator information) for acquisition of the MPD and transmit the extracted information to an apparatus for processing data related to the MPEG-DASH.

For example, the buffer/control unit C62370 may transmit a delivery object buffered based on the service layer signaling information to the ISO BMFF parser C62400 and/or the media decoder C62500. For example, the buffer/control unit C62370 may transmit the buffered delivery object to the ISO BMFF parser C62400 and/or the media decoder C62500 at a predetermined time point based on timestamp information included in the signaling information.

In addition, the buffer/control unit C62370 may control an overall process based on signaling information, user input, and/or system clock.

The ISO BMFF parser C62400 may parse at least one delivery object included in a content component of a service to extract at least one access unit, timing information, and/or information (or a parameter) required to decode the access unit.

For example, the delivery object may be a portion of one ISO BMFF file or one ISO BMFF file. The portion of one ISO BMFF file may include a fragment, GOP, chunk, an access unit, and/or a NAL unit. In addition, the delivery object may include a Segment of MPEG-DASH, a portion of the Segment, and/or a Subsegment. In addition, the delivery object may include MPU of MMTP, a portion of the MPU, and/or Fragment.

When two or more media streams are included in the Media Segment, the ISO BMFF parser C62400 may perform a demuxing process. In this case, the ISO BMFF parser C62400 may be connected to two or more media decoders C62500.

For example, when at least one access unit included in a video content component and at least one access unit included in an audio content component are included in the delivery object, the ISO BMFF parser C62400 may extract at least one access unit included in the video content component and transmit the extracted access unit to a video decoder (not shown). In addition, the ISO BMFF parser C62400 may extract at least one access unit included in the audio content component and transmit the extracted access unit to an audio decoder (not shown).

The media decoder C62500 may decode at least one delivery object. The media decoder C62500 may decode at least one access unit based on the signaling information (e.g., timing information, information required for decoding, and/or information for rendering) and/or render the at least one decoded access unit.

For example, the media decoder C62500 may buffer at least one access unit in order to decode at least one access unit at a predetermined decoding time. In addition, the media decoder C62500 may buffer at least one access unit in order to render the at least one decoded access unit at a predetermined presentation time.

In addition, the media decoder C62500 may re-order the at least one decoded access unit.

For example, a decoding order and a rendering order of at least access unit may be different. In this regard, the media decoder C62500 may re-order the at least one decoded access unit at the rendering order.

FIG. 67 is a diagram illustrating a structure of a broadcast signal receiving apparatus according to another embodiment of the present invention.

A receiver according t to another embodiment of the present invention may generate and process an HTTP entity based on the received transport protocol packet.

To this end, the receiver may include the delivery object processor C62300, the ISO BMFF parser C62400, and/or the media decoder C62500. The delivery object processor C62300 may include the transport protocol client C62330, an HTTP entity generator C62340, an internal HTTP server C62350, and/or a DASH client C62390.

The transport protocol client C62330 may parse the transport protocol packet to generate at least one delivery object and/or signaling information (or service layer signaling information). A detailed description of the transport protocol client C62330 is the same as the above description.

The HTTP entity generator C62340 may generate an HTTP Entity based on the delivery object and the signaling information (or service layer signaling information).

For example, the HTTP entity generator C62340 may generate the HTTP Entity based on delivery object transmitted from the transport protocol client C62330 and/or basic information and/or extension information of the transport protocol packet.

The HTTP entity generator C62340 may receive an MPD. The HTTP entity generator C62340 may generate the HTTP Entity based on a delivery object, signaling information, and/or MPD. For example, the HTTP entity generator C62340 may refer to and interpret the MPD in order to generate the HTTP Entity.

An HTTP Entity body may be generated based on the delivery object. For example, the HTTP entity body may include a file, a part of the file, and/or a group of the file. A part of the file may be data of a byte range. In addition, one HTTP entity body may include one Media Segment and/or one Chunk.

The HTTP Entity header may be generated based on signaling information (or service layer signaling information) and MPD. For example, the HTTP Entity header may be generated based on basic information and extension information of the transport protocol packet and/or MPD. A detailed description of generation of the HTTP Entity header will be given below.

The internal HTTP server C62350 may store the HTTP Entity. The internal HTTP server C62350 may transmit a delivery object corresponding to the HTTP Entity body to the DASH client C62390.

For example, the internal HTTP server C62350 may include a storage (not shown) for storing the received HTTP Entity.

Each HTTP Entity may be effective up to a time specified in a field "Expires" of the HTTP Entity header from a time stored in the storage.

Upon receiving a request for a delivery object (or an HTTP Entity) from the DASH client C62390 during the effective time, the internal HTTP server C62350 may transmit a delivery object corresponding to the HTTP entity body of the HTTP Entity to the DASH client C62390 in the form of a response.

For example, the internal HTTP server C62350 may receive the request for the delivery object from the DASH client C62390 based on a URL included in the MPD.

Alternatively, the internal HTTP server C62350 may transmit a delivery object to the DASH client C62390 anytime in the form of a response when a requested delivery object (or an HTTP entity) is present in a storage without limitation of the effective time.

For example, the internal HTTP server C62350 may transmit the Media segment or chunk to the DASH client C62390 in the form of a response.

The internal HTTP server C62350 may receive information on an effective time of a file such as an HTTP entity in the storage to a separate interface and may define and execute a unique mechanism for file management.

The DASH client C62390 may receive MPD information. The DASH client C62390 may request the internal HTTP server C62350 to transmit a delivery object (or HTTP Entity) based on the MPD information. In addition, the DASH client C62390 may transmit the received delivery object to the ISO BMFF parser C62400 and/or the media decoder C62500.

The DASH client C62390 may receive and interpret the MPD information and request the internal HTTP server C62350 to transmit the delivery object (or HTTP Entity) based on a URL included in the MPD. For example, the DASH client C62390 may request the internal HTTP server C62350 to transmit Media Segment or Chunk for presentation of a corresponding service based on the URL.

A time for request and/or transmission of the delivery object (e.g. Segment or chunk) may be determined based on DASH timeline included in the MPD.

The ISO BMFF parser C62400 may parse at least one delivery object included in a content component of a service to extract at least one access unit, timing information, and/or information (or a parameter) required to decode the access unit. A detailed description of the ISO BMFF parser C62400 is the same as above description.

The media decoder C62500 may decode at least one access unit based on the signaling information (e.g., timing information, information required for decoding, and/or information required for rendering) and/or render the at least one decoded access unit.

FIG. 68 is a diagram illustrating a method of formatting an HTTP Entity header according to another embodiment of the present invention.

First, an HTTP Entity will be described.

The HTTP Entity may be information transmitted as a payload of request or response. The HTTP Entity may include an HTTP Entity header and an HTTP Entity Body. For example, a request message and/or a response message may transmit the HTTP Entity.

According to who transmits and receives the HTTP Entity, a sender and a recipient may be one of a client and a server.

The HTTP Entity header may include metadata on the HTTP Entity body. In addition, when the HTTP Entity body is not present, the HTTP Entity may include metadata on resources identified according to a request.

The HTTP Entity may include an Allow field, a Content-Encoding field, a Content-Language field, a Content-Length field, a Content-Location field, a Content-MD5 field, a Content-Range field, a Content-Type field, an Expires field, a Last-Modified field, and/or an extension-header field.

The Allow field may list at least one method supported by resources identified according to Request-URI. The Allow field may indicate at least one effective method related to resources, to the recipient. For example, the Allow field may indicate one of "GET", "HEAD", and/or "PUT".

The Content-Encoding field may indicate a modifier of a media type. The Content-Encoding field may indicate a type of additional content coding to be applied to the HTTP Entity body. In addition, the Content-Encoding field may indicate a type of a decoding mechanism in order to acquire a media type referred to by the Content-Type field.

The content-Language field may describe at least one natural language of an audience, intended by the HTTP Entity.

The Content-Length field may indicate a size of the HTTP Entity body.

The Content-Location field may include a resource address of an HTTP Entity included in a message. The Content-Location field may include a resource address of the HTTP Entity included in a message when the HTTP Entity can be accessed from a separate location from a URL of a request resource. For example, the Content-Location field may include a base URI of the HTTP Entity.

The Content-MD5 field may be MD5 digest of the HTTP Entity body for providing end-to-end message integrity check (MIC) of the HTTP Entity.

The Content-Range field may be transmitted together with a partial HTTP Entity body in order to specify a position of the partial HTTP Entity-payload in a full HTTP Entity-payload. For example, the Content-Range field may include first-byte-pos information, last-byte-pos information, and/or instance-length information. The first-byte-pos information may indicate a start position of the partial HTTP Entity body. The last-byte-pos information may indicate a last position of the partial HTTP Entity body. The instance-length information may specify the length of a selected resource.

The Content-Type field may indicate a media type of the HTTP Entity transmitted to the recipient.

The Expires field may include date/time information for receiving an effective request. Presence of the Expires field may not refer to modification or cease of original resources at, before, and/or after a corresponding time.

The Last-Modified field may indicate date and/or time information in which variant of an origin server is deemed to be lastly modified.

The extension-header field may include an additional HTTP Entity header without variant of a protocol.

The HTTP Entity body transmitted together with an HTTP request or response may be format or encoding defined by the HTTP Entity header. The HTTP entity body may include a file, a part of the file, and/or a group of the file. A part of the file may be data of a byte range. In addition, one HTTP entity body may include one Media Segment and/or one Chunk.

Hereinafter, a method of formatting an HTTP Entity header by a receiver according to another embodiment of the present invention will be described.

Referring to the drawing, information items of a left side of a table may indicate signaling information (or service layer signaling information). For example, the signaling information may include basic information of the transport protocol packet, extension information, and/or MPD.

Information items of a right side of the table may indicate a field included in the HTTP Entity header.

First, the HTTP entity generator C62340 may format a Content-Length field based on an OGI field and a DTOI field that are included in a header of the transport protocol packet, and/or a transfer-length field included in EXT_FTI.

According to another embodiment of the present invention, the TOI may be divided into OGI and DTOI and each of the OGI and the DTOI may be mapped to each new data unit. In this case, the OGI may identify a group of the same delivery object in a transfer session and the DTOI may identify a Subsegment, fragment, GOP and/or Chunk. Hereinafter, it is assumed that the OGI identifies the Media Segment and the DTOI identifies Chunk. In some embodiments, DTOI to the TOI.

A delivery object according to another embodiment of the present invention may be protected by Forward Error Correction (FEC). An FEC code may provide protection of packet loss. Accordingly, the FEC code may support reliable transmission of content.

The FEC code may include FEC information. The FEC information may include an FEC Encoding ID, an FEC Instance ID, an FEC Payload ID, and/or FEC Object Transmission Information.

The FEC Encoding ID may identify a used FEC encoder. In addition, the FEC Encoding ID may allow a receiver to select a suitable FEC decoder. The FEC Instance ID may include more detailed identification information of an FEC encoder used for a specific FEC scheme. At least one encoding symbol present in a payload of an FEC Payload ID packet may be identified. The FEC Object Transmission Information may include information related to encoding of a specific object required by an FEC encoder. For example, the FEC Object Transmission Information may include length information of at least one source block included in an object, length information of all objects, and/or specific parameters of an FEC encoder.

The FEC Object Transmission Information may be included in FDT and/or EXT_FTI included in extension information of the transport protocol packet.

The EXT_FTI may specific structure and attributes of FEC Object Transmission Information to be applied to an FEC Encoding ID.

The EXT_FTI may include a HET field, a HEL field, a Transfer Length field, an FEC Instance ID field, and/or an FEC Encoding ID Specific Format field.

The HET field may have a value of 64.

The HEL field may indicate an entire length of LCT Header Extension with a variable length.

The Transfer Length field may indicate a delivery object (or a transport object) for transmission of a file of a byte unit.

The FEC Instance ID field may include more detailed identification information of an FEC encoder used for a specific FEC scheme.

The FEC Encoding ID Specific Format field may include specific parameters of the FEC encoder. Different FEC schemes may require encoding parameters of different sets. Accordingly, a structure and length of the FEC Encoding ID Specific Format field may be changed according to an FEC Encoding ID.

For example, the Content-Length field may indicate the sum of Transfer-length of at least one delivery object having the same OGI. When number system conversion is required, the Content-Length field may have a value to which number system of the Content-Length field is applied.

Then, the HTTP entity generator C62340 may format a Content-Location field based on mapping information.

The mapping information may include an identifier allocated from signaling information as well as a unique address (e.g. URL) of a delivery object. In addition, the mapping information may indicate the URL of the signaling information.

For example, the Content-Location field may indicate a URL included in the mapping information. When format conversion is required, the Content-Location field may have a value to which format conversion is applied.

Then, the HTTP entity generator C62340 may format a Content-Range field based on offset information EXT OFS, an OGI field and DTOI field included in a header of the transport protocol packet, and/or a Transfer-length field included in the EXT_FTI.

Offset information EXT_OFS may include a Start Offset field. A Start Offset field may have a variable length and indicate offset in a file of a packet payload transmitted by a current packet. The Start Offset field may indicate offset as a byte number from a start point of a file.

For example, the first-byte-pos information may indicate offset of a current delivery object (e.g. Chunk) in a file. When number system conversion is required, the first-byte-pos information may have a value to which number system conversion is applied.

In addition, the last-byte-pos information may indicate a value obtained by adding a Transfer-Length to offset of the current delivery object (e.g. chunk) in the file. When number system conversion is required, the last-byte-pos information may have a value to which number system conversion is applied.

In addition, the instance-length information may indicate the sum of Transfer-Length of at least one delivery object having the same OGI. When number system conversion is required, the instance-length information may have a value to which number system conversion is applied.

When a value of the Content-Range field cannot be calculated during generation of the HTTP entity, the Content-Range field may be omitted. In addition, when one file (e.g. segment) is transmitted through one delivery object, the Content-Range field may be omitted.

Then, the HTTP entity generator C62340 may format an Expires field based on mapping information and/or MPD.

For example, the Expires field may indicate availability end time of a segment in DASH availability timeline.

A value of the Expires field may be determined according to the following expression. In the expression, the segment start time may belong to the same period and representation and may be the sum of duration of segments described prior to a corresponding segment. The segment and the delivery object (e.g. ALC/LCT extension object) may be mapped by a URL.

Expires of Current segment = MPD@availabilityStartTime + Period@start + segment start time + SegmentList/SegmentTemplate@duration (+ MPD@timeShiftBufferDepth)

In addition, the HTTP entity generator C62340 may format the Expires field based on timestamp. The timestamp information may be included in the EXT_MEDIA_TIME.

For example, the Expires field may indicate the timestamp information without reference to MPD information. The timestamp information may be provided by extension information (e.g. LCT header extension) of a transport protocol packet such as EXT_MEDIA_TIME.

Expires of current segment = Timestamp of next Segment = Timestamp of current segment + duration of Segment (Timestamp of current Segment - Timestamp of previous Segment)

Additional delay time required for a procedure of stacking a segment in a broadcast stream, transmitting the segment, and interpreting the segment may be considered in the above two expressions.

FIG. 69 is a diagram illustrating a structure of a broadcast signal receiving apparatus according to another embodiment of the present invention.

A receiver according to another embodiment of the present invention may format and process an object of the form of an HTTP Entity as a transport protocol packet. For example, the receiver may receive an ALC/LCT packet and generate an object of the form of a HTTP Entity. In addition, the receiver may generate a transport protocol packet (e.g. ALC/LCT extension packet) based on an object in the form of an HTTP Entity. The ALC/LCT packet, the object of the form of an HTTP Entity, and/or the transport protocol packet may transmit at least one delivery object.

Referring to the drawing, the receiver may include the delivery object processor C62300, the ISO BMFF parser C62400, and/or the media decoder C62500. The delivery object processor C62300 may include a packet client C62310, a transport protocol convertor C62320, a transport protocol client C62330, and/or the buffer/control unit C62370.

The packet client C62310 may receive at least one packet for transmission of a service and parse the received packet to recover at least one object. For example, the received packet may include an ALC/LCT packet. In addition, an object may include an HTTP Entity. The packet client C62310 may also be referred as an ALC/LCT client C62310.

The transport protocol convertor C62320 may receive MPD information. The transport protocol convertor C62320 may convert an object (e.g. HTTP Entity) into at least one transport protocol packet based on MPD including description of DASH Media Presentation corresponding to a service.

For example, a transport protocol converter may be HTTP Entity to ALC/LCT+ Convertor. In addition, the transport protocol packet may include an ALC/LCT extension packet, a timeline packet, and/or a signaling packet.

The transport protocol convertor C62320 may interpret MPD and refer to MPD information in order to format the transport protocol packet.

The transport protocol convertor C62320 may generate a payload of at least one transport protocol packet based on one HTTP entity body. In addition, the transport protocol convertor C62320 may generate a header of at least one transport protocol packet based on an HTTP entity header and MPD information.

The transport protocol convertor C62320 may include a paketization function in order to contain the received object in the transport protocol packet.

The transport protocol client C62330 may parse the transport protocol packet to generate at least one delivery object and/or service layer signaling information.

A detailed description of the buffer/control unit C62370, the ISO BMFF parser C62400, and/or the media decoder C62500 is the same as the above description.

FIG. 70 is a diagram illustrating a method of formatting an HTTP Entity header according to another embodiment of the present invention.

Referring to the drawing, information items to the left of the table may indicate information included in the HTTP Entity header and/or MPD. Information items to the right of the table may indicate service layer signaling information. For example, the service layer signaling information may include basic information and/or extension information (e.g. header information of an ALC/LCT extension packet) of the transport protocol packet.

First, the transport protocol convertor C62320 may format mapping information based on a Content-Location field included in the HTTP Entity header.

The Content-Location field may include a resource address of an HTTP Entity included in a message. The mapping information may include a URL field. The URL field may have a variable length and may include a unique address of the delivery object.

For example, the URL field may indicate information on the Content-Location field. When format conversion is required, the URL field may have a value to which format conversion is applied.

Then, the transport protocol convertor C62320 may format offset information, an OGI field, and/or a DTOI field based on the Content-Range field. As described above, the DTOI field may also be referred to as a TOI field.

For example, the Start Offset field of the offset information may indicate first-byte-pos information of a current Content-Range. When number conversion system is required, the Start Offset field may have a value to which number system conversion is applied.

In addition, DTOI fields may indicate respective objects for respective Content-Ranges. That is, objects may be set for respective Content-Ranges and respective DTOI values may be provided to the respective Content-Ranges.

In addition, the OGI field may indicate the same OGI value of at least one object transmitted from one HTTP entity. That is, the same OGI value may be provided to at least one object transmitted from one HTTP entity.

When one file (segment) is transmitted through one object, an OGI field may not be used.

Then, the transport protocol convertor C62320 may format timestamp information based on MPD.

For example, the timestamp information may indicate a value corresponding to earliest presentation time of a segment of the DASH presentation timeline.

The timestamp information may be determined according to the following expression.

Timestamp information = earliest presentation time of current segment = MPD@availabilityStartTime + Period@start + segment start time (+ MPD@suggestedPresentationDelay)

In the expression, segment start time may belong to the same period and representation and may be the sum of duration of segments described prior to a corresponding segment. The segment and the delivery object (e.g., ALC/LCT+ object) may be mapped by a URL.

Additional delay time required for a procedure of stacking a segment in a broadcast stream, transmitting the segment, and interpreting the segment may be considered in the above expression.

FIG. 71 is a flowchart of a broadcast signal transmitting method according to another embodiment of the present invention.

Referring to the drawing, a transmitter (or a broadcast signal transmitting apparatus) may use the delivery object generator C61300, may be included in at least one content component of a service, and may generate at least one individually recovered delivery object (CS61100).

For example, a delivery object generator may divide at least one content component included in a service to generate at least one delivery object.

A service may be media content including at least one contiguous media content periods. In addition, the service may be one of one broadcast program, information added to the broadcast program, and/or individual information. The service may include at least one content component.

A content component may be one continuous component of the media content with an assigned media component type that can be encoded individually into a media stream. In addition, the media component type may include at least one of video, audio, and/or text.

The delivery object may be one of a file, a part of the file, a group of the file, a hyper text transfer protocol (HTTP) Entity, and a group of the HTTP Entity. The part of the file may be a file of a type range. The HTTP Entity may include an HTTP Entity Header and/or a HTTP Entity body.

In addition, a transmitter may generate signaling information for providing discovery and acquisition of the service and the at least one content component using the signaling encoder C61100 (CS61300).

The signaling information may include first information on a transport session for transmission of the at least one content component of the service and at least one delivery object transmitted through the transport session.

In addition, the signaling information may further include second information including description of DASH Media Presentation corresponding to the service.

In addition, the transmitter may transmit the at least one delivery object and the signaling information through a unidirectional channel using the transmitter C61500 (CS61500).

The broadcast signal transmitting method according to another embodiment of the present invention may include all of the aforementioned functions of a broadcast signal transmitting apparatus. In addition, a detailed description of the signaling information may include all of the above descriptions.

FIG. 72 is a flowchart of a broadcast signal receiving method according to another embodiment of the present invention.

Referring to the drawing, a receiver (or a broadcast signal receiving apparatus) may extract signaling information for providing discovery and acquisition of at least one content component of a service using the signaling decoder C62100 (CS62100).

The signaling information may include first information on a transport session for transmission of the at least one content component of the service and at least one delivery object transmitted through the transport session.

The first information may further include at least one of offset information indicating a position of a first byte of a payload of a transport protocol packet for transmission of the delivery object, real-time information indicating whether the at least one delivery object transmits a streaming service, mapping information for mapping the transport session to a transport session identifier (TSI) and mapping the delivery object to a transport object identifier (TOI), and timestamp information indicating time information on the delivery object.

The signaling information may further include second information including description of DASH Media Presentation corresponding to the service.

The signaling information may content of both a header of an LCT packet and header extension of an LCT packet.

The signaling information may include all of the aforementioned descriptions.

In addition, the receiver may recover the at least one delivery object using the delivery object processor C62300 (CS62300).

The delivery object may be included in at least one content component of the service and may be recovered individually.

In addition, the receiver may decode the at least one delivery object using the media decoder C62500 (CS62500).

The broadcast signal receiving method according to another embodiment of the present invention may include all of the aforementioned functions of a broadcast signal transmitting apparatus. In addition, a detailed description of the signaling information may include all of the above descriptions.

A module or a unit may be a processor for execution of consecutive procedures stored in a memory (or a storage unit). The procedures described in the aforementioned embodiments may be executed by hardware/processors. Each module/block/unit described in the aforementioned embodiments may be operated as hardware/processor. In addition, methods proposed according to the present invention may be executed as a code. The code may be written in a storage medium readable by a processor. Accordingly, the code may be read by a processor provided by an apparatus.

Throughout this specification, the diagrams have been separately described for convenience of description. However, it is obvious that an embodiment obtained by combining some features of the diagrams is within the scope of the present invention. In addition, embodiments of the present invention can include a computer readable medium including program commands for executing operations implemented through various computers.

The method and apparatus according to the present invention are not limited to the configurations and methods of the above-described embodiments. That is, the above-described embodiments may be partially or wholly combined to make various modifications.

The method proposed according to the present invention can also be embodied as computer readable codes on a processor readable recording medium included in a network device. The computer readable recording medium is any data storage device that can store data which can be thereafter read by a computer system. Examples of the computer readable recording medium include read-only memory (ROM), random-access memory (RAM), CD-ROMs, magnetic tapes, floppy discs, optical data storage devices, etc. The computer readable recording medium can also be distributed over network coupled computer systems so that the computer readable code is stored and executed in a distributed fashion.

It will be appreciated by those skilled in the art that various modifications and variations can be made in the present invention without departing from the spirit or scope of the inventions. Thus, it is intended that the present invention covers the modifications and variations of this invention provided they come within the scope of the appended claims and their equivalents.

Both apparatus and method inventions are mentioned in this specification and descriptions of both of the apparatus and method inventions may be complementarily applicable to each other.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

Both apparatus and method inventions are mentioned in this specification and descriptions of both of the apparatus and method inventions may be complementarily applicable to each other.

[Mode for Invention]

Various embodiments have been described in the best mode for carrying out the invention.

[Industrial Applicability]

The present invention is available in a series of broadcast signal provision fields.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

**1.** A broadcast signal transmitting apparatus comprising:

a delivery object generator configured to generate at least one individually recovered delivery object included in at least one content component of a service; and

a signaling encoder configured to generate signaling information for providing discovery and acquisition of the at least one content component of the service, the signaling information comprising first information on a transport session for transmission of the at least one content component of the service and at least one delivery object transmitted through the transport session; and
a transmitter configured to transmit the at least one delivery object and the signaling information through a unidirectional channel.

**2.** The broadcast signal transmitting apparatus according to claim 1, wherein the delivery object comprises one of a file, a part of the file, a group of the file, a hyper text transfer protocol (HTTP) entity, and a group of the HTTP entity.

**3.** The broadcast signal transmitting apparatus according to claim 1, wherein the signaling information further comprises second information comprising description of DASH Media Presentation corresponding to the service.

**4.** The broadcast signal transmitting apparatus according to claim 1, wherein the signaling information further comprises offset information indicating a position of a first byte of a payload of a transport protocol packet for transmission of the delivery object.

**5.** The broadcast signal transmitting apparatus according to claim 1, wherein the signaling information further comprises real-time information indicating whether the at least one delivery object transmits a streaming service.

**6.** The broadcast signal transmitting apparatus according to claim 1, wherein the signaling information further comprises mapping information for mapping the transport session to a transport session identifier (TSI) and mapping the delivery object to a transport object identifier (TOI).

**7.** The broadcast signal transmitting apparatus according to claim 1, wherein the signaling information further comprises timestamp information indicating time information on the delivery object.

**8.** A broadcast signal receiving apparatus comprising:

a signaling decoder configured to extract signaling information for providing discovery and acquisition of at least one content component of a service, the signaling information comprising first information on a transport session for transmission of the at least one content component of the service and at least one delivery object transmitted through the transport session, and the delivery object being included in the at least one content component of the service and being recovered individually;
a delivery object processor configured to recover the at least one delivery object; and
a media decoder configured to decode the at least one delivery object.

**9.** The broadcast signal receiving apparatus according to claim 8, wherein the first information further comprises offset information indicating a position of a first byte of a payload of a transport protocol packet for transmission of the delivery object, real-time information indicating whether the at least one delivery object transmits a streaming service, mapping information for mapping the transport session to a transport session identifier (TSI) and mapping the delivery object to a transport object identifier (TOI), and timestamp information indicating time information on the delivery object.

**10.** The broadcast signal receiving apparatus according to claim 9, wherein the signaling information further comprises second information comprising description of DASH media presentation corresponding to the service.

**11.** The broadcast signal receiving apparatus according to claim 10, wherein the delivery object processor further comprises:

a transport protocol client configured to parse the transport protocol packet to recover at least one delivery object; and
a buffer/control unit configured to buffer the delivery object and to transmit the delivery object to the media decoder.

**12.** The broadcast signal receiving apparatus according to claim 10, wherein the delivery object processor further comprises:

a transport protocol client configured to parse the transport protocol packet to recover at least one delivery object;
an HTTP entity generator configured to generate at least one HTTP entity based on the delivery object and the signaling information, the HTTP entity comprising an HTTP entity header and an HTTP entity body comprising the at least one delivery object;
an internal HTTP server configured to store the at least one HTTP entity; and
a DASH client configured to request the internal HTTP server to transmit the at least one delivery object based on the second information and to transmit the delivery object to the media decoder.

**13.** The broadcast signal receiving apparatus according to claim 12, wherein the HTTP entity header comprises at least one of a content-length field indicating a size of an HTTP entity body, a content-location field comprising a resource address of the HTTP entity, a content-range field indicating a position of a partial HTTP entity-payload in a full HTTP entity-payload, and an expires field indicating date/time information for receiving an effective request.

**14.** The broadcast signal receiving apparatus according to claim 9, wherein the delivery object processor comprises:

a packet client configured to parse at least one packet for transmission of the service to recover an HTTP entity;
a transport protocol converter configured to covert the HTTP entity into at least one transport protocol packet based on second information comprising description of DASH Media Presentation corresponding to the service;
a transport protocol client configured to parse the transport protocol packet to recover at least one delivery object; and
a buffer/control unit configured to buffer the delivery object and to transmit the delivery object to the media decoder.

FIG. 1

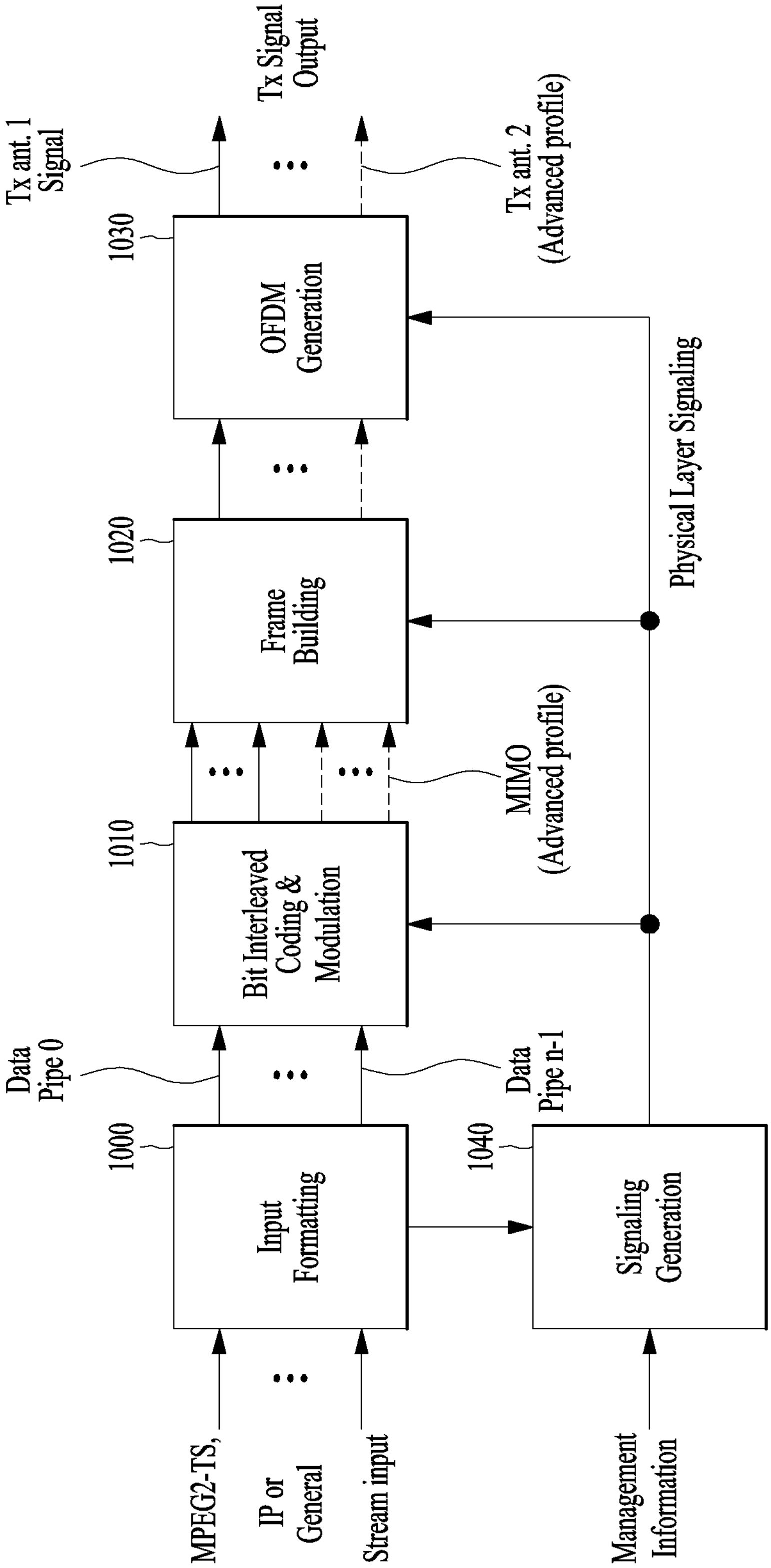
MPEG2-TS, IP or General Stream input
Input Formatting
1000
Data Pipe 0
Data Pipe n-1
Bit Interleaved Coding & Modulation
1010
MIMO (Advanced profile)
Frame Building
1020
OFDM Generation
1030
Tx ant. 1 Signal
Tx Signal Output
Tx ant. 2 (Advanced profile)
Management Information
Signaling Generation
1040
Physical Layer Signaling

FIG. 2

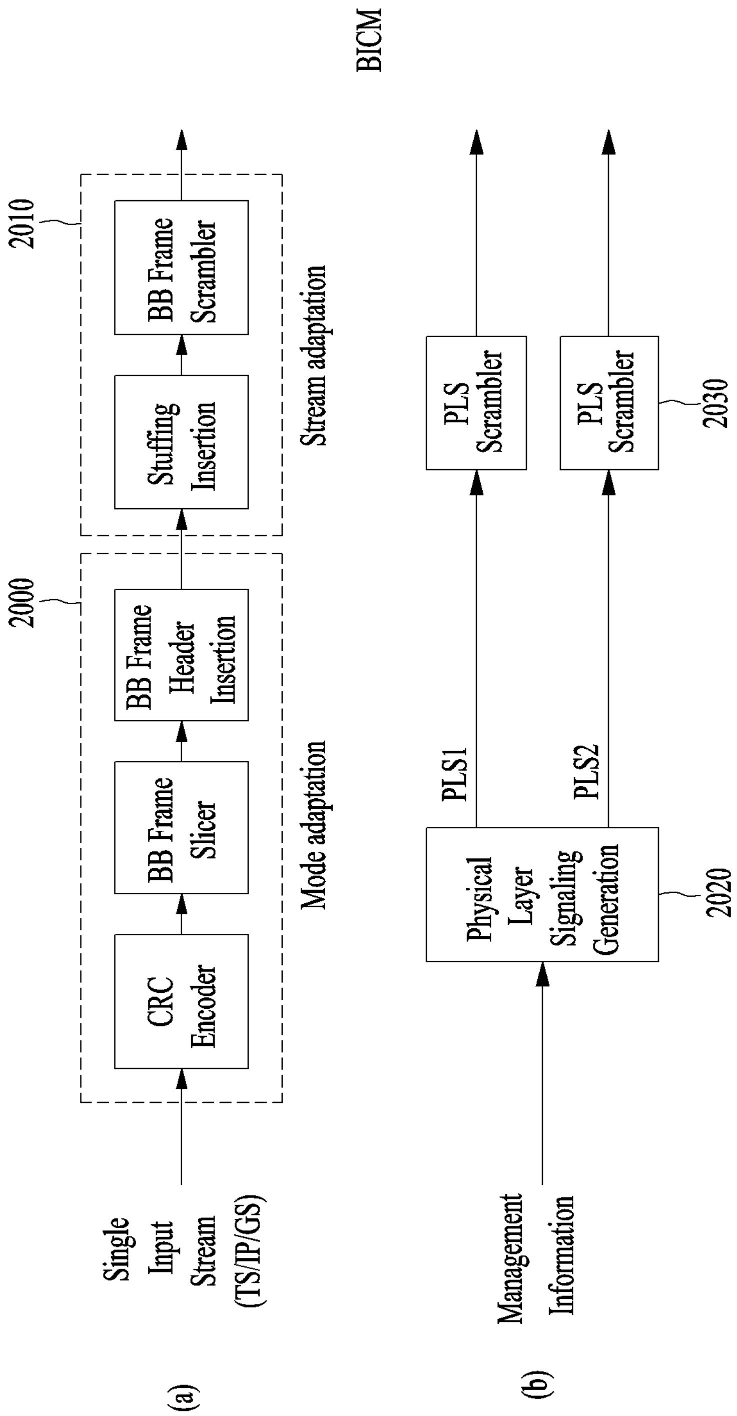

(a)
Single Input Stream (TS/IP/GS)
2000
CRC Encoder
BB Frame Slicer
BB Frame Header Insertion
Mode adaptation
2010
Stuffing Insertion
BB Frame Scrambler
Stream adaptation
BICM
(b)
Management Information
Physical Layer Signaling Generation
2020
PLS1
PLS2
PLS Scrambler
PLS Scrambler
2030

FIG. 3

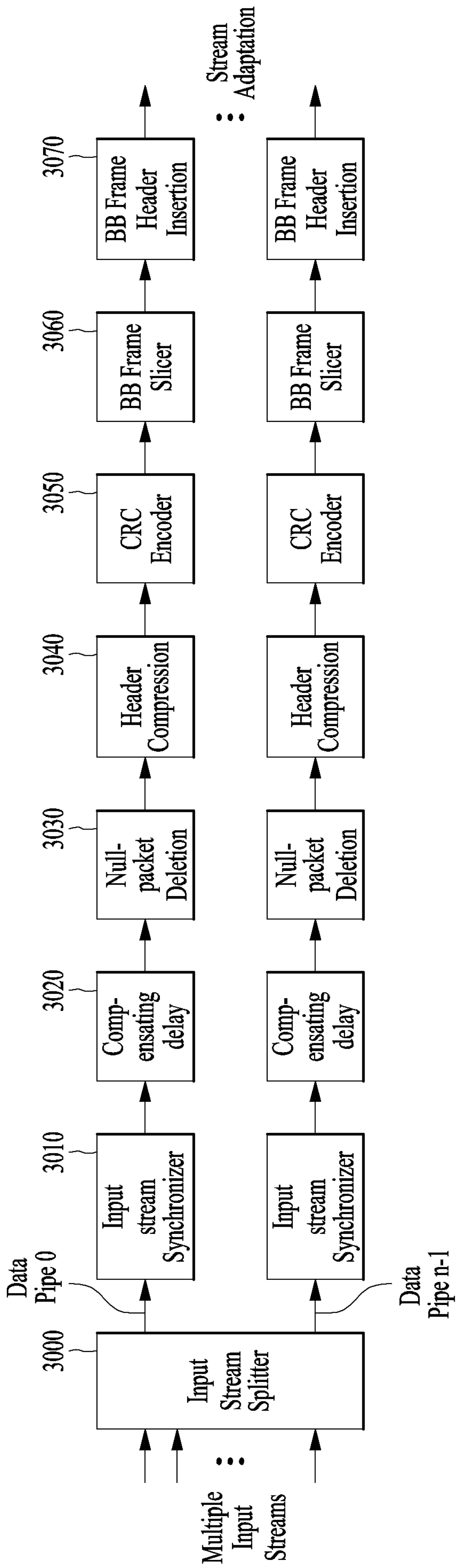

Multiple Input Streams
3000
Input Stream Splitter
Data Pipe 0
Data Pipe n-1
3010
Input stream Synchronizer
3020
Comp-ensating delay
3030
Null-packet Deletion
3040
Header Compression
3050
CRC Encoder
3060
BB Frame Slicer
3070
BB Frame Header Insertion
Stream Adaptation

FIG. 4

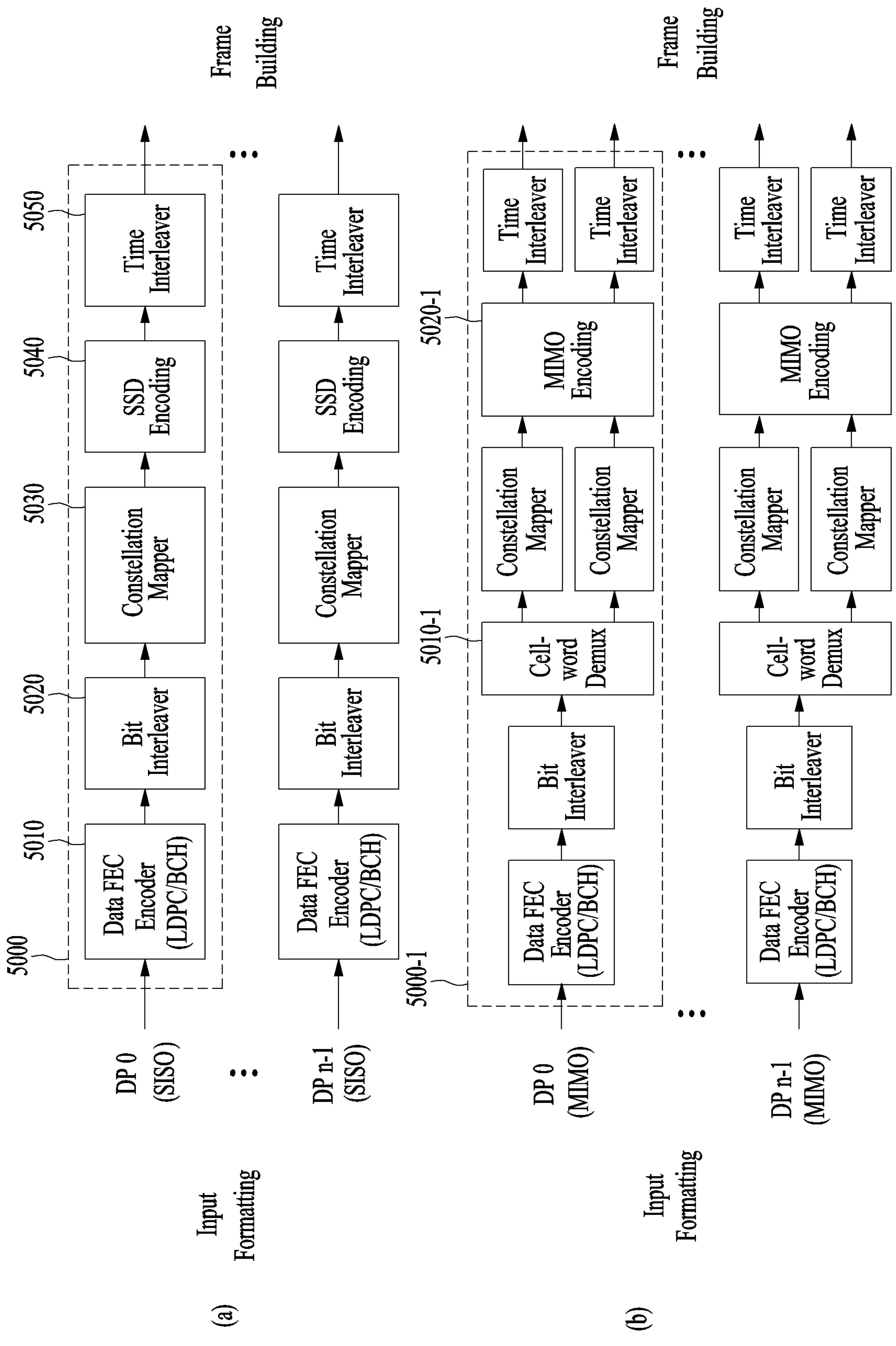
(a)
Input Formatting
DP 0 (SISO)
DP n-1 (SISO)
5000
5010
5020
5030
5040
5050
Data FEC Encoder (LDPC/BCH)
Bit Interleaver
Constellation Mapper
SSD Encoding
Time Interleaver
Frame Building
(b)
Input Formatting
DP 0 (MIMO)
DP n-1 (MIMO)
5000-1
5010-1
5020-1
Data FEC Encoder (LDPC/BCH)
Bit Interleaver
Cell-word Demux
Constellation Mapper
MIMO Encoding
Time Interleaver
Frame Building

FIG. 5

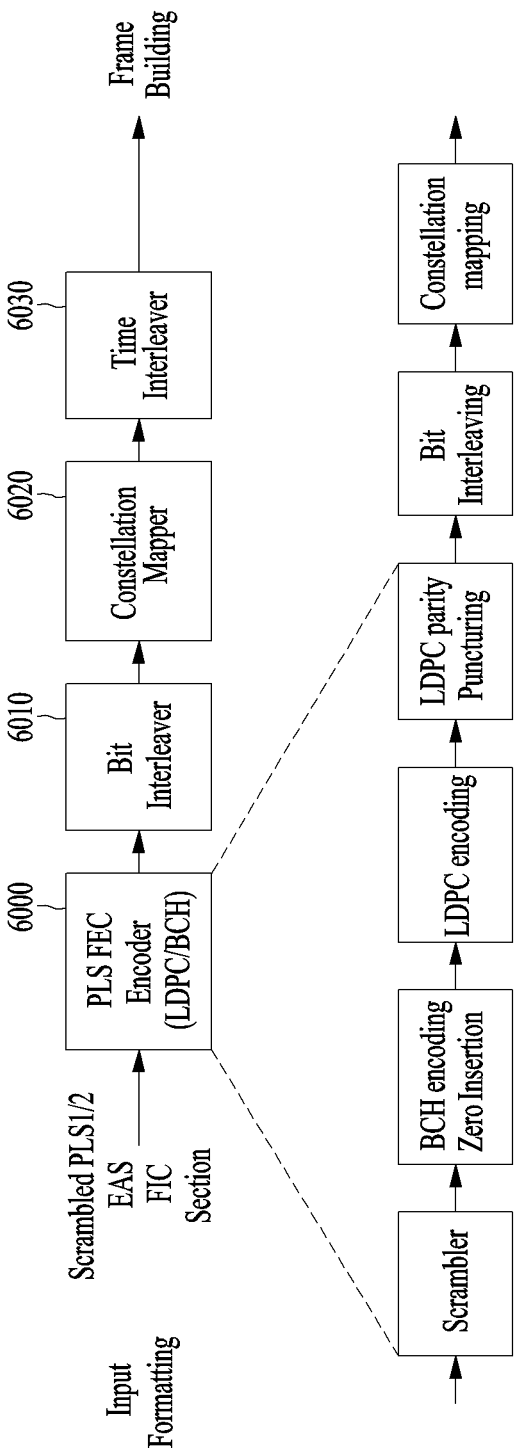
Input Formatting
Scrambled PLS1/2
EAS
FIC
Section
6000
PLS FEC Encoder (LDPC/BCH)
6010
Bit Interleaver
6020
Constellation Mapper
6030
Time Interleaver
Frame Building
Scrambler
BCH encoding Zero Insertion
LDPC encoding
LDPC parity Puncturing
Bit Interleaving
Constellation mapping

FIG. 6

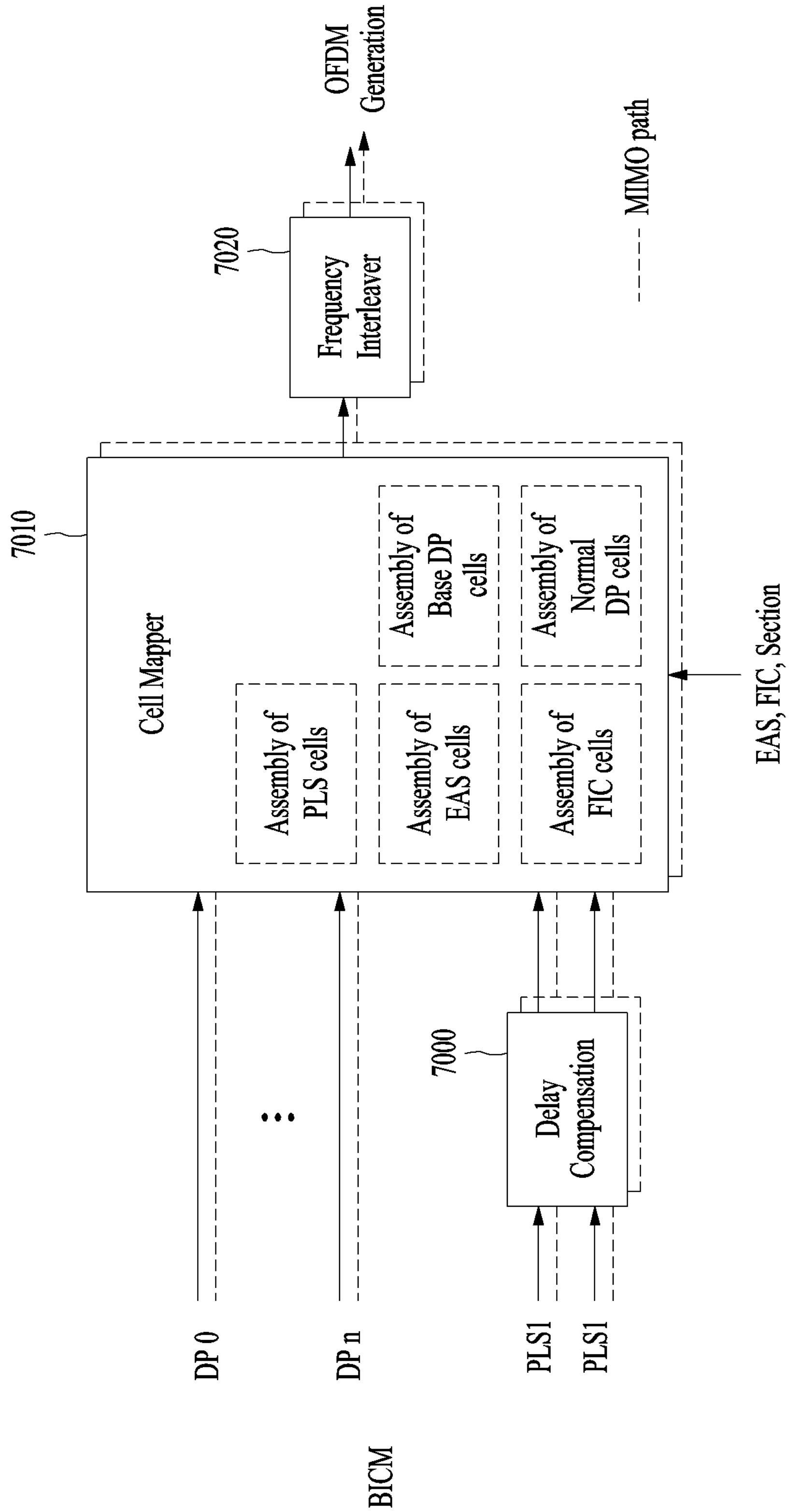
OFDM Generation
MIMO path
7020
Frequency Interleaver
7010
Cell Mapper
Assembly of PLS cells
Assembly of EAS cells
Assembly of FIC cells
Assembly of Base DP cells
Assembly of Normal DP cells
EAS, FIC, Section
7000
Delay Compensation
DP 0
DP n
PLS1
PLS1
BICM

FIG. 7

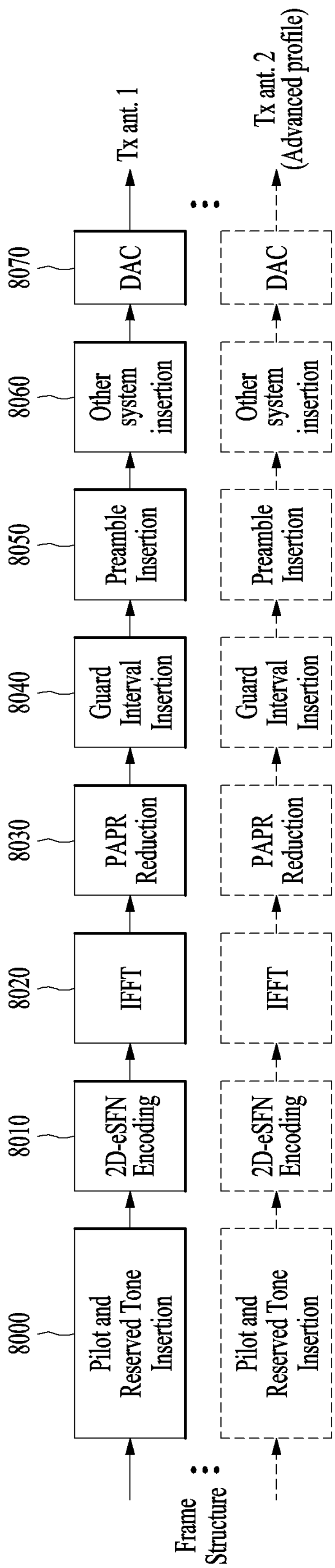
Frame Structure
8000
Pilot and Reserved Tone Insertion
8010
2D-eSFN Encoding
8020
IFFT
8030
PAPR Reduction
8040
Guard Interval Insertion
8050
Preamble Insertion
8060
Other system insertion
8070
DAC
Tx ant. 1
Pilot and Reserved Tone Insertion
2D-eSFN Encoding
IFFT
PAPR Reduction
Guard Interval Insertion
Preamble Insertion
Other system insertion
DAC
Tx ant. 2 (Advanced profile)

FIG. 8

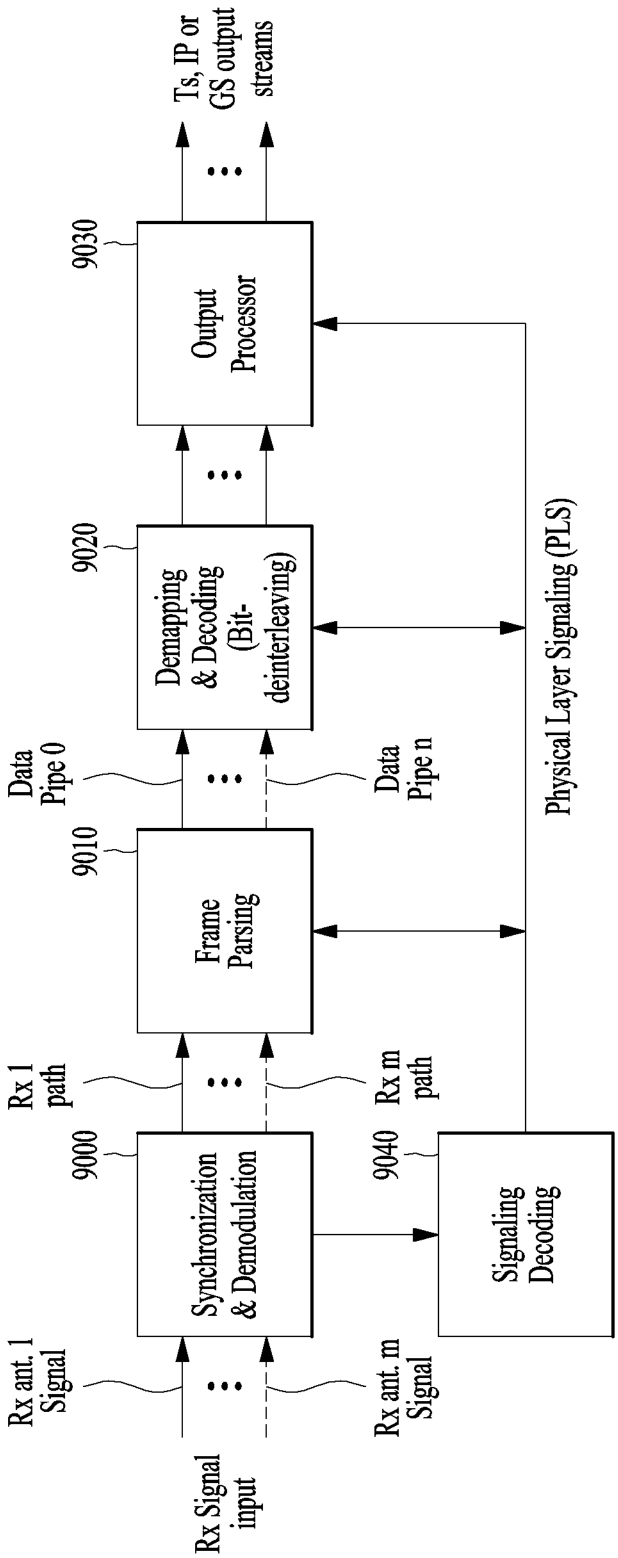
Rx Signal input
Rx ant. 1 Signal
Rx ant. m Signal
9000
Synchronization & Demodulation
Rx 1 path
Rx m path
9010
Frame Parsing
Data Pipe 0
Data Pipe n
9020
Demapping & Decoding (Bit-deinterleaving)
9030
Output Processor
Ts, IP or GS output streams
9040
Signaling Decoding
Physical Layer Signaling (PLS)

FIG. 9

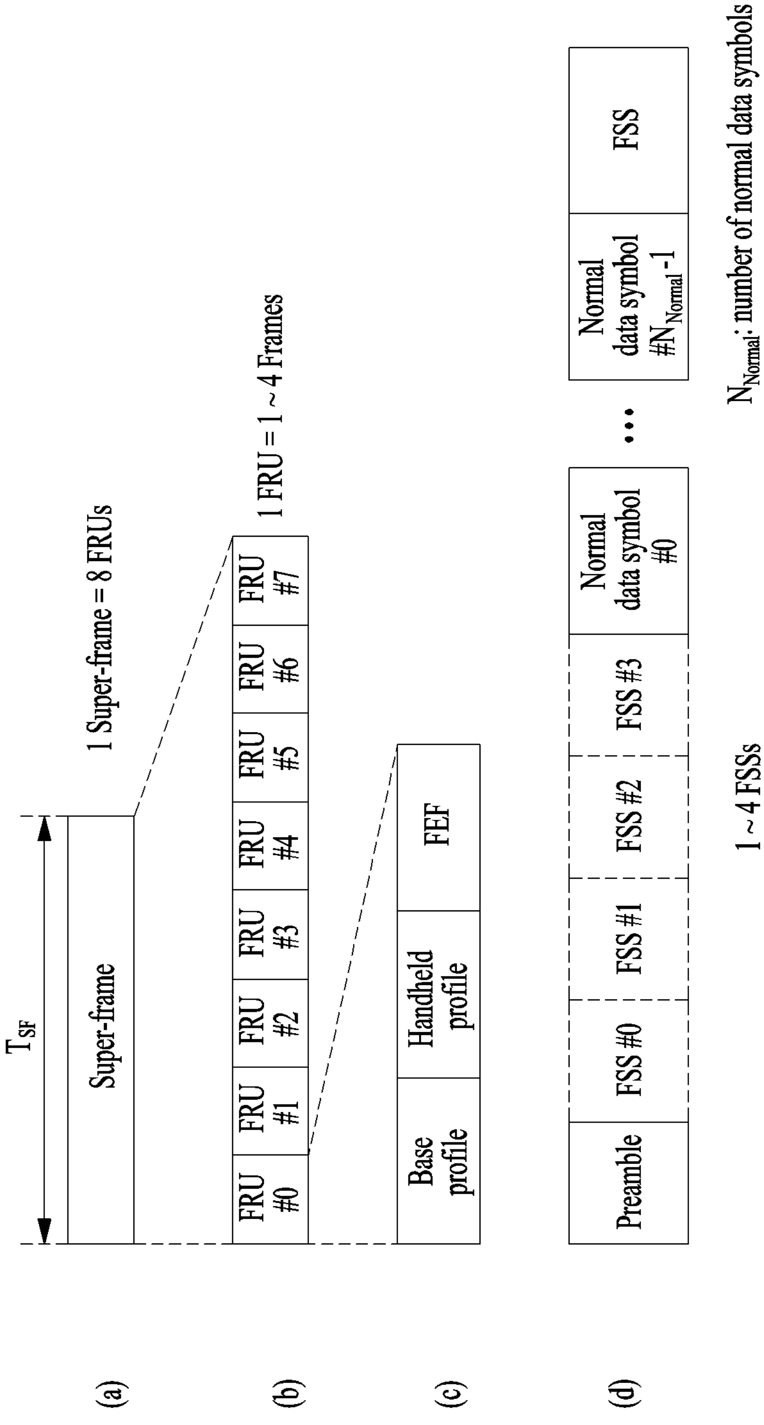
(a)
(b)
(c)
(d)
$T_{SF}$
Super-frame
1 Super-frame = 8 FRUs
FRU #0
FRU #1
FRU #2
FRU #3
FRU #4
FRU #5
FRU #6
FRU #7
1 FRU = 1 ~ 4 Frames
Base profile
Handheld profile
FEF
Preamble
FSS #0
FSS #1
FSS #2
FSS #3
Normal data symbol #0
Normal data symbol #$N_{Normal}$-1
FSS
1 ~ 4 FSSs
$N_{Normal}$: number of normal data symbols

FIG. 10

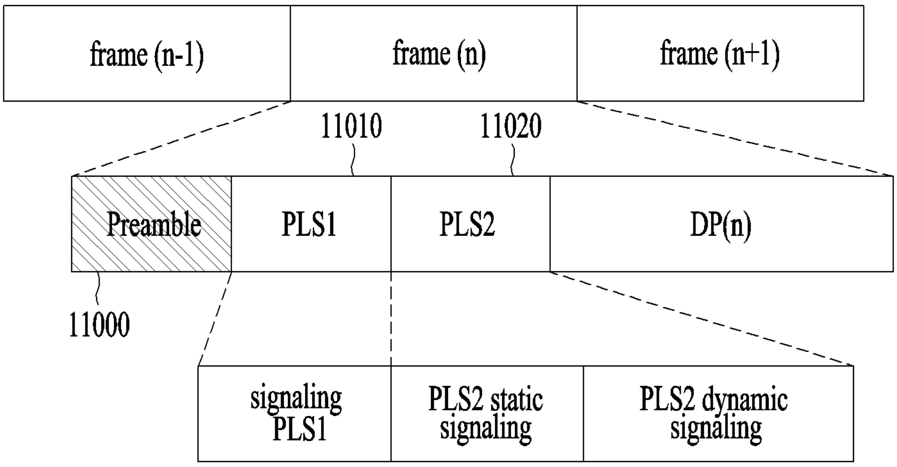


FIG. 11

| Content | Bits |
|---|---|
| PHY_PROFILE | 3 |
| FFT_SIZE | 2 |
| GI_FRACTION | 3 |
| EAC_FLAG | 1 |
| PILOT_MODE | 1 |
| PAPR_FLAG | 1 |
| FRU_CONFIGURE | 3 |
| RESERVED | 7 |

FIG. 12

| Content | Bits |
|---|---|
| PREAMBLE_DATA | 20 |
| NUM_FRAME_FRU | 2 |
| PAYLOAD_TYPE | 3 |
| NUM_FSS | 2 |
| SYSTEM_VERSION | 8 |
| CELL_ID | 16 |
| NETWORK_ID | 16 |
| SYSTEM_ID | 16 |
| for i = 0:3 | |
| FRU_PHY_PROFILE | 3 |
| FRU_FRAME_LENGTH | 2 |
| FRU_GI_FRACTION | 3 |
| RESERVED | 4 |
| end | |
| PLS2_FEC_TYPE | 2 |
| PLS2_MOD | 3 |
| PLS2_SIZE_CELL | 15 |
| PLS2_STAT_SIZE_BIT | 14 |
| PLS2_SYN_SIZE_BIT | 14 |
| PLS2_REP_FLAG | 1 |
| PLS2_REP_SIZE_CELL | 15 |
| PLS2_NEXT_FEC_TYPE | 2 |
| PLS2_NEXT_MODE | 3 |
| PLS2_NEXT_REP_FLAG | 1 |
| PLS2_NEXT_REP_SIZE_CELL | 15 |
| PLS2_NEXT_REP_STAT_SIZE_BIT | 14 |
| PLS2_NEXT_REP_DYN_SIZE_BIT | 14 |
| PLS2_AP_MODE | 2 |
| PLS2_AP_SIZE_CELL | 15 |
| PLS2_NEXT_AP_MODE | 2 |
| PLS2_NEXT_AP_SIZE_CELL | 15 |
| RESERVED | 32 |
| CRC 32 | 32 |

FIG. 13

| Content | Bits |
|---|---|
| FIC_FLAG | 1 |
| AUX_FLAG | 1 |
| NUM_DP | 6 |
| for i = 1: NUM_DP | |
|     DP_ID | 6 |
|     DP_TYPE | 3 |
|     DP_GROUP_ID | 8 |
|     BASE_DP_ID | 6 |
|     DP_FEC_TYPE | 2 |
|     DP_COD | 4 |
|     DP_MOD | 4 |
|     DP_SSD_FLAG | 1 |
|     if PHY_PROFILE = '010' | |
|         DP_MIMO | 3 |
|     end | |
|     DP_TI_TYPE | 1 |
|     DP_TI_LENGTH | 2 |
|     DP_TI_BYPASS | 1 |
|     DP_FRAME_INTERVAL | 2 |
|     DP_FIRST_FRAME_IDX | 5 |
|     DP_NUM_BLOCK_MAX | 10 |
|     DP_PAYLOAD_TYPE | 2 |
|     DP_INBAND_MODE | 2 |
|     DP_PROTOCOL_TYPE | 2 |
|     DP_CRC_MODE | 2 |
|     if DP_PAYLOAD_TYPE = = TS('00') | |
|         DNP_MODE | 2 |
|         ISSY_MODE | 2 |
|         HC_MODE_TS | 2 |
|         if HC_MODE_TS = = '01' or '10' | |
|             PID | 13 |
|         end | |
|     if DP_PAYLOAD_TYPE == IP('01') | |
|         HC_MODE_IP | 2 |
|     end | |
|     RESERVED | 8 |
| end | |
| if FIC_FLAG = = 1 | |
|     FIC_VERSION | 8 |
|     FIC_LENGTH_BYTE | 13 |
|     RESERVED | 8 |
| end | |
| if AUX_FLAG = = 1 | |
|     NUM_AUX | 4 |
|     AUX_CONFIG_RFU | 8 |
|     for - 1 : NUM_AUX | |
|         AUX_STREAM_TYPE | 4 |
|         AUX_PRIVATE_CONF | 28 |
|     end | |
| end | |

# FIG. 14

| Content | | Bit |
|---|---|---|
| FRAME_INDEX | | 5 |
| PLS_CHANGE_COUNTER | | 4 |
| FIC_CHANGE_COUNTER | | 4 |
| RESERVED | | 16 |
| for i = 1: NUM_DP | | |
| | DP_ID<br>DP_START | 6<br>15 (or13) |
| | DP_NUM_BLOCK | 10 |
| end | RESERVED | 8 |
| EAC_FLAG | | 1 |
| EAS_WAKE_UP_VERSION_NUM | | 8 |
| if EAC_FLAG == 1 | | |
| | EAC_LENGTH_BYTE | 12 |
| else | | |
| | EAC_COUNTER | 12 |
| end | | |
| for i=1:NUM_AUX | | |
| | AUX_PRIVATE_DYN | 48 |
| end | | |
| CRC 32 | | 32 |

# FIG. 15

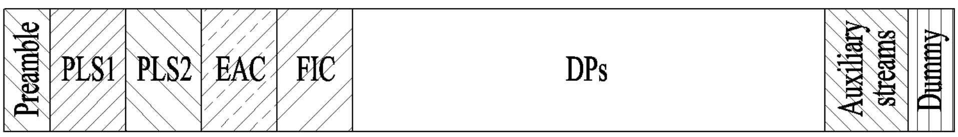

FIG. 16

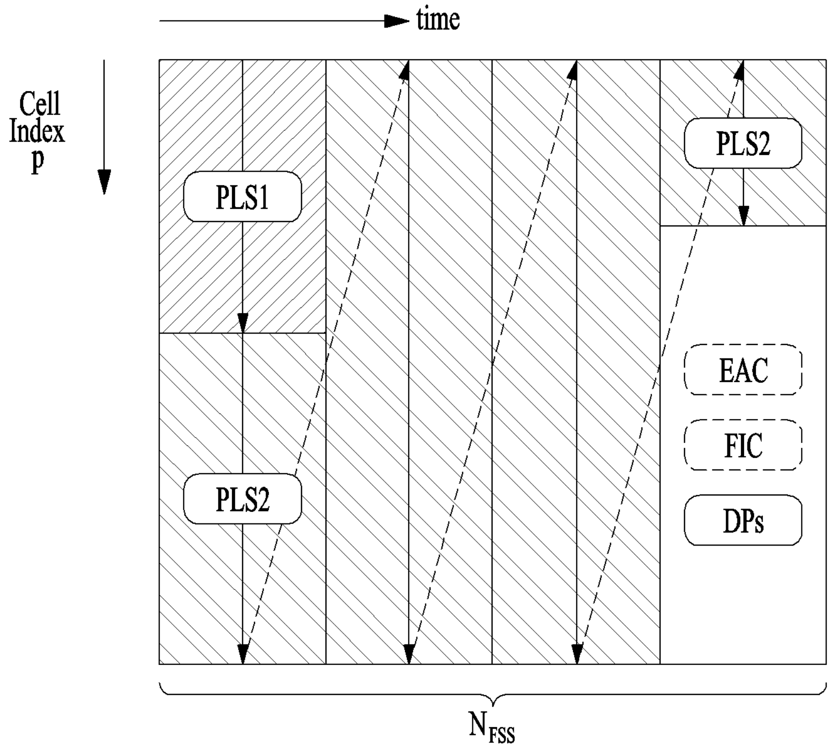
time
Cell Index p
PLS1
PLS2
PLS2
EAC
FIC
DPs
$N_{FSS}$

FIG. 17

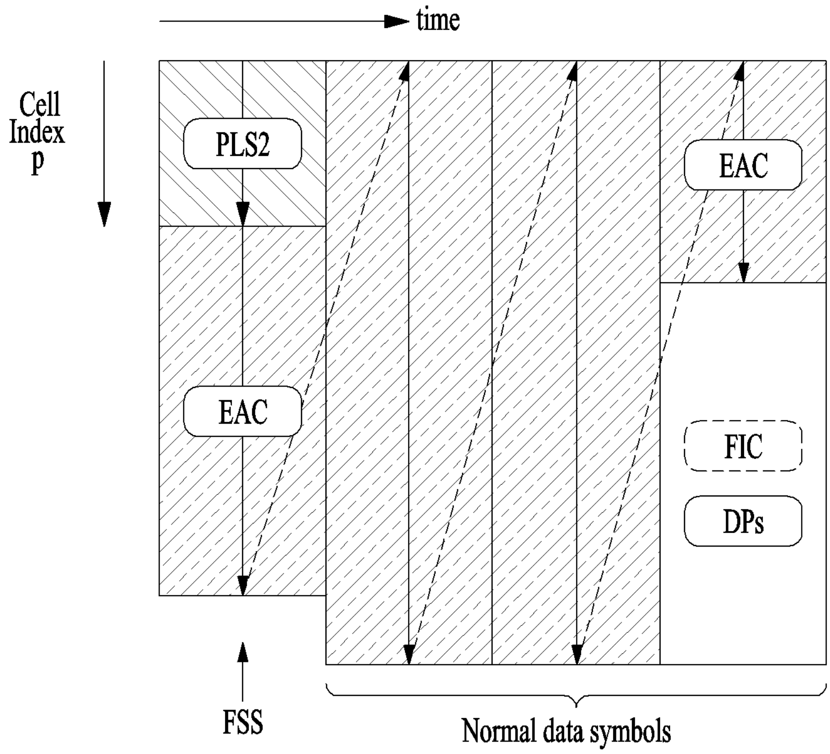
time
Cell Index p
PLS2
EAC
EAC
FIC
DPs
FSS
Normal data symbols

FIG. 18

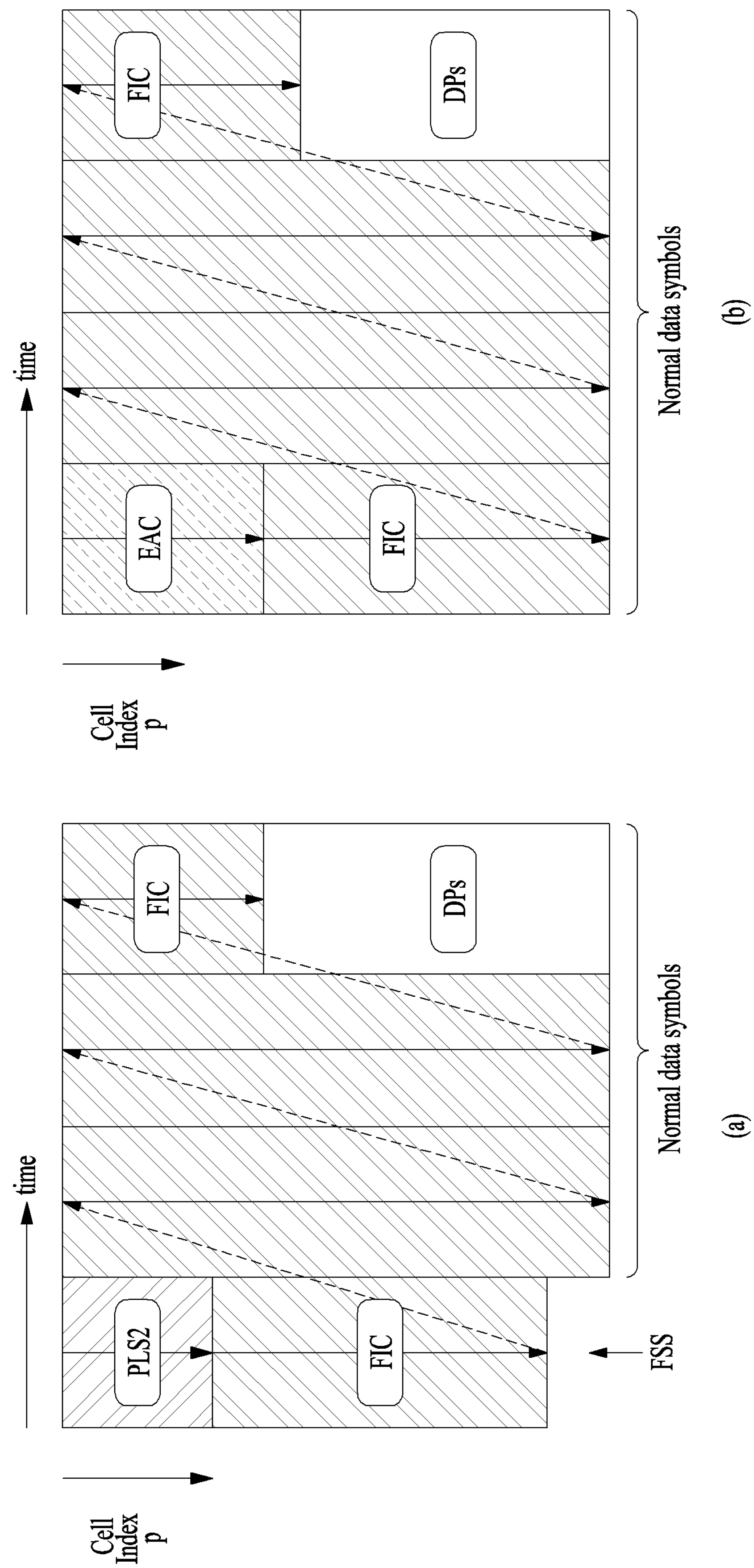
time
Cell Index p
FIC
DPs
EAC
FIC
Normal data symbols
(b)
time
Cell Index p
PLS2
FIC
FSS
FIC
DPs
Normal data symbols
(a)

FIG. 19

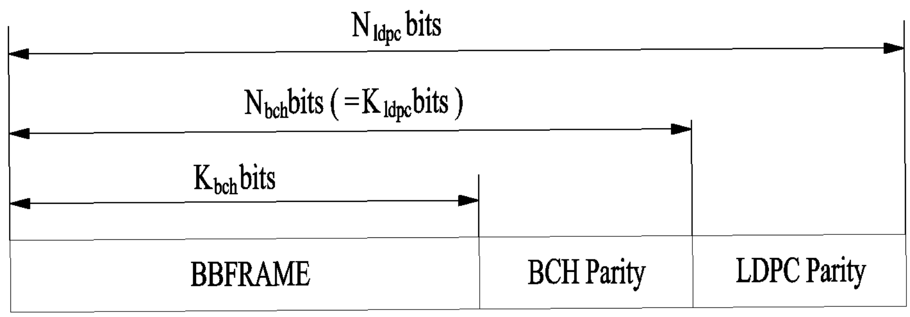
$N_{ldpc}$ bits
$N_{bch}$ bits ( $=K_{ldpc}$ bits )
$K_{bch}$ bits
BBFRAME
BCH Parity
LDPC Parity

FIG. 20

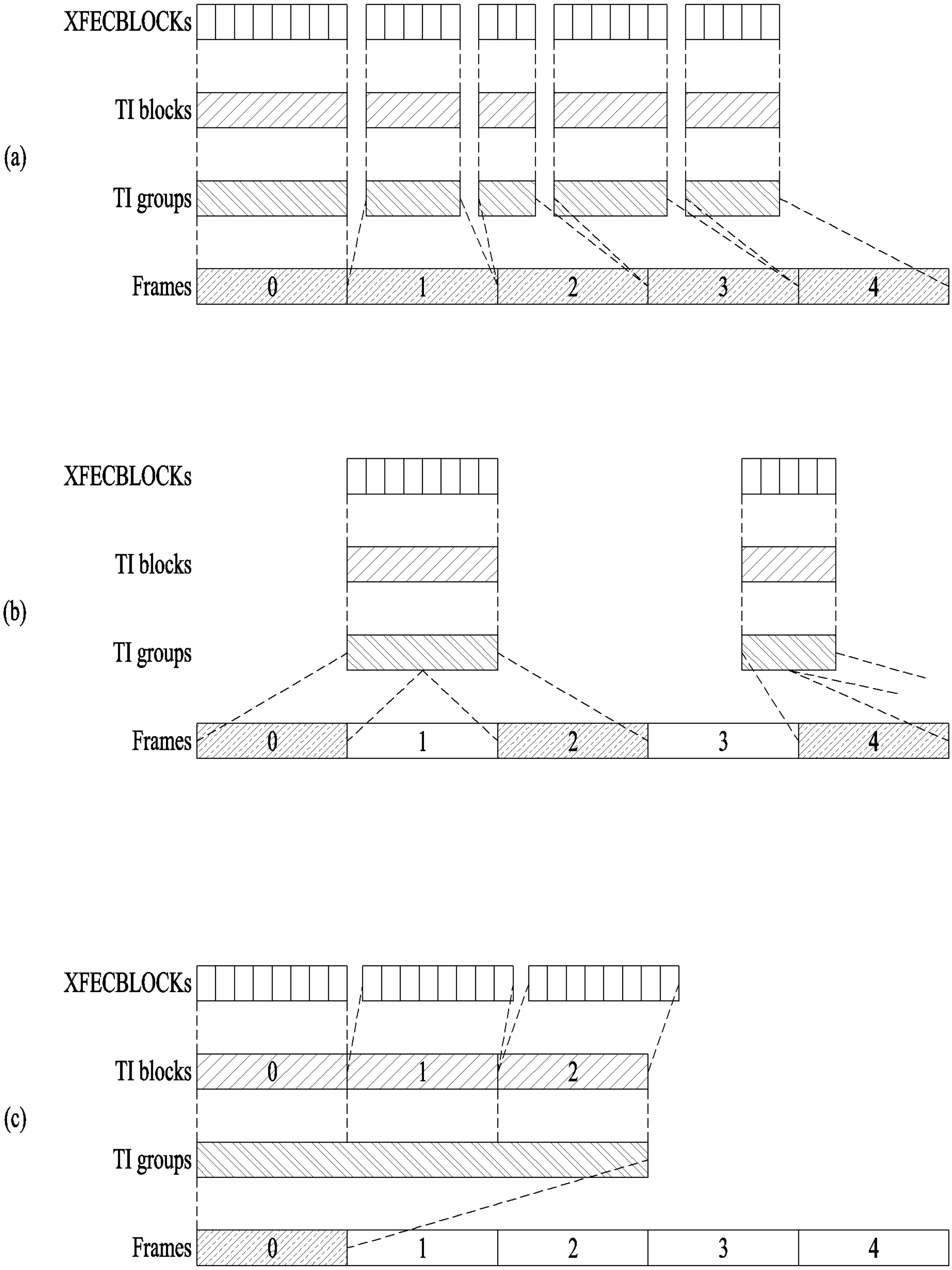
(a)
XFECBLOCKs
TI blocks
TI groups
Frames
0
1
2
3
4
(b)
XFECBLOCKs
TI blocks
TI groups
Frames
0
1
2
3
4
(c)
XFECBLOCKs
TI blocks
0
1
2
TI groups
Frames
0
1
2
3
4

FIG. 21

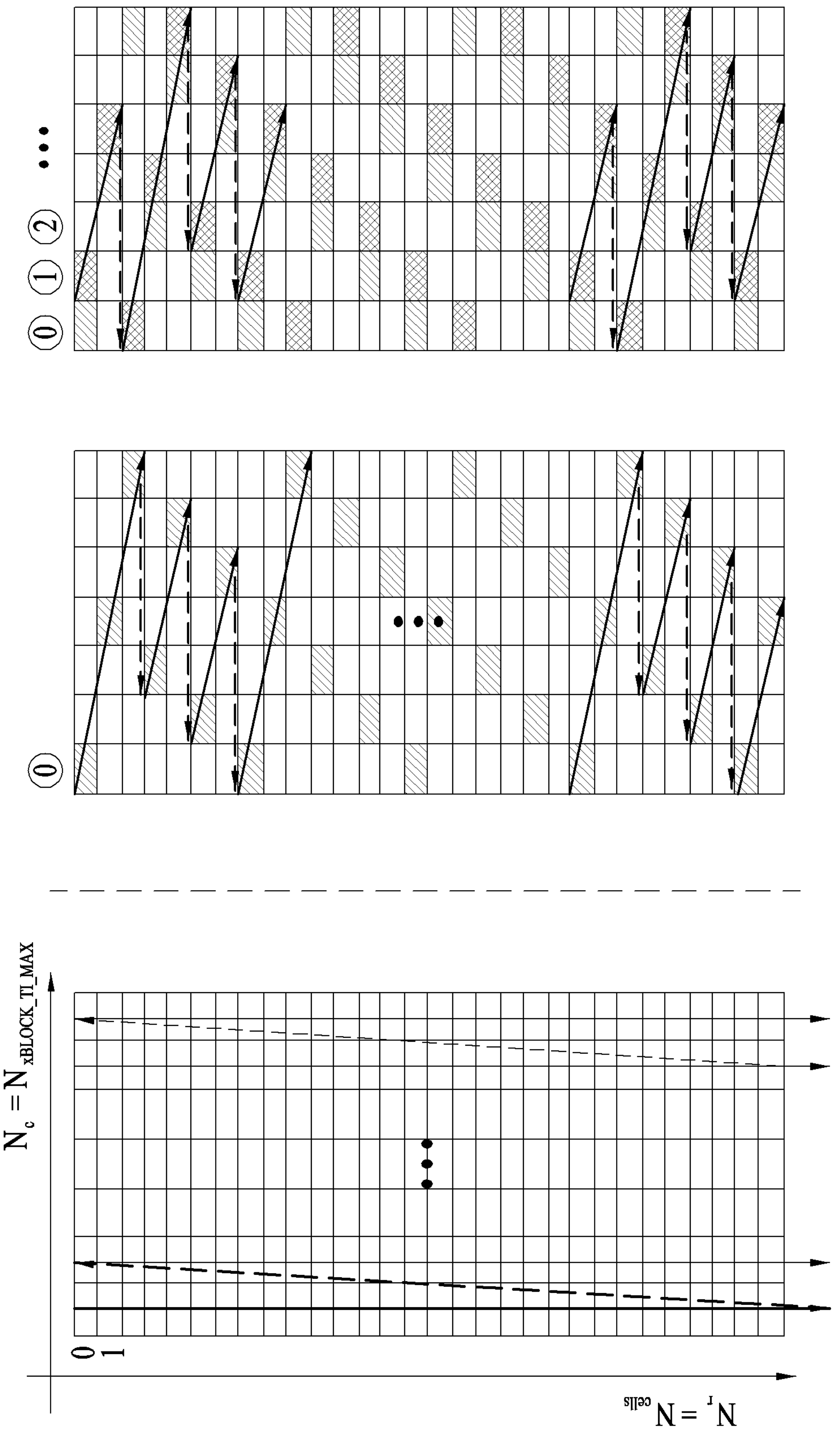


(a)

(b)

FIG. 22

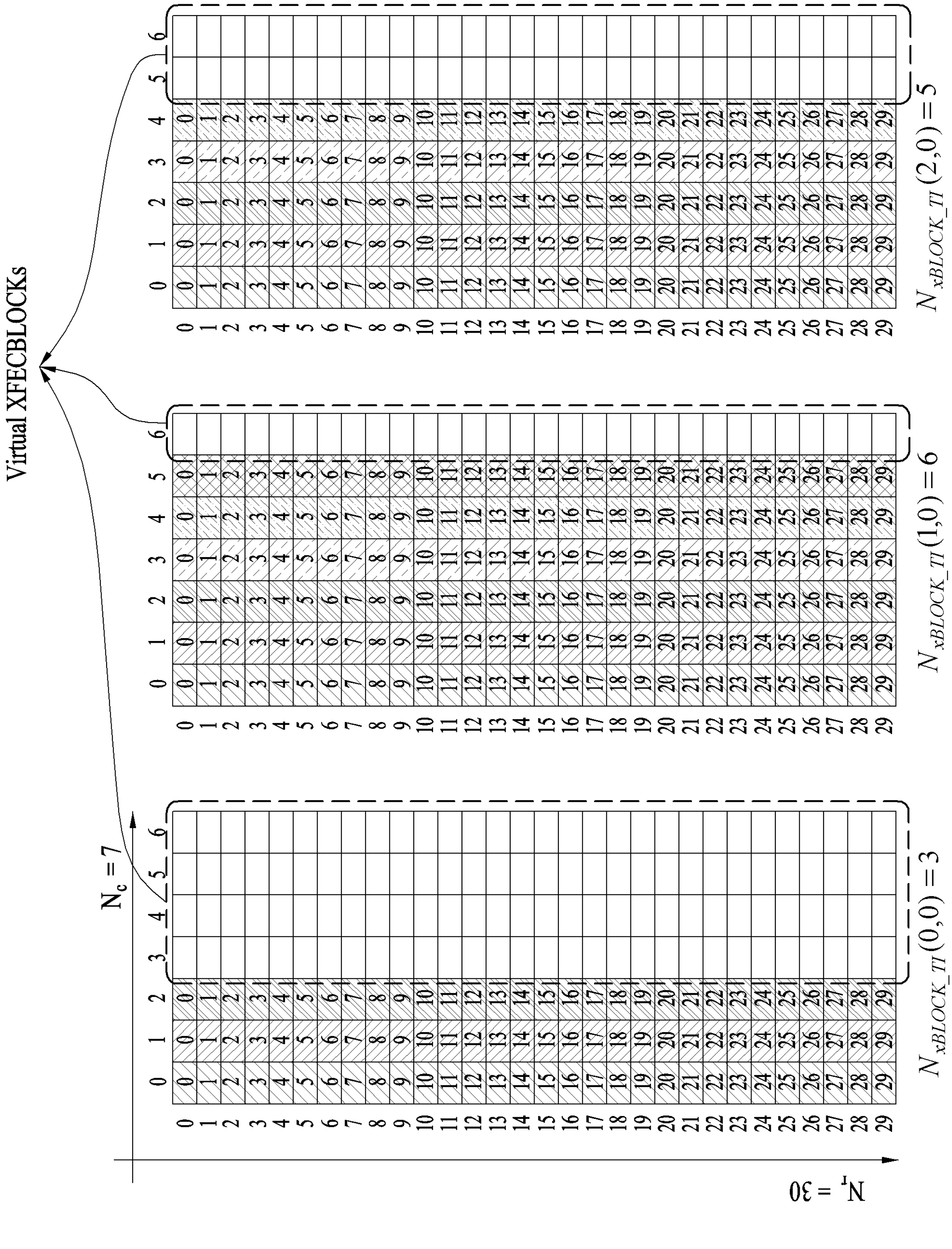
Virtual XFECBLOCKs
$N_c = 7$
$N_r = 30$
$N_{xBLOCK_TI}(0,0) = 3$
$N_{xBLOCK_TI}(1,0) = 6$
$N_{xBLOCK_TI}(2,0) = 5$

FIG. 23

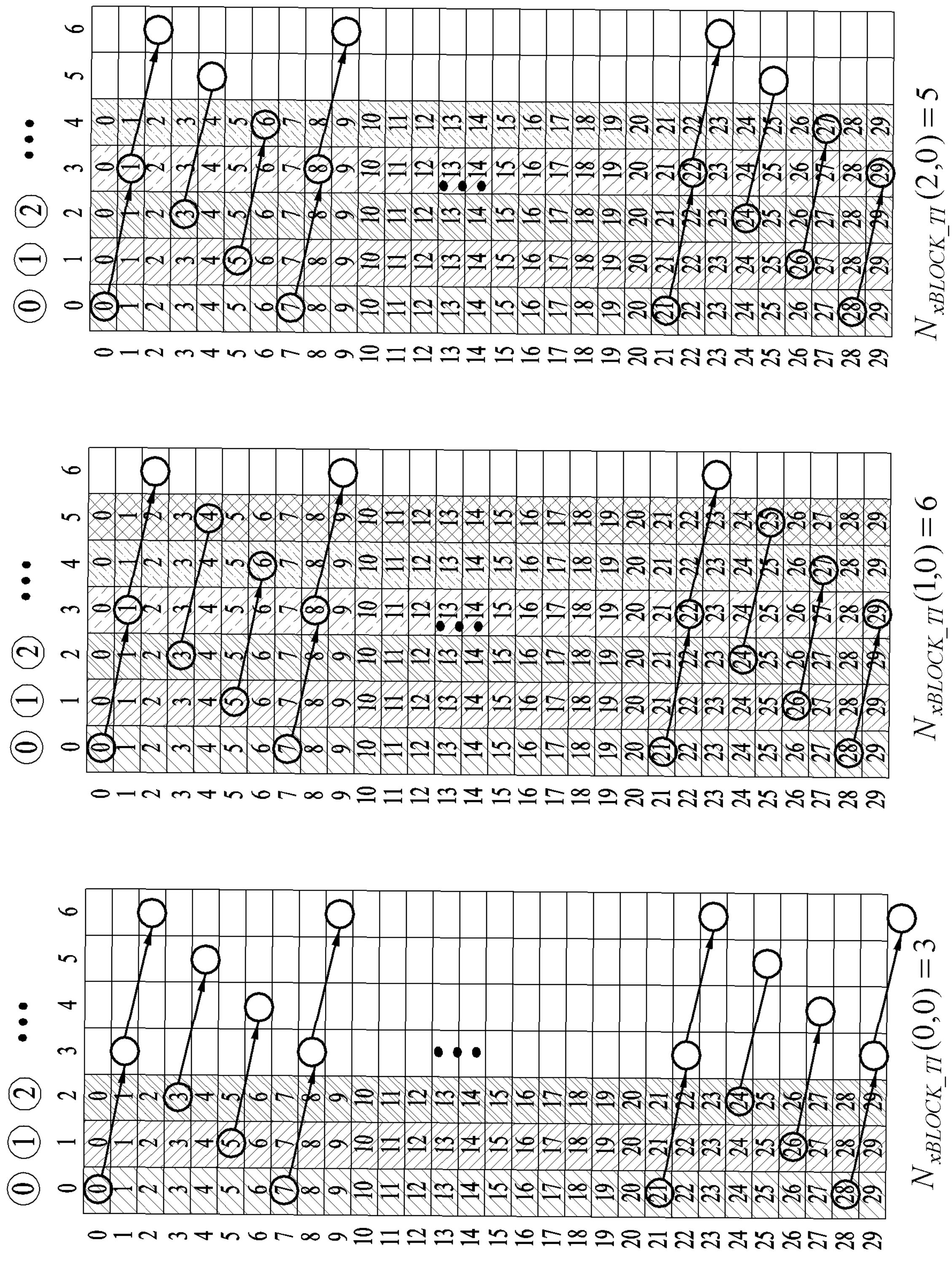

# FIG. 24

| | 0 | 1 | 2 |
|---|---|---|---|
| 0 | 0 | 0 | 22 |
| 1 | 3 | 11 | 25 |
| 2 | 5 | 14 | 27 |
| 3 | 7 | 16 | 29 |
| 4 | 10 | 18 | 1 |
| 5 | 12 | 21 | 3 |
| 6 | 14 | 23 | 6 |
| 7 | 17 | 25 | 8 |
| 8 | 19 | 28 | 10 |
| 9 | 21 | 2 | 13 |
| 10 | 24 | 4 | 15 |
| 11 | 26 | 6 | 17 |
| 12 | 28 | 9 | 20 |
| 13 | 0 | 11 | 22 |
| 14 | 2 | 13 | 24 |
| 15 | 5 | 16 | 27 |
| 16 | 7 | 18 | 29 |
| 17 | 9 | 20 | 1 |
| 18 | 12 | 23 | 3 |
| 19 | 14 | 25 | 5 |
| 20 | 16 | 27 | 8 |
| 21 | 19 | 1 | 10 |
| 22 | 21 | 4 | 12 |
| 23 | 23 | 6 | 15 |
| 24 | 26 | 8 | 17 |
| 25 | 28 | 11 | 19 |
| 26 | 0 | 13 | 22 |
| 27 | 2 | 15 | 24 |
| 28 | 4 | 18 | 26 |
| 29 | 7 | 20 | 29 |

$N_{xBLOCK_TI}(0,0) = 3$

| | 0 | 1 | 2 | 3 | 4 | 5 |
|---|---|---|---|---|---|---|
| 0 | 0 | 5 | 9 | 14 | 20 | 24 |
| 1 | 1 | 6 | 10 | 16 | 21 | 25 |
| 2 | 3 | 7 | 11 | 17 | 22 | 27 |
| 3 | 4 | 8 | 12 | 18 | 23 | 28 |
| 4 | 5 | 9 | 14 | 19 | 25 | 29 |
| 5 | 6 | 10 | 15 | 20 | 26 | 1 |
| 6 | 7 | 12 | 16 | 21 | 27 | 2 |
| 7 | 8 | 13 | 17 | 23 | 28 | 3 |
| 8 | 10 | 14 | 18 | 24 | 29 | 4 |
| 9 | 11 | 15 | 19 | 25 | 0 | 5 |
| 10 | 12 | 16 | 21 | 26 | 1 | 6 |
| 11 | 13 | 17 | 22 | 27 | 2 | 8 |
| 12 | 14 | 19 | 23 | 28 | 3 | 9 |
| 13 | 15 | 20 | 24 | 0 | 4 | 10 |
| 14 | 17 | 21 | 25 | 1 | 6 | 11 |
| 15 | 18 | 22 | 26 | 2 | 7 | 12 |
| 16 | 19 | 23 | 28 | 4 | 8 | 13 |
| 17 | 20 | 24 | 29 | 5 | 9 | 15 |
| 18 | 21 | 26 | 0 | 6 | 10 | 16 |
| 19 | 22 | 27 | 2 | 7 | 11 | 17 |
| 20 | 24 | 28 | 3 | 8 | 13 | 18 |
| 21 | 25 | 29 | 4 | 9 | 14 | 19 |
| 22 | 26 | 0 | 5 | 11 | 15 | 20 |
| 23 | 27 | 1 | 6 | 12 | 16 | 22 |
| 24 | 28 | 2 | 7 | 13 | 17 | 23 |
| 25 | 29 | 3 | 9 | 14 | 18 | 24 |
| 26 | 0 | 4 | 10 | 15 | 20 | 25 |
| 27 | 1 | 5 | 11 | 16 | 21 | 26 |
| 28 | 2 | 7 | 12 | 18 | 22 | 27 |
| 29 | 3 | 8 | 13 | 19 | 23 | 29 |

$N_{xBLOCK_TI}(1,0) = 6$

| | 0 | 1 | 2 | 3 | 4 |
|---|---|---|---|---|---|
| 0 | 0 | 10 | 23 | 6 | 17 |
| 1 | 1 | 12 | 24 | 7 | 18 |
| 2 | 3 | 14 | 25 | 8 | 20 |
| 3 | 5 | 15 | 26 | 9 | 22 |
| 4 | 6 | 16 | 28 | 11 | 23 |
| 5 | 7 | 17 | 0 | 13 | 24 |
| 6 | 8 | 19 | 2 | 14 | 25 |
| 7 | 10 | 21 | 4 | 15 | 27 |
| 8 | 12 | 22 | 5 | 16 | 29 |
| 9 | 13 | 23 | 6 | 18 | 1 |
| 10 | 14 | 24 | 7 | 20 | 3 |
| 11 | 15 | 26 | 9 | 21 | 4 |
| 12 | 17 | 28 | 11 | 22 | 5 |
| 13 | 19 | 29 | 12 | 23 | 6 |
| 14 | 20 | 0 | 13 | 25 | 8 |
| 15 | 21 | 2 | 14 | 27 | 10 |
| 16 | 22 | 3 | 16 | 28 | 11 |
| 17 | 24 | 4 | 18 | 29 | 12 |
| 18 | 26 | 5 | 19 | 1 | 13 |
| 19 | 27 | 7 | 20 | 2 | 15 |
| 20 | 28 | 9 | 21 | 3 | 17 |
| 21 | 29 | 10 | 23 | 4 | 18 |
| 22 | 0 | 11 | 25 | 6 | 19 |
| 23 | 1 | 12 | 26 | 8 | 20 |
| 24 | 2 | 14 | 27 | 9 | 22 |
| 25 | 3 | 16 | 28 | 10 | 24 |
| 26 | 5 | 17 | 0 | 11 | 25 |
| 27 | 7 | 18 | 1 | 13 | 26 |
| 28 | 8 | 19 | 2 | 15 | 27 |
| 29 | 9 | 21 | 4 | 16 | 29 |

$N_{xBLOCK_TI}(2,0) = 5$

FIG. 25

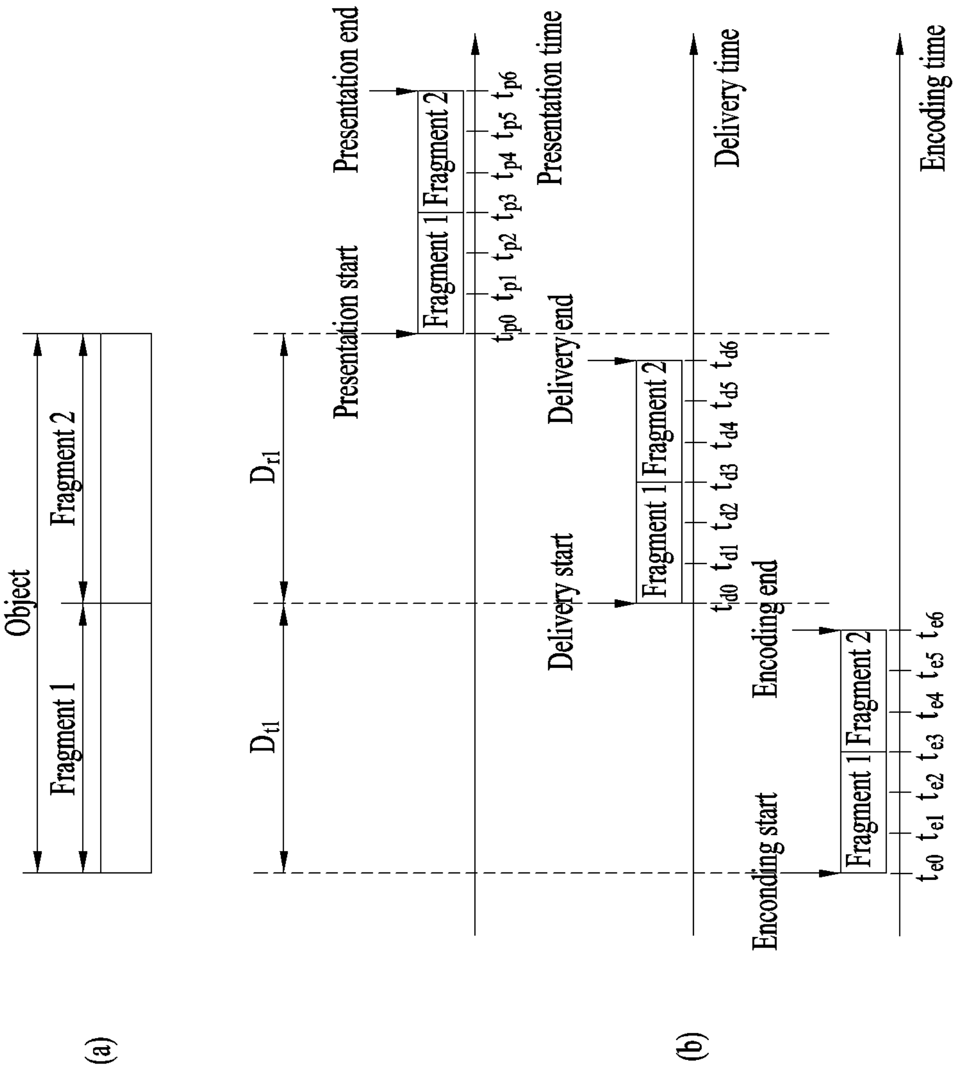
(a)
Object
Fragment 1
Fragment 2
(b)
$D_{t1}$
$D_{r1}$
Presentation start
Presentation end
Fragment 1
Fragment 2
$t_{p0}$ $t_{p1}$ $t_{p2}$ $t_{p3}$ $t_{p4}$ $t_{p5}$ $t_{p6}$
Presentation time
Delivery start
Delivery end
Fragment 1
Fragment 2
$t_{d0}$ $t_{d1}$ $t_{d2}$ $t_{d3}$ $t_{d4}$ $t_{d5}$ $t_{d6}$
Delivery time
Encoding start
Encoding end
Fragment 1
Fragment 2
$t_{e0}$ $t_{e1}$ $t_{e2}$ $t_{e3}$ $t_{e4}$ $t_{e5}$ $t_{e6}$
Encoding time

FIG. 26

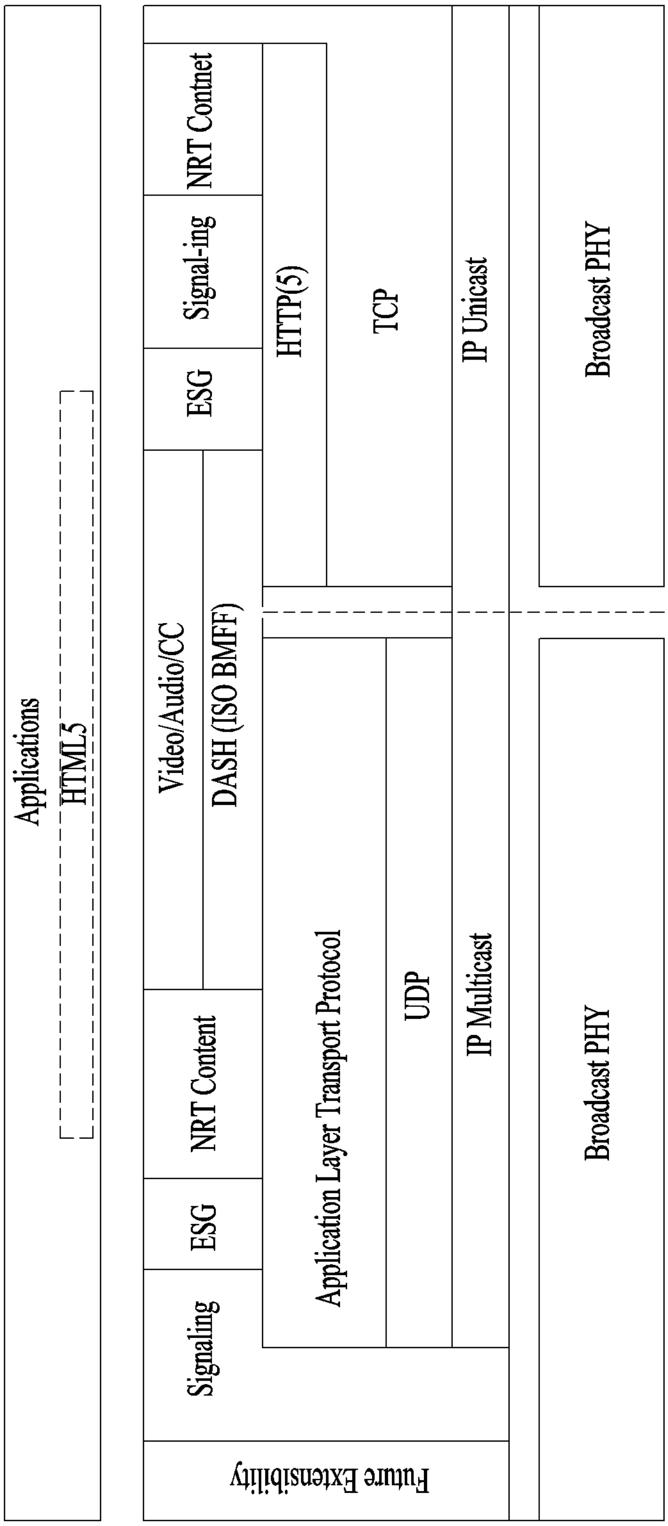
Applications
HTML5
Future Extensibility
Signaling
ESG
NRT Content
Video/Audio/CC
DASH (ISO BMFF)
ESG
Signal-ing
NRT Contnet
Application Layer Transport Protocol
UDP
IP Multicast
HTTP(5)
TCP
IP Unicast
Broadcast PHY
Broadcast PHY

FIG. 27

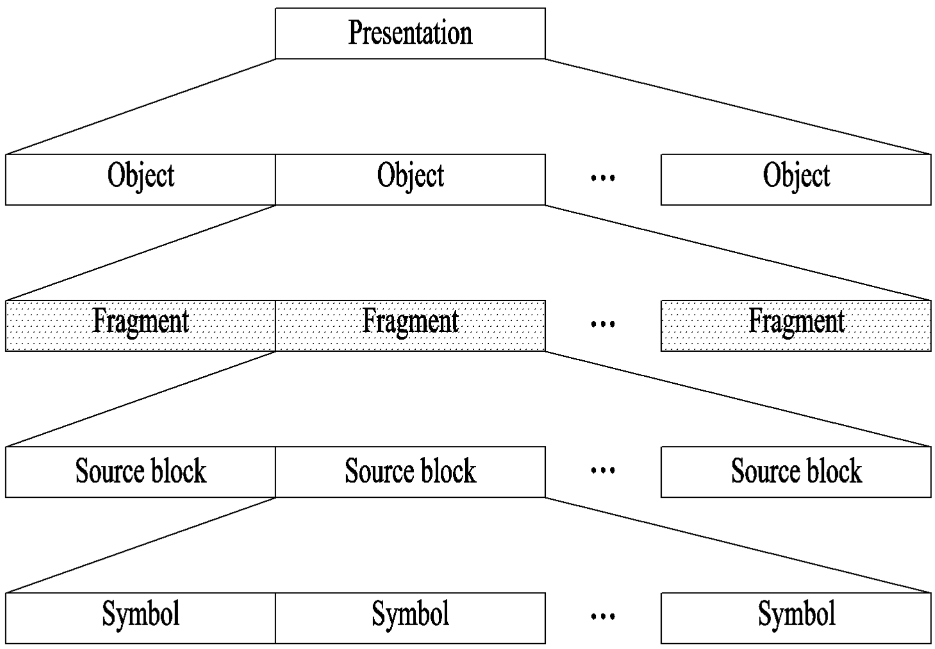
Presentation
Object
Object
...
Object
Fragment
Fragment
...
Fragment
Source block
Source block
...
Source block
Symbol
Symbol
...
Symbol

FIG. 28

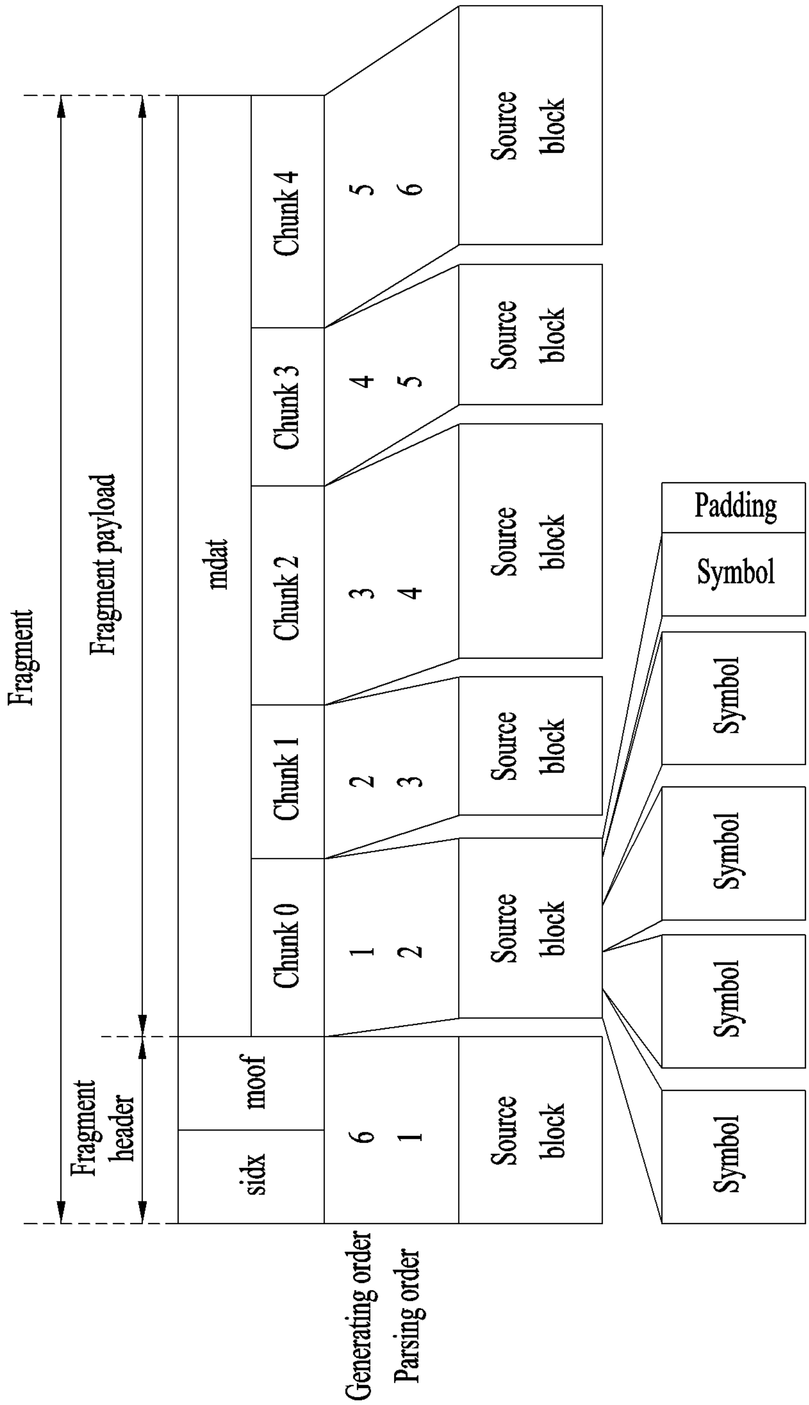
Fragment
Fragment header
Fragment payload
sidx
moof
mdat
Chunk 0
Chunk 1
Chunk 2
Chunk 3
Chunk 4
Generating order
Parsing order
6
1
1
2
2
3
3
4
4
5
5
6
Source block
Source block
Source block
Source block
Source block
Source block
Symbol
Symbol
Symbol
Symbol
Symbol
Padding

FIG. 29

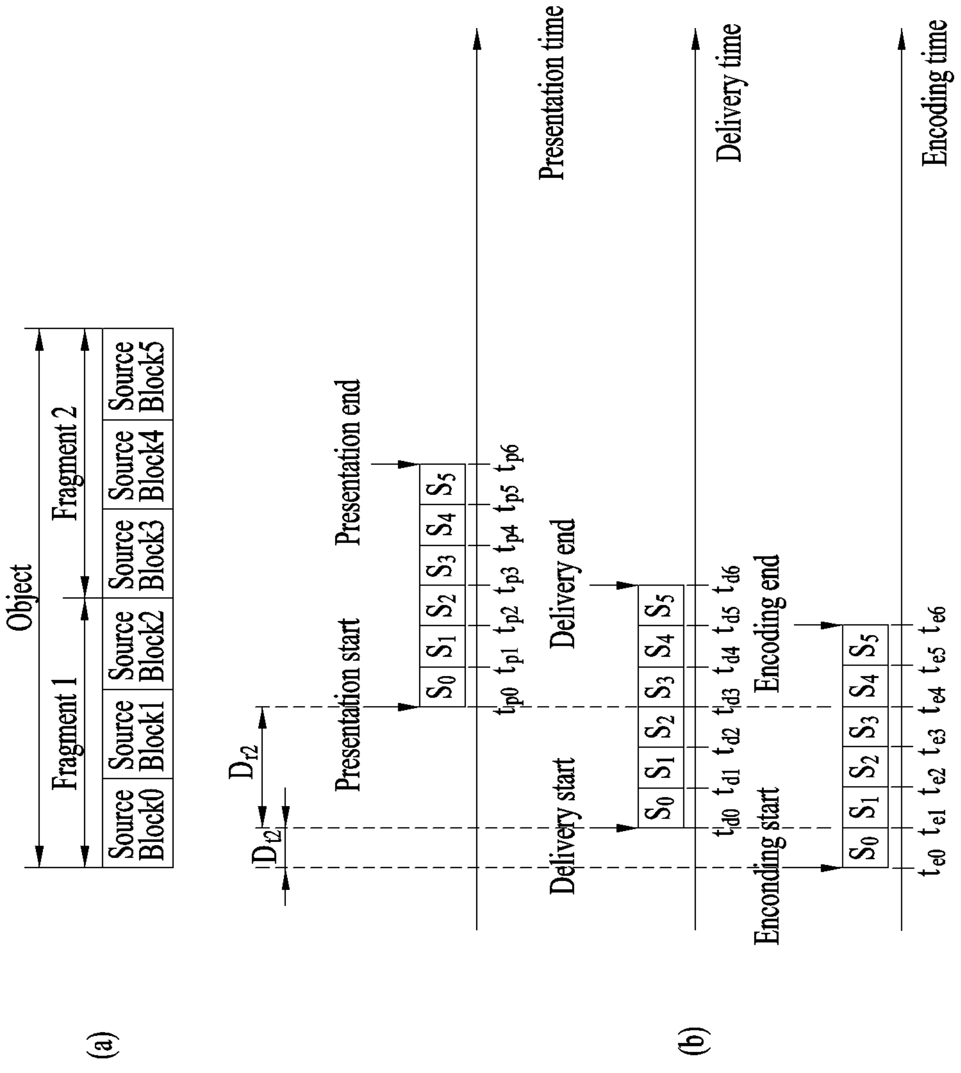
(a)
Object
Fragment 1
Fragment 2
Source Block0
Source Block1
Source Block2
Source Block3
Source Block4
Source Block5
(b)
$D_{t2}$
$D_{f2}$
Presentation start
Presentation end
Presentation time
$S_0$ $S_1$ $S_2$ $S_3$ $S_4$ $S_5$
$t_{p0}$ $t_{p1}$ $t_{p2}$ $t_{p3}$ $t_{p4}$ $t_{p5}$ $t_{p6}$
Delivery start
Delivery end
Delivery time
$t_{d0}$ $t_{d1}$ $t_{d2}$ $t_{d3}$ $t_{d4}$ $t_{d5}$ $t_{d6}$
Enconding start
Encoding end
Encoding time
$t_{e0}$ $t_{e1}$ $t_{e2}$ $t_{e3}$ $t_{e4}$ $t_{e5}$ $t_{e6}$

FIG. 30

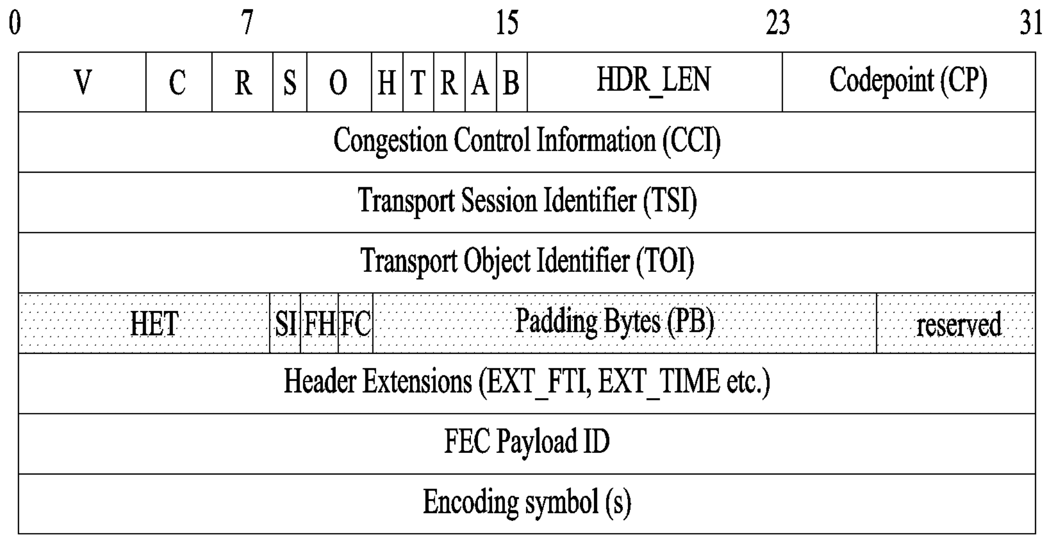
0
7
15
23
31
V
C
R
S
O
H
T
R
A
B
HDR_LEN
Codepoint (CP)
Congestion Control Information (CCI)
Transport Session Identifier (TSI)
Transport Object Identifier (TOI)
HET
SI
FH
FC
Padding Bytes (PB)
reserved
Header Extensions (EXT_FTI, EXT_TIME etc.)
FEC Payload ID
Encoding symbol (s)

FIG. 31

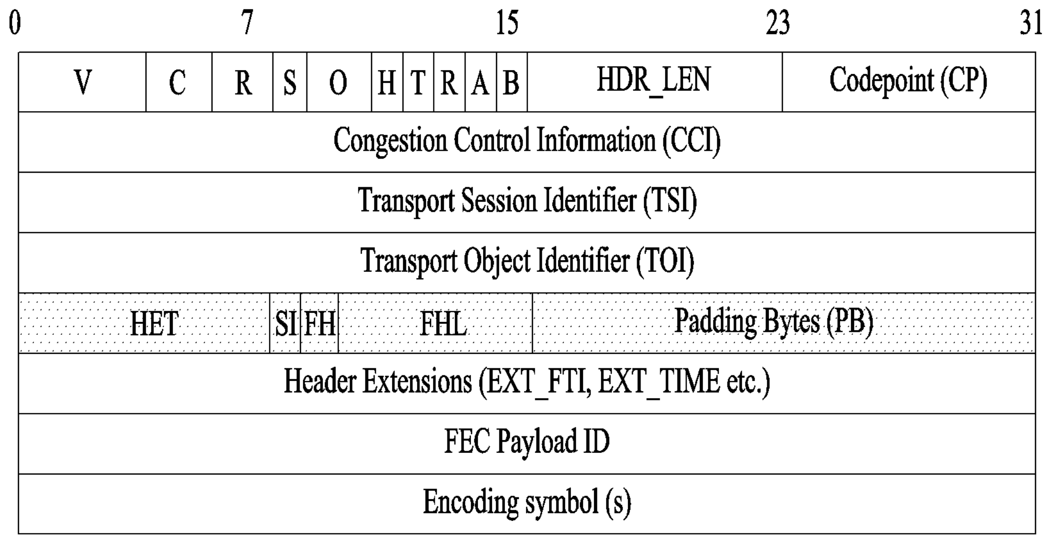
0
7
15
23
31
V
C
R
S
O
H
T
R
A
B
HDR_LEN
Codepoint (CP)
Congestion Control Information (CCI)
Transport Session Identifier (TSI)
Transport Object Identifier (TOI)
HET
SI
FH
FHL
Padding Bytes (PB)
Header Extensions (EXT_FTI, EXT_TIME etc.)
FEC Payload ID
Encoding symbol (s)

FIG. 32

| Element of Attribute name | type | Use |
|---|---|---|
| FDT | | |
| @ Expires | string | M |
| @ Complete | boolen | O |
| @ Content-Type | string | O |
| @ Content-Encoding | string | O |
| @ FEC-OTI-FEC-Encoding-ID | unsignedLong | O |
| @ FEC-OTI-FEC-Instance-ID | unsignedLong | O |
| @ FEC-OTI-Maximum-Source-Block-Length | unsignedLong | O |
| @ FEC-OTI-Encoding-Symbol-Length | unsignedLong | O |
| @ FEC-OTI-Max-Number-of-Encoding-Symbols | unsignedLong | O |
| @ FEC-OTI-Scheme-Specific-Info | unsignedLong | O |
| @ Real-Time-Support | boolen | O |
| File | | O...N |
| @ Content-Location | string | M |
| @ TOI | positiveInteger | M |
| @ Complete | boolen | O |
| @ Content-Type | string | O |
| @ Content-Encoding | string | O |
| @ FEC-OTI-FEC-Encoding-ID | unsignedByte | O |
| @ FEC-OTI-FEC-Instance-ID | unsignedLong | O |
| @ FEC-OTI-Maximum-Source-Block-Length | unsignedLong | O |
| @ FEC-OTI-Encoding-Symbol-Length | unsignedLong | O |
| @ FEC-OTI-Max-Number-of-Encoding -Symbols | unsignedLong | O |
| @ FEC-OTI-Scheme-Specific-Info | base64Binary | O |
| @ Real-Time-Support | boolen | O |

FIG. 33

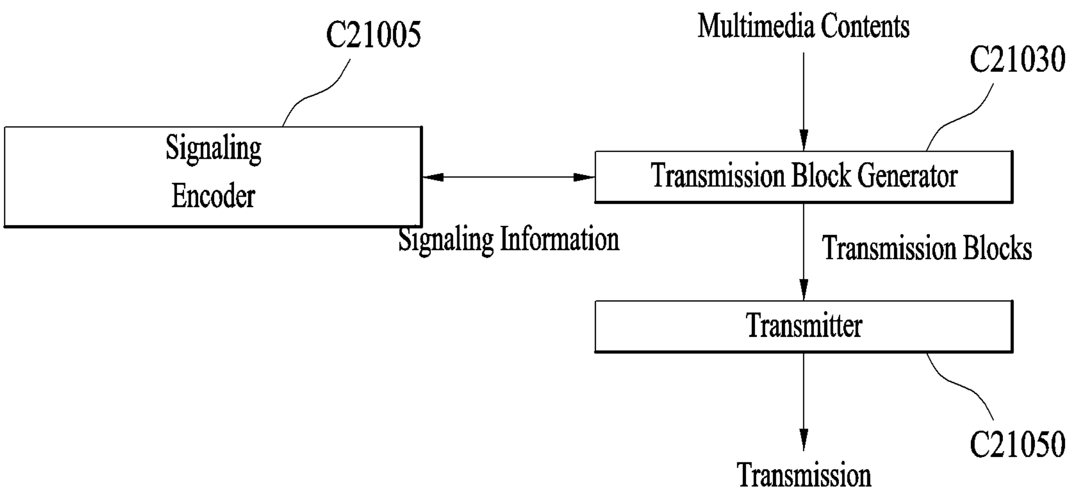
C21005
Signaling
Encoder
Signaling Information
Multimedia Contents
C21030
Transmission Block Generator
Transmission Blocks
Transmitter
C21050
Transmission

FIG. 34

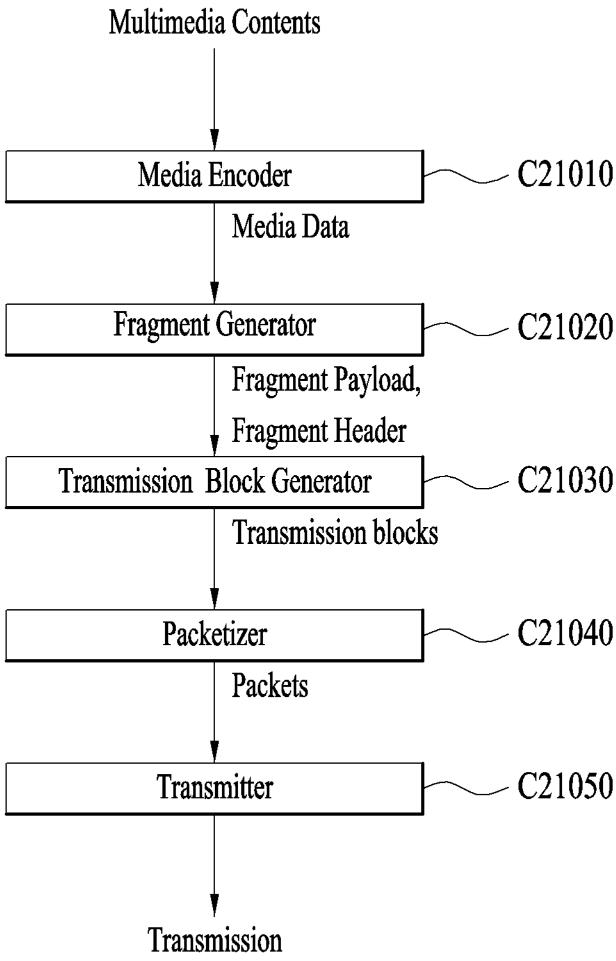
Multimedia Contents
Media Encoder
C21010
Media Data
Fragment Generator
C21020
Fragment Payload,
Fragment Header
Transmission Block Generator
C21030
Transmission blocks
Packetizer
C21040
Packets
Transmitter
C21050
Transmission

FIG. 35

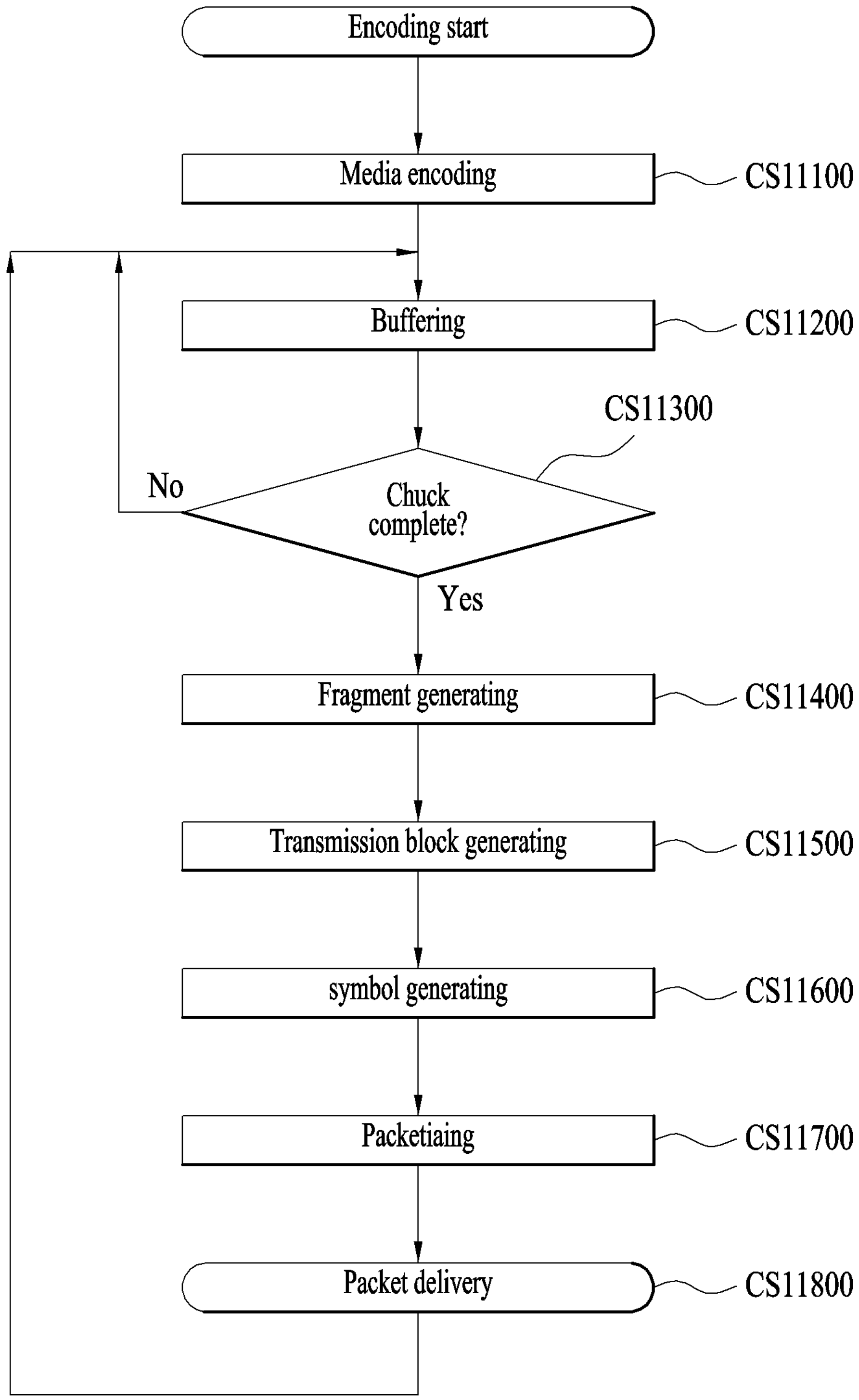
Encoding start
Media encoding
CS11100
Buffering
CS11200
CS11300
No
Chuck complete?
Yes
Fragment generating
CS11400
Transmission block generating
CS11500
symbol generating
CS11600
Packetiaing
CS11700
Packet delivery
CS11800

FIG. 36

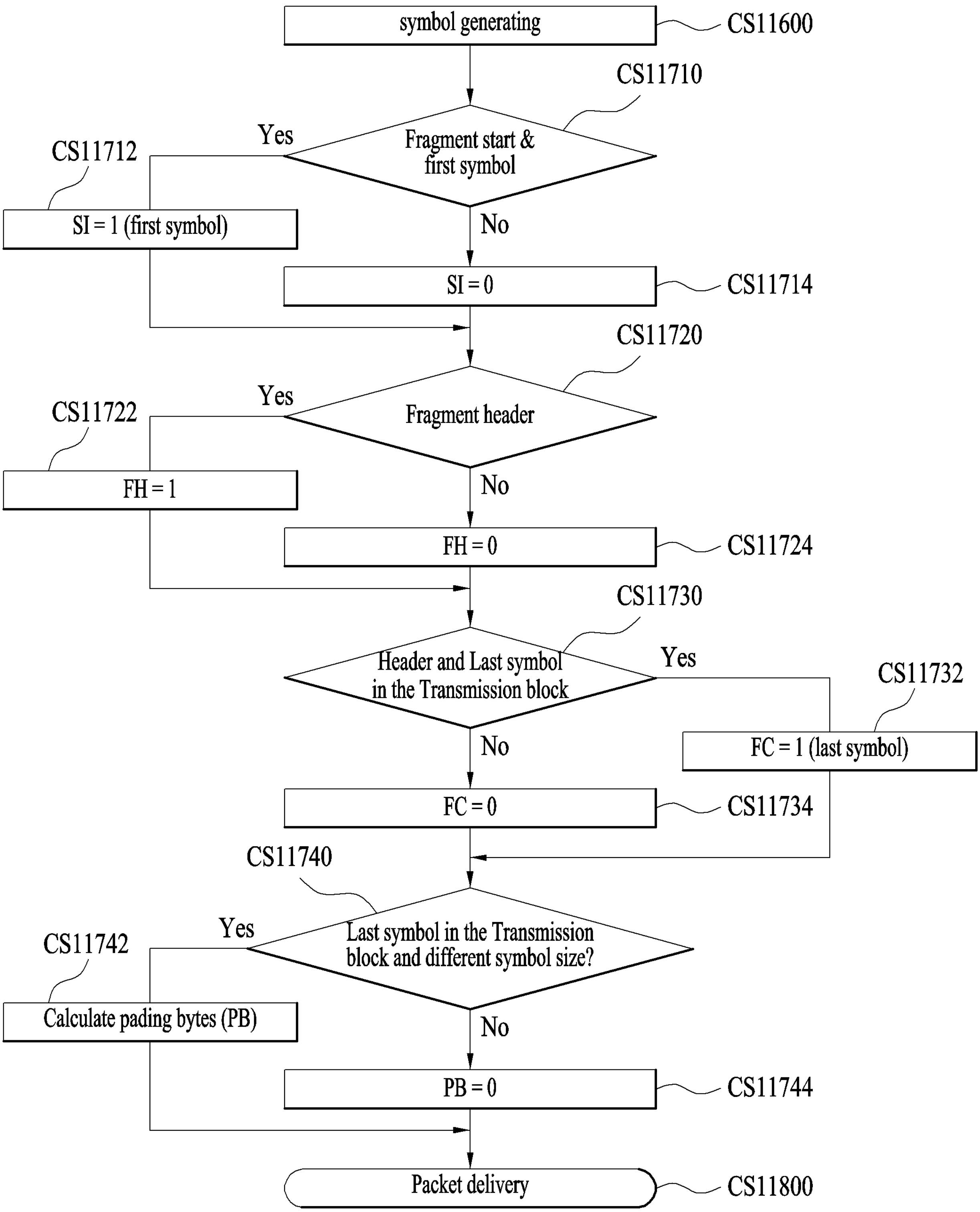
symbol generating
CS11600
CS11710
Fragment start & first symbol
Yes
CS11712
SI = 1 (first symbol)
No
SI = 0
CS11714
CS11720
Fragment header
Yes
CS11722
FH = 1
No
FH = 0
CS11724
CS11730
Header and Last symbol in the Transmission block
Yes
CS11732
FC = 1 (last symbol)
No
FC = 0
CS11734
CS11740
Last symbol in the Transmission block and different symbol size?
Yes
CS11742
Calculate pading bytes (PB)
No
PB = 0
CS11744
Packet delivery
CS11800

FIG. 37

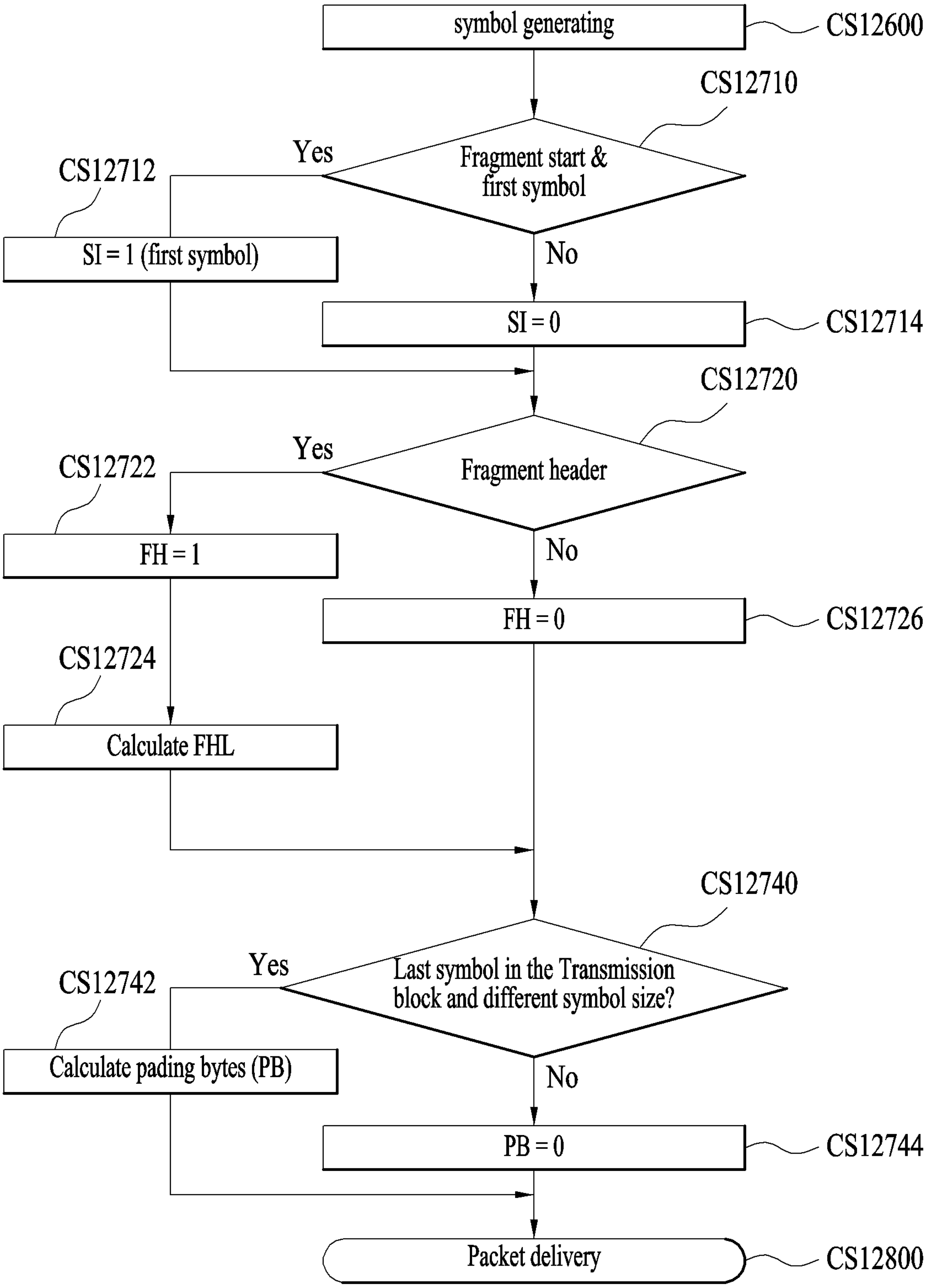
symbol generating
CS12600
CS12710
Fragment start & first symbol
Yes
No
CS12712
SI = 1 (first symbol)
SI = 0
CS12714
CS12720
Fragment header
Yes
No
CS12722
FH = 1
FH = 0
CS12726
CS12724
Calculate FHL
CS12740
Last symbol in the Transmission block and different symbol size?
Yes
No
CS12742
Calculate pading bytes (PB)
PB = 0
CS12744
Packet delivery
CS12800

FIG. 38

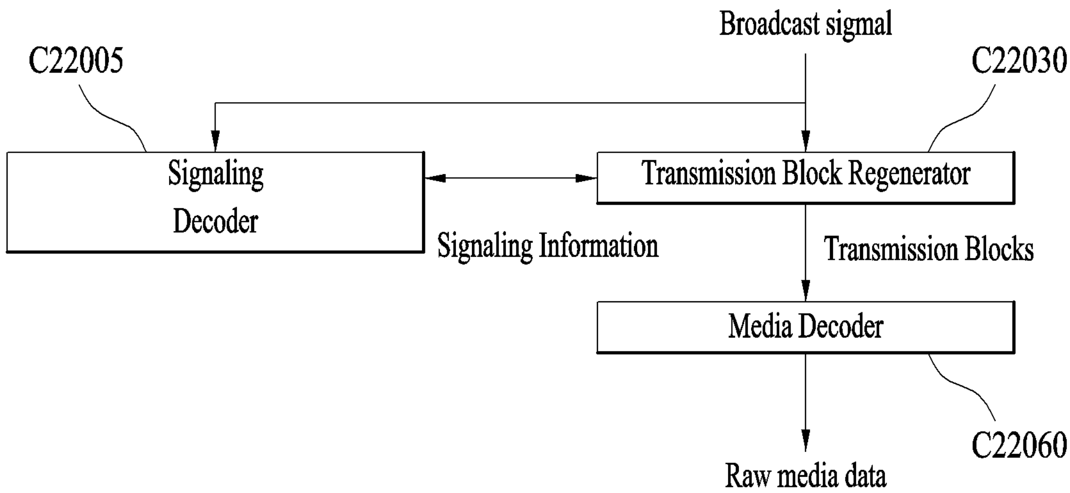
Broadcast sigmal
C22005
C22030
Signaling
Decoder
Transmission Block Regenerator
Signaling Information
Transmission Blocks
Media Decoder
C22060
Raw media data

FIG. 39

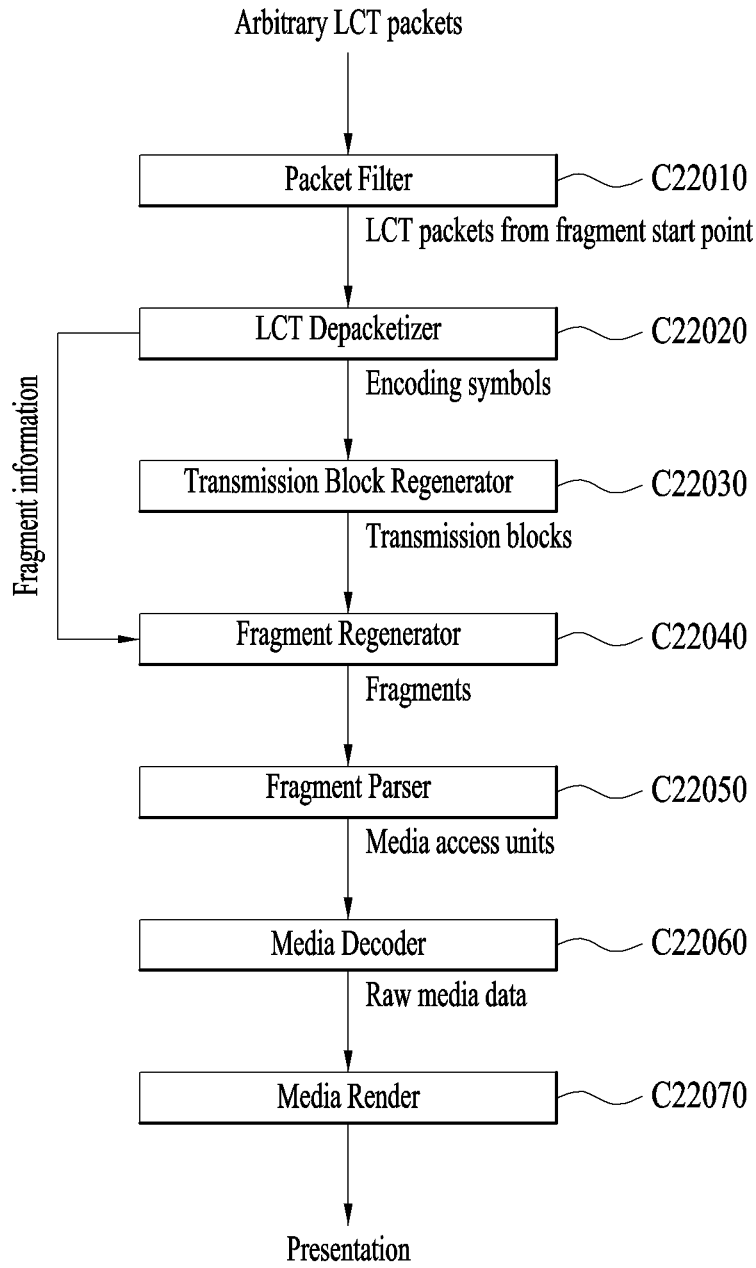
Arbitrary LCT packets
Packet Filter
C22010
LCT packets from fragment start point
LCT Depacketizer
C22020
Encoding symbols
Transmission Block Regenerator
C22030
Transmission blocks
Fragment Regenerator
C22040
Fragment information
Fragments
Fragment Parser
C22050
Media access units
Media Decoder
C22060
Raw media data
Media Render
C22070
Presentation

FIG. 40

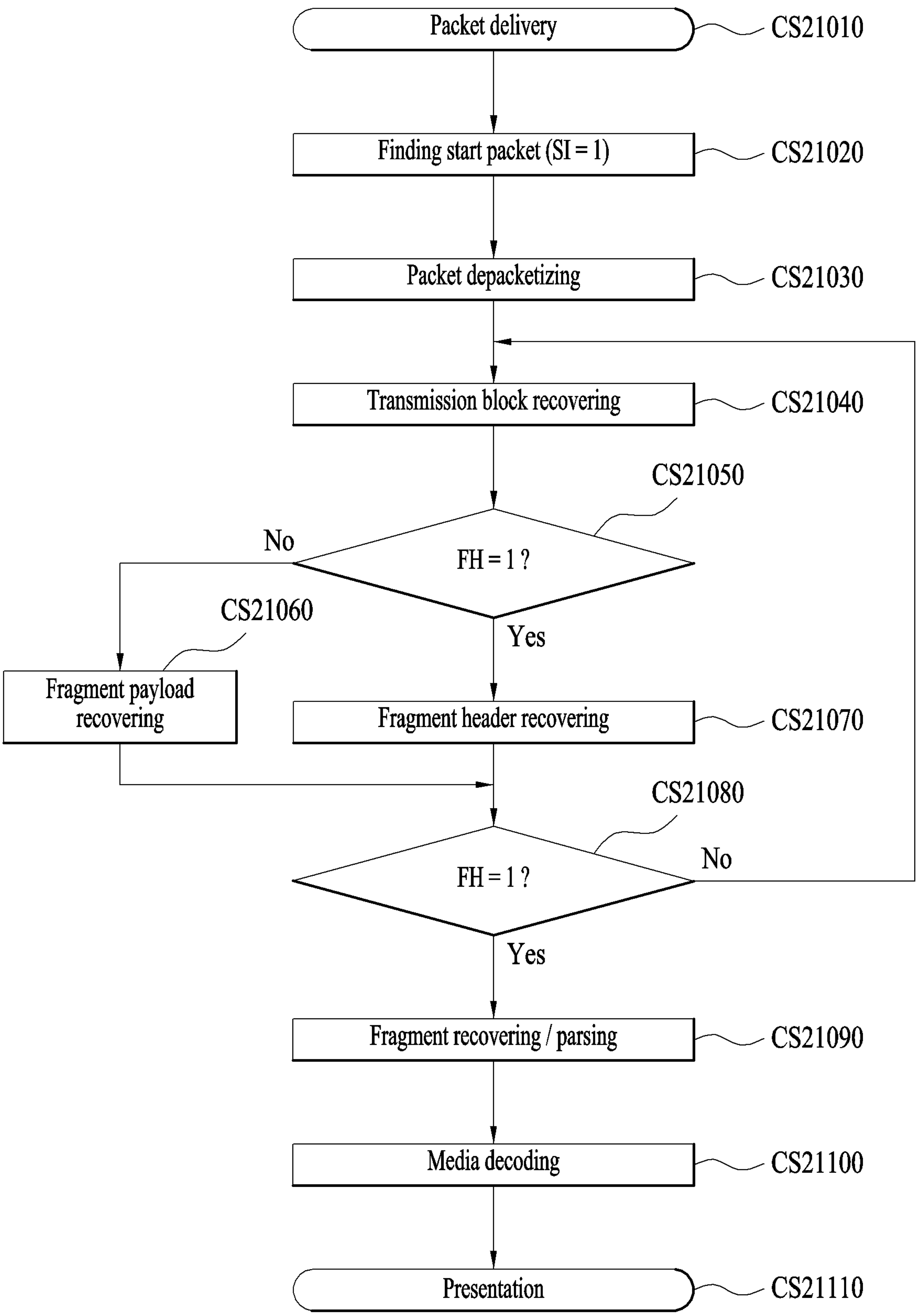
Packet delivery
CS21010
Finding start packet (SI = 1)
CS21020
Packet depacketizing
CS21030
Transmission block recovering
CS21040
CS21050
FH = 1 ?
No
Yes
CS21060
Fragment payload recovering
Fragment header recovering
CS21070
CS21080
FH = 1 ?
No
Yes
Fragment recovering / parsing
CS21090
Media decoding
CS21100
Presentation
CS21110

FIG. 41

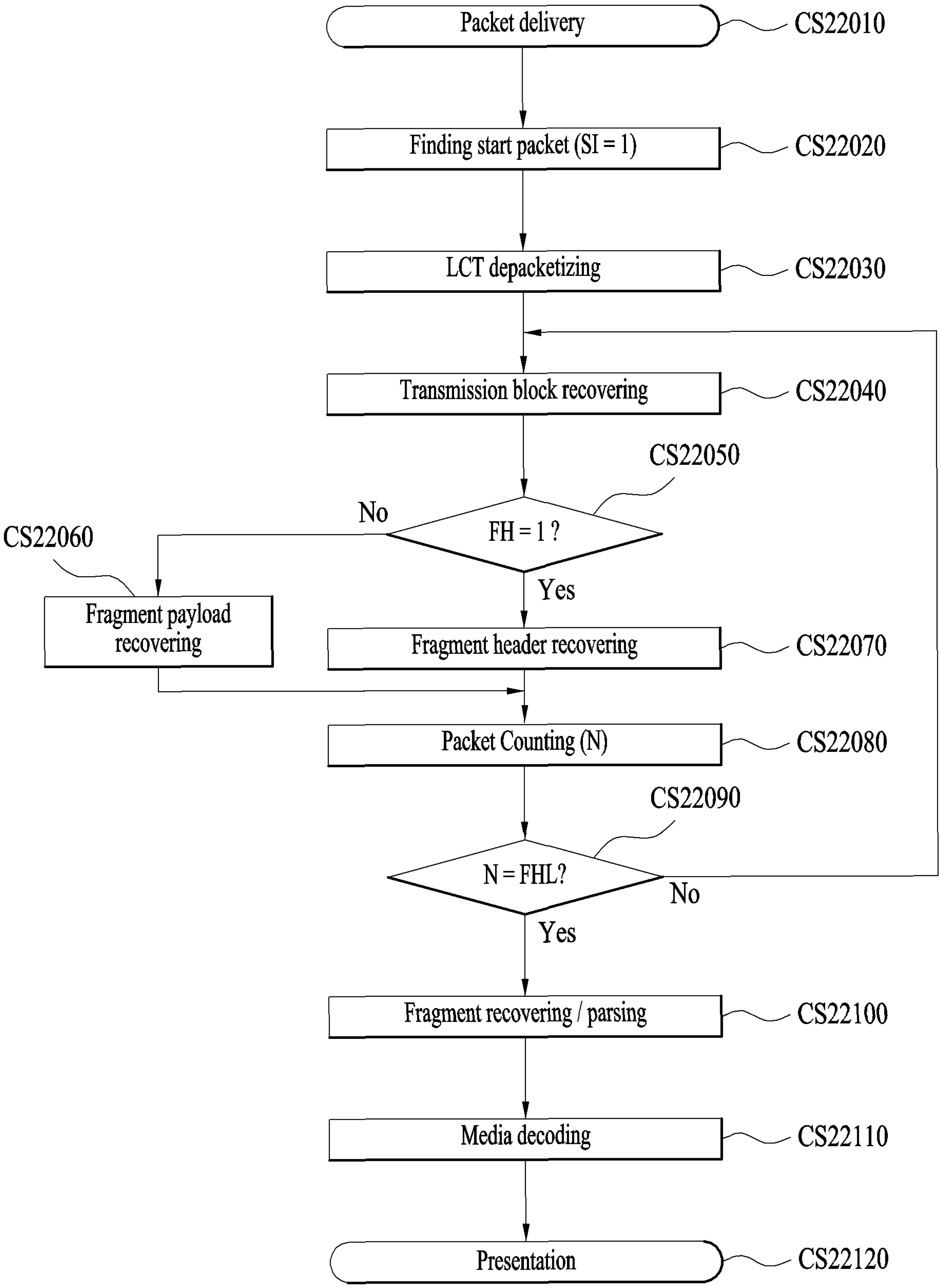
Packet delivery
CS22010
Finding start packet (SI = 1)
CS22020
LCT depacketizing
CS22030
Transmission block recovering
CS22040
CS22050
FH = 1 ?
No
Yes
CS22060
Fragment payload recovering
Fragment header recovering
CS22070
Packet Counting (N)
CS22080
CS22090
N = FHL?
No
Yes
Fragment recovering / parsing
CS22100
Media decoding
CS22110
Presentation
CS22120

# FIG. 42

0 7 15 23 31

| | | | | | | | | | | |
|---|---|---|---|---|---|---|---|---|---|---|
| V | C | PSI | S | O | H | Type | A | B | HDR_LEN | Codepoint (CP) |
| Congestion Control Information (CCI) | | | | | | | | | | |
| Transport Session Identifier (TSI) | | | | | | | | | | |
| Transport Object Identifier (TOI) | | | | | | | | | | |
| Header Extensions (EXT_FTI, EXT_TIME etc.) | | | | | | | | | | |
| FEC Payload ID | | | | | | | | | | |
| Encoding symbol (s) | | | | | | | | | | |

# FIG. 43

0 7 15 23 31

| | | | | | | | | | | |
|---|---|---|---|---|---|---|---|---|---|---|
| V | C | PSI | S | O | H | Res | A | B | HDR_LEN | Codepoint (CP) |
| Congestion Control Information (CCI) | | | | | | | | | | |
| Transport Session Identifier (TSI) | | | | | | | | | | |
| Transport Object Identifier (TOI) | | | | | | | | | | |
| HET | | | Type | | | | | | Reserved | |
| Header Extensions (EXT_FTI, EXT_TIME etc.) | | | | | | | | | | |
| FEC Payload ID | | | | | | | | | | |
| Encoding symbol (s) | | | | | | | | | | |

FIG. 44

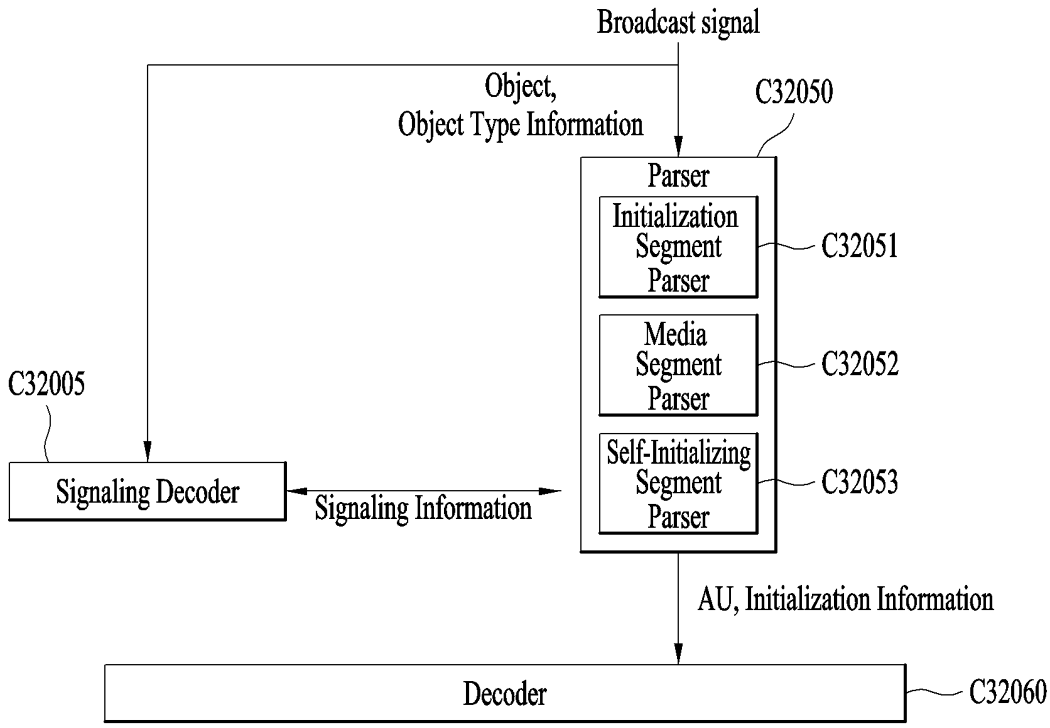
Broadcast signal
Object,
Object Type Information
C32050
Parser
Initialization Segment Parser
C32051
Media Segment Parser
C32052
C32005
Self-Initializing Segment Parser
C32053
Signaling Decoder
Signaling Information
AU, Initialization Information
Decoder
C32060

FIG. 45

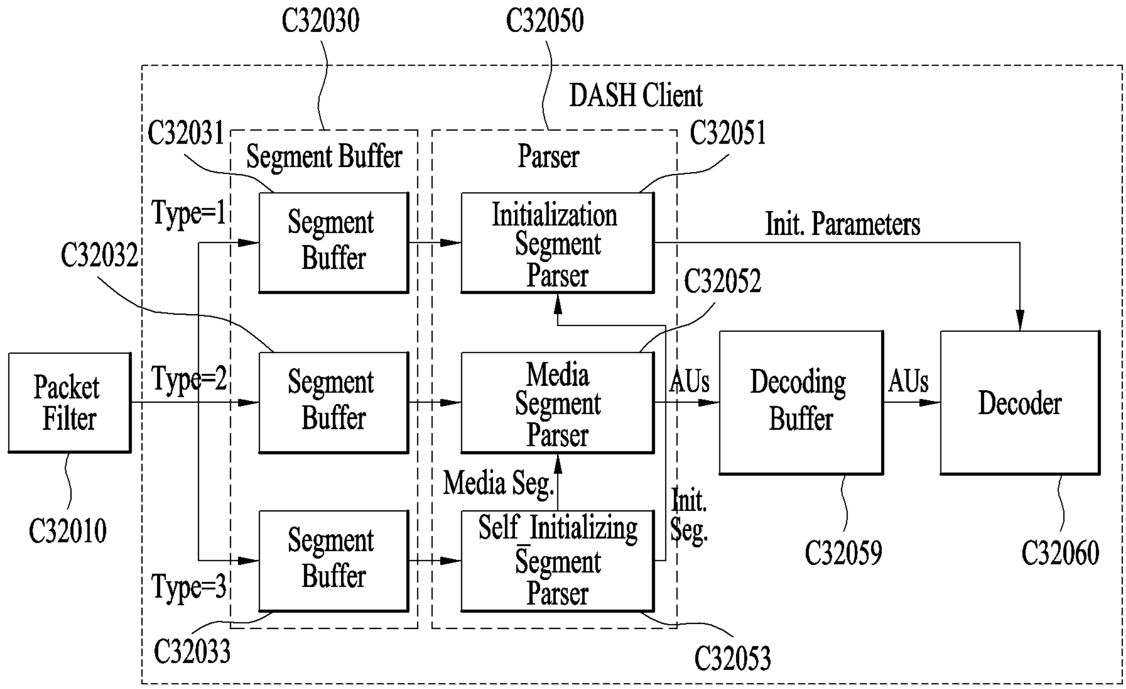
C32030
C32050
DASH Client
C32031
Segment Buffer
Parser
C32051
Type=1
Segment Buffer
Initialization Segment Parser
Init. Parameters
C32032
C32052
Packet Filter
Type=2
Segment Buffer
Media Segment Parser
AUs
Decoding Buffer
AUs
Decoder
Media Seg.
Init. Seg.
C32010
Segment Buffer
Self_Initializing Segment Parser
C32059
C32060
Type=3
C32033
C32053

FIG. 46

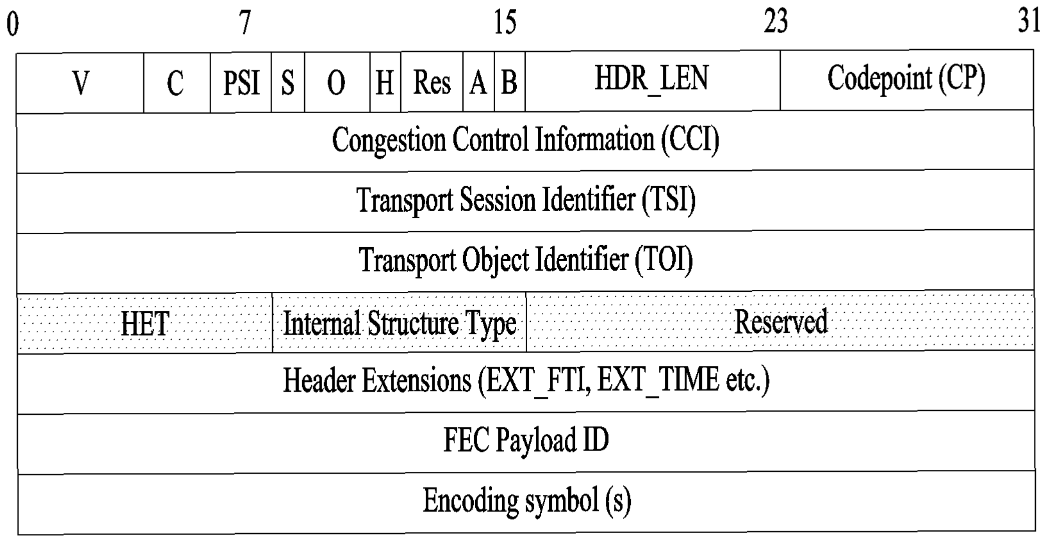
0
7
15
23
31
V
C
PSI
S
O
H
Res
A
B
HDR_LEN
Codepoint (CP)
Congestion Control Information (CCI)
Transport Session Identifier (TSI)
Transport Object Identifier (TOI)
HET
Internal Structure Type
Reserved
Header Extensions (EXT_FTI, EXT_TIME etc.)
FEC Payload ID
Encoding symbol (s)

FIG. 47

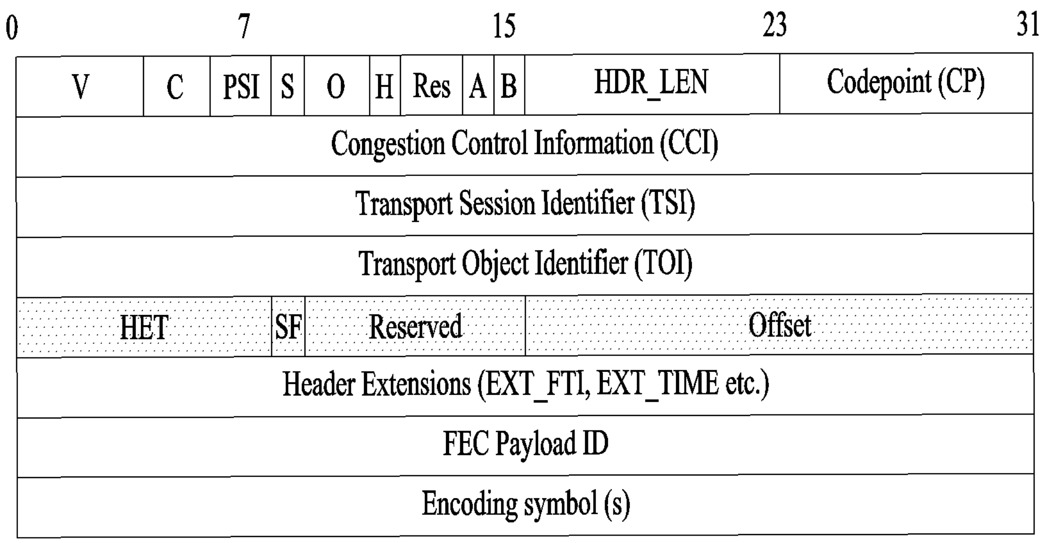
0
7
15
23
31
V
C
PSI
S
O
H
Res
A
B
HDR_LEN
Codepoint (CP)
Congestion Control Information (CCI)
Transport Session Identifier (TSI)
Transport Object Identifier (TOI)
HET
SF
Reserved
Offset
Header Extensions (EXT_FTI, EXT_TIME etc.)
FEC Payload ID
Encoding symbol (s)

FIG. 48

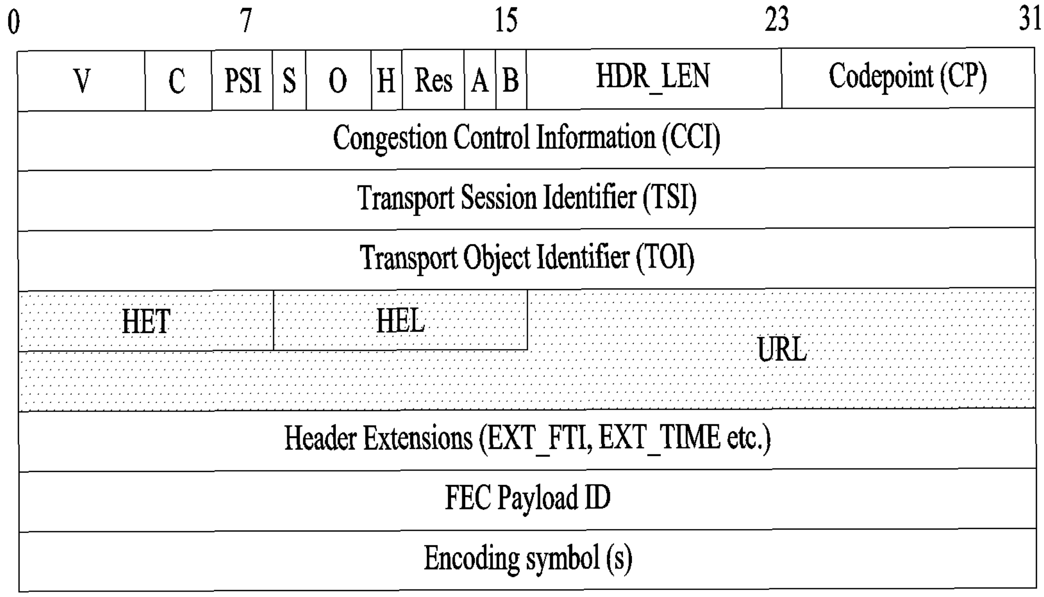
0
7
15
23
31
V
C
PSI
S
O
H
Res
A
B
HDR_LEN
Codepoint (CP)
Congestion Control Information (CCI)
Transport Session Identifier (TSI)
Transport Object Identifier (TOI)
HET
HEL
URL
Header Extensions (EXT_FTI, EXT_TIME etc.)
FEC Payload ID
Encoding symbol (s)

FIG. 49

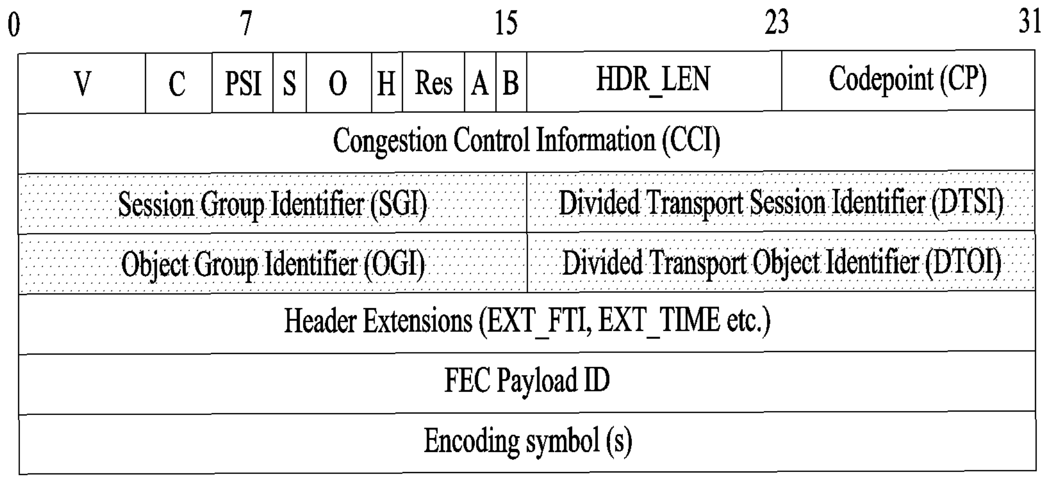
0
7
15
23
31
V
C
PSI
S
O
H
Res
A
B
HDR_LEN
Codepoint (CP)
Congestion Control Information (CCI)
Session Group Identifier (SGI)
Divided Transport Session Identifier (DTSI)
Object Group Identifier (OGI)
Divided Transport Object Identifier (DTOI)
Header Extensions (EXT_FTI, EXT_TIME etc.)
FEC Payload ID
Encoding symbol (s)

FIG. 50

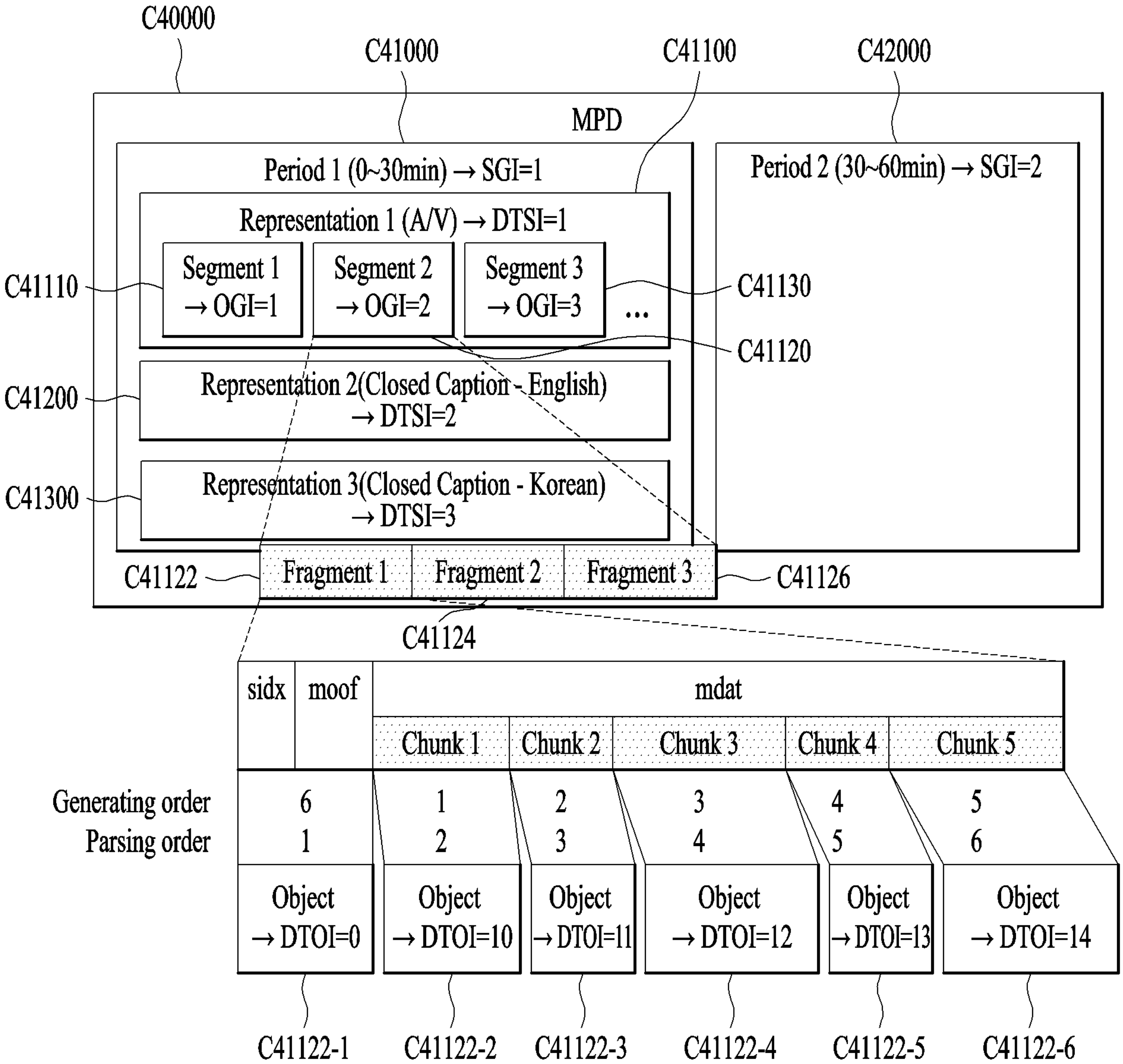
C40000
C41000
C41100
C42000
MPD
Period 1 (0~30min) → SGI=1
Period 2 (30~60min) → SGI=2
Representation 1 (A/V) → DTSI=1
Segment 1 → OGI=1
Segment 2 → OGI=2
Segment 3 → OGI=3
...
C41110
C41130
C41120
C41200
Representation 2(Closed Caption - English) → DTSI=2
C41300
Representation 3(Closed Caption - Korean) → DTSI=3
C41122
Fragment 1
Fragment 2
Fragment 3
C41126
C41124
sidx
moof
mdat
Chunk 1
Chunk 2
Chunk 3
Chunk 4
Chunk 5
Generating order
Parsing order
6 1
1 2
2 3
3 4
4 5
5 6
Object → DTOI=0
Object → DTOI=10
Object → DTOI=11
Object → DTOI=12
Object → DTOI=13
Object → DTOI=14
C41122-1
C41122-2
C41122-3
C41122-4
C41122-5
C41122-6

FIG. 51

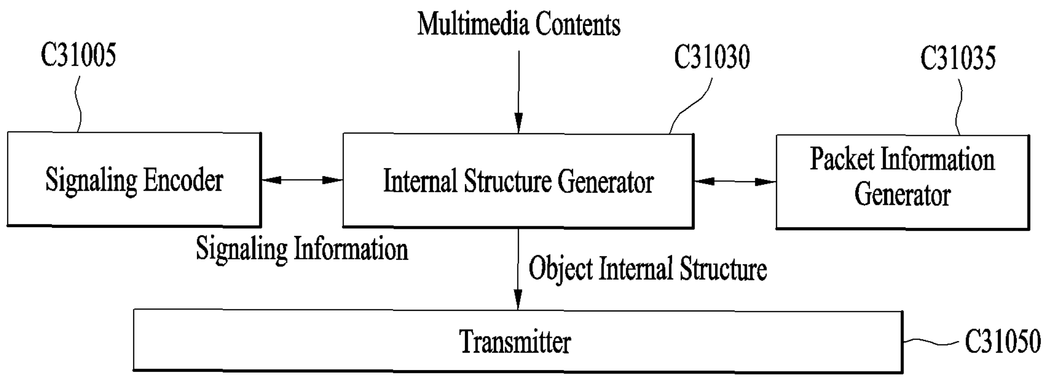
Multimedia Contents
C31005
C31030
C31035
Signaling Encoder
Internal Structure Generator
Packet Information Generator
Signaling Information
Object Internal Structure
Transmitter
C31050

FIG. 52

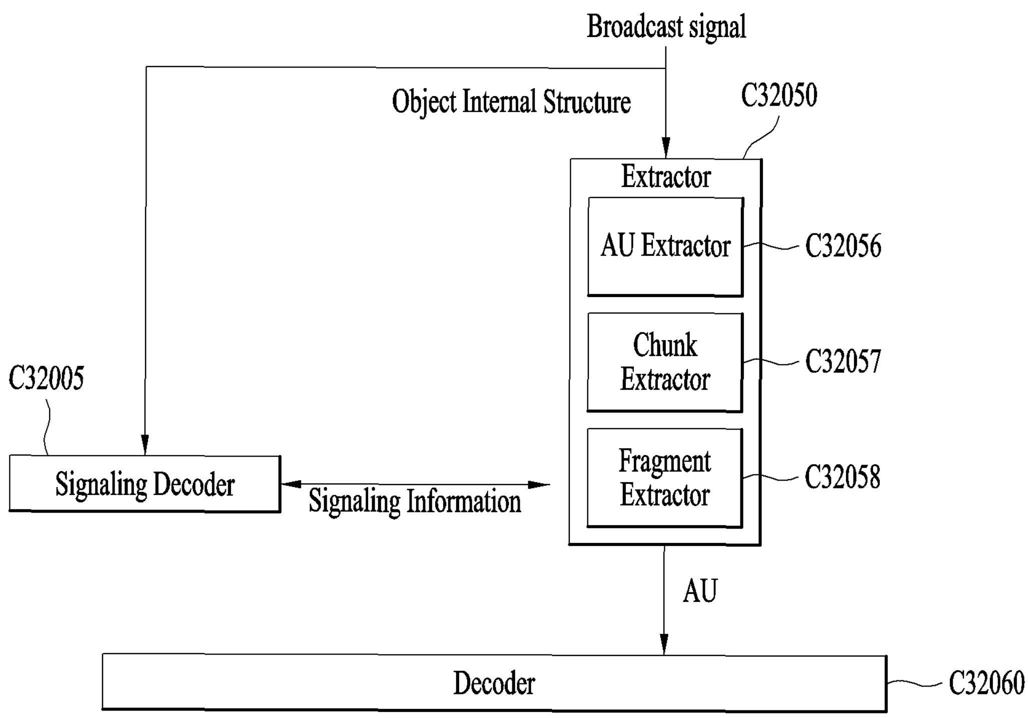
Broadcast signal
Object Internal Structure
C32050
Extractor
AU Extractor
C32056
Chunk Extractor
C32057
C32005
Fragment Extractor
C32058
Signaling Decoder
Signaling Information
AU
Decoder
C32060

FIG. 53

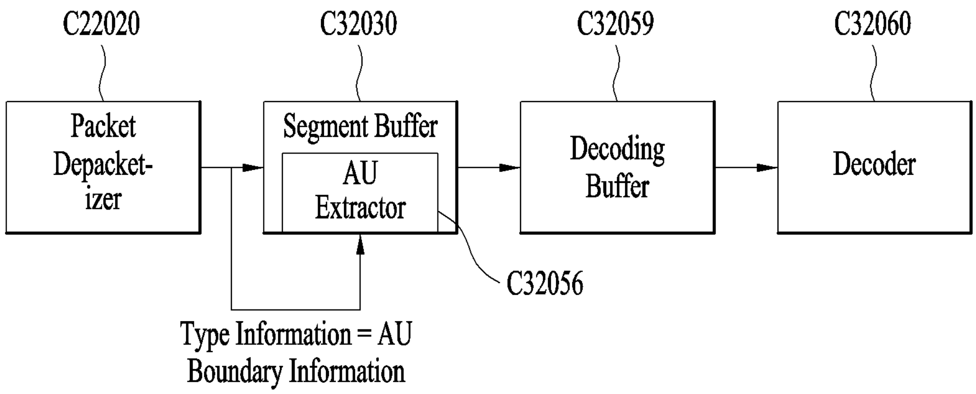
C22020
C32030
C32059
C32060
Packet Depacket-izer
Segment Buffer
AU Extractor
Decoding Buffer
Decoder
C32056
Type Information = AU Boundary Information

FIG. 54

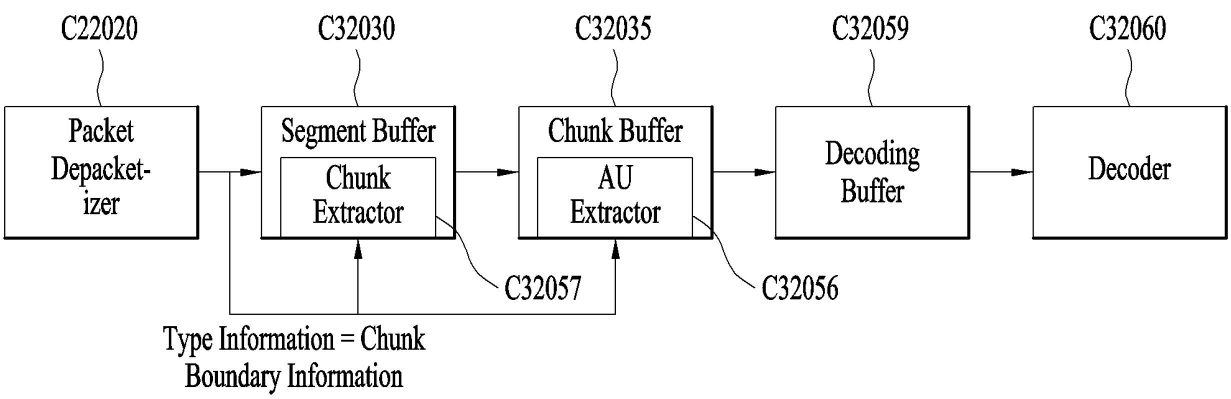
C22020
C32030
C32035
C32059
C32060
Packet Depacket-izer
Segment Buffer
Chunk Extractor
Chunk Buffer
AU Extractor
Decoding Buffer
Decoder
C32057
C32056
Type Information = Chunk Boundary Information

FIG. 55

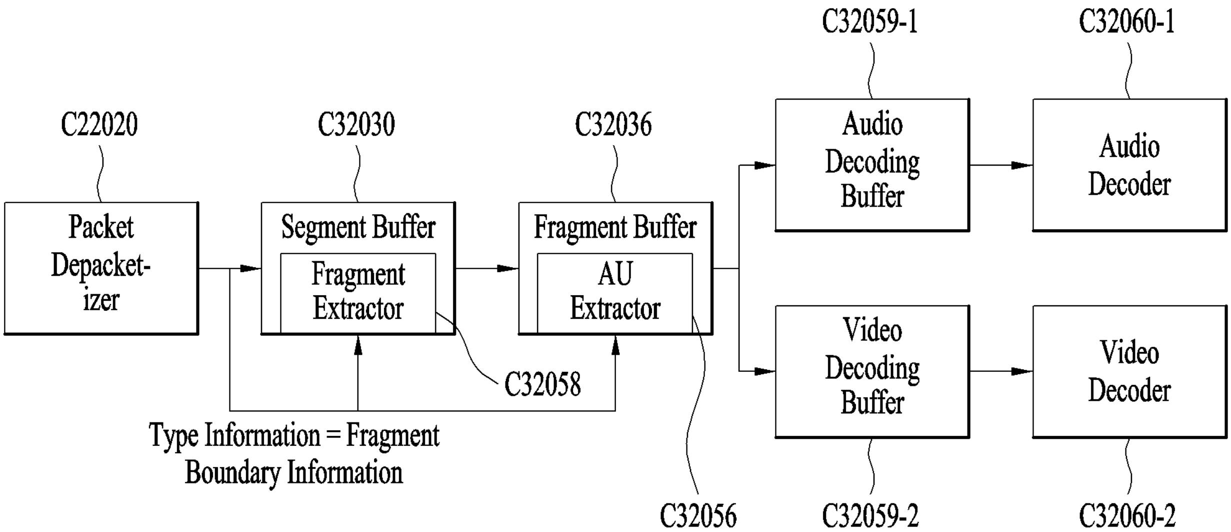
C22020
Packet Depacket-izer
C32030
Segment Buffer
Fragment Extractor
C32058
C32036
Fragment Buffer
AU Extractor
C32056
Type Information = Fragment Boundary Information
C32059-1
Audio Decoding Buffer
C32060-1
Audio Decoder
C32059-2
Video Decoding Buffer
C32060-2
Video Decoder

FIG. 56

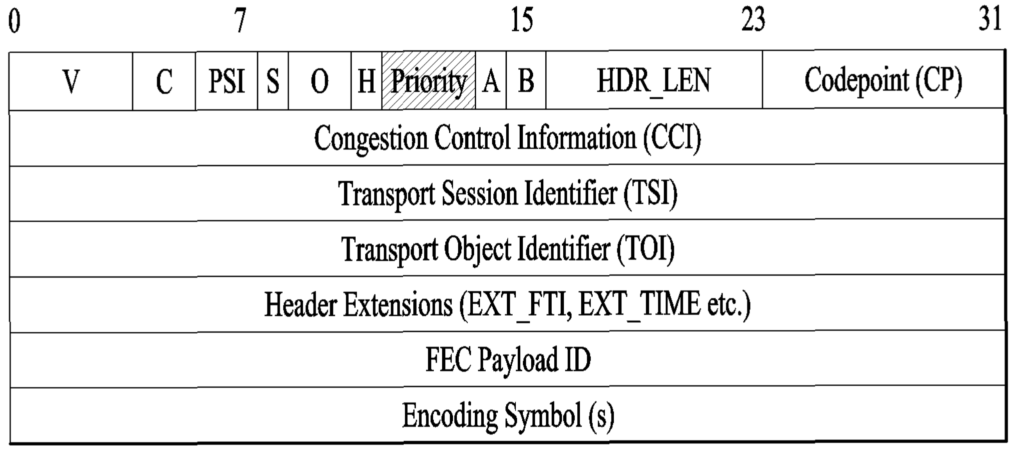
0
7
15
23
31
V
C
PSI
S
O
H
Priority
A
B
HDR_LEN
Codepoint (CP)
Congestion Control Information (CCI)
Transport Session Identifier (TSI)
Transport Object Identifier (TOI)
Header Extensions (EXT_FTI, EXT_TIME etc.)
FEC Payload ID
Encoding Symbol (s)

FIG. 57

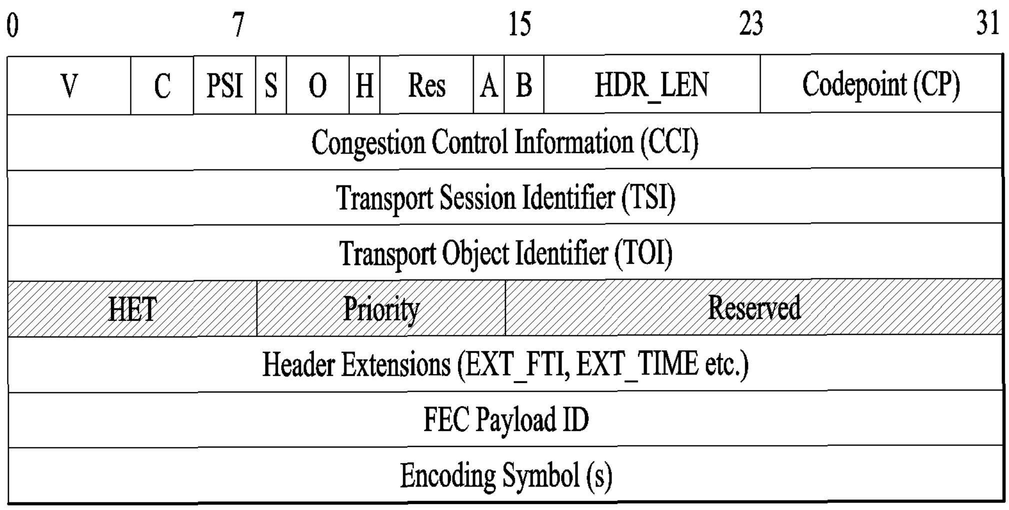
0
7
15
23
31
V
C
PSI
S
O
H
Res
A
B
HDR_LEN
Codepoint (CP)
Congestion Control Information (CCI)
Transport Session Identifier (TSI)
Transport Object Identifier (TOI)
HET
Priority
Reserved
Header Extensions (EXT_FTI, EXT_TIME etc.)
FEC Payload ID
Encoding Symbol (s)

FIG. 58

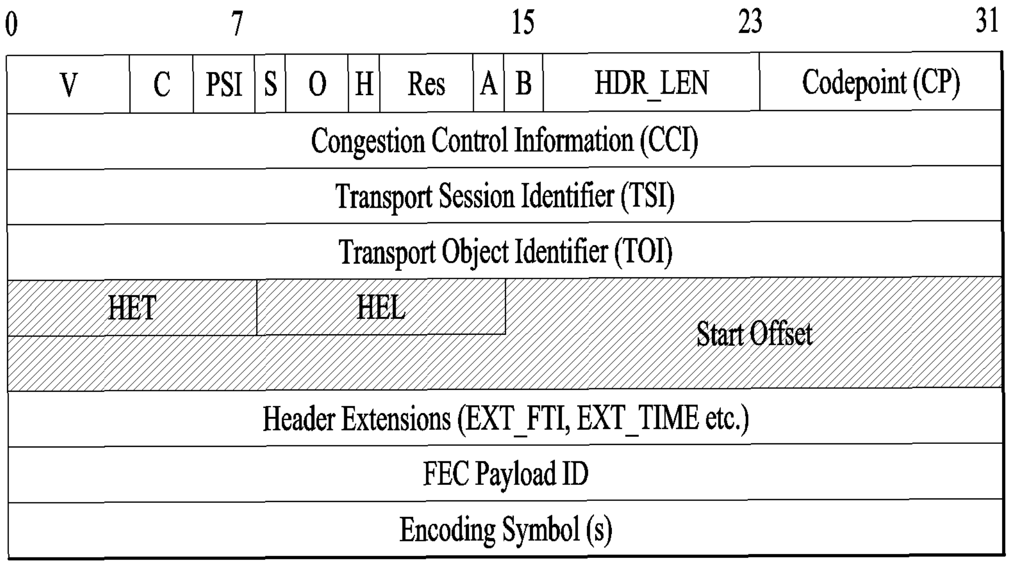
0
7
15
23
31
V
C
PSI
S
O
H
Res
A
B
HDR_LEN
Codepoint (CP)
Congestion Control Information (CCI)
Transport Session Identifier (TSI)
Transport Object Identifier (TOI)
HET
HEL
Start Offset
Header Extensions (EXT_FTI, EXT_TIME etc.)
FEC Payload ID
Encoding Symbol (s)

FIG. 59

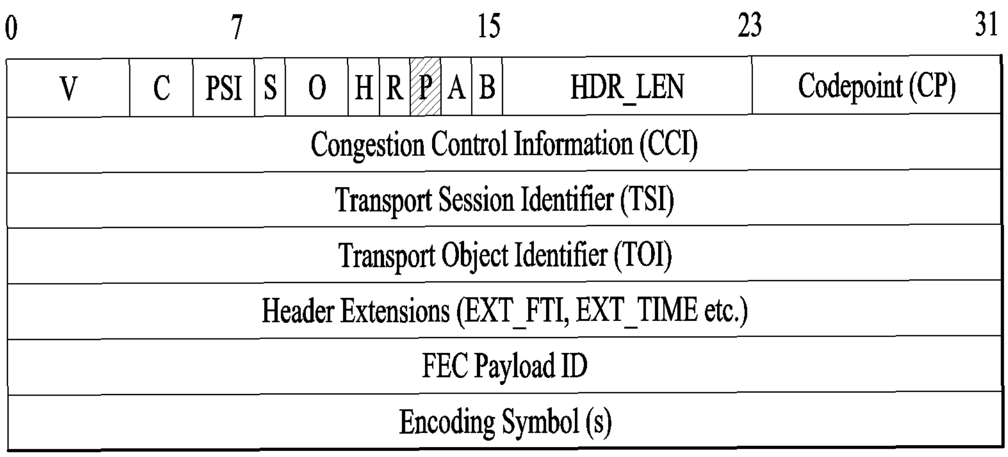
0
7
15
23
31
V
C
PSI
S
O
H
R
P
A
B
HDR_LEN
Codepoint (CP)
Congestion Control Information (CCI)
Transport Session Identifier (TSI)
Transport Object Identifier (TOI)
Header Extensions (EXT_FTI, EXT_TIME etc.)
FEC Payload ID
Encoding Symbol (s)

FIG. 60

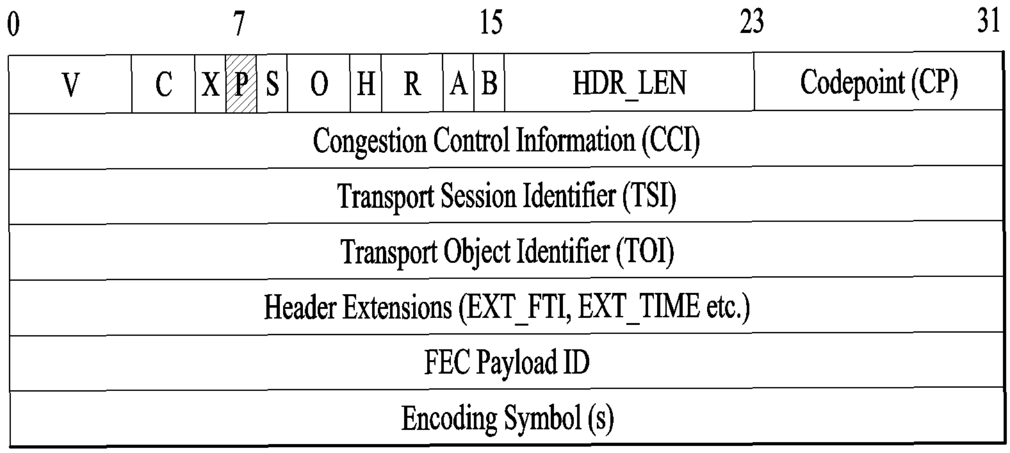
0
7
15
23
31
V
C
X
P
S
O
H
R
A
B
HDR_LEN
Codepoint (CP)
Congestion Control Information (CCI)
Transport Session Identifier (TSI)
Transport Object Identifier (TOI)
Header Extensions (EXT_FTI, EXT_TIME etc.)
FEC Payload ID
Encoding Symbol (s)

FIG. 61

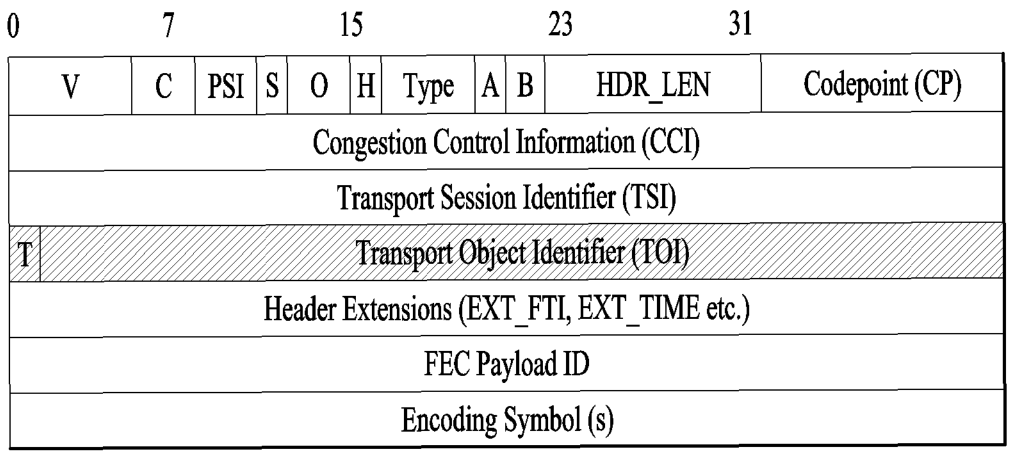
0
7
15
23
31
V
C
PSI
S
O
H
Type
A
B
HDR_LEN
Codepoint (CP)
Congestion Control Information (CCI)
Transport Session Identifier (TSI)
T
Transport Object Identifier (TOI)
Header Extensions (EXT_FTI, EXT_TIME etc.)
FEC Payload ID
Encoding Symbol (s)

FIG. 62

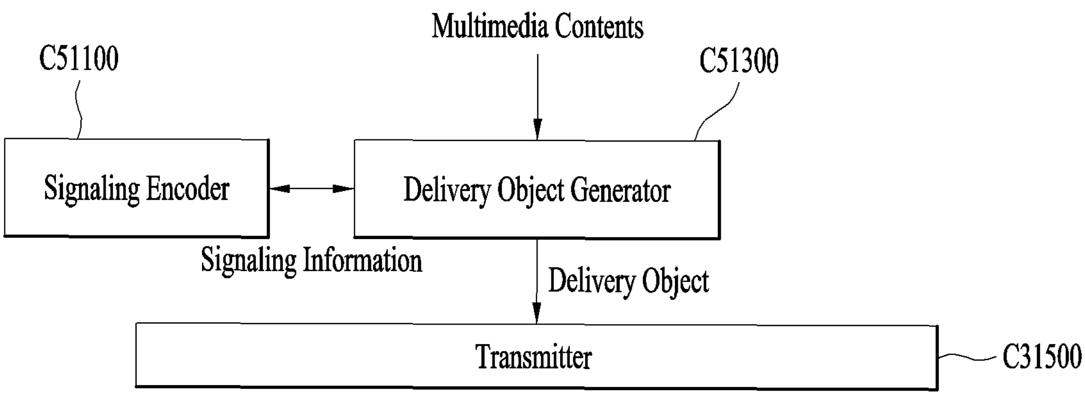
Multimedia Contents
C51100
C51300
Signaling Encoder
Delivery Object Generator
Signaling Information
Delivery Object
Transmitter
C31500

FIG. 63

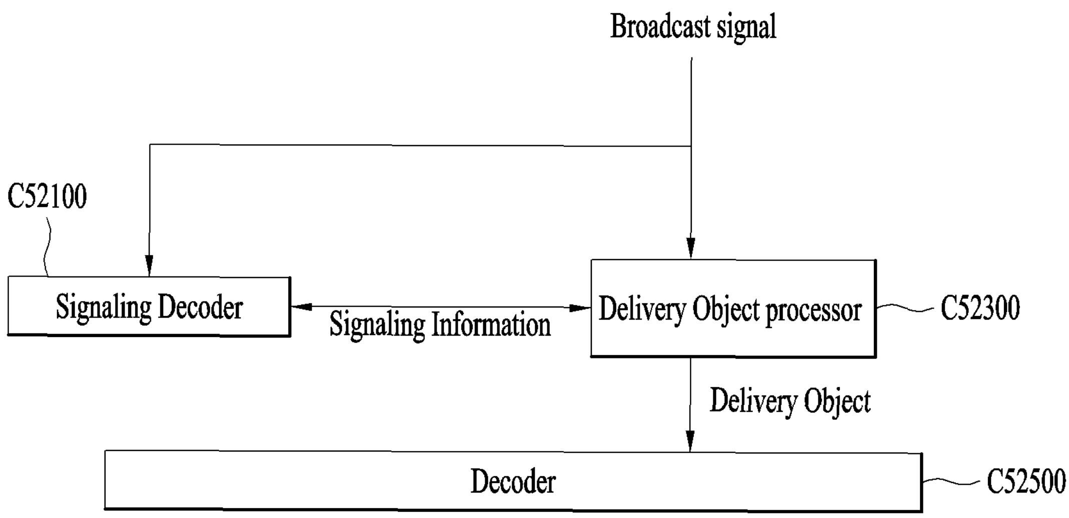
Broadcast signal
C52100
Signaling Decoder
Signaling Information
Delivery Object processor
C52300
Delivery Object
Decoder
C52500

FIG. 64

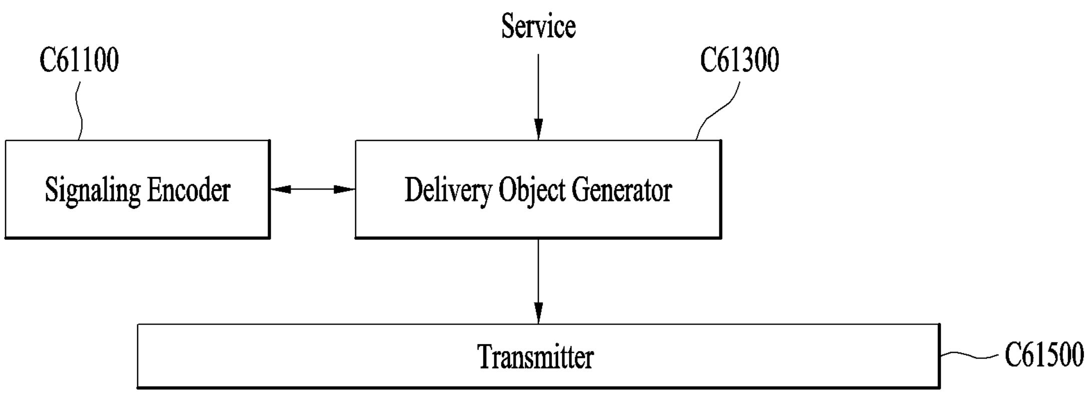
Service
C61100
C61300
Signaling Encoder
Delivery Object Generator
Transmitter
C61500

FIG. 65

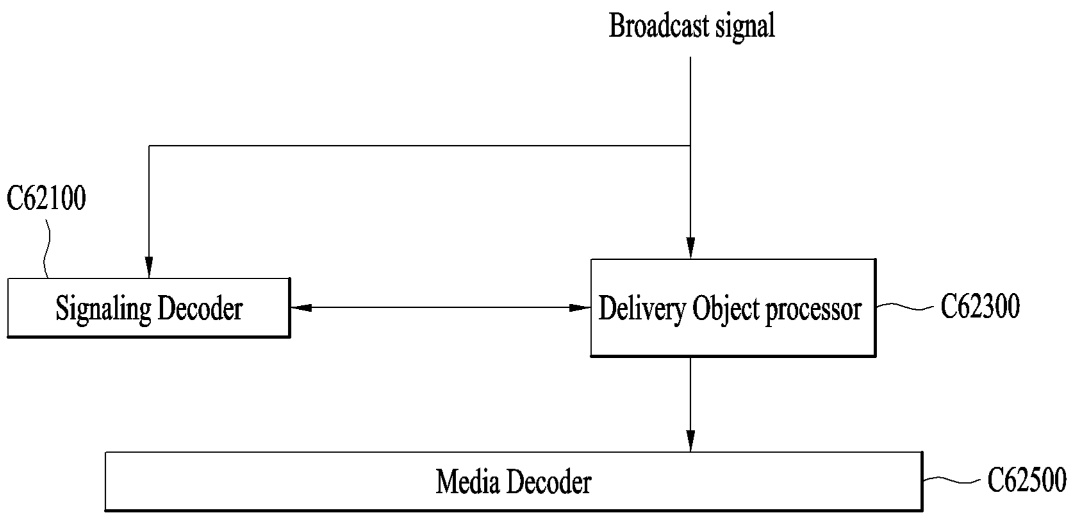
Broadcast signal
C62100
Signaling Decoder
Delivery Object processor
C62300
Media Decoder
C62500

FIG. 66

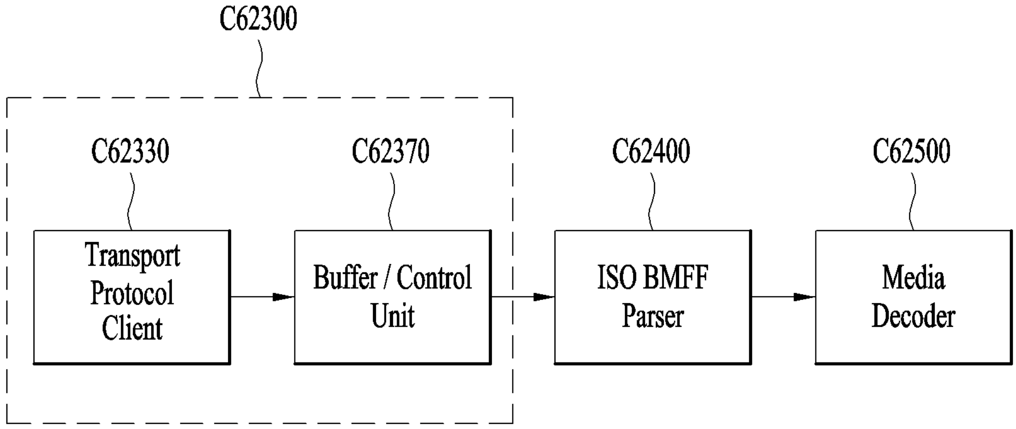
C62300
C62330
C62370
C62400
C62500
Transport Protocol Client
Buffer / Control Unit
ISO BMFF Parser
Media Decoder

FIG. 67

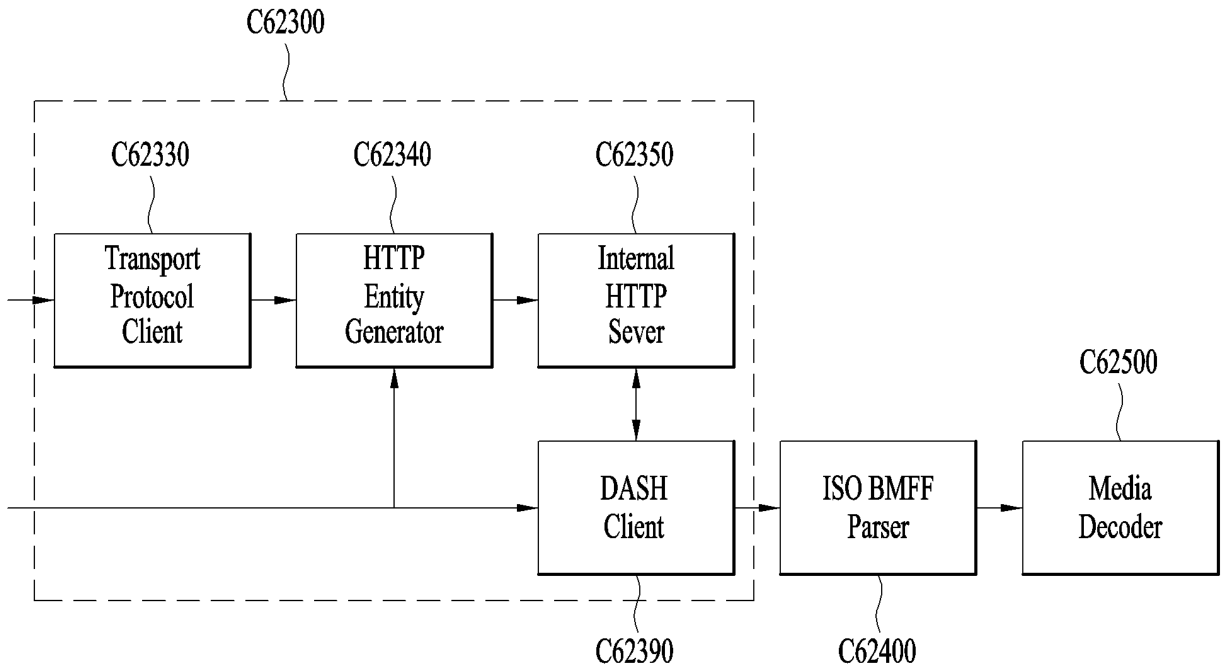
C62300
C62330
C62340
C62350
C62500
Transport Protocol Client
HTTP Entity Generator
Internal HTTP Sever
DASH Client
ISO BMFF Parser
Media Decoder
C62390
C62400

FIG. 68

| From | To |
|---|---|
| OGI/DTOI in LCT packet header, Transfer-Length in EXT_FTI | Content-Length |
| URL in EXT_URL | Content-Location |
| Offset in EXT_OFS, Transfer-Length in EXT_FTI, OGI/DTOI in LCT packet header | Content-Range |
| MPD, URL in EXT_URL, | Expires |
| Timestamp in EXT_MEDIA_TIME or etc. | |

FIG. 69

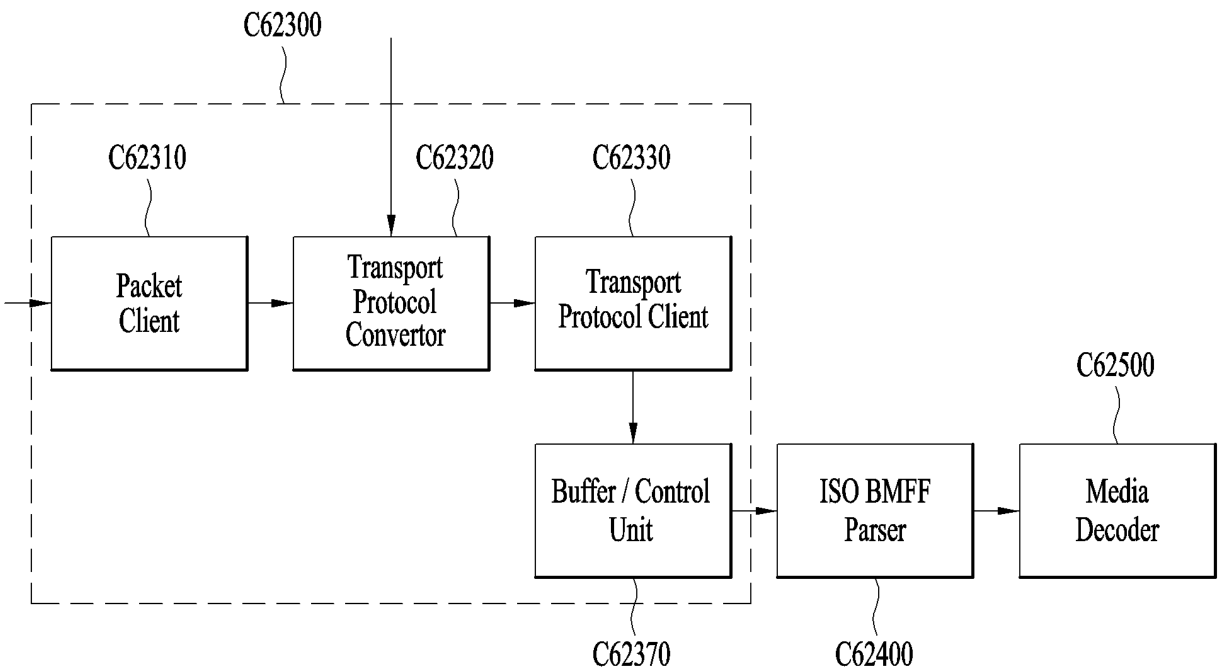

FIG. 70

| From | To |
|---|---|
| Content-Location | URL in EXT_URL |
| Content-Range | Offset in EXT_OFS,<br>OGI/DTOI in LCT packet header |
| MPD | Timestamp in EXT_MEDIA_TIME or etc. |

FIG. 71

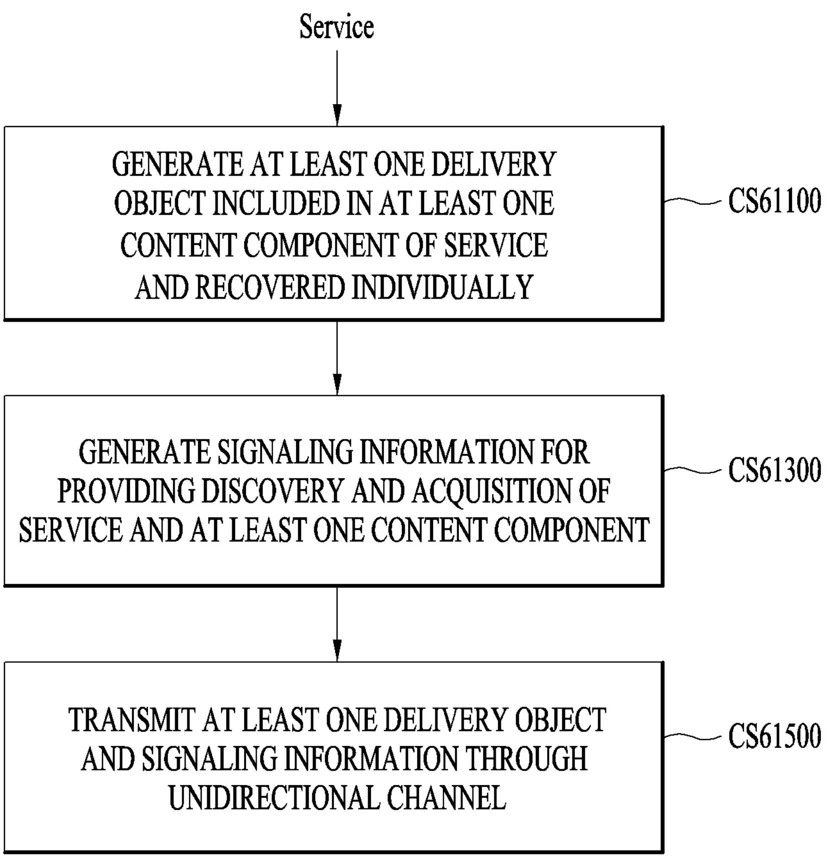

FIG. 72

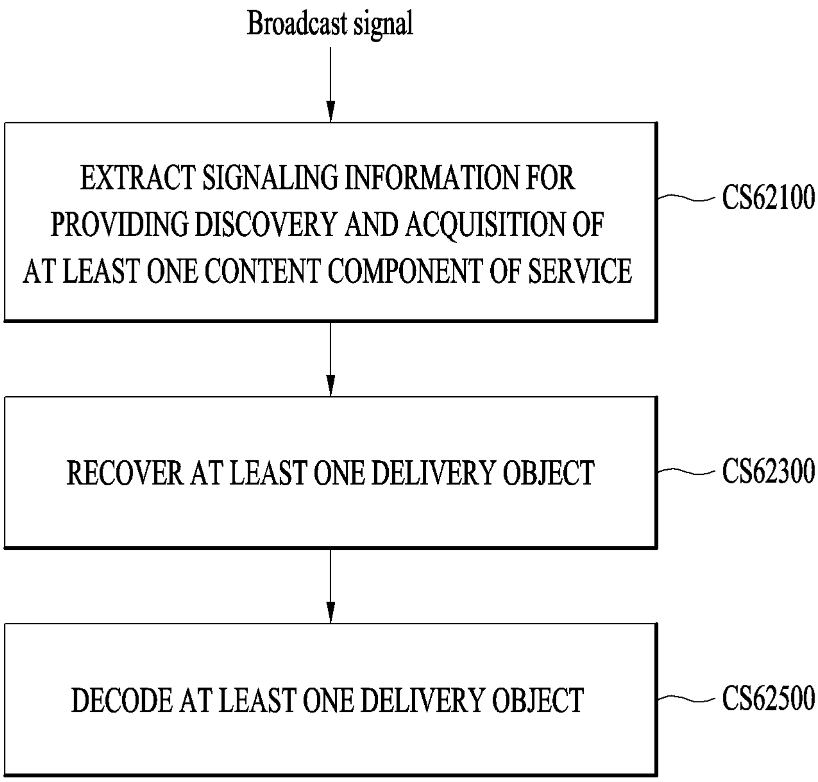
Broadcast signal
EXTRACT SIGNALING INFORMATION FOR PROVIDING DISCOVERY AND ACQUISITION OF AT LEAST ONE CONTENT COMPONENT OF SERVICE
CS62100
RECOVER AT LEAST ONE DELIVERY OBJECT
CS62300
DECODE AT LEAST ONE DELIVERY OBJECT
CS62500

INTERNATIONAL SEARCH REPORT

International application No.
**PCT/KR2015/004217**

A. CLASSIFICATION OF SUBJECT MATTER

***H04N 21/235(2011.01)i, H04N 21/234(2011.01)i, H04N 21/236(2011.01)i***

According to International Patent Classification (IPC) or to both national classification and IPC

B. FIELDS SEARCHED

Minimum documentation searched (classification system followed by classification symbols)
H04N 21/235; H04N 7/015; H04N 21/436; H04N 13/00; H04N 5/44; H04N 7/08; H04N 21/435; H04N 21/234; H04N 21/236

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: real time, broadcasting transceiving device, delivery object, component discovery/acquisition, signaling information, transport session, encoding, decoding

C. DOCUMENTS CONSIDERED TO BE RELEVANT

| Category* | Citation of document, with indication, where appropriate, of the relevant passages | Relevant to claim No. |
|---|---|---|
| A | KR 10-2011-0123658 A (ELECTRONICS AND TELECOMMUNICATIONS RESEARCH INSTITUTE) 15 November 2011<br>See paragraphs [0029], [0033]; and figure 9. | 1-14 |
| A | KR 10-2014-0016906 A (LG ELECTRONICS INC.) 10 February 2014<br>See paragraph [0742]; claim 18; and figure 1. | 1-14 |
| A | KR 10-2011-0094076 A (LG ELECTRONICS INC.) 19 August 2011<br>See paragraphs [0237], [0257]; and figure 23. | 1-14 |
| A | WO 2009-151267 A2 (LG ELECTRONICS INC.) 17 December 2009<br>See paragraphs [0308], [0310]; and figure 14. | 1-14 |
| A | WO 2012-121572 A2 (ELECTRONICS AND TELECOMMUNICATIONS RESEARCH INSTITUTE) 13 September 2012<br>See paragraphs [0148], [0149]; and figure 2. | 1-14 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 JULY 2015 (13.07.2015) | **14 JULY 2015 (14.07.2015)** |

| Name and mailing address of the ISA/**KR** | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (July 2009)

INTERNATIONAL SEARCH REPORT
Information on patent family members

International application No.
PCT/KR2015/004217

| Patent document cited in search report | Publication date | Patent family member | Publication date |
|---|---|---|---|
| KR 10-2011-0123658 A | 15/11/2011 | US 2012-0033035 A1 | 09/02/2012 |
| | | US 2014-0293005 A1 | 02/10/2014 |
| KR 10-2014-0016906 A | 10/02/2014 | CA 2834046 A1 | 29/11/2012 |
| | | US 2014-0181887 A1 | 26/06/2014 |
| | | WO 2012-161535 A2 | 29/11/2012 |
| | | WO 2012-161535 A3 | 24/01/2013 |
| KR 10-2011-0094076 A | 19/08/2011 | CA 2739885 A1 | 27/05/2010 |
| | | CA 2743997 A1 | 27/05/2010 |
| | | CA 2743997 C | 11/06/2013 |
| | | KR 10-2011-0102349 A | 16/09/2011 |
| | | US 2010-0162307 A1 | 24/06/2010 |
| | | US 2010-0162334 A1 | 24/06/2010 |
| | | US 2012-0317606 A1 | 13/12/2012 |
| | | US 2013-0097641 A1 | 18/04/2013 |
| | | US 2014-0109160 A1 | 17/04/2014 |
| | | US 2014-0289784 A1 | 25/09/2014 |
| | | US 8272022 B2 | 18/09/2012 |
| | | US 8347343 B2 | 01/01/2013 |
| | | US 8572664 B2 | 29/10/2013 |
| | | US 8752109 B2 | 10/06/2014 |
| | | WO 2010-058962 A2 | 27/05/2010 |
| | | WO 2010-058962 A3 | 25/08/2011 |
| | | WO 2010-058964 A2 | 27/05/2010 |
| | | WO 2010-058964 A3 | 25/08/2011 |
| WO 2009-151267 A2 | 17/12/2009 | US 2009-0320087 A1 | 24/12/2009 |
| | | US 2013-0081094 A1 | 28/03/2013 |
| | | US 2014-0026172 A1 | 23/01/2014 |
| | | US 8365229 B2 | 29/01/2013 |
| | | US 8572658 B2 | 29/10/2013 |
| | | US 8966554 B2 | 24/02/2015 |
| | | WO 2009-151267 A3 | 11/03/2010 |
| WO 2012-121572 A2 | 13/09/2012 | EP 2685729 A2 | 15/01/2014 |
| | | KR 10-2012-0103510 A | 19/09/2012 |
| | | US 2013-0342648 A1 | 26/12/2013 |
| | | WO 2012-121572 A3 | 15/11/2012 |

Form PCT/ISA/210 (patent family annex) (July 2009)